(19) Europäisches Patentamt
European Patent Office
Office européen des brevets

(11) EP 3 081 578 A1

(12) **EUROPEAN PATENT APPLICATION**
published in accordance with Art. 153(4) EPC

(43) Date of publication:
**19.10.2016 Bulletin 2016/42**

(21) Application number: **14870377.0**

(22) Date of filing: **05.12.2014**

(51) Int Cl.:
***C08F 2/44*** *(2006.01)*

(86) International application number:
**PCT/JP2014/082286**

(87) International publication number:
**WO 2015/087810 (18.06.2015 Gazette 2015/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.12.2013 JP 2013256192**
**11.12.2013 JP 2013256193**

(71) Applicant: **Mitsui Chemicals, Inc.**
**Tokyo 105-7117 (JP)**

(72) Inventor: **OKAZAKI, Koju**
**Omuta-shi**
**Fukuoka 836-8610 (JP)**

(74) Representative: **Hoffmann Eitle**
**Patent- und Rechtsanwälte PartmbB**
**Arabellastraße 30**
**81925 München (DE)**

(54) **COMPOSITION FOR HYDROPHILIC CURED PRODUCT**

(57) Objects of the present invention are to provide a composition which can easily give cured products enriched with hydrophilic groups at the surface, and a composition which can give cured products while ensuring that the surface is enriched with hydrophilic groups which are hardly concentrated at the surface by conventional methods; to provide cured products obtained from such compositions; to provide a composition which is suited for producing cured products having high and long-lasting hydrophilicity and also having high surface smoothness; and to provide a cured product obtained from the composition. A monolayer film is fabricated which includes a crosslinked resin obtained by polymerizing a composition including a compound (I) having at least one hydrophilic group selected from anionic hydrophilic groups, cationic hydrophilic groups and hydroxyl groups, and at least one functional group with a polymerizable carbon-carbon double bond (wherein the number of the functional groups with a polymerizable carbon-carbon double bond is one when the hydrophilic group is a hydroxyl-containing group); a compound (II) having two or more functional groups with a polymerizable carbon-carbon double bond (wherein the compound may have a hydroxyl group but is free from anionic hydrophilic groups and cationic hydrophilic groups); and at least one compound selected from a surfactant (III) having a hydrophilic moiety including an anionic hydrophilic group, a cationic hydrophilic group or two or more hydroxyl groups, and a hydrophobic moiety including an organic residue, and a compound (IV) having a siloxane bond and a molecular weight of 200 to 1,000,000 (wherein the surfactant (III) and the compound (IV) have no polymerizable carbon-carbon double bonds). The monolayer film has a gradient of hydrophilic group concentration (Sa/Da) of not less than 1.1 wherein Sa is the surface concentration of at least one type of hydrophilic groups selected from anionic hydrophilic groups, cationic hydrophilic groups and hydroxyl groups, and Da is the deep concentration of the hydrophilic groups at 1/2 of the thickness of the monolayer film.

[FIG. 1]

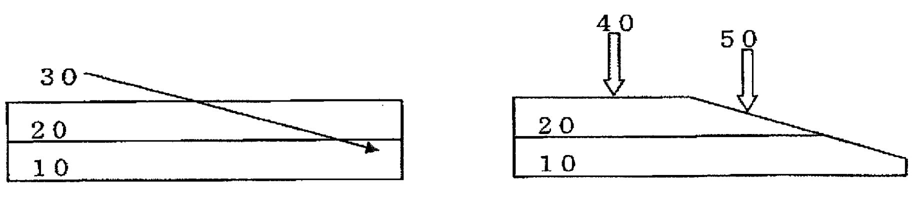


EP 3 081 578 A1

## Description

### TECHNICAL FIELD

The present invention relates to hydrophilic curable compositions and to hydrophilic cured products obtained by polymerizing the compositions.

### BACKGROUND ART

In recent years, there have been increasing demands that substrates made of organic materials such as plastics and inorganic materials such as glass be improved in terms of antifogging properties and antifouling properties.

To solve the fogging problems, a method has been proposed in which an antifogging coating liquid containing a reactive surfactant and an acrylic oligomer is applied to provide enhanced hydrophilicity and water absorption (see, for example, Non Patent Literature 1). The fouling problems have been addressed by methods in which the hydrophilicity of the surface of materials is enhanced so that fouling such as airborne hydrophobic substances which have become attached to surfaces such as exterior walls can be detached and removed from the surfaces by water spray or rainfall (see, for example, Non Patent Literatures 2 and 3).

Further, hydrophilic materials have been proposed in which a crosslinkable polymerizable monomer composition is applied onto the surface of a substrate and is incompletely polymerized while controlling the UV dose to form a crosslinked polymer, and subsequently a hydrophilic monomer is applied and UV rays are applied again to block- or graft-polymerize the hydrophilic monomer to the surface of the crosslinked polymer (Patent Literature 1 and Patent Literature 2).

However, this simple block or graft polymerization of a hydrophilic monomer to the surface of a substrate attaches the hydrophilic groups only to the surface, resulting in low durability. Thus, the hydrophilic materials have drawbacks in that they cannot withstand long-term use.

To solve the above problem, the present inventors have proposed monolayer films in which specific anionic hydrophilic groups have a concentration gradient (an uneven distribution) between the inside of the film and the film surface and the anionic hydrophilic groups are present in a higher concentration near the surface (Patent Literature 3 and Patent Literature 4).

However, there has still been a demand for a simpler approach to providing an enrichment of hydrophilic groups at the surface of a monolayer film. Further, it has been demanded that such an enrichment of hydrophilic groups at the surface be realized for those hydrophilic groups which are not described in the above patent literatures.

Furthermore, the durability of hydrophilicity and the surface smoothness are still to be improved.

### CITATION LIST

### PATENT LITERATURE

Patent Literature 1: JP-A-2001-98007
Patent Literature 2: JP-A-2011-229734
Patent Literature 3: WO 2007/064003
Patent Literature 4: WO 2012/014829

### NON PATENT LITERATURE

Non Patent Literature 1: TREND, annual research report by TOAGOSEI CO., LTD., 1999, February issue, pp. 39-44
Non Patent Literature 2: Koubunshi (Polymers), 44(5), p. 307
Non Patent Literature 3: Mirai Zairyou (Future materials), 2(1), pp. 36-41

### SUMMARY OF INVENTION

### TECHNICAL PROBLEM

An object of the present invention is to provide a composition which can easily give cured products enriched

with hydrophilic groups at the surface, and a composition which can give cured products while ensuring that the surface is enriched with hydrophilic groups which are hardly concentrated at the surface by the conventional methods. Another object of the invention is to provide cured products obtained from such compositions.

Further objects of the invention are to provide a composition which is suited for producing cured products having high and long-lasting hydrophilicity and also having high surface smoothness, and to provide a cured product obtained from the composition.

SOLUTION TO PROBLEM

The present inventors have made extensive studies directed to achieving the above objects. As a result, the present inventors have found that a composition which includes a compound having a specific hydrophilic group and a functional group with a polymerizable carbon-carbon double bond, a compound having two or more (meth)acryloyl groups, and a specific surfactant can give, upon polymerization, cured products in which the hydrophilic groups, even if the hydrophilic groups are those which are hardly enriched by the conventional methods, are concentrated at the surface of the cured products; and have also found that such cured products can be produced even by a simpler method than conventional.

The present inventors have further found that a composition which includes a compound having a specific hydrophilic group, for example, an anionic hydrophilic group, and a functional group with a polymerizable carbon-carbon double bond, a compound having two or more (meth) acryloyl groups, and a compound having a specific molecular weight and a specific group can give, upon polymerization, cured products which exhibit high and long-lasting hydrophilicity and have excellent surface smoothness. The present invention has been completed based on the findings.

A monolayer film according to the present invention includes a crosslinked resin obtained by polymerizing a composition including a compound (I) having at least one hydrophilic group selected from anionic hydrophilic groups, cationic hydrophilic groups and hydroxyl groups, and at least one functional group with a polymerizable carbon-carbon double bond (wherein the number of the functional groups with a polymerizable carbon-carbon double bond is one when the hydrophilic group is a hydroxyl-containing group); a compound (II) having two or more functional groups with a polymerizable carbon-carbon double bond (wherein the compound may have a hydroxyl group but is free from anionic hydrophilic groups and cationic hydrophilic groups); and at least one compound selected from a surfactant (III) having a hydrophilic moiety including an anionic hydrophilic group, a cationic hydrophilic group or two or more hydroxyl groups, and a hydrophobic moiety including an organic residue, and a compound (IV) having a siloxane bond and a molecular weight of 200 to 1,000,000 (wherein the surfactant (III) and the compound (IV) have no polymerizable carbon-carbon double bonds); the monolayer film having a gradient of anion concentration (Sa/Da) of not less than 1.1 wherein Sa is the surface concentration of at least one type of hydrophilic groups selected from anionic hydrophilic groups, cationic hydrophilic groups and hydroxyl groups, and Da is the deep concentration of the hydrophilic groups at 1/2 of the thickness of the monolayer film.

The compound (I) is preferably a compound represented by the general formula (100) described later. In the general formula (100), A is preferably a functional group with at least one polymerizable carbon-carbon double bond selected from those groups represented by the general formulas (120) to (130) described later. When CD in the general formula (100) is a hydroxyl-containing group, it is preferable that A be a functional group with at least one polymerizable carbon-carbon double bond selected from those groups represented by the general formulas (120) to (126) described later.

The surfactant is preferably a compound represented by the general formula (300) described later.

A stack according to the present invention includes at least one monolayer film described above.

A composition according to the present invention is a composition for producing monolayer films, and includes the compound (I), the compound (II), and at least one compound selected from the surfactant (III) and the compound (IV).

ADVANTAGEOUS EFFECTS OF INVENTION

The compositions according to the present invention can easily give cured products enriched with hydrophilic groups at the surface. The compositions can give cured products whose surface is enriched with hydrophilic groups that are hardly concentrated at the surface by the conventional methods. The cured products obtained are excellent in hydrophilicity and can be used as materials having excellent properties such as antifogging properties and antifouling properties.

BRIEF DESCRIPTION OF DRAWINGS

[Fig. 1] Fig. 1 is a schematic view illustrating a method of preparing a specimen for the measurement of the gradient of anion concentration (Sa/Da) in Examples.

[Fig. 2] Fig. 2 is a schematic view illustrating a method for removing a solvent from a polymerizable composition in Examples.

DESCRIPTION OF EMBODIMENTS

Compositions according to the present invention are characterized by including a compound (I), a compound (II), and at least one compound selected from a surfactant (III) and a compound (IV). These compounds are described below.

[Compounds (I)]

The compound (I) that is a constituent of the inventive composition has at least one hydrophilic group selected from anionic hydrophilic groups, cationic hydrophilic groups and hydroxyl groups, and at least one functional group with a polymerizable carbon-carbon double bond. When the hydrophilic group is a hydroxyl group, the compound (I) contains one functional group with a polymerizable carbon-carbon double bond. As a result of the incorporation of the compound having such a hydrophilic group and such a functional group with a carbon-carbon double bond, the polymerization of the composition provides hydrophilic cured products.

Examples of the anionic hydrophilic groups include sulfonate groups, carboxyl groups, phosphate groups, O-sulfate groups ($-O-SO_3^-$) and N-sulfate groups ($-NH-SO_3^-$). Of the anionic hydrophilic groups, sulfonate groups, carboxyl groups and phosphate groups are preferable.

In the compound (I), the anionic hydrophilic group may be present in the form of a salt.

Thus, the sulfonate group, the carboxyl group, and the phosphate group may be typically present in the compound (I) in the forms of ($\alpha$), ($\beta$), and ($\gamma$1) or (y2), respectively, represented by the following formulas:

$$-SO_3M\ (\alpha)\ -COOM\ (\beta)\ -OP{=}O(OM)_2\ (\gamma 1)\ (-o)_2P{=}o(OM)_1\ (\gamma_2)$$

In the formulas ($\alpha$) to ($\gamma$2), M is at least one monovalent cation selected from hydrogen ions, ammonium ions, alkali metal ions, and alkaline earth metals having 1/2 atomic valence.

In the invention, the ammonium ion is a cation resulting from the bonding of a hydrogen ion to ammonia, a primary amine, a secondary amine or a tertiary amine. From the point of view of hydrophilicity, the ammonium ion is preferably a cation in which a hydrogen ion is bonded to ammonia or an amine having a small number of carbon atoms, and is more preferably an ammonium ion formed by the bonding of a hydrogen ion to ammonia, or methylammonium.

Examples of the alkali metals include lithium, sodium, potassium and rubidium.

Examples of the alkaline earth metals include beryllium, magnesium, calcium, strontium and barium.

Of the cations M, alkali metal ions are preferable, and sodium ions, potassium ions and rubidium ions are more preferable.

Examples of the cationic hydrophilic groups include quaternary ammonium groups, betaine groups and amine oxide groups. Of these cationic hydrophilic groups, quaternary ammonium groups and betaine groups are preferable.

The hydroxyl groups may be any of alcoholic hydroxyl groups and phenolic hydroxyl groups as long as the advantageous effects of the invention are obtained. Alcoholic hydroxyl groups are preferable.

The hydrophilic groups present in the compounds (I) are preferably anionic hydrophilic groups.

The functional groups with a polymerizable carbon-carbon double bond are not particularly limited as long as the functional groups can initiate radical polymerization or ion polymerization. Examples include acryloyl group, methacryloyl group, acryloyloxy group, methacryloyloxy group, acryloylthio group, methacryloylthio group, acrylamide group, methacrylamide group, allyl group, vinyl group, isopropenyl group, maleyl group (-CO-CH=CH-CO-), itaconyl group (-CO-CH=CH-CO-) and styryl group. In the present specification, acryloyl and methacryloyl are sometimes collectively written as (meth)acryloyl, acryloyloxy and methacryloyloxy as (meth)acryloyloxy, acryloylthio and methacryloylthio as (meth)acryloylthio, and acrylamide and methacrylamide as (meth)acrylamide.

The compound (I) is preferably a compound represented by the general formula (100) below:

[Chem. 1]

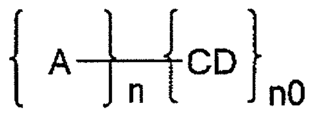

(1 0 0)

In the formula (100), A is a $C_{2-100}$ organic group having 1 to 5 functional groups with a polymerizable carbon-carbon double bond; CD is a group which includes at least one hydrophilic group and is selected from the general formulas (101) to (114) below; n indicates the number of As bonded to CD and is 1 or 2; and n0 indicates the number of CDs bonded to A and is an integer of 1 to 5. When CD is a hydroxyl-containing group, n is 1 and A contains one functional group with a polymerizable carbon-carbon double bond.

Examples of the groups CD including an anionic hydrophilic group include hydrophilic groups represented by the general formulas (101) to (107) below.

[Chem. 2]

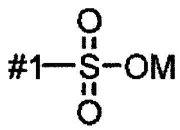

(1 0 1)

In the formula (101), M is a hydrogen atom, an alkali metal, an alkaline earth metal having 1/2 atomic valence or an ammonium ion; and #1 indicates a hand bonded to a carbon atom present in A in the formula (100).

[Chem. 3]

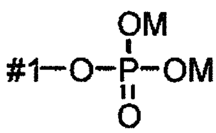

(1 0 2)

In the formula (102), M at each occurrence is a hydrogen atom, an alkali metal, an alkaline earth metal having 1/2 atomic valence or an ammonium ion; and #1 indicates a hand bonded to a carbon atom present in A in the formula (100).

[Chem. 4]

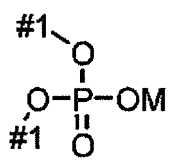

(1 0 3)

In the formula (103), M is a hydrogen atom, an alkali metal, an alkaline earth metal having 1/2 atomic valence or an ammonium ion; and #1 at each occurrence indicates a hand bonded to a carbon atom present in A in the formula (100).

[Chem. 5]

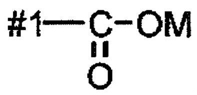

(1 0 4)

In the formula (104), M is a hydrogen atom, an alkali metal, an alkaline earth metal having 1/2 atomic valence, an ammonium ion and an amine ion; and #1 indicates a hand bonded to a carbon atom present in A in the formula (100).

[Chem. 6]

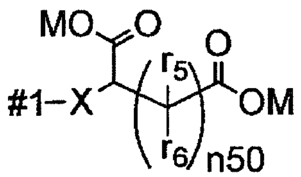

(1 0 5)

In the formula (105), $r_5$ and $r_6$ each independently represent a hydrogen atom, a methyl group, an ethyl group or a hydroxyl group; n50 is an integer of 0 to 5; X is -O-, -S-, -NH- or $-NCH_3-$; M at each occurrence is a hydrogen atom, an alkali metal, an alkaline earth metal having 1/2 atomic valence or an ammonium ion; and #1 indicates a hand bonded to a carbon atom present in A in the formula (100).

[Chem. 7]

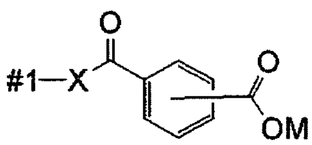

(1 0 6)

In the formula (106), X is -O-, -S-, -NH- or $-NCH_3-$; M is a hydrogen atom, an alkali metal, an alkaline earth metal having 1/2 atomic valence or an ammonium ion; and #1 indicates a hand bonded to a carbon atom present in A in the formula (100) .

[Chem. 8]

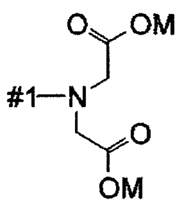

(1 0 7)

In the formula (107), M at each occurrence is a hydrogen atom, an alkali metal, an alkaline earth metal having 1/2 atomic valence or an ammonium ion; and #1 indicates a hand bonded to a carbon atom present in A in the formula (100).

Examples of the groups CD including a hydroxyl group include hydrophilic groups represented by the general formulas (108) to (111) below.

[Chem. 9]

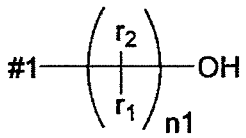

(108)

In the formula (108), n1 is an integer of 0 to 100; $r_1$ and $r_2$ each independently represent a hydrogen atom, a methyl group, an ethyl group or a hydroxyl group; when n1 is 2 or greater, $r_1$s and $r_2$s each may be the same as or different from one another; and #1 indicates a hand bonded to a carbon atom present in A in the formula (100).

[Chem. 10]

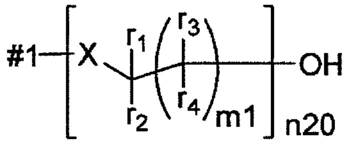

(109)

In the formula (109), X is -O-, -S-, -NH- or $-NCH_3-$; Xs may be the same as or different from one another; m1 is an integer of 0 to 10; n20 is an integer of 2 to 100; $r_1$ to $r_4$ each independently represent a hydrogen atom, a methyl group, an ethyl group or a hydroxyl group; Xs, $r_1$s, $r_2$s, $r_3$s and $r_4$s each may be the same as or different from one another; and #1 indicates a hand bonded to a carbon atom present in A in the formula (100).

[Chem. 11]

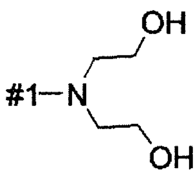

(110)

In the formula (110), #1 indicates a hand bonded to a carbon atom present in A in the formula (100).

[Chem. 12]

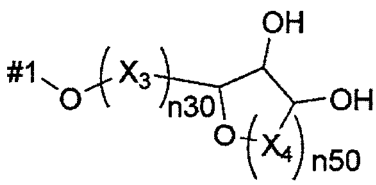

(111)

In the formula (111), $X_3$ and $X_4$ are each independently $-CH_2-$, -CH(OH)- or -CO-; n30 is an integer of 0 to 3; n50 is an integer of 0 to 5; when n30 is 2 or greater, $X_3$s may be the same as or different from one another; when n50 is 2 or greater, $X_4$s may be the same as or different from one another; and #1 indicates a hand bonded to a carbon atom present in A in the formula (100).

Examples of the groups CD including a cationic hydrophilic group include hydrophilic groups represented by the general formulas (112) to (114) below.

[Chem. 13]

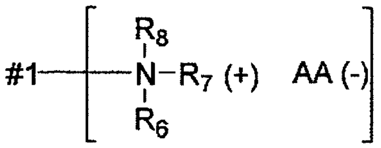

(1 1 2)

In the formula (112), AA(-) is a halogen ion, a formate ion, an acetate ion, a sulfate ion, a hydrogen sulfate ion, a phosphate ion or a hydrogen phosphate ion; $R_6$ to $R_8$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group; and #1 indicates a hand bonded to a carbon atom present in A in the formula (100).

[Chem. 14]

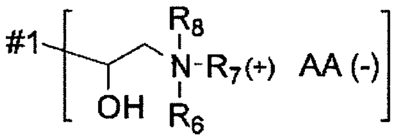

(1 1 3)

In the formula (113), AA(-) is a halogen ion, a formate ion, an acetate ion, a sulfate ion, a hydrogen sulfate ion, a phosphate ion or a hydrogen phosphate ion; $R_6$ to $R_8$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group; and #1 indicates a hand bonded to a carbon atom present in A in the formula (100).

[Chem. 15]

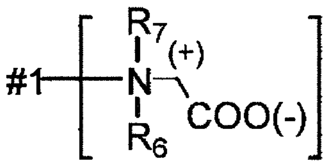

(1 1 4)

In the formula (114), $R_6$ and $R_7$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group; and #1 indicates a hand bonded to a carbon atom present in A in the formula (100).

In the formula (100) described hereinabove, A is preferably a $C_{2-100}$ organic group which has 1 or 2 functional groups with a polymerizable carbon-carbon double bond represented by any of the general formulas (120) to (130) below. When CD in the general formula (100) is a hydroxyl-containing group, it is preferable that A be a functional group with at least one polymerizable carbon-carbon double bond selected from the general formulas (120) to (126) below.

[Chem. 16]

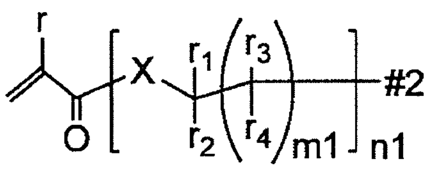

(1 2 0)

In the formula (120), X is -O-, -S-, -NH- or $-NCH_3-$; r represents a hydrogen atom or a methyl group; $r_1$ to $r_4$ each independently represent a hydrogen atom, a methyl group, an ethyl group or a hydroxyl group; m1 is an integer of 0 to 10; n1 is an integer of 0 to 100; and #2 indicates a hand bonded to #1 present in at least one group selected from those groups represented by the general formulas (101) to (114).

[Chem. 17]

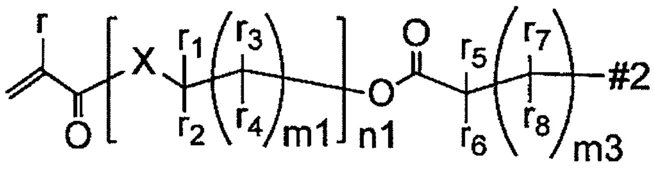

(121)

In the formula (121), X is -O-, -S-, -NH- or $-NCH_3-$; r represents a hydrogen atom or a methyl group; $r_1$ to $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 and m3 are each independently an integer of 0 to 10; n1 is an integer of 0 to 100; and #2 indicates a hand bonded to #1 present in at least one group selected from those groups represented by the general formulas (101) to (114).

[Chem. 18]

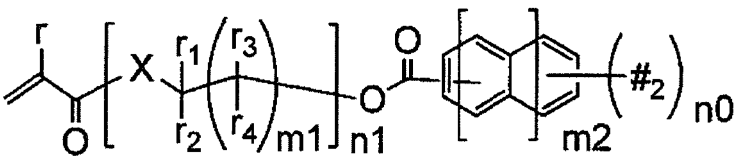

(122)

In the formula (122), X is -O-, -S-, -NH- or $-NCH_3-$; r represents a hydrogen atom or a methyl group; $r_1$ to $r_4$ each independently represent a hydrogen atom, a methyl group, an ethyl group or a hydroxyl group; m2 is an integer of 0 to 5; m1 is an integer of 0 to 10; n0 is an integer of 1 to 5; n1 is an integer of 0 to 100; and #2 indicates a hand bonded to #1 present in at least one group selected from those groups represented by the general formulas (101) to (114).

[Chem. 19]

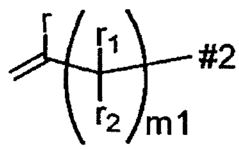

(123)

In the formula (123), r represents a hydrogen atom or a methyl group; $r_1$ and $r_2$ each independently represent a hydrogen atom, a methyl group, an ethyl group or a hydroxyl group; m1 is an integer of 0 to 10; and #2 indicates a hand bonded to #1 present in at least one group selected from those groups represented by the general formulas (101) to (114).

[Chem. 20]

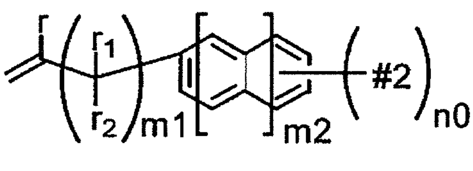

(124)

In the formula (124), r represents a hydrogen atom or a methyl group; $r_1$ and $r_2$ each independently represent

a hydrogen atom, a methyl group, an ethyl group or a hydroxyl group; m1 is an integer of 0 to 10; m2 each independently represents an integer of 0 to 5; n0 is an integer of 1 to 5; and #2 indicates a hand bonded to #1 present in at least one group selected from those groups represented by the general formulas (101) to (114).

[Chem. 21]

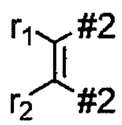

(1 2 5)

In the formula (125), $r_1$ and $r_2$ each independently represent a hydrogen atom, a methyl group, an ethyl group or a hydroxyl group; and #2 at each occurrence indicates a hand bonded to #1 present in at least one group selected from those groups represented by the general formulas (101) to (114).

[Chem. 22]

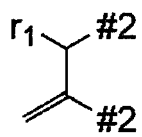

(1 2 6)

In the formula (126), $r_1$ represents a hydrogen atom, a methyl group, an ethyl group or a hydroxyl group; and #2 at each occurrence indicates a hand bonded to #1 present in at least one group selected from those groups represented by the general formulas (101) to (114).

[Chem. 23]

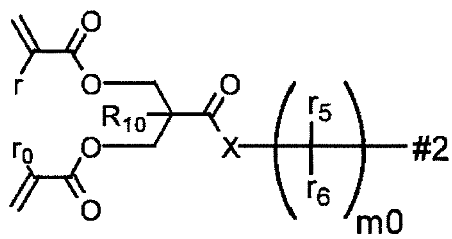

(1 2 7)

In the formula (127), X is -O-, -S-, -NH- or $-NCH_3-$; r and $r_0$ each independently represent a hydrogen atom or a methyl group; $r_5$ and $r_6$ each independently represent a hydrogen atom, a methyl group, an ethyl group or a hydroxyl group; $R_{10}$ represents a hydrogen atom, a $C_{1-10}$ alkyl group, a $C_{3-10}$ cycloalkyl group, a phenyl group, a benzyl group, a hydroxyl group, hydroxymethyl or hydroxyethyl; m0 is an integer of 1 to 10; and #2 indicates a hand bonded to #1 present in at least one group selected from those groups represented by the general formulas (101) to (107) and (112) to (114).

[Chem. 24]

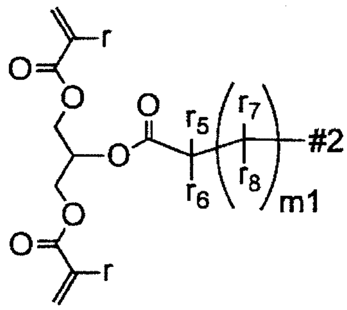

(1 2 8)

In the formula (128), r independently at each occurrence represents a hydrogen atom or a methyl group; $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is an integer of 0 to 10; and #2 indicates a hand bonded to #1 present in at least one group selected from those groups represented by the general formulas (101) to (107) and (112) to (114).

[Chem. 25]

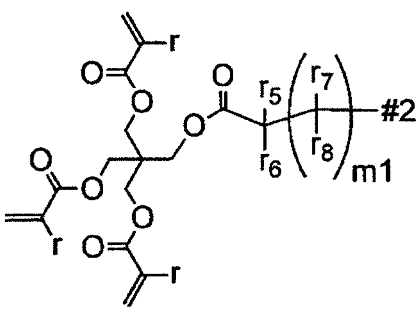

(1 2 9)

In the formula (129), r independently at each occurrence represents a hydrogen atom or a methyl group; $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is an integer of 0 to 10; and #2 indicates a hand bonded to #1 present in at least one group selected from those groups represented by the general formulas (101) to (107) and (112) to (114).

[Chem. 26]

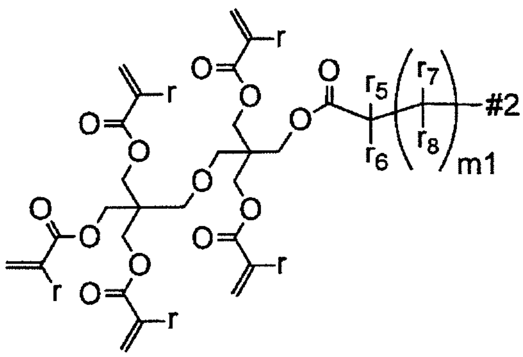

(1 3 0)

In the formula (130), r independently at each occurrence represents a hydrogen atom or a methyl group; $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is an integer of 0 to 10; and #2 indicates a hand bonded to #1 present in at least one group selected from those groups represented by the general formulas (101) to (107) and (112) to (114).

Of the compounds (I) having an anionic hydrophilic group, those compounds represented by the general formulas (Ia) to (If) below are preferable.

[Chem. 27]

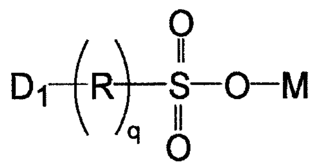

(I a)

In the formula (Ia), q is 0 or 1; R is a $C_{1-600}$ divalent aliphatic hydrocarbon group which may contain at least one group selected from aromatic rings, alicyclic groups, ether groups and ester groups; when q is 1, $D_1$ represents a (meth) acryloyloxy group, a (meth)acryloylthio group, a (meth)acrylamide group, a vinyl group, an allyl group, an isopropenyl group or a styryl group; when q is 0, $D_1$ represents a vinyl group, an allyl group, an isopropenyl group or a styryl group; and M represents a hydrogen ion, an ammonium ion, an alkali metal ion or an alkaline earth metal ion having 1/2 atomic valence.

[Chem. 28]

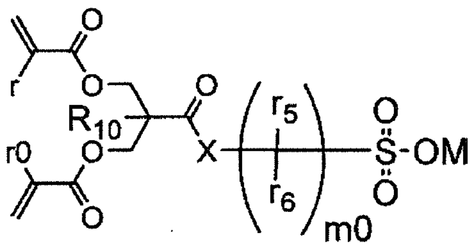

(I b)

In the formula (Ib), X is -O-, -S-, -NH- or $-NCH_3-$; r and $r_0$ each independently represent a hydrogen atom or a methyl group; $r_5$ and $r_6$ each independently represent a hydrogen atom, a methyl group, an ethyl group or a hydroxyl group; $R_{10}$ represents a hydrogen atom, a $C_{1-10}$ alkyl group, a $C_{3-10}$ cycloalkyl group, a phenyl group, a benzyl group, a hydroxyl group, hydroxymethyl or hydroxyethyl; m0 is an integer of 1 to 10; and M represents a hydrogen ion, an ammonium ion, an alkali metal ion or an alkaline earth metal ion having 1/2 atomic valence.

Examples of the compounds represented by the general formula (Ib) include 2,2-bis((meth)acryloyloxymethyl)acetic acid sulfomethyl ester,

2,2-bis((meth)acryloyloxymethyl)acetic acid sulfomethyl ester lithium, 2,2-bis((meth)acryloyloxymethyl)acetic acid sulfomethyl ester sodium,

2,2-bis((meth)acryloyloxymethyl)acetic acid sulfomethyl ester potassium, 2,2-bis((meth)acryloyloxymethyl)acetic acid sulfomethyl ester ammonium,

2,2-bis((meth)acryloyloxymethyl)acetic acid sulfomethyl ester magnesium, 2,2-bis((meth)acryloyloxymethyl)acetic acid sulfomethyl ester calcium,

2,2-bis((meth)acryloyloxymethyl)acetic acid-2-sulfoethyl ester, 2,2-bis((meth)acryloyloxymethyl)acetic acid-2-sulfoethyl ester lithium,

2,2-bis((meth)acryloyloxymethyl)acetic acid-2-sulfoethyl ester sodium, 2,2-bis((meth)acryloyloxymethyl)acetic acid-2-sulfoethyl ester potassium,

2,2-bis((meth)acryloyloxymethyl)acetic acid-2-sulfoethyl ester ammonium, 2,2-bis((meth)acryloyloxymethyl)acetic acid-2-sulfoethyl ester magnesium,

2,2-bis((meth)acryloyloxymethyl)acetic acid-2-sulfoethyl ester calcium, 2,2-bis((meth)acryloyloxymethyl)acetic acid-3-sulfopropyl ester,
2,2-bis((meth)acryloyloxymethyl)acetic acid-3-sulfopropyl ester lithium, 2,2-bis((meth)acryloyloxymethyl)acetic acid-3-sulfopropyl ester sodium,
2,2-bis((meth)acryloyloxymethyl)acetic acid-3-sulfopropyl ester potassium, 2,2-bis((meth)acryloyloxymethyl)acetic acid-3-sulfopropyl ester ammonium,
2,2-bis((meth)acryloyloxymethyl)acetic acid-3-sulfopropyl ester magnesium, 2,2-bis((meth)acryloyloxymethyl)acetic acid-3-sulfopropyl ester calcium,
2,2-bis((meth)acryloyloxymethyl)acetic acid-2-sulfopropyl ester, 2,2-bis((meth)acryloyloxymethyl)acetic acid-2-sulfopropyl ester lithium,
2,2-bis((meth)acryloyloxymethyl)acetic acid-2-sulfopropyl ester sodium, 2,2-bis((meth)acryloyloxymethyl)acetic acid-2-sulfopropyl ester potassium,
2,2-bis((meth)acryloyloxymethyl)acetic acid-2-sulfopropyl ester ammonium, 2,2-bis((meth)acryloyloxymethyl)acetic acid-2-sulfopropyl ester magnesium,
2,2-bis((meth)acryloyloxymethyl)acetic acid-2-sulfopropyl ester calcium, 2,2-bis((meth)acryloyloxymethyl)acetic acid-4-sulfobutyl ester,
2,2-bis((meth)acryloyloxymethyl)acetic acid-4-sulfobutyl ester lithium, 2,2-bis((meth)acryloyloxymethyl)acetic acid-4-sulfobutyl ester sodium,
2,2-bis((meth)acryloyloxymethyl)acetic acid-4-sulfobutyl ester potassium, 2,2-bis((meth)acryloyloxymethyl)acetic acid-4-sulfobutyl ester ammonium,
2,2-bis((meth)acryloyloxymethyl)acetic acid-4-sulfobutyl ester magnesium, 2,2-bis((meth)acryloyloxymethyl)acetic acid-4-sulfobutyl ester calcium,
2,2-bis((meth)acryloyloxymethyl)acetic acid-6-sulfohexyl ester, 2,2-bis((meth)acryloyloxymethyl)acetic acid-6-sulfohexyl ester lithium,
2,2-bis((meth)acryloyloxymethyl)acetic acid-6-sulfohexyl ester sodium, 2,2-bis((meth)acryloyloxymethyl)acetic acid-6-sulfohexyl ester potassium,
2,2-bis((meth)acryloyloxymethyl)acetic acid-6-sulfohexyl ester ammonium, 2,2-bis((meth)acryloyloxymethyl)acetic acid-6-sulfohexyl ester magnesium,
2,2-bis((meth)acryloyloxymethyl)acetic acid-6-sulfohexyl ester calcium, 2,2-bis((meth)acryloyloxymethyl)acetic acid-10-sulfodecyl ester potassium,
2,2-bis((meth)acryloyloxymethyl)acetic acid-3-sulfopropyl ester, 2,2-bis((meth)acryloyloxymethyl)acetic acid-3-sulfopropyl ester lithium,
2,2-bis((meth)acryloyloxymethyl)acetic acid-3-sulfopropyl ester sodium, 2,2-bis((meth)acryloyloxymethyl)acetic acid-3-sulfopropyl ester potassium,
2,2-bis((meth)acryloyloxymethyl)acetic acid-3-sulfopropyl ester ammonium, 2,2-bis((meth)acryloyloxymethyl)acetic acid-3-sulfopropyl ester magnesium,
2,2-bis((meth)acryloyloxymethyl)acetic acid-3-sulfopropyl ester calcium, 2,2-bis((meth)acryloyloxymethyl)propionic acid sulfomethyl ester,
2,2-bis((meth)acryloyloxymethyl)propionic acid sulfomethyl ester lithium, 2,2-bis((meth)acryloyloxymethyl)propionic acid sulfomethyl ester sodium,
2,2-bis((meth)acryloyloxymethyl)propionic acid sulfomethyl ester potassium, 2,2-bis((meth)acryloyloxymethyl)propionic acid sulfomethyl ester ammonium,
2,2-bis((meth)acryloyloxymethyl)propionic acid sulfomethyl ester magnesium, 2,2-bis((meth)acryloyloxymethyl)propionic acid sulfomethyl ester calcium,
2,2-bis((meth)acryloyloxymethyl)propionic acid-2-sulfoethyl ester, 2,2-bis((meth)acryloyloxymethyl)propionic acid-2-sulfoethyl ester lithium,
2,2-bis((meth)acryloyloxymethyl)propionic acid-2-sulfoethyl ester sodium, 2,2-bis((meth)acryloyloxymethyl)propionic acid-2-sulfoethyl ester potassium,
2,2-bis((meth)acryloyloxymethyl)propionic acid-2-sulfoethyl ester ammonium, 2,2-bis((meth)acryloyloxymethyl)propionic acid-2-sulfoethyl ester magnesium,
2,2-bis((meth)acryloyloxymethyl)propionic acid-2-sulfoethyl ester calcium, 2,2-bis((meth)acryloyloxymethyl)propionic acid-3-sulfopropyl ester,
2,2-bis((meth)acryloyloxymethyl)propionic acid-3-sulfopropyl ester lithium,
2,2-bis((meth)acryloyloxymethyl)propionic acid-3-sulfopropyl ester sodium,
2,2-bis((meth)acryloyloxymethyl)propionic acid-3-sulfopropyl ester potassium,
2,2-bis((meth)acryloyloxymethyl)propionic acid-3-sulfopropyl ester ammonium,
2,2-bis((meth)acryloyloxymethyl)propionic acid-3-sulfopropyl ester magnesium,
2,2-bis((meth)acryloyloxymethyl)propionic acid-3-sulfopropyl ester calcium,
2,2-bis((meth)acryloyloxymethyl)propionic acid-2-sulfopropyl ester,

2,2-bis((meth)acryloyloxymethyl)propionic acid-2-sulfopropyl ester lithium,
2,2-bis((meth)acryloyloxymethyl)propionic acid-2-sulfopropyl ester sodium,
2,2-bis((meth)acryloyloxymethyl)propionic acid-2-sulfopropyl ester potassium,
2,2-bis((meth)acryloyloxymethyl)propionic acid-2-sulfopropyl ester ammonium,
2,2-bis((meth)acryloyloxymethyl)propionic acid-2-sulfopropyl ester magnesium,
2,2-bis((meth)acryloyloxymethyl)propionic acid-2-sulfopropyl ester calcium,
2,2-bis((meth)acryloyloxymethyl)propionic acid-4-sulfobutyl ester, 2,2-bis((meth)acryloyloxymethyl)propionic acid-4-sulfobutyl ester lithium,
2,2-bis((meth)acryloyloxymethyl)propionic acid-4-sulfobutyl ester sodium, 2,2-bis((meth)acryloyloxymethyl)propionic acid-4-sulfobutyl ester potassium,
2,2-bis((meth)acryloyloxymethyl)propionic acid-4-sulfobutyl ester ammonium, 2,2-bis((meth)acryloyloxymethyl)propionic acid-4-sulfobutyl ester magnesium,

2,2-bis((meth)acryloyloxymethyl)propionic acid-4-sulfobutyl ester calcium, 2,2-bis((meth)acryloyloxymethyl)propionic acid-6-sulfohexyl ester,
2,2-bis((meth)acryloyloxymethyl)propionic acid-6-sulfohexyl ester lithium, 2,2-bis((meth)acryloyloxymethyl)propionic acid-6-sulfohexyl ester sodium,
2,2-bis((meth)acryloyloxymethyl)propionic acid-6-sulfohexyl ester potassium, 2,2-bis((meth)acryloyloxymethyl)propionic acid-6-sulfohexyl ester ammonium,
2,2-bis((meth)acryloyloxymethyl)propionic acid-6-sulfohexyl ester magnesium, 2,2-bis((meth)acryloyloxymethyl)propionic acid-6-sulfohexyl ester calcium,
2,2-bis((meth)acryloyloxymethyl)propionic acid-10-sulfodecyl ester potassium,
2,2-bis((meth)acryloyloxymethyl)propionic acid-3-sulfopropyl ester,

2,2-bis((meth)acryloyloxymethyl)propionic acid-3-sulfopropyl ester lithium,
2,2-bis((meth)acryloyloxymethyl)propionic acid-3-sulfopropyl ester sodium,
2,2-bis((meth)acryloyloxymethyl)propionic acid-3-sulfopropyl ester potassium,
2,2-bis((meth)acryloyloxymethyl)propionic acid-3-sulfopropyl ester ammonium,
2,2-bis((meth)acryloyloxymethyl)propionic acid-3-sulfopropyl ester magnesium,
2,2-bis((meth)acryloyloxymethyl)propionic acid-3-sulfopropyl ester calcium,
2,2-bis((meth)acryloyloxymethyl)butyric acid sulfomethyl ester, 2,2-bis((meth)acryloyloxymethyl)butyric acid sulfomethyl ester lithium,
2,2-bis((meth)acryloyloxymethyl)butyric acid sulfomethyl ester sodium, 2,2-bis((meth)acryloyloxymethyl)butyric acid sulfomethyl ester potassium,
2,2-bis((meth)acryloyloxymethyl)butyric acid sulfomethyl ester ammonium, 2,2-bis((meth)acryloyloxymethyl)butyric acid sulfomethyl ester magnesium,
2,2-bis((meth)acryloyloxymethyl)butyric acid sulfomethyl ester calcium, 2,2-bis((meth)acryloyloxymethyl)butyric acid-2-sulfoethyl ester,
2,2-bis((meth)acryloyloxymethyl)butyric acid-2-sulfoethyl ester lithium, 2,2-bis((meth)acryloyloxymethyl)butyric acid-2-sulfoethyl ester sodium,
2,2-bis((meth)acryloyloxymethyl)butyric acid-2-sulfoethyl ester potassium, 2,2-bis((meth)acryloyloxymethyl)butyric acid-2-sulfoethyl ester ammonium,
2,2-bis((meth)acryloyloxymethyl)butyric acid-2-sulfoethyl ester magnesium, 2,2-bis((meth)acryloyloxymethyl)butyric acid-2-sulfoethyl ester calcium,
2,2-bis((meth)acryloyloxymethyl)butyric acid-3-sulfopropyl ester, 2,2-bis((meth)acryloyloxymethyl)butyric acid-3-sulfopropyl ester lithium,
2,2-bis((meth)acryloyloxymethyl)butyric acid-3-sulfopropyl ester sodium, 2,2-bis((meth)acryloyloxymethyl)butyric acid-3-sulfopropyl ester potassium,
2,2-bis((meth)acryloyloxymethyl)butyric acid-3-sulfopropyl ester ammonium, 2,2-bis((meth)acryloyloxymethyl)butyric acid-3-sulfopropyl ester magnesium,
2,2-bis((meth)acryloyloxymethyl)butyric acid-3-sulfopropyl ester calcium, 2,2-bis((meth)acryloyloxymethyl)butyric acid-2-sulfopropyl ester,
2,2-bis((meth)acryloyloxymethyl)butyric acid-2-sulfopropyl ester lithium, 2,2-bis((meth)acryloyloxymethyl)butyric acid-2-sulfopropyl ester sodium,
2,2-bis((meth)acryloyloxymethyl)butyric acid-2-sulfopropyl ester potassium, 2,2-bis((meth)acryloyloxymethyl)butyric acid-2-sulfopropyl ester ammonium,
2,2-bis((meth)acryloyloxymethyl)butyric acid-2-sulfopropyl ester magnesium, 2,2-bis((meth)acryloyloxymethyl)butyric acid-2-sulfopropyl ester calcium,

2,2-bis((meth)acryloyloxymethyl)butyric acid-4-sulfobutyl ester, 2,2-bis((meth)acryloyloxymethyl)butyric acid-4-sulfobutyl ester lithium,
2,2-bis((meth)acryloyloxymethyl)butyric acid-4-sulfobutyl ester sodium, 2,2-bis((meth)acryloyloxymethyl)butyric acid-4-sulfobutyl ester potassium,
2,2-bis((meth)acryloyloxymethyl)butyric acid-4-sulfobutyl ester ammonium, 2,2-bis((meth)acryloyloxymethyl)butyric acid-4-sulfobutyl ester magnesium,
2,2-bis((meth)acryloyloxymethyl)butyric acid-4-sulfobutyl ester calcium, 2,2-bis((meth)acryloyloxymethyl)butyric acid-6-sulfohexyl ester,
2,2-bis((meth)acryloyloxymethyl)butyric acid-6-sulfohexyl ester lithium, 2,2-bis((meth)acryloyloxymethyl)butyric acid-6-sulfohexyl ester sodium,
2,2-bis((meth)acryloyloxymethyl)butyric acid-6-sulfohexyl ester potassium, 2,2-bis((meth)acryloyloxymethyl)butyric acid-6-sulfohexyl ester ammonium,
2,2-bis((meth)acryloyloxymethyl)butyric acid-6-sulfohexyl ester magnesium, 2,2-bis((meth)acryloyloxymethyl)butyric acid-6-sulfohexyl ester calcium,
2,2-bis((meth)acryloyloxymethyl)butyric acid-10-sulfodecyl ester potassium, 2,2-bis((meth)acryloyloxymethyl)butyric acid-3-sulfopropyl ester,
2,2-bis((meth)acryloyloxymethyl)butyric acid-3-sulfopropyl ester lithium, 2,2-bis((meth)acryloyloxymethyl)butyric acid-3-sulfopropyl ester sodium,
2,2-bis((meth)acryloyloxymethyl)butyric acid-3-sulfopropyl ester potassium, 2,2-bis((meth)acryloyloxymethyl)butyric acid-3-sulfopropyl ester ammonium,
2,2-bis((meth)acryloyloxymethyl)butyric acid-3-sulfopropyl ester magnesium, 2,2-bis((meth)acryloyloxymethyl)butyric acid-3-sulfopropyl ester calcium,
2,2-bis((meth)acryloyloxymethyl)valeric acid sulfomethyl ester, 2,2-bis((meth)acryloyloxymethyl)valeric acid sulfomethyl ester lithium,
2,2-bis((meth)acryloyloxymethyl)valeric acid sulfomethyl ester sodium, 2,2-bis((meth)acryloyloxymethyl)valeric acid sulfomethyl ester potassium,
2,2-bis((meth)acryloyloxymethyl)valeric acid sulfomethyl ester ammonium, 2,2-bis((meth)acryloyloxymethyl)valeric acid sulfomethyl ester magnesium,
2,2-bis((meth)acryloyloxymethyl)valeric acid sulfomethyl ester calcium, 2,2-bis((meth)acryloyloxymethyl)valeric acid-2-sulfoethyl ester,
2,2-bis((meth)acryloyloxymethyl)valeric acid-2-sulfoethyl ester lithium, 2,2-bis((meth)acryloyloxymethyl)valeric acid-2-sulfoethyl ester sodium,
2,2-bis((meth)acryloyloxymethyl)valeric acid-2-sulfoethyl ester potassium, 2,2-bis((meth)acryloyloxymethyl)valeric acid-2-sulfoethyl ester ammonium,
2,2-bis((meth)acryloyloxymethyl)valeric acid-2-sulfoethyl ester magnesium, 2,2-bis((meth)acryloyloxymethyl)valeric acid-2-sulfoethyl ester calcium,
2,2-bis((meth)acryloyloxymethyl)valeric acid-3-sulfopropyl ester, 2,2-bis((meth)acryloyloxymethyl)valeric acid-3-sulfopropyl ester lithium,
2,2-bis((meth)acryloyloxymethyl)valeric acid-3-sulfopropyl ester sodium, 2,2-bis((meth)acryloyloxymethyl)valeric acid-3-sulfopropyl ester potassium,
2,2-bis((meth)acryloyloxymethyl)valeric acid-3-sulfopropyl ester ammonium, 2,2-bis((meth)acryloyloxymethyl)valeric acid-3-sulfopropyl ester magnesium,
2,2-bis((meth)acryloyloxymethyl)valeric acid-3-sulfopropyl ester calcium, 2,2-bis((meth)acryloyloxymethyl)valeric acid-2-sulfopropyl ester,
2,2-bis((meth)acryloyloxymethyl)valeric acid-2-sulfopropyl ester lithium, 2,2-bis((meth)acryloyloxymethyl)valeric acid-2-sulfopropyl ester sodium,
2,2-bis((meth)acryloyloxymethyl)valeric acid-2-sulfopropyl ester potassium, 2,2-bis((meth)acryloyloxymethyl)valeric acid-2-sulfopropyl ester ammonium,
2,2-bis((meth)acryloyloxymethyl)valeric acid-2-sulfopropyl ester magnesium, 2,2-bis((meth)acryloyloxymethyl)valeric acid-2-sulfopropyl ester calcium,
2,2-bis((meth)acryloyloxymethyl)valeric acid-4-sulfobutyl ester, 2,2-bis((meth)acryloyloxymethyl)valeric acid-4-sulfobutyl ester lithium,
2,2-bis((meth)acryloyloxymethyl)valeric acid-4-sulfobutyl ester sodium, 2,2-bis((meth)acryloyloxymethyl)valeric acid-4-sulfobutyl ester potassium,
2,2-bis((meth)acryloyloxymethyl)valeric acid-4-sulfobutyl ester ammonium, 2,2-bis((meth)acryloyloxymethyl)valeric acid-4-sulfobutyl ester magnesium,
2,2-bis((meth)acryloyloxymethyl)valeric acid-4-sulfobutyl ester calcium, 2,2-bis((meth)acryloyloxymethyl)valeric acid-6-sulfohexyl ester,

2,2-bis((meth)acryloyloxymethyl)valeric acid-6-sulfohexyl ester lithium, 2,2-bis((meth)acryloyloxymethyl)valeric acid-6-sulfohexyl ester sodium,
2,2-bis((meth)acryloyloxymethyl)valeric acid-6-sulfohexyl ester potassium, 2,2-bis((meth)acryloyloxymethyl)valeric acid-6-sulfohexyl ester ammonium,
2,2-bis((meth)acryloyloxymethyl)valeric acid-6-sulfohexyl ester magnesium, 2,2-bis((meth)acryloyloxymethyl)valeric acid-6-sulfohexyl ester calcium,
2,2-bis((meth)acryloyloxymethyl)valeric acid-10-sulfodecyl ester potassium, 2,2-bis((meth)acryloyloxymethyl)valeric acid-3-sulfopropyl ester,
2,2-bis((meth)acryloyloxymethyl)valeric acid-3-sulfopropyl ester lithium, 2,2-bis((meth)acryloyloxymethyl)valeric acid-3-sulfopropyl ester sodium,
2,2-bis((meth)acryloyloxymethyl)valeric acid-3-sulfopropyl ester potassium, 2,2-bis((meth)acryloyloxymethyl)valeric acid-3-sulfopropyl ester ammonium,
2,2-bis((meth)acryloyloxymethyl)valeric acid-3-sulfopropyl ester magnesium, 2,2-bis((meth)acryloyloxymethyl)valeric acid-3-sulfopropyl ester calcium,
2,2-bis((meth)acryloyloxymethyl)caproic acid sulfomethyl ester, 2,2-bis((meth)acryloyloxymethyl)caproic acid sulfomethyl ester lithium,
2,2-bis((meth)acryloyloxymethyl)caproic acid sulfomethyl ester sodium, 2,2-bis((meth)acryloyloxymethyl)caproic acid sulfomethyl ester potassium,
2,2-bis((meth)acryloyloxymethyl)caproic acid sulfomethyl ester ammonium, 2,2-bis((meth)acryloyloxymethyl)caproic acid sulfomethyl ester magnesium,
2,2-bis((meth)acryloyloxymethyl)caproic acid sulfomethyl ester calcium, 2,2-bis((meth)acryloyloxymethyl)caproic acid-2-sulfoethyl ester,
2,2-bis((meth)acryloyloxymethyl)caproic acid-2-sulfoethyl ester lithium, 2,2-bis((meth)acryloyloxymethyl)caproic acid-2-sulfoethyl ester sodium,
2,2-bis((meth)acryloyloxymethyl)caproic acid-2-sulfoethyl ester potassium, 2,2-bis((meth)acryloyloxymethyl)caproic acid-2-sulfoethyl ester ammonium,
2,2-bis((meth)acryloyloxymethyl)caproic acid-2-sulfoethyl ester magnesium, 2,2-bis((meth)acryloyloxymethyl)caproic acid-2-sulfoethyl ester calcium,
2,2-bis((meth)acryloyloxymethyl)caproic acid-3-sulfopropyl ester, 2,2-bis((meth)acryloyloxymethyl)caproic acid-3-sulfopropyl ester lithium,
2,2-bis((meth)acryloyloxymethyl)caproic acid-3-sulfopropyl ester sodium, 2,2-bis((meth)acryloyloxymethyl)caproic acid-3-sulfopropyl ester potassium,
2,2-bis((meth)acryloyloxymethyl)caproic acid-3-sulfopropyl ester ammonium, 2,2-bis((meth)acryloyloxymethyl)caproic acid-3-sulfopropyl ester magnesium,
2,2-bis((meth)acryloyloxymethyl)caproic acid-3-sulfopropyl ester calcium, 2,2-bis((meth)acryloyloxymethyl)caproic acid-2-sulfopropyl ester,
2,2-bis((meth)acryloyloxymethyl)caproic acid-2-sulfopropyl ester lithium, 2,2-bis((meth)acryloyloxymethyl)caproic acid-2-sulfopropyl ester sodium,
2,2-bis((meth)acryloyloxymethyl)caproic acid-2-sulfopropyl ester potassium, 2,2-bis((meth)acryloyloxymethyl)caproic acid-2-sulfopropyl ester ammonium,
2,2-bis((meth)acryloyloxymethyl)caproic acid-2-sulfopropyl ester magnesium, 2,2-bis((meth)acryloyloxymethyl)caproic acid-2-sulfopropyl ester calcium,
2,2-bis((meth)acryloyloxymethyl)caproic acid-4-sulfobutyl ester, 2,2-bis((meth)acryloyloxymethyl)caproic acid-4-sulfobutyl ester lithium,
2,2-bis((meth)acryloyloxymethyl)caproic acid-4-sulfobutyl ester sodium, 2,2-bis((meth)acryloyloxymethyl)caproic acid-4-sulfobutyl ester potassium,
2,2-bis((meth)acryloyloxymethyl)caproic acid-4-sulfobutyl ester ammonium, 2,2-bis((meth)acryloyloxymethyl)caproic acid-4-sulfobutyl ester magnesium,
2,2-bis((meth)acryloyloxymethyl)caproic acid-4-sulfobutyl ester calcium, 2,2-bis((meth)acryloyloxymethyl)caproic acid-6-sulfohexyl ester,
2,2-bis((meth)acryloyloxymethyl)caproic acid-6-sulfohexyl ester lithium, 2,2-bis((meth)acryloyloxymethyl)caproic acid-6-sulfohexyl ester sodium,
2,2-bis((meth)acryloyloxymethyl)caproic acid-6-sulfohexyl ester potassium, 2,2-bis((meth)acryloyloxymethyl)caproic acid-6-sulfohexyl ester ammonium,
2,2-bis((meth)acryloyloxymethyl)caproic acid-6-sulfohexyl ester magnesium, 2,2-bis((meth)acryloyloxymethyl)caproic acid-6-sulfohexyl ester calcium,
2,2-bis((meth)acryloyloxymethyl)caproic acid-10-sulfodecyl ester potassium, 2,2-bis((meth)acryloyloxymethyl)caproic acid-3-sulfopropyl ester,

2,2-bis((meth)acryloyloxymethyl)caproic acid-3-sulfopropyl ester lithium, 2,2-bis((meth)acryloyloxymethyl)caproic acid-3-sulfopropyl ester sodium,
2,2-bis((meth)acryloyloxymethyl)caproic acid-3-sulfopropyl ester potassium, 2,2-bis((meth)acryloyloxymethyl)caproic acid-3-sulfopropyl ester ammonium,
2,2-bis((meth)acryloyloxymethyl)caproic acid-3-sulfopropyl ester magnesium, 2,2-bis((meth)acryloyloxymethyl)caproic acid-3-sulfopropyl ester calcium,
2,2-bis((meth)acryloyloxymethyl)caprylic acid sulfomethyl ester, 2,2-bis((meth)acryloyloxymethyl)caprylic acid sulfomethyl ester lithium,
2,2-bis((meth)acryloyloxymethyl)caprylic acid sulfomethyl ester sodium, 2,2-bis((meth)acryloyloxymethyl)caprylic acid sulfomethyl ester potassium,
2,2-bis((meth)acryloyloxymethyl)caprylic acid sulfomethyl ester ammonium, 2,2-bis((meth)acryloyloxymethyl)caprylic acid sulfomethyl ester magnesium,
2,2-bis((meth)acryloyloxymethyl)caprylic acid sulfomethyl ester calcium, 2,2-bis((meth)acryloyloxymethyl)caprylic acid-2-sulfoethyl ester,
2,2-bis((meth)acryloyloxymethyl)caprylic acid-2-sulfoethyl ester lithium, 2,2-bis((meth)acryloyloxymethyl)caprylic acid-2-sulfoethyl ester sodium,
2,2-bis((meth)acryloyloxymethyl)caprylic acid-2-sulfoethyl ester potassium, 2,2-bis((meth)acryloyloxymethyl)caprylic acid-2-sulfoethyl ester ammonium,
2,2-bis((meth)acryloyloxymethyl)caprylic acid-2-sulfoethyl ester magnesium, 2,2-bis((meth)acryloyloxymethyl)caprylic acid-2-sulfoethyl ester calcium,
2,2-bis((meth)acryloyloxymethyl)caprylic acid-3-sulfopropyl ester, 2,2-bis((meth)acryloyloxymethyl)caprylic acid-3-sulfopropyl ester lithium,
2,2-bis((meth)acryloyloxymethyl)caprylic acid-3-sulfopropyl ester sodium, 2,2-bis((meth)acryloyloxymethyl)caprylic acid-3-sulfopropyl ester potassium,
2,2-bis((meth)acryloyloxymethyl)caprylic acid-3-sulfopropyl ester ammonium, 2,2-bis((meth)acryloyloxymethyl)caprylic acid-3-sulfopropyl ester magnesium,
2,2-bis((meth)acryloyloxymethyl)caprylic acid-3-sulfopropyl ester calcium, 2,2-bis((meth)acryloyloxymethyl)caprylic acid-2-sulfopropyl ester,
2,2-bis((meth)acryloyloxymethyl)caprylic acid-2-sulfopropyl ester lithium, 2,2-bis((meth)acryloyloxymethyl)caprylic acid-2-sulfopropyl ester sodium,
2,2-bis((meth)acryloyloxymethyl)caprylic acid-2-sulfopropyl ester potassium, 2,2-bis((meth)acryloyloxymethyl)caprylic acid-2-sulfopropyl ester ammonium,
2,2-bis((meth)acryloyloxymethyl)caprylic acid-2-sulfopropyl ester magnesium, 2,2-bis((meth)acryloyloxymethyl)caprylic acid-2-sulfopropyl ester calcium,
2,2-bis((meth)acryloyloxymethyl)caprylic acid-4-sulfobutyl ester, 2,2-bis((meth)acryloyloxymethyl)caprylic acid-4-sulfobutyl ester lithium,
2,2-bis((meth)acryloyloxymethyl)caprylic acid-4-sulfobutyl ester sodium, 2,2-bis((meth)acryloyloxymethyl)caprylic acid-4-sulfobutyl ester potassium,
2,2-bis((meth)acryloyloxymethyl)caprylic acid-4-sulfobutyl ester ammonium, 2,2-bis((meth)acryloyloxymethyl)caprylic acid-4-sulfobutyl ester magnesium,
2,2-bis((meth)acryloyloxymethyl)caprylic acid-4-sulfobutyl ester calcium, 2,2-bis((meth)acryloyloxymethyl)caprylic acid-6-sulfohexyl ester,
2,2-bis((meth)acryloyloxymethyl)caprylic acid-6-sulfohexyl ester lithium, 2,2-bis((meth)acryloyloxymethyl)caprylic acid-6-sulfohexyl ester sodium,
2,2-bis((meth)acryloyloxymethyl)caprylic acid-6-sulfohexyl ester potassium, 2,2-bis((meth)acryloyloxymethyl)caprylic acid-6-sulfohexyl ester ammonium,
2,2-bis((meth)acryloyloxymethyl)caprylic acid-6-sulfohexyl ester magnesium, 2,2-bis((meth)acryloyloxymethyl)caprylic acid-6-sulfohexyl ester calcium,
2,2-bis((meth)acryloyloxymethyl)caprylic acid-10-sulfodecyl ester potassium, 2,2-bis((meth)acryloyloxymethyl)caprylic acid-3-sulfopropyl ester,
2,2-bis((meth)acryloyloxymethyl)caprylic acid-3-sulfopropyl ester lithium, 2,2-bis((meth)acryloyloxymethyl)caprylic acid-3-sulfopropyl ester sodium,
2,2-bis((meth)acryloyloxymethyl)caprylic acid-3-sulfopropyl ester potassium, 2,2-bis((meth)acryloyloxymethyl)caprylic acid-3-sulfopropyl ester ammonium,
2,2-bis((meth)acryloyloxymethyl)caprylic acid-3-sulfopropyl ester magnesium, 2,2-bis((meth)acryloyloxymethyl)caprylic acid-3-sulfopropyl ester calcium and so on.

[Chem. 29]

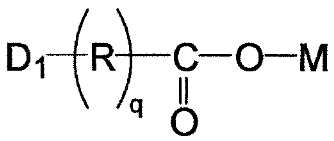

(I c)

In the formula (Ic), q is 0 or 1; R is a $C_{1-600}$ divalent aliphatic hydrocarbon group which may contain at least one group selected from aromatic rings, alicyclic groups, ether groups and ester groups; when q is 1, $D_1$ represents a (meth) acryloyloxy group, a (meth)acryloylthio group, a (meth)acrylamide group, a vinyl group, an allyl group, an isopropenyl group or a styryl group; when q is 0, $D_1$ represents a vinyl group, an allyl group, an isopropenyl group or a styryl group; and M represents a hydrogen ion, an ammonium ion, an alkali metal ion or an alkaline earth metal ion having 1/2 atomic valence.

[Chem. 30]

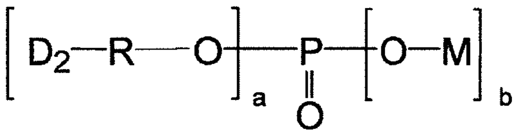

(I d)

In the formula (Id), R is a $C_{1-600}$ divalent aliphatic hydrocarbon group which may contain at least one group selected from aromatic rings, alicyclic groups, ether groups and ester groups; $D_2$ represents a (meth)acryloyloxy group, a (meth)acryloylthio group, a (meth)acrylamide group, a vinyl group, an allyl group, an isopropenyl group or a styryl group; M represents a hydrogen ion, an ammonium ion, an alkali metal ion or an alkaline earth metal ion having 1/2 atomic valence; a and b are each an integer of 1 or 2, and a + b = 3; when a is 2, $D_2$s and Rs each may be the same as or different from each other; and when b is 2, Ms may be the same as or different from each other.

[Chem. 31]

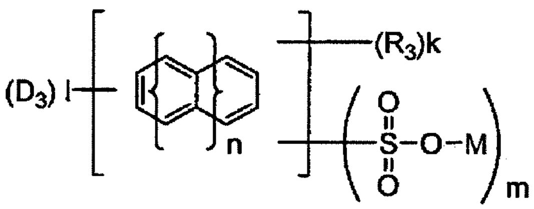

(I e)

In the formula (Ie), $D_3$, $R_3$ and $SO_3M$ are groups bonded to carbon atoms on the ring in the formula; $D_3$ independently at each occurrence represents a vinyl group, an allyl group, an isopropenyl group or a styryl group; $R_3$ independently at each occurrence represents a hydrogen atom, a methyl group, an ethyl group, a methoxy group, an ethoxy group, a fluorine atom, a chlorine atom, a bromine atom or an iodine atom; M represents a hydrogen ion, an ammonium ion, an alkali metal ion or an alkaline earth metal ion having 1/2 atomic valence; k is an integer of 0 to 10; 1 and m each independently represent an integer of 1 to 11; n is an integer of 0 to 3; k + 1 + m = 2 to 6 + 2n; when 1 is 2 or greater, $D_3$s may be the same as or different from one another; when k is 2 or greater, $R_3$s may be the same as or different from one another; and when m is 2 or greater, Ms may be the same as or different from one another. For convenience, it is desirable that those compounds which are represented by the general formula (Ie) and which may be represented also by the general formula (Ia) be excluded from the category of the compounds represented by the general formula (Ie).

The letters k, 1, m and n in the formula (Ie) above will be described. The letter n is an integer of 0 to 3. When n = 0, k is an integer of 0 to 4, 1 and m are each independently an integer of 1 to 5, and k + 1 + m is an integer of 2 to 6. When n = 1, k is an integer of 0 to 6, 1 and m are each independently an integer of 1 to 7, and k + 1 + m is an integer of 2 to 8. When n = 2, k is an integer of 0 to 8, 1 and m are each independently an integer of 1 to 9, and k + 1 + m is an integer of 2 to 10. When n = 3, k is an integer of 0 to 10, 1 and m are each independently an integer of 1 to 11, and k + 1 + m is an integer of 2 to 12.

[Chem. 32]

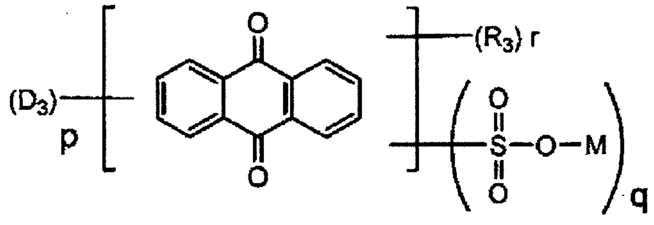

(I f)

In the formula (If), $D_3$, $R_3$ and $SO_3M$ are groups bonded to carbon atoms on the ring in the formula; $D_3$ independently at each occurrence represents a vinyl group, an allyl group, an isopropenyl group or a styryl group; $R_3$ independently at each occurrence represents a hydrogen atom, a methyl group, an ethyl group, a methoxy group, an ethoxy group, a fluorine atom, a chlorine atom, a bromine atom or an iodine atom; M represents a hydrogen ion, an ammonium ion, an alkali metal ion or an alkaline earth metal ion having 1/2 atomic valence; r is an integer of 0 to 6; q and p each independently represent an integer of 1 to 7; p + q + r = an integer of 2 to 8; when p is 2 or greater, $D_3$s may be the same as or different from one another; when r is 2 or greater, $R_3$s may be the same as or different from one another; and when q is 2 or greater, Ms may be the same as or different from one another.

Of the compounds represented by the general formula (Ia), those compounds represented by the general formula (Ia-1) below are preferable. Those compounds represented by the general formulas (Ia-a), (Ia-c) and (Ia-d) are also preferable.

[Chem. 33]

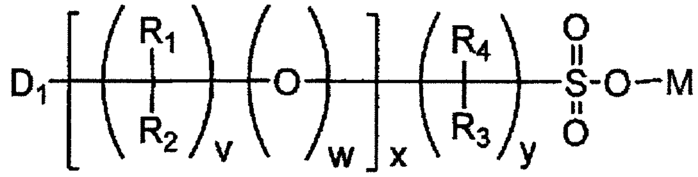

(I a−1)

In the formula (Ia-1), x is an integer of 0 to 10; y and v are each independently an integer of 0 to 10; w is 0 or 1; when any of v or y is 0, w is 0; when x is 0 and y is 0, $D_1$ represents a vinyl group, an allyl group, an isopropenyl group or a styryl group; when any of x or y is 1 or greater, $D_1$ represents a (meth)acryloyloxy group, a (meth)acryloylthio group, a (meth)acrylamide group, a vinyl group, an allyl group, an isopropenyl group or a styryl group; $R_1$ to $R_4$ each independently represent a hydrogen atom, a $C_{1-6}$ alkyl group or a $C_{1-6}$ alkoxy group; M represents a hydrogen ion, an ammonium ion, an alkali metal ion or an alkaline earth metal ion having 1/2 atomic valence; when v is 2 or greater, $R_1$s and $R_2$s each may be the same as or different from one another; when y is 2 or greater, $R_3$s and $R_4$s each may be the same as or different from one another; and when x is 2 or greater, $R_1$s and $R_2$s each may be the same as or different from one another.

Of the compounds represented by the general formula (Ia-1), those compounds in which v = w = x = 0 and y = an integer of 1 to 10 are preferable, and those compounds in which v = w = x = 0 and y = an integer of 1 to 3 are more preferable.

Examples of the compounds represented by the general formula (Ia-1) include 2-(meth)acryloyloxyethylsulfonic acid, sodium 2-(meth)acryloyloxyethyl sulfonate, potassium 2-(meth)acryloyloxyethyl sulfonate, 3-(meth)acryloyloxypropylsulfonic acid, lithium 3-(meth)acryloyloxypropyl sulfonate, sodium 3-(meth)acryloyloxypropyl sulfonate, potassium 3-(meth)acryloyloxypropyl sulfonate, rubidium 3-(meth)acryloyloxypropyl sulfonate, ammonium 3-(meth)acryloyloxypropyl sulfonate, calcium 3-(meth)acryloyloxypropyl sulfonate, magnesium 3-(meth)acryloyloxypropyl sulfonate, sodium 5-(meth)acryloyloxy-3-oxapentyl sulfonate, potassium 5-(meth)acryloyloxy-3-oxapentyl sulfonate, sodium 2-(meth)acryloylthioethyl sulfonate, 2-(meth)acrylamido-2-methyl-propanesulfonic acid((meth)acrylamido-t-butylsulfonic acid)), sodium 2-(meth)acrylamido-2-methyl-propanesulfonate (sodium (meth)acrylamido-t-butyl sulfonate)), potassium 2-(meth)acrylamido-2-methyl-propanesulfonate (potassium (meth)acrylamido-t-butyl sulfonate), vinylsulfonic acid, sodium vinyl sulfonate, potassium vinyl sulfonate, allylsulfonic acid, sodium allyl sulfonate, potassium allyl sulfonate, isopropenylsulfonic acid, sodium isopropenyl sulfonate, potassium isopropenyl sulfonate, styrene sulfonic acid, sodium styrene sulfonate, potassium styrene sulfonate and so on.

[Chem. 34]

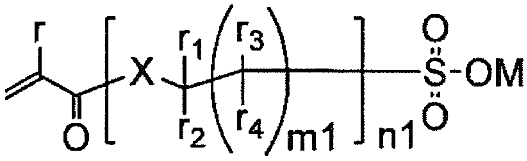

(I a − a)

In the formula (Ia-a), X is -O-, -S-, -NH- or -$NCH_3$-; r represents a hydrogen atom or a methyl group; $r_1$ to $r_4$ each independently represent a hydrogen atom, a methyl group, an ethyl group or a hydroxyl group; m1 is an integer of 0 to 10; n1 is an integer of 0 to 100; and M represents a hydrogen ion, an ammonium ion, an alkali metal ion or an alkaline earth metal ion having 1/2 atomic valence.

Examples of the compounds represented by the general formula (Ia-a) include 1-(meth)acryloyloxymethylsulfonic acid, sodium 1-(meth)acryloyloxymethyl sulfonate, potassium 1-(meth)acryloyloxymethyl sulfonate, 2-(meth)acryloyloxyethylsulfonic acid, sodium 2-(meth)acryloyloxyethyl sulfonate, potassium 2-(meth)acryloyloxyethyl sulfonate, 2-(meth)acryloylthioethylsulfonic acid, sodium 2-(meth)acryloylthioethyl sulfonate, potassium 2-(meth)acryloylthioethyl sulfonate, 3-(meth)acryloyloxypropylsulfonic acid, lithium 3-(meth)acryloyloxypropyl sulfonate, sodium 3-(meth)acryloyloxypropyl sulfonate, potassium 3-(meth)acryloyloxypropyl sulfonate, rubidium 3-(meth)acryloyloxypropyl sulfonate, ammonium 3-(meth)acryloyloxypropyl sulfonate, magnesium 3-(meth)acryloyloxypropyl sulfonate, calcium 3-(meth)acryloyloxypropyl sulfonate, 2-(meth)acryloyloxypropylsulfonic acid, lithium 2-(meth)acryloyloxypropyl sulfonate, sodium 2-(meth)acryloyloxypropyl sulfonate, potassium 2-(meth)acryloyloxypropyl sulfonate, rubidium 2-(meth)acryloyloxypropyl sulfonate, ammonium 2-(meth)acryloyloxypropyl sulfonate, magnesium 2-(meth)acryloyloxypropyl sulfonate, calcium 2-(meth)acryloyloxypropyl sulfonate, 3-(meth)acryloyloxy-2-hydroxypropyl-1-sulfonic acid, lithium 3-(meth)acryloyloxy-2-hydroxypropyl-1-sulfonate, sodium 3-(meth)acryloyloxy-2-hydroxypropyl-1-sulfonate, potassium 3-(meth)acryloyloxy-2-hydroxypropyl-1-sulfonate, rubidium 3-(meth)acryloyloxy-2-hydroxypropyl-1-sulfonate, ammonium 3-(meth)acryloyloxy-2-hydroxypropyl-1-sulfonate, magnesium 3-(meth)acryloyloxy-2-hydroxypropyl-1-sulfonate, calcium 3-(meth)acryloyloxy-2-hydroxypropyl-1-sulfonate, 4-(meth)acryloyloxybutylsulfonic acid, lithium 4-(meth)acryloyloxybutyl sulfonate, sodium 4-(meth)acryloyloxybutyl sulfonate, potassium 4-(meth)acryloyloxybutyl sulfonate, rubidium 4-(meth)acryloyloxybutyl sulfonate, ammonium 4-(meth)acryloyloxybutyl sulfonate, magnesium 4-(meth)acryloyloxybutyl sulfonate, calcium 4-(meth)acryloyloxybutyl sulfonate, 5-(meth)acryloyloxy-3-oxapentylsulfonic acid, sodium 5-(meth)acryloyloxy-3-oxapentyl sulfonate, potassium 5-(meth)acryloyloxy-3-oxapentyl sulfonate, rubidium 5-(meth)acryloyloxy-3-oxapentyl sulfonate, ammonium 5-(meth)acryloyloxy-3-oxapentyl sulfonate, magnesium 5-(meth)acryloyloxy-3-oxapentyl sulfonate, calcium 5-(meth)acryloyloxy-3-oxapentyl sulfonate, 5-(meth)acryloyloxy-3-thiapentylsulfonic acid, sodium 5-(meth)acryloyloxy-3-thiapentyl sulfonate, potassium 5-(meth)acryloyloxy-3-thiapentyl sulfonate, rubidium 5-(meth)acryloyloxy-3-thiapentyl sulfonate, ammonium 5-(meth)acryloyloxy-3-thiapentyl sulfonate, magnesium 5-(meth)acryloyloxy-3-thiapentyl sulfonate, calcium 5-(meth)acryloyloxy-3-thiapentyl sulfonate, 6-(meth)acryloyloxyhexylsulfonic acid, lithium 6-(meth)acryloyloxyhexyl sulfonate, sodium 6-(meth)acryloyloxyhexyl sulfonate, potassium 6-(meth)acryloyloxyhexyl sulfonate, rubidium 6-(meth)acryloyloxyhexyl sulfonate, ammonium 6-(meth)acryloyloxyhexyl sulfonate, magnesium 6-(meth)acryloyloxyhexyl sulfonate, calcium 6-(meth)acryloyloxyhexyl sulfonate, 8-(meth)acryloyloxy-3,6-dioxaoctylsulfonic acid, sodium 8-(meth)acryloyloxy-3,6-dioxaoctyl sulfonate, potassium 8-(meth)acryloyloxy-3,6-dioxaoctyl sulfonate, rubidium 8-(meth)acryloyloxy-3,6-dioxaoctyl sulfonate, ammonium 8-(meth)acryloyloxy-3,6-dioxaoctyl sulfonate, magnesium 8-(meth)acryloyloxy-3,6-dioxaoctyl sulfonate, calcium 8-(meth)acryloyloxy-3,6-dioxaoctyl sulfonate, (meth)acrylamidomethylsulfonic acid, sodium (meth)acrylamidomethyl sulfonate, potassium (meth)acrylamidomethyl sulfonate, (meth)acrylthiomethylsulfonic acid, sodium (meth)acrylthiomethyl sulfonate, potassium (meth)acrylthiomethyl sulfonate, rubidium (meth)acrylthiomethyl sulfonate, ammonium (meth)acrylthiomethyl sulfonate, magnesium (meth)acrylthiomethyl sulfonate, calcium (meth)acrylthiomethyl sulfonate, 2-(meth)acrylthioethylsulfonic acid, sodium 2-(meth)acrylthioethyl sulfonate, potassium 2-(meth)acrylthioethyl sulfonate, rubidium 2-(meth)acrylthioethyl sulfonate, ammonium 2-(meth)acrylthioethyl sulfonate, magnesium 2-(meth)acrylthioethyl sulfonate, calcium 2-(meth)acrylthioethyl sulfonate, 3-(meth)acrylthiopropylsulfonic acid, sodium 3-(meth)acrylthiopropyl sulfonate, potassium 3-(meth)acrylthiopropyl sulfonate, rubidium 3-(meth)acrylthiopropyl sulfonate, ammonium 3-(meth)acrylthiopropyl sulfonate, magnesium 3-(meth)acrylthiopropyl sulfonate, calcium 3-(meth)acrylthiopropyl sulfonate, (meth)acrylamidomethylsulfonic acid, sodium (meth)acrylamidomethyl sulfonate, potassium (meth)acrylamidomethyl sulfonate, rubidium (meth)acrylamidomethyl sulfonate, ammonium (meth)acrylamidomethyl sulfonate, magnesium (meth)acrylamidomethyl sulfonate, calcium (meth)acrylamidomethyl sulfonate, 2-(meth)acrylamido ethylsulfonic acid, sodium 2- (meth) acrylamido ethyl sulfonate, potassium 2-(meth)acrylamido ethyl sulfonate, rubidium 2-(meth)acrylamido ethyl sulfonate, ammonium 2-(meth)acrylamido ethyl sulfonate, magnesium 2-(meth)acrylamido ethyl sulfonate,

calcium 2-(meth)acrylamido ethyl sulfonate, 2-(meth)acrylamido-N-methyl-ethylsulfonic acid, sodium 2-(meth)acrylamido-N-methyl-ethyl sulfonate, potassium 2-(meth)acrylamido-N-methyl-ethyl sulfonate, rubidium 2-(meth)acrylamido-N-methyl-ethyl sulfonate, ammonium 2-(meth)acrylamido-N-methyl-ethyl sulfonate, magnesium 2-(meth)acrylamido-N-methyl-ethyl sulfonate, calcium 2-(meth)acrylamido-N-methyl-ethyl sulfonate, 3-(meth)acrylamido propyl-1-sulfonic acid, sodium 3-(meth)acrylamido propyl-1-sulfonate, potassium 3-(meth)acrylamido propyl-1-sulfonate, rubidium 3-(meth)acrylamido propyl-1-sulfonate, ammonium 3-(meth)acrylamido propyl-1-sulfonate, magnesium 3-(meth)acrylamido propyl-1-sulfonate, calcium 3-(meth)acrylamido propyl-1-sulfonate, 2-(meth)acrylamido propyl-1-sulfonic acid, sodium 2-(meth)acrylamido propyl-1-sulfonate, potassium 2-(meth)acrylamido propyl-1-sulfonate, rubidium 2-(meth)acrylamido propyl-1-sulfonate, ammonium 2-(meth)acrylamido propyl-1-sulfonate, magnesium 2-(meth)acrylamido propyl-1-sulfonate, calcium 2-(meth)acrylamido propyl-1-sulfonate, 2-(meth)acrylamido-2-methyl-propanesulfonic acid((meth)acrylamido-t-butylsulfonic acid), sodium 2-(meth)acrylamido-2-methyl-propanesulfonate (sodium (meth)acrylamido-t-butyl sulfonate), potassium 2-(meth)acrylamido-2-methyl-propanesulfonate (potassium (meth)acrylamido-t-butyl sulfonate), (sodium (meth)acrylamido-t-butyl sulfonate), rubidium 2-(meth)acrylamido-2-methyl-propanesulfonate (rubidium (meth)acrylamido-t-butyl sulfonate), ammonium 2-(meth)acrylamido-2-methyl-propanesulfonate (ammonium (meth)acrylamido-t-butyl sulfonate), magnesium 2-(meth)acrylamido-2-methyl-propanesulfonate (magnesium (meth)acrylamido-t-butyl sulfonate), calcium 2-(meth)acrylamido-2-methyl-propanesulfonate (calcium (meth)acrylamido-t-butyl sulfonate) and so on.

[Chem. 35]

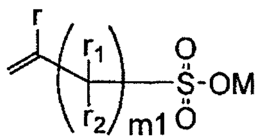

(I a − c)

In the formula (Ia-c), r represents a hydrogen atom or a methyl group; $r_1$ and $r_2$ each independently represent a hydrogen atom, a methyl group, an ethyl group or a hydroxyl group; m1 is an integer of 0 to 10; M represents a hydrogen ion, an ammonium ion, an alkali metal ion or an alkaline earth metal ion having 1/2 atomic valence; and n1 is an integer of 1 to 10.

Examples of the compounds represented by the general formula (Ia-c) include vinylsulfonic acid, lithium vinyl sulfonate, sodium vinyl sulfonate, potassium vinyl sulfonate, rubidium vinyl sulfonate, ammonium vinyl sulfonate, magnesium vinyl sulfonate, calcium vinyl sulfonate, isopropenylsulfonic acid, lithium isopropenyl sulfonate, sodium isopropenyl sulfonate, potassium isopropenyl sulfonate, rubidium isopropenyl sulfonate, ammonium isopropenyl sulfonate, magnesium isopropenyl sulfonate, calcium isopropenyl sulfonate, allylsulfonic acid, lithium allyl sulfonate, sodium allyl sulfonate, potassium allyl sulfonate, rubidium allyl sulfonate, ammonium allyl sulfonate, magnesium allyl sulfonate, calcium allyl sulfonate, methallylsulfonic acid, lithium methallyl sulfonate, sodium methallyl sulfonate, potassium methallyl sulfonate, rubidium methallyl sulfonate, ammonium methallyl sulfonate, magnesium methallyl sulfonate, calcium methallyl sulfonate, 5,6-hexenyl-1-sulfonic acid, lithium 5,6-hexenyl-1-sulfonate, sodium 5,6-hexenyl-1-sulfonate, potassium 5,6-hexenyl-1-sulfonate, rubidium 5,6-hexenyl-1-sulfonate, ammonium 5,6-hexenyl-1-sulfonate, magnesium 5,6-hexenyl-1-sulfonate, calcium 5,6-hexenyl-1-sulfonate, and so on.

[Chem. 36]

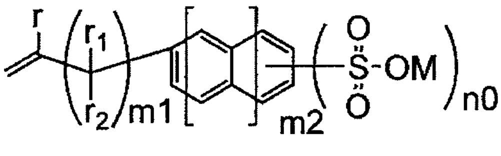

(I a − d)

In the formula (Ia-d), r represents a hydrogen atom or a methyl group; $r_1$ and $r_2$ each independently represent a hydrogen atom, a methyl group, an ethyl group or a hydroxyl group; m1 is an integer of 0 to 10; m2 is an integer of 0 to 5; n0 is an integer of 1 to 5; M represents a hydrogen ion, an ammonium ion, an alkali metal ion or an alkaline earth metal ion having 1/2 atomic valence; and n1 is an integer of 1 to 10.

Examples of the compounds represented by the general formula (Ia-d) include styrene sulfonic acid, lithium

styrene sulfonate, sodium styrene sulfonate, potassium styrene sulfonate, rubidium styrene sulfonate, ammonium styrene sulfonate, magnesium styrene sulfonate, calcium styrene sulfonate, isopropenyl benzenesulfonic acid, lithium isopropenyl benzenesulfonate, sodium isopropenyl benzenesulfonate, potassium isopropenyl benzenesulfonate, rubidium isopropenyl benzenesulfonate, ammonium isopropenyl benzenesulfonate, magnesium isopropenyl benzenesulfonate, calcium isopropenyl benzenesulfonate, allyl benzenesulfonic acid, lithium allyl benzenesulfonate, sodium allyl benzenesulfonate, potassium allyl benzenesulfonate, rubidium allyl benzenesulfonate, ammonium allyl benzenesulfonate, magnesium allyl benzenesulfonate, calcium allyl benzenesulfonate, methallyl benzenesulfonic acid, lithium methallyl benzenesulfonate, sodium methallyl benzenesulfonate, potassium methallyl benzenesulfonate, rubidium methallyl benzenesulfonate, ammonium methallyl benzenesulfonate, magnesium methallyl benzenesulfonate, calcium methallyl benzenesulfonate, vinyl naphthalenesulfonic acid, lithium vinyl naphthalenesulfonate, sodium vinyl naphthalenesulfonate, potassium vinyl naphthalenesulfonate, rubidium vinyl naphthalenesulfonate, ammonium vinyl naphthalenesulfonate, magnesium vinyl naphthalenesulfonate, calcium vinyl naphthalenesulfonate, isopropenyl naphthalenesulfonic acid, lithium isopropenyl naphthalenesulfonate, sodium isopropenyl naphthalenesulfonate, potassium isopropenyl naphthalenesulfonate, rubidium isopropenyl naphthalenesulfonate, ammonium isopropenyl naphthalenesulfonate, magnesium isopropenyl naphthalenesulfonate, calcium isopropenyl naphthalenesulfonate, allylnaphthalenesulfonic acid, lithium allylnaphthalenesulfonate, sodium allylnaphthalenesulfonate, potassium allylnaphthalenesulfonate, rubidium allylnaphthalenesulfonate, ammonium allylnaphthalenesulfonate, magnesium allylnaphthalenesulfonate, calcium allylnaphthalenesulfonate, methallylnaphthalenesulfonic acid, lithium methallylnaphthalenesulfonate, sodium methallylnaphthalenesulfonate, potassium methallylnaphthalenesulfonate, rubidium methallylnaphthalenesulfonate, ammonium methallylnaphthalenesulfonate, magnesium methallylnaphthalenesulfonate, calcium methallylnaphthalenesulfonate, vinyl anthracenesulfonic acid, lithium vinyl anthracenesulfonate, sodium vinyl anthracenesulfonate, potassium vinyl anthracenesulfonate, rubidium vinyl anthracenesulfonate, ammonium vinyl anthracenesulfonate, magnesium vinyl anthracenesulfonate, calcium vinyl anthracenesulfonate, isopropenyl anthracenesulfonic acid, lithium isopropenyl anthracenesulfonate, sodium isopropenyl anthracenesulfonate, potassium isopropenyl anthracenesulfonate, rubidium isopropenyl anthracenesulfonate, ammonium isopropenyl anthracenesulfonate, magnesium isopropenyl anthracenesulfonate, calcium isopropenyl anthracenesulfonate, allyl anthracenesulfonic acid, lithium allyl anthracenesulfonate, sodium allyl anthracenesulfonate, potassium allyl anthracenesulfonate, rubidium allyl anthracenesulfonate, ammonium allyl anthracenesulfonate, magnesium allyl anthracenesulfonate, calcium allyl anthracenesulfonate, methallyl anthracenesulfonic acid, lithium methallyl anthracenesulfonate, sodium methallyl anthracenesulfonate, potassium methallyl anthracenesulfonate, rubidium methallyl anthracenesulfonate, ammonium methallyl anthracenesulfonate, magnesium methallyl anthracenesulfonate, calcium methallyl anthracenesulfonate, vinylphenanthrenesulfonic acid, lithium vinylphenanthrenesulfonate, sodium vinylphenanthrenesulfonate, potassium vinylphenanthrenesulfonate, rubidium vinylphenanthrenesulfonate, ammonium vinylphenanthrenesulfonate, magnesium vinylphenanthrenesulfonate, calcium vinylphenanthrenesulfonate, isopropenylphenanthrenesulfonic acid, lithium isopropenylphenanthrenesulfonate, sodium isopropenylphenanthrenesulfonate, potassium isopropenylphenanthrenesulfonate, rubidium isopropenylphenanthrenesulfonate, ammonium isopropenylphenanthrenesulfonate, magnesium isopropenylphenanthrenesulfonate, calcium isopropenylphenanthrenesulfonate, allylphenanthrenesulfonic acid, lithium allylphenanthrenesulfonate, sodium allylphenanthrenesulfonate, potassium allylphenanthrenesulfonate, rubidium allylphenanthrenesulfonate, ammonium allylphenanthrenesulfonate, magnesium allylphenanthrenesulfonate, calcium allylphenanthrenesulfonate, methallylphenanthrenesulfonic acid, lithium methallylphenanthrenesulfonate, sodium methallylphenanthrenesulfonate, potassium methallylphenanthrenesulfonate, rubidium methallylphenanthrenesulfonate, ammonium methallylphenanthrenesulfonate, magnesium methallylphenanthrenesulfonate, calcium methallylphenanthrenesulfonate, styrene disulfonic acid, dilithium styrene disulfonate, disodium styrene disulfonate, dipotassium styrene disulfonate, dirubidium styrene disulfonate, diammonium styrene disulfonate, magnesium styrene disulfonate, calcium styrene disulfonate, isopropenyl benzene disulfonic acid, lithium isopropenyl benzene disulfonate, sodium isopropenyl benzene disulfonate, potassium isopropenyl benzene disulfonate, rubidium isopropenyl benzene disulfonate, ammonium isopropenyl benzene disulfonate, magnesium isopropenyl benzene disulfonate, calcium isopropenyl benzene disulfonate, vinyl naphthalene trisulfonic acid, trilithium vinyl naphthalene trisulfonate, trisodium vinyl naphthalene trisulfonate, tripotassium vinyl naphthalene trisulfonate, trirubidium vinyl naphthalene trisulfonate, triammonium vinyl naphthalene trisulfonate, magnesium vinyl naphthalene trisulfonate, calcium vinyl naphthalene trisulfonate, isopropenyl naphthalene trisulfonic acid, dilithium isopropenyl naphthalene trisulfonate, disodium isopropenyl naphthalene trisulfonate, dipotassium isopropenyl naphthalene trisulfonate, dirubidium isopropenyl naphthalene trisulfonate, diammonium isopropenyl naphthalene trisulfonate, magnesium isopropenyl naphthalene trisulfonate, calcium isopropenyl naphthalene trisulfonate and so on.

Of the compounds represented by the general formula (Ib), those compounds represented by the general formula (Ib-b) below are preferable.

[Chem. 37]

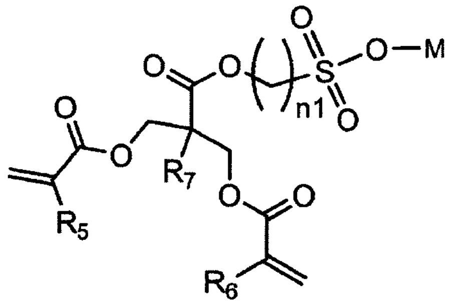

(I b-b)

In the formula (Ib-b), $R_5$ and $R_6$ each represent a hydrogen atom or a methyl group; $R_7$ represents a hydrogen atom or a $C_{1-6}$ alkyl group; M represents a hydrogen ion, an ammonium ion, an alkali metal ion or an alkaline earth metal ion having 1/2 atomic valence; and n1 is an integer of 1 to 10.

Examples of the compounds represented by the general formula (Ib) include 2,2-bis((meth)acryloyloxymethyl)acetic acid-3-sulfopropyl ester,
2,2-bis((meth)acryloyloxymethyl)acetic acid-3-sulfopropyl ester sodium salt, 2,2-bis((meth)acryloyloxymethyl)acetic acid-3-sulfopropyl ester potassium salt,
2,2-bis((meth)acryloyloxymethyl)acetic acid-2-sulfoethyl ester sodium salt, 2,2-bis((meth)acryloyloxymethyl)acetic acid-2-sulfoethyl ester potassium salt,
2,2-bis((meth)acryloyloxymethyl)acetic acid-4-sulfobutyl ester potassium salt, 2,2-bis((meth)acryloyloxymethyl)acetic acid-6-sulfohexyl ester potassium salt,
2,2-bis((meth)acryloyloxymethyl)acetic acid-10-sulfodecyl ester potassium salt,
2,2-bis((meth)acryloyloxymethyl)propionic acid-3-sulfopropyl ester,
2,2-bis((meth)acryloyloxymethyl)propionic acid-3-sulfopropyl ester lithium salt,
2,2-bis((meth)acryloyloxymethyl)propionic acid-3-sulfopropyl ester sodium salt,
2,2-bis((meth)acryloyloxymethyl)propionic acid-3-sulfopropyl ester potassium salt,
2,2-bis((meth)acryloyloxymethyl)propionic acid-3-sulfopropyl ester rubidium salt,
2,2-bis((meth)acryloyloxymethyl)propionic acid-2-sulfoethyl ester sodium salt, 2,2-bis((meth)acryloyloxymethyl)propionic acid-2-sulfoethyl ester potassium salt,
2,2-bis((meth)acryloyloxymethyl)propionic acid-4-sulfobutyl ester sodium salt, 2,2-bis((meth)acryloyloxymethyl)propionic acid-4-sulfobutyl ester potassium salt,
2,2-bis((meth)acryloyloxymethyl)propionic acid-6-sulfohexyl ester sodium salt, 2,2-bis((meth)acryloyloxymethyl)propionic acid-6-sulfohexyl ester potassium salt,
2,2-bis((meth)acryloyloxymethyl)propionic acid-10-sulfodecyl ester sodium salt,
2,2-bis((meth)acryloyloxymethyl)propionic acid-10-sulfodecyl ester potassium salt,
2,2-bis((meth)acryloyloxymethyl)butyric acid-3-sulfopropyl ester sodium salt, 2,2-bis((meth)acryloyloxymethyl)butyric acid-3-sulfopropyl ester sodium salt,
2,2-bis((meth)acryloyloxymethyl)butyric acid-3-sulfopropyl ester potassium salt,
2,2-bis((meth)acryloyloxymethyl)valeric acid-3-sulfopropyl ester sodium salt, 2,2-bis((meth)acryloyloxymethyl)valeric acid-3-sulfopropyl ester potassium salt,
2,2-bis((meth)acryloyloxymethyl)caproic acid-3-sulfopropyl ester sodium salt, 2,2-bis((meth)acryloyloxymethyl)caproic acid-3-sulfopropyl ester potassium salt,
2,2-bis((meth)acryloyloxymethyl)caprylic acid-3-sulfopropyl ester sodium salt, 2,2-bis((meth)acryloyloxymethyl)caprylic acid-3-sulfopropyl ester potassium salt and so on.

Of the compounds represented by the general formula (Ic), those compounds represented by the general formula (Ic-1) below are preferable. Those compounds represented by the general formulas (Ic-f), (Ic-g) and (Ic-h) are also preferable.

[Chem. 38]

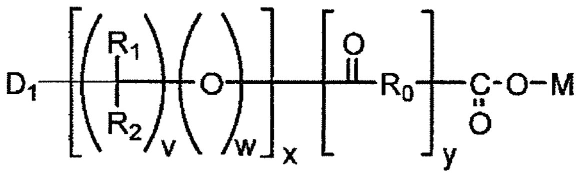

(Ic-1)

In the formula (Ic-1), x and v are each independently an integer of 0 to 10; y and w are each independently 0 or 1; when y is 0, w is also 0; when x is 0 and y is 0, $D_1$ represents a vinyl group, an allyl group, an isopropenyl group or a styryl group; when x is 0 and y is 1, $D_1$ represents an isopropenyl group or a styryl group; when x is 1 or greater, $D_1$ represents a (meth)acryloyloxy group, a (meth)acryloylthio group, a (meth)acrylamide group, a vinyl group, an allyl group, an isopropenyl group or a styryl group; $R_1$ and $R_2$ each independently represent a hydrogen atom, a $C_{1-6}$ alkyl group or a $C_{1-6}$ alkoxy group; $R_0$ represents a methylene group, a 1,1-ethylene group, a 1.2-ethylene group, a 1,1-propylene group, a 1,2-propylene group, a 1,3-propylene group, a 2,2-propylene group, a 1, 1-butylene group, a 1,2-butylene group, a 1,3-butylene group, a 1,4-butylene group, a 2,2-butylene group, a 2,3-butylene group, a 2,4-butylene group, a 3,3-butylene group, a 3,4-butylene group, a 4,4-butylene group, a 1,2-phenylene group, a 1,3-phenylene group, a 1,4-phenylene group, a 1.2-vinylene group and a 1-vinyl-1.2-ethylene group; M represents a hydrogen ion, an ammonium ion, an alkali metal ion or an alkaline earth metal ion having 1/2 atomic valence; when v is 2 or greater, $R_1$s and $R_2$s each may be the same as or different from one another; when y is 2 or greater, $R_3$s and $R_4$s each may be the same as or different from one another; and when x is 2 or greater, $R_1$s and $R_2$s each may be the same as or different from one another.

Of the compounds represented by the general formula (Ic-1), those compounds in which w = y = 0 are preferable.

Examples of the compounds represented by the general formula (Ic-1) include (meth)acrylic acid, sodium (meth)acrylate, potassium (meth)acrylate, succinic acid-mono{(meth)acryloyloxyethyl} ester, succinic acid-mono{(meth)acryloyloxyethyl} ester sodium salt, succinic acid-mono{(meth)acryloyloxyethyl} ester potassium salt, maleic acid-mono{(meth)acryloyloxyethyl} ester, maleic acid-mono{(meth)acryloyloxyethyl} ester sodium salt, maleic acid-mono{(meth)acryloyloxyethyl} ester potassium salt, itaconic acid-mono{(meth)acryloyloxyethyl} ester, itaconic acid-mono{(meth)acryloyloxyethyl} ester sodium salt, itaconic acid-mono{(meth)acryloyloxyethyl} ester potassium salt, phthalic acid-mono{(meth)acryloyloxyethyl} ester, phthalic acid-mono{(meth)acryloyloxyethyl} ester sodium salt, phthalic acid-mono{(meth)acryloyloxyethyl} ester potassium salt, isophthalic acid-mono{(meth)acryloyloxyethyl} ester, isophthalic acid-mono{(meth)acryloyloxyethyl} ester sodium salt, isophthalic acid-mono{(meth)acryloyloxyethyl} ester potassium salt, terephthalic acid-mono{(meth)acryloyloxyethyl} ester, terephthalic acid-mono{(meth)acryloyloxyethyl} ester sodium salt, terephthalic acid-mono{(meth)acryloyloxyethyl} ester potassium salt, succinic acid-mono{(meth)acryloyloxypropyl} ester, succinic acid-mono{(meth)acryloyloxypropyl} ester sodium salt, succinic acid-mono{(meth)acryloyloxypropyl} ester potassium salt, maleic acid-mono{(meth)acryloyloxypropyl} ester, maleic acid-mono{(meth)acryloyloxypropyl} ester sodium salt, maleic acid-mono{(meth)acryloyloxypropyl} ester potassium salt, itaconic acid-mono{(meth)acryloyloxypropyl} ester, itaconic acid-mono{(meth)acryloyloxypropyl} ester sodium salt, itaconic acid-mono{(meth)acryloyloxypropyl} ester potassium salt, phthalic acid-mono{(meth)acryloyloxypropyl} ester, phthalicacid-mono{(meth)acryloyloxypropyl} ester sodium salt, phthalic acid-mono{(meth)acryloyloxypropyl} ester potassium salt, isophthalic acid-mono{(meth)acryloyloxypropyl} ester, isophthalic acid-mono{(meth)acryloyloxypropyl} ester sodium salt, isophthalic acid-mono{(meth)acryloyloxypropyl} ester potassium salt, terephthalic acid-mono{(meth)acryloyloxypropyl} ester, terephthalic acid-mono{(meth)acryloyloxypropyl} ester sodium salt, terephthalic acid-mono{(meth)acryloyloxypropyl} ester potassium salt, succinic acid-mono{(meth)acryloyloxybutyl} ester, succinic acid-mono{(meth)acryloyloxybutyl} ester sodium salt, succinic acid-mono{(meth)acryloyloxybutyl} ester potassium salt, maleic acid-mono{(meth)acryloyloxybutyl} ester, maleic acid-mono{(meth)acryloyloxybutyl} ester sodium salt, maleic acid-mono{(meth)acryloyloxybutyl} ester potassium salt, itaconic acid-mono{(meth)acryloyloxybutyl} ester, itaconic acid-mono{(meth)acryloyloxybutyl} ester sodium salt, itaconic acid-mono{(meth)acryloyloxybutyl} ester potassium salt, phthalic acid-mono{(meth)acryloyloxybutyl} ester, phthalic acid-mono{(meth)acryloyloxybutyl} ester sodium salt, phthalic acid-mono{(meth)acryloyloxybutyl} ester potassium salt, isophthalic acid-mono{(meth)acryloyloxybutyl} ester, isophthalic acid-mono{(meth)acryloyloxybutyl} ester sodium salt, isophthalic acid-mono{(meth)acryloyloxybutyl} ester potassium salt, terephthalic acid-mono{(meth)acryloyloxybutyl} ester, terephthalic acid-mono{(meth)acryloyloxybutyl} ester sodium salt, terephthalic acid-mono{(meth)acryloyloxybutyl} ester potassium salt, succinic acid-mono{(meth)acrylamido methyl} ester, succinic acid-mono{(meth)acrylamido methyl} ester sodium salt, succinic acid-mono{(meth)acrylamido methyl} ester potassium salt, maleic acid-mono{(meth)acrylamido methyl} ester, maleic acid-mono{(meth)acrylamido methyl} ester sodium salt, maleic acid-mono{(meth)acrylamido methyl} ester potassium salt, itaconic acid-mono{(meth)acrylamido methyl} ester, itaconic acid-mono{(meth)acrylamido methyl} ester sodium salt, itaconic acid-mono{(meth)acrylamido methyl} ester potassium salt, phthalic acid-mono{(meth)acrylamido methyl} ester, phthalic acid-mono{(meth)acrylamido methyl} ester sodium salt, phthalic acid-mono{(meth)acrylamido methyl} ester potassium salt, isophthalic acid-mono{(meth)acrylamido methyl} ester, isophthalic

acid-mono{(meth)acrylamido methyl} ester sodium salt, isophthalic acid-mono{(meth)acrylamido methyl} ester potassium salt, terephthalic acid-mono{(meth)acrylamido methyl} ester, terephthalic acid-mono{(meth)acrylamido methyl} ester sodium salt, terephthalic acid-mono{(meth)acrylamido methyl} ester potassium salt, succinic acid-mono{(meth)acrylamido ethyl} ester, succinic acid-mono{(meth)acrylamido ethyl} ester sodium salt, succinic acid-mono{(meth)acrylamido ethyl} ester potassium salt, maleic acid-mono{(meth)acrylamido ethyl} ester, maleic acid-mono{(meth)acrylamido ethyl} ester sodium salt, maleic acid-mono{(meth)acrylamido ethyl} ester potassium salt, itaconic acid-mono{(meth)acrylamido ethyl} ester, itaconic acid-mono{(meth)acrylamido ethyl} ester sodium salt, itaconic acid-mono{(meth)acrylamido ethyl} ester potassium salt, phthalic acid-mono{(meth)acrylamido ethyl} ester, phthalic acid-mono{(meth)acrylamido ethyl} ester sodium salt, phthalic acid-mono{(meth)acrylamido ethyl} ester potassium salt, isophthalic acid-mono{(meth)acrylamido ethyl} ester, isophthalic acid-mono{(meth)acrylamido ethyl} ester sodium salt, isophthalic acid-mono{(meth)acrylamido ethyl} ester potassium salt, terephthalic acid-mono{(meth)acrylamido ethyl} ester, terephthalic acid-mono{(meth)acrylamido ethyl} ester sodium salt, terephthalic acid-mono{(meth)acrylamido ethyl} ester potassium salt and so on.

[Chem. 39]

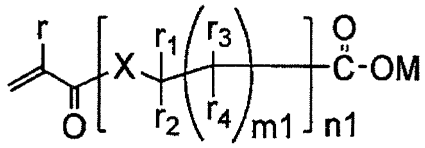

(Ic-f)

In the formula (Ic-f), X is -O-, -S-, -NH- or $-NCH_3-$; r represents a hydrogen atom or a methyl group; $r_1$ to $r_4$ each independently represent a hydrogen atom, a methyl group, an ethyl group or a hydroxyl group; m1 is an integer of 0 to 10; n1 is an integer of 0 to 100; and M represents a hydrogen ion, an ammonium ion, an alkali metal ion or an alkaline earth metal ion having 1/2 atomic valence.

Examples of the compounds represented by the general formula (Ic-f) include (meth)acrylic acid, lithium (meth)acrylate, sodium (meth)acrylate, potassium (meth)acrylate, ammonium (meth)acrylate, magnesium (meth)acrylate, calcium (meth)acrylate, (meth)acryloyloxyglycolic acid, lithium (meth)acryloyloxyglycolate, sodium (meth)acryloyloxyglycolate, potassium (meth)acryloyloxyglycolate, ammonium (meth)acryloyloxyglycolate, magnesium (meth)acryloyloxyglycolate, calcium (meth)acryloyloxyglycolate, 2-(meth)acryloyloxy-propionic acid, lithium 2-(meth)acryloyloxy-propionate, sodium 2-(meth)acryloyloxy-propionate, potassium 2-(meth)acryloyloxy-propionate, ammonium 2-(meth)acryloyloxy-propionate, magnesium 2-(meth)acryloyloxy-propionate, calcium 2-(meth)acryloyloxy-propionate, 3-(meth)acryloyloxy-propionic acid, lithium 3-(meth)acryloyloxy-propionate, sodium 3-(meth)acryloyloxy-propionate, potassium 3-(meth)acryloyloxy-propionate, ammonium 3-(meth)acryloyloxy-propionate, magnesium 3-(meth)acryloyloxy-propionate, calcium 3-(meth)acryloyloxy-propionate, (meth)acryloyloxy-gluconic acid, lithium (meth)acryloyloxy-gluconate, sodium (meth)acryloyloxy-gluconate, potassium (meth)acryloyloxy-gluconate, ammonium (meth)acryloyloxy-gluconate, magnesium (meth)acryloyloxy-gluconate, calcium (meth)acryloyloxy-gluconate, (meth)acryloylthioglycolic acid, lithium (meth)acryloylthioglycolate, sodium (meth)acryloylthioglycolate, potassium (meth)acryloylthioglycolate, ammonium (meth)acryloylthioglycolate, magnesium (meth)acryloylthioglycolate, calcium (meth)acryloylthioglycolate, 2-(meth)acryloylthio-propionic acid, lithium 2-(meth)acryloylthio-propionate, sodium 2-(meth)acryloylthio-propionate, potassium 2-(meth)acryloylthio-propionate, ammonium 2-(meth)acryloylthio-propionate, magnesium 2-(meth)acryloylthio-propionate, calcium 2-(meth)acryloylthio-propionate, 3-(meth)acryloylthio-propionic acid, lithium 3-(meth)acryloylthio-propionate, sodium 3-(meth)acryloylthio-propionate, potassium 3-(meth)acryloylthio-propionate, ammonium 3-(meth)acryloylthio-propionate, magnesium 3-(meth)acryloylthio-propionate, calcium 3-(meth)acryloylthio-propionate, N-(meth)acryloyl-glycine, N-(meth)acryloyl-glycine lithium, N-(meth)acryloyl-glycine sodium, N-(meth)acryloyl-glycine potassium, N-(meth)acryloyl-glycine ammonium, N-(meth)acryloyl-glycine magnesium, N-(meth)acryloyl-glycine calcium, N-(meth)acryloyl-alanine, N-(meth)acryloyl-alanine lithium, N-(meth)acryloyl-alanine sodium, N-(meth)acryloyl-alanine potassium, N-(meth)acryloyl-alanine ammonium, N-(meth)acryloyl-alanine magnesium, N-(meth)acryloyl-alanine calcium and so on.

[Chem. 40]

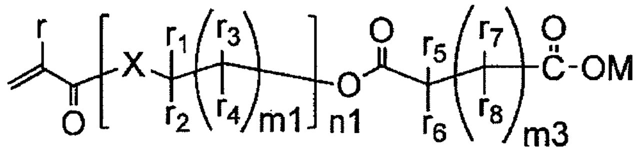

(Ic-g)

In the formula (Ic-g), X is -O-, -S-, -NH- or -$NCH_3$-; r represents a hydrogen atom or a methyl group; $r_1$ to $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 and m3 are each independently an integer of 0 to 10; and M represents a hydrogen ion, an ammonium ion, an alkali metal ion or an alkaline earth metal ion having 1/2 atomic valence.

Examples of the compounds represented by the general formula (Ic-g) include malonic acid-mono{2-(meth)acryloyloxy-ethyl} ester, malonic acid-mono{2-(meth)acryloyloxy-ethyl} ester lithium, malonic acid-mono{2-(meth)acryloyloxy-ethyl} ester sodium, malonic acid-mono{2-(meth)acryloyloxy-ethyl} ester potassium, malonic acid-mono{2-(meth)acryloyloxy-ethyl} ester ammonium, malonic acid-mono{2-(meth)acryloyloxy-ethyl} ester magnesium, malonic acid-mono{2-(meth)acryloyloxy-ethyl} ester calcium, malonic acid-mono{2-(meth)acryloyloxy-propyl} ester, malonic acid-mono{2-(meth)acryloyloxy-propyl} ester lithium, malonic acid-mono{2-(meth)acryloyloxy-propyl} ester sodium, malonic acid-mono{2-(meth)acryloyloxy-propyl} ester potassium, malonic acid-mono{2-(meth)acryloyloxy-propyl} ester ammonium, malonic acid-mono{2-(meth)acryloyloxy-propyl} ester magnesium, malonic acid-mono{2-(meth)acryloyloxy-propyl} ester calcium, malonic acid-mono{3-(meth)acryloyloxy-propyl} ester, malonic acid-mono{3-(meth)acryloyloxy-propyl} ester lithium, malonic acid-mono{3-(meth)acryloyloxy-propyl} ester sodium, malonic acid-mono{3-(meth)acryloyloxy-propyl} ester potassium, malonic acid-mono{3-(meth)acryloyloxy-propyl} ester ammonium, malonic acid-mono{3-(meth)acryloyloxy-propyl} ester magnesium, malonic acid-mono{3-(meth)acryloyloxy-propyl} ester calcium, malonic acid-mono{4-(meth)acryloyloxy-butyl} ester, malonic acid-mono{4-(meth)acryloyloxy-butyl} ester lithium, malonic acid-mono{4-(meth)acryloyloxy-butyl} ester sodium, malonic acid-mono{4-(meth)acryloyloxy-butyl} ester potassium, malonic acid-mono{4-(meth)acryloyloxy-butyl} ester ammonium, malonic acid-mono{4-(meth)acryloyloxy-butyl} ester magnesium, malonic acid-mono{4-(meth)acryloyloxy-butyl} ester calcium, malonic acid-mono{6-(meth)acryloyloxy-hexyl} ester, malonic acid-mono{6-(meth)acryloyloxy-hexyl} ester lithium, malonic acid-mono{6-(meth)acryloyloxy-hexyl} ester sodium, malonic acid-mono{6-(meth)acryloyloxy-hexyl} ester potassium, malonic acid-mono{6-(meth)acryloyloxy-hexyl} ester ammonium, malonic acid-mono{6-(meth)acryloyloxy-hexyl} ester magnesium, malonic acid-mono{6-(meth)acryloyloxy-hexyl} ester calcium, succinic acid-mono{2-(meth)acryloyloxy-ethyl} ester, succinic acid-mono{2-(meth)acryloyloxy-ethyl} ester lithium, succinic acid-mono{2-(meth)acryloyloxy-ethyl} ester sodium, succinic acid-mono{2-(meth)acryloyloxy-ethyl} ester potassium, succinic acid-mono{2-(meth)acryloyloxy-ethyl} ester ammonium, succinic acid-mono{2-(meth)acryloyloxy-ethyl} ester magnesium, succinic acid-mono{2-(meth)acryloyloxy-ethyl} ester calcium, succinic acid-mono{2-(meth)acryloyloxy-propyl} ester, succinic acid-mono{2-(meth)acryloyloxy-propyl} ester lithium, succinic acid-mono{2-(meth)acryloyloxy-propyl} ester sodium, succinic acid-mono{2-(meth)acryloyloxy-propyl} ester potassium, succinic acid-mono{2-(meth)acryloyloxy-propyl} ester ammonium, succinic acid-mono{2-(meth)acryloyloxy-propyl} ester magnesium, succinic acid-mono{2-(meth)acryloyloxy-propyl} ester calcium, succinic acid-mono{3-(meth)acryloyloxy-propyl} ester, succinic acid-mono{3-(meth)acryloyloxy-propyl} ester lithium, succinic acid-mono{3-(meth)acryloyloxy-propyl} ester sodium, succinic acid-mono{3-(meth)acryloyloxy-propyl} ester potassium, succinic acid-mono{3-(meth)acryloyloxy-propyl} ester ammonium, succinic acid-mono{3-(meth)acryloyloxy-propyl} ester magnesium, succinic acid-mono{3-(meth)acryloyloxy-propyl} ester calcium, succinic acid-mono{4-(meth)acryloyloxy-butyl} ester, succinic acid-mono{4-(meth)acryloyloxy-butyl} ester lithium, succinic acid-mono{4-(meth)acryloyloxy-butyl} ester sodium, succinic acid-mono{4-(meth)acryloyloxy-butyl} ester potassium, succinic acid-mono{4-(meth)acryloyloxy-butyl} ester ammonium, succinic acid-mono{4-(meth)acryloyloxy-butyl} ester magnesium, succinic acid-mono{4-(meth)acryloyloxy-butyl} ester calcium, succinic acid-mono{6-(meth)acryloyloxy-hexyl} ester, succinic acid-mono{6-(meth)acryloyloxy-hexyl} ester lithium, succinic acid-mono{6-(meth)acryloyloxy-hexyl} ester sodium, succinic acid-mono{6-(meth)acryloyloxy-hexyl} ester potassium, succinic acid-mono{6-(meth)acryloyloxy-hexyl} ester ammonium, succinic acid-mono{6-(meth)acryloyloxy-hexyl} ester magnesium, succinic acid-mono{6-(meth)acryloyloxy-hexyl} ester calcium, glutaric acid-mono{2-(meth)acryloyloxy-ethyl} ester, glutaric acid-mono{2-(meth)acryloyloxy-ethyl} ester lithium, glutaric acid-mono{2-(meth)acryloyloxy-ethyl} ester sodium, glutaric acid-mono{2-(meth)acryloyloxy-ethyl} ester potassium, glutaric acid-mono{2-(meth)acryloyloxy-ethyl} ester ammonium, glutaric acid-mono{2-(meth)acryloyloxy-ethyl} ester magnesium, glutaric acid-mono{2-(meth)acryloyloxy-ethyl} ester calcium, glutaric acid-mono{2-(meth)acryloyloxy-propyl} ester, glutaric acid-mono{2-(meth)acryloyloxy-propyl} ester lithium, glutaric acid-mono{2-(meth)acryloyloxy-propyl} ester sodium, glutaric acid-mono{2-(meth)acryloyloxy-propyl} ester potassium, glutaric acid-mono{2-(meth)acryloyloxy-propyl} ester ammonium, glutaric acid-mono{2-(meth)acryloyloxy-propyl} ester magnesium, glutaric acid-mono{2-(meth)acryloyloxy-propyl} ester calcium, glutaric acid-mono{3-(meth)acryloyloxy-propyl} ester, glutaric acid-mono{3-(meth)acryloyloxy-propyl} ester lithium, glutaric acid-mono{3-(meth)acryloyloxy-propyl} ester sodium, glutaric acid-mono{3-(meth)acryloyloxy-propyl} ester potassium, glutaric acid-mono{3-(meth)acryloyloxy-propyl} ester ammonium, glutaric acid-mono{3-(meth)acryloyloxy-propyl} ester magnesium, glutaric acid-mono{3-(meth)acryloyloxy-propyl} ester calcium, glutaric acid-mono{4-(meth)acryloyloxy-butyl} ester, glutaric acid-mono{4-(meth)acryloyloxy-butyl} ester lithium, glutaric acid-mono{4-(meth)acryloyloxy-butyl} ester sodium, glutaric acid-mono{4-(meth)acryloyloxy-butyl} ester potassium, glutaric acid-mono{4-(meth)acryloyloxy-butyl} ester ammonium, glutaric acid-mono{4-(meth)acryloyloxy-butyl} ester magnesium, glutaric acid-mono{4-(meth)acryloyloxy-butyl} ester calcium, glutaric acid-mono{6-(meth)acryloyloxy-hexyl} ester, glutaric acid-mono{6-(meth)acryloyloxy-hexyl} ester lithium, glutaric acid-mono{6-(meth)acryloyloxy-hexyl} ester sodium, glutaric acid-mono{6-(meth)acryloyloxy-hexyl} ester potassium, glutaric acid-mono{6-(meth)acryloyloxy-hexyl} ester ammonium, glutaric acid-mono{6-(meth)acryloyloxy-hexyl} ester magnesium, glutaric acid-mono{6-(meth)acryloyloxy-hexyl} ester calcium, adipic acid-mono{2-(meth)acryloyloxy-ethyl} ester, adipic acid-mono{2-(meth)acryloyloxy-ethyl} ester lithium, adipic acid-mono{2-(meth)acryloyloxy-ethyl} ester sodium, adipic acid-mono{2-(meth)acryloyloxy-ethyl} ester potassium, adipic acid-mono{2-(meth)acryloyloxy-ethyl} ester ammonium, adipic acid-mono{2-(meth)acryloyloxy-ethyl} ester magnesium, adipic acid-mono{2-(meth)acryloyloxy-ethyl} ester calcium, adipic acid-mono{2-(meth)acryloyloxy-propyl} ester, adipic acid-mono{2-(meth)acryloyloxy-propyl} ester lithium, adipic acid-mono{2-(meth)acryloyloxy-propyl} ester sodium, adipic acid-mono{2-(meth)acryloyloxy-propyl} ester potassium, adipic acid-mono{2-(meth)acryloyloxy-propyl} ester ammonium, adipic acid-mono{2-(meth)acryloyloxy-propyl} ester magnesium, adipic acid-mono{2-(meth)acryloyloxy-propyl} ester calcium, adipic acid-mono{3-(meth)acryloyloxy-propyl} ester, adipic acid-mono{3-(meth)acryloyloxy-propyl} ester lithium, adipic acid-mono{3-(meth)acryloyloxy-propyl} ester sodium, adipic acid-mono{3-(meth)acryloyloxy-propyl} ester potassium, adipic acid-mono{3-(meth)acryloyloxy-propyl} ester ammonium, adipic acid-mono{3-(meth)acryloyloxy-propyl} ester magnesium, adipic acid-mono{3-(meth)acryloyloxy-propyl} ester calcium, adipic acid-mono{4-(meth)acryloyloxy-butyl} ester, adipic acid-mono{4-(meth)acryloyloxy-butyl} ester lithium, adipic acid-mono{4-(meth)acryloyloxy-butyl} ester sodium, adipic acid-mono{4-(meth)acryloyloxy-butyl} ester potassium, adipic acid-mono{4-(meth)acryloyloxy-butyl} ester ammonium, adipic acid-mono{4-(meth)acryloyloxy-butyl} ester magnesium, adipic acid-mono{4-(meth)acryloyloxy-butyl} ester calcium, adipic acid-mono{6-(meth)acryloyloxy-hexyl} ester, adipic acid-mono{6-(meth)acryloyloxy-hexyl} ester lithium, adipic acid-mono{6-(meth)acryloyloxy-hexyl} ester sodium, adipic acid-mono{6-(meth)acryloyloxy-hexyl} ester potassium, adipic acid-mono{6-(meth)acryloyloxy-hexyl} ester ammonium, adipic acid-mono{6-(meth)acryloyloxy-hexyl} ester magnesium, adipic acid-mono{6-(meth)acryloyloxy-hexyl} ester calcium, pimelic acid-mono{2-(meth)acryloyloxy-ethyl} ester, pimelic acid-mono{2-(meth)acryloyloxy-ethyl} ester lithium, pimelic acid-mono{2-(meth)acryloyloxy-ethyl} ester sodium, pimelic acid-mono{2-(meth)acryloyloxy-ethyl} ester potassium, pimelic acid-mono{2-(meth)acryloyloxy-ethyl} ester ammonium, pimelic acid-mono{2-(meth)acryloyloxy-ethyl} ester magnesium, pimelic acid-mono{2-(meth)acryloyloxy-ethyl} ester calcium, pimelic acid-mono{2-(meth)acryloyloxy-propyl} ester, pimelic acid-mono{2-(meth)acryloyloxy-propyl} ester lithium, pimelic acid-mono{2-(meth)acryloyloxy-propyl} ester sodium, pimelic acid-mono{2-(meth)acryloyloxy-propyl} ester potassium, pimelic acid-mono{2-(meth)acryloyloxy-propyl} ester ammonium, pimelic acid-mono{2-(meth)acryloyloxy-propyl} ester magnesium, pimelic acid-mono{2-(meth)acryloyloxy-propyl} ester calcium, pimelic acid-mono{3-(meth)acryloyloxy-propyl} ester, pimelic acid-mono{3-(meth)acryloyloxy-propyl} ester lithium, pimelic acid-mono{3-(meth)acryloyloxy-propyl} ester sodium, pimelic acid-mono{3-(meth)acryloyloxy-propyl} ester potassium, pimelic acid-mono{3-(meth)acryloyloxy-propyl} ester ammonium, pimelic acid-mono{3-(meth)acryloyloxy-propyl} ester magnesium, pimelic acid-mono{3-(meth)acryloyloxy-propyl} ester calcium, pimelic acid-mono{4-(meth)acryloyloxy-butyl} ester, pimelic acid-mono{4-(meth)acryloyloxy-butyl} ester lithium, pimelic acid-mono{4-(meth)acryloyloxy-butyl} ester sodium, pimelic acid-mono{4-(meth)acryloyloxy-butyl} ester potassium, pimelic acid-mono{4-(meth)acryloyloxy-butyl} ester ammonium, pimelic acid-mono{4-(meth)acryloyloxy-butyl} ester magnesium, pimelic acid-mono{4-(meth)acryloyloxy-butyl} ester calcium, pimelic acid-mono{6-(meth)acryloyloxy-hexyl} ester, pimelic acid-mono{6-(meth)acryloyloxy-hexyl} ester lithium, pimelic acid-mono{6-(meth)acryloyloxy-hexyl} ester sodium, pimelic acid-mono{6-(meth)acryloyloxy-hexyl} ester potassium, pimelic acid-mono{6-(meth)acryloyloxy-hexyl} ester ammonium, pimelic acid-mono{6-(meth)acryloyloxy-hexyl} ester magnesium, pimelic acid-mono{6-(meth)acryloyloxy-hexyl} ester calcium, suberic acid-mono{2-(meth)acryloyloxy-ethyl} ester, suberic acid-mono{2-(meth)acryloyloxy-ethyl} ester lithium, suberic acid-mono{2-(meth)acryloyloxy-ethyl} ester sodium, suberic acid-mono{2-(meth)acryloyloxy-ethyl} ester potassium, suberic acid-mono{2-(meth)acryloyloxy-ethyl} ester ammonium, suberic acid-mono{2-(meth)acryloyloxy-ethyl} ester magnesium, suberic acid-mono{2-(meth)acryloyloxy-ethyl} ester calcium, suberic acid-mono{2-(meth)acryloyloxy-propyl} ester, suberic acid-mono{2-(meth)acryloyloxy-propyl} ester lithium, suberic acid-mono{2-(meth)acryloyloxy-propyl} ester sodium, suberic acid-mono{2-(meth)acryloyloxy-propyl} ester potassium, suberic acid-mono{2-(meth)acryloyloxy-propyl} ester ammonium, suberic acid-mono{2-(meth)acryloyloxy-propyl} ester magnesium, suberic acid-mono{2-(meth)acryloyloxy-propyl} ester calcium, suberic acid-mono{3-(meth)acryloyloxy-propyl} ester, suberic acid-mono{3-(meth)acryloyloxy-propyl} ester lithium, suberic acid-mono{3-(meth)acryloyloxy-propyl} ester sodium, suberic acid-mono{3-(meth)acryloyloxy-propyl} ester potassium, suberic acid-mono{3-(meth)acryloyloxy-propyl} ester ammonium, suberic acid-mono{3-(meth)acryloyloxy-propyl} ester magnesium, suberic acid-mono{3-(meth)acryloyloxy-propyl} ester calcium, suberic acid-mono{4-(meth)acryloyloxy-butyl} ester, suberic acid-mono{4-(meth)acryloyloxy-butyl} ester lithium, suberic acid-mono{4-(meth)acryloyloxy-butyl} ester sodium, suberic acid-mono{4-(meth)acryloyloxy-butyl} ester potassium, suberic acid-mono{4-(meth)acryloyloxy-butyl} ester ammonium, suberic acid-mono{4-(meth)acryloyloxy-butyl} ester magnesium, suberic acid-mono{4-(meth)acryloyloxy-butyl} ester calcium, suberic acid-mono{6-(meth)acryloyloxy-hexyl} ester, suberic acid-mono{6-(meth)acryloyloxy-hexyl} ester lithium, suberic acid-mono{6-(meth)acryloyloxy-hexyl} ester sodium, suberic acid-mono{6-(meth)acryloyloxy-hexyl} ester potassium, suberic acid-mono{6-(meth)acryloyloxy-hexyl} ester ammonium, suberic acid-mono{6-(meth)acryloyloxy-hexyl} ester magnesium, suberic acid-mono{6-(meth)acryloyloxy-hexyl} ester calcium, sebacic acid-mono{2-(meth)acryloyloxy-ethyl} ester, sebacic acid-mono{2-(meth)acryloyloxy-ethyl} ester lithium, sebacic acid-mono{2-(meth)acryloyloxy-ethyl} ester sodium, sebacic acid-mono{2-(meth)acryloyloxy-ethyl} ester potassium, sebacic acid-mono{2-(meth)acryloyloxy-ethyl} ester ammonium, sebacic acid-mono{2-(meth)acryloyloxy-ethyl} ester magnesium, sebacic acid-mono{2-(meth)acryloyloxy-ethyl} ester calcium, sebacic acid-mono{2-(meth)acryloyloxy-propyl} ester, sebacic acid-mono{2-(meth)acryloyloxy-propyl} ester lithium, sebacic acid-mono{2-(meth)acryloyloxy-propyl} ester sodium, sebacic acid-mono{2-(meth)acryloyloxy-propyl} ester potassium, sebacic acid-mono{2-(meth)acryloyloxy-propyl} ester ammonium, sebacic acid-mono{2-(meth)acryloyloxy-propyl} ester magnesium, sebacic acid-mono{2-(meth)acryloyloxy-propyl} ester calcium, sebacic acid-mono{3-(meth)acryloyloxy-propyl} ester, sebacic acid-mono{3-(meth)acryloyloxy-propyl} ester lithium, sebacic acid-mono{3-(meth)acryloyloxy-propyl} ester sodium, sebacic acid-mono{3-(meth)acryloyloxy-propyl} ester potassium, sebacic acid-mono{3-(meth)acryloyloxy-propyl} ester ammonium, sebacic acid-mono{3-(meth)acryloyloxy-propyl} ester magnesium, sebacic acid-mono{3-(meth)acryloyloxy-propyl} ester calcium, sebacic acid-mono{4-(meth)acryloyloxy-butyl} ester, sebacic acid-mono{4-(meth)acryloyloxy-butyl} ester lithium, sebacic acid-mono{4-(meth)acryloyloxy-butyl} ester sodium, sebacic acid-mono{4-(meth)acryloyloxy-butyl} ester potassium, sebacic acid-mono{4-(meth)acryloyloxy-butyl} ester ammonium, sebacic acid-mono{4-(meth)acryloyloxy-butyl} ester magnesium, sebacic acid-mono{4-(meth)acryloyloxy-butyl} ester calcium, sebacic acid-mono{6-(meth)acryloyloxy-hexyl} ester, sebacic acid-mono{6-(meth)acryloyloxy-hexyl} ester lithium, sebacic acid-mono{6-(meth)acryloyloxy-hexyl} ester sodium, sebacic acid-mono{6-(meth)acryloyloxy-hexyl} ester potassium, sebacic acid-mono{6-(meth)acryloyloxy-hexyl} ester ammonium, sebacic acid-mono{6-(meth)acryloyloxy-hexyl} ester magnesium, sebacic acid-mono{6-(meth)acryloyloxy-hexyl} ester calcium, dodecane dioic acid-mono{2-(meth)acryloyloxy-ethyl} ester, dodecane dioic acid-mono{2-(meth)acryloyloxy-ethyl} ester lithium, dodecane dioic acid-mono{2-(meth)acryloyloxy-ethyl} ester sodium, dodecane dioic acid-mono{2-(meth)acryloyloxy-ethyl} ester potassium, dodecane dioic acid-mono{2-(meth)acryloyloxy-ethyl} ester ammonium, dodecane dioic acid-mono{2-(meth)acryloyloxy-ethyl} ester magnesium, dodecane dioic acid-mono{2-(meth)acryloyloxy-ethyl} ester calcium, dodecane dioic acid-mono{2-(meth)acryloyloxy-propyl} ester, dodecane dioic acid-mono{2-(meth)acryloyloxy-propyl} ester lithium, dodecane dioic acid-mono{2-(meth)acryloyloxy-propyl} ester sodium, dodecane dioic acid-mono{2-(meth)acryloyloxy-propyl} ester potassium, dodecane dioic acid-mono{2-(meth)acryloyloxy-propyl} ester ammonium, dodecane dioic acid-mono{2-(meth)acryloyloxy-propyl} ester magnesium, dodecane dioic acid-mono{2-(meth)acryloyloxy-propyl} ester calcium, dodecane dioic acid-mono{3-(meth)acryloyloxy-propyl} ester, dodecane dioic acid-mono{3-(meth)acryloyloxy-propyl} ester lithium, dodecane dioic acid-mono{3-(meth)acryloyloxy-propyl} ester sodium, dodecane dioic acid-mono{3-(meth)acryloyloxy-propyl} ester potassium, dodecane dioic acid-mono{3-(meth)acryloyloxy-propyl} ester ammonium, dodecane dioic acid-mono{3-(meth)acryloyloxy-propyl} ester magnesium, dodecane dioic acid-mono{3-(meth)acryloyloxy-propyl} ester calcium, dodecane dioic acid-mono{4-(meth)acryloyloxy-butyl} ester, dodecane dioic acid-mono{4-(meth)acryloyloxy-butyl} ester lithium, dodecane dioic acid-mono{4-(meth)acryloyloxy-butyl} ester sodium, dodecane dioic acid-mono{4-(meth)acryloyloxy-butyl} ester potassium, dodecane dioic acid-mono{4-(meth)acryloyloxy-butyl} ester ammonium, dodecane dioic acid-mono{4-(meth)acryloyloxy-butyl} ester magnesium, dodecane dioic acid-mono{4-(meth)acryloyloxy-butyl} ester calcium, dodecane dioic acid-mono{6-(meth)acryloyloxy-hexyl} ester, dodecane dioic acid-mono{6-(meth)acryloyloxy-hexyl} ester lithium, dodecane dioic acid-mono{6-(meth)acryloyloxy-hexyl} ester sodium, dodecane dioic acid-mono{6-(meth)acryloyloxy-hexyl} ester potassium, dodecane dioic acid-mono{6-(meth)acryloyloxy-hexyl} ester ammonium, dodecane dioic acid-mono{6-(meth)acryloyloxy-hexyl} ester magnesium, dodecane dioic acid-mono{6-(meth)acryloyloxy-hexyl} ester calcium, maleic acid-mono{2-(meth)acryloyloxy-ethyl} ester, maleic acid-mono{2-(meth)acryloyloxy-ethyl} ester lithium, maleic acid-mono{2-(meth)acryloyloxy-ethyl} ester sodium, maleic acid-mono{2-(meth)acryloyloxy-ethyl} ester potassium, maleic acid-mono{2-(meth)acryloyloxy-ethyl} ester ammonium, maleic acid-mono{2-(meth)acryloyloxy-ethyl} ester magnesium, maleic acid-mono{2-(meth)acryloyloxy-ethyl} ester calcium, maleic acid-mono{2-(meth)acryloyloxy-propyl} ester, maleic acid-mono{2-(meth)acryloyloxy-propyl} ester lithium, maleic acid-mono{2-(meth)acryloyloxy-propyl} ester sodium, maleic acid-mono{2-(meth)acryloyloxy-propyl} ester potassium, maleic acid-mono{2-(meth)acryloyloxy-propyl} ester ammonium, maleic acid-mono{2-(meth)acryloyloxy-propyl} ester magnesium, maleic acid-mono{2-(meth)acryloyloxy-propyl} ester calcium, maleic acid-mono{3-(meth)acryloyloxy-propyl} ester, maleic acid-mono{3-(meth)acryloyloxy-propyl} ester lithium, maleic acid-mono{3-(meth)acryloyloxy-propyl} ester sodium, maleic acid-mono{3-(meth)acryloyloxy-propyl} ester potassium, maleic acid-mono{3-(meth)acryloyloxy-propyl} ester ammonium, maleic acid-mono{3-(meth)acryloyloxy-propyl} ester magnesium, maleic acid-mono{3-(meth)acryloyloxy-propyl} ester calcium, maleic acid-mono{4-(meth)acryloyloxy-butyl} ester, maleic acid-mono{4-(meth)acryloyloxy-butyl} ester lithium, maleic acid-mono{4-(meth)acryloyloxy-butyl} ester sodium, maleic acid-mono{4-(meth)acryloyloxy-butyl} ester potassium, maleic acid-mono{4-(meth)acryloyloxy-butyl} ester ammonium, maleic acid-mono{4-(meth)acryloyloxy-butyl} ester magnesium, maleic acid-mono{4-(meth)acryloyloxy-butyl} ester calcium, maleic acid-mono{6-(meth)acryloyloxy-hexyl} ester, maleic acid-mono{6-(meth)acryloyloxy-hexyl} ester lithium, maleic acid-mono{6-(meth)acryloyloxy-hexyl} ester sodium, maleic acid-mono{6-(meth)acryloyloxy-hexyl} ester potassium, maleic acid-mono{6-(meth)acryloyloxy-hexyl} ester ammonium, maleic acid-mono{6-(meth)acryloyloxy-hexyl} ester magnesium, maleic acid-mono{6-(meth)acryloyloxy-hexyl} ester calcium, itaconic acid-mono{2-(meth)acryloyloxy-ethyl} ester, itaconic acid-mono{2-(meth)acryloyloxy-ethyl} ester lithium, itaconic acid-mono{2-(meth)acryloyloxy-ethyl} ester sodium, itaconic acid-mono{2-(meth)acryloyloxy-ethyl} ester potassium, itaconic acid-mono{2-(meth)acryloyloxy-ethyl} ester ammonium, itaconic acid-mono{2-(meth)acryloyloxy-ethyl} ester magnesium, itaconic acid-mono{2-(meth)acryloyloxy-ethyl} ester calcium, itaconic acid-mono{2-(meth)acryloyloxy-propyl} ester, itaconic acid-mono{2-(meth)acryloyloxy-propyl} ester lithium, itaconic acid-mono{2-(meth)acryloyloxy-propyl} ester sodium, itaconic acid-mono{2-(meth)acryloyloxy-propyl} ester potassium, itaconic acid-mono{2-(meth)acryloyloxy-propyl} ester ammonium, itaconic acid-mono{2-(meth)acryloyloxy-propyl} ester magnesium, itaconic acid-mono{2-(meth)acryloyloxy-propyl} ester calcium, itaconic acid-mono{3-(meth)acryloyloxy-propyl} ester, itaconic acid-mono{3-(meth)acryloyloxy-propyl} ester lithium, itaconic acid-mono{3-(meth)acryloyloxy-propyl} ester sodium, itaconic acid-mono{3-(meth)acryloyloxy-propyl} ester potassium, itaconic acid-mono{3-(meth)acryloyloxy-propyl} ester ammonium, itaconic acid-mono{3-(meth)acryloyloxy-propyl} ester magnesium, itaconic acid-mono{3-(meth)acryloyloxy-propyl} ester calcium, itaconic acid-mono{4-(meth)acryloyloxy-butyl} ester, itaconic acid-mono{4-(meth)acryloyloxy-butyl} ester lithium, itaconic acid-mono{4-(meth)acryloyloxy-butyl} ester sodium, itaconic acid-mono{4-(meth)acryloyloxy-butyl} ester potassium, itaconic acid-mono{4-(meth)acryloyloxy-butyl} ester ammonium, itaconic acid-mono{4-(meth)acryloyloxy-butyl} ester magnesium, itaconic acid-mono{4-(meth)acryloyloxy-butyl} ester calcium, itaconic acid-mono{6-(meth)acryloyloxy-hexyl} ester, itaconic acid-mono{6-(meth)acryloyloxy-hexyl} ester lithium, itaconic acid-mono{6-(meth)acryloyloxy-hexyl} ester sodium, itaconic acid-mono{6-(meth)acryloyloxy-hexyl} ester potassium, itaconic acid-mono{6-(meth)acryloyloxy-hexyl} ester ammonium, itaconic acid-mono{6-(meth)acryloyloxy-hexyl} ester magnesium, itaconic acid-mono{6-(meth)acryloyloxy-hexyl} ester calcium and so on.

[Chem. 41]

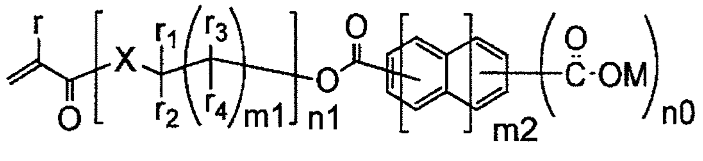

(I c−h)

In the formula (Ic-h), X is -O-, -S-, -NH- or $-NCH_3-$; r represents a hydrogen atom or a methyl group; $r_1$ to $r_4$ each independently represent a hydrogen atom, a methyl group, an ethyl group or a hydroxyl group; m1 is an integer of 0 to 10; m2 is an integer of 0 to 5; n0 is an integer of 1 to 5; n1 is an integer of 0 to 100; and M represents a hydrogen ion, an ammonium ion, an alkali metal ion or an alkaline earth metal ion having 1/2 atomic valence.

Examples of the compounds represented by the general formula (Ic-h) include phthalic acid-mono{2-(meth)acryloyloxy-ethyl} ester, phthalic acid-mono{2-(meth)acryloyloxy-ethyl} ester lithium, phthalic acid-mono{2-(meth)acryloyloxy-ethyl} ester sodium, phthalic acid-mono{2-(meth)acryloyloxy-ethyl} ester potassium, phthalic acid-mono{2-(meth)acryloyloxy-ethyl} ester ammonium, phthalic acid-mono{2-(meth)acryloyloxy-ethyl} ester magnesium, phthalic acid-mono{2-(meth)acryloyloxy-ethyl} ester calcium, phthalic acid-mono{2-(meth)acryloyloxy-propyl} ester, phthalic acid-mono{2-(meth)acryloyloxy-propyl} ester lithium, phthalic acid-mono{2-(meth)acryloyloxy-propyl} ester sodium, phthalic acid-mono{2-(meth)acryloyloxy-propyl} ester potassium, phthalic acid-mono{2-(meth)acryloyloxy-propyl} ester ammonium, phthalic acid-mono{2-(meth)acryloyloxy-propyl} ester magnesium, phthalic acid-mono{2-(meth)acryloyloxy-propyl} ester calcium, phthalic acid-mono{3-(meth)acryloyloxy-propyl} ester, phthalic acid-mono{3-(meth)acryloyloxy-propyl} ester lithium, phthalic acid-mono{3-(meth)acryloyloxy-propyl} ester sodium, phthalic acid-mono{3-(meth)acryloyloxy-propyl} ester potassium, phthalic acid-mono{3-(meth)acryloyloxy-propyl} ester ammonium, phthalic acid-mono{3-(meth)acryloyloxy-propyl} ester magnesium, phthalic acid-mono{3-(meth)acryloyloxy-propyl} ester calcium, phthalic acid-mono{4-(meth)acryloyloxy-butyl} ester, phthalic acid-mono{4-(meth)acryloyloxy-butyl} ester lithium, phthalic acid-mono{4-(meth)acryloyloxy-butyl} ester sodium, phthalic acid-mono{4-(meth)acryloyloxy-butyl} ester potassium, phthalic acid-mono{4-(meth)acryloyloxy-butyl} ester ammonium, phthalic acid-mono{4-(meth)acryloyloxy-butyl} ester magnesium, phthalic acid-mono{4-(meth)acryloyloxy-butyl} ester calcium, phthalic acid-mono{6-(meth)acryloyloxy-hexyl} ester, phthalic acid-mono{6-(meth)acryloyloxy-hexyl} ester lithium, phthalic acid-mono{6-(meth)acryloyloxy-hexyl} ester sodium, phthalic acid-mono{6-(meth)acryloyloxy-hexyl} ester potassium, phthalic acid-mono{6-(meth)acryloyloxy-hexyl} ester ammonium, phthalic acid-mono{6-(meth)acryloyloxy-hexyl} ester magnesium, phthalic acid-mono{6-(meth)acryloyloxy-hexyl} ester calcium, isophthalic acid-mono{2-(meth)acryloyloxy-ethyl} ester, isophthalic acid-mono{2-(meth)acryloyloxy-ethyl} ester lithium, isophthalic acid-mono{2-(meth)acryloyloxy-ethyl} ester sodium, isophthalic acid-mono{2-(meth)acryloyloxy-ethyl} ester potassium, isophthalic acid-mono{2-(meth)acryloyloxy-ethyl} ester ammonium, isophthalic acid-mono{2-(meth)acryloyloxy-ethyl} ester magnesium, isophthalic acid-mono{2-(meth)acryloyloxy-ethyl} ester calcium, isophthalic acid-mono{2-(meth)acryloyloxy-propyl} ester, isophthalic acid-mono{2-(meth)acryloyloxy-propyl} ester lithium, isophthalic acid-mono{2-(meth)acryloyloxy-propyl} ester sodium, isophthalic acid-mono{2-(meth)acryloyloxy-propyl} ester potassium, isophthalic acid-mono{2-(meth)acryloyloxy-propyl} ester ammonium, isophthalic acid-mono{2-(meth)acryloyloxy-propyl} ester magnesium, isophthalic acid-mono{2-(meth)acryloyloxy-propyl} ester calcium, isophthalic acid-mono{3-(meth)acryloyloxy-propyl} ester, isophthalic acid-mono{3-(meth)acryloyloxy-propyl} ester lithium, isophthalic acid-mono{3-(meth)acryloyloxy-propyl} ester sodium, isophthalic acid-mono{3-(meth)acryloyloxy-propyl} ester potassium, isophthalic acid-mono{3-(meth)acryloyloxy-propyl} ester ammonium, isophthalic acid-mono{3-(meth)acryloyloxy-propyl} ester magnesium, isophthalic acid-mono{3-(meth)acryloyloxy-propyl} ester calcium, isophthalic acid-mono{4-(meth)acryloyloxy-butyl} ester, isophthalic acid-mono{4-(meth)acryloyloxy-butyl} ester lithium, isophthalic acid-mono{4-(meth)acryloyloxy-butyl} ester sodium, isophthalic acid-mono{4-(meth)acryloyloxy-butyl} ester potassium, isophthalic acid-mono{4-(meth)acryloyloxy-butyl} ester ammonium, isophthalic acid-mono{4-(meth)acryloyloxy-butyl} ester magnesium, isophthalic acid-mono{4-(meth)acryloyloxy-butyl} ester calcium, isophthalic acid-mono{6-(meth)acryloyloxy-hexyl} ester, isophthalic acid-mono{6-(meth)acryloyloxy-hexyl} ester lithium, isophthalic acid-mono{6-(meth)acryloyloxy-hexyl} ester sodium, isophthalic acid-mono{6-(meth)acryloyloxy-hexyl} ester potassium, isophthalic acid-mono{6-(meth)acryloyloxy-hexyl} ester ammonium, isophthalic acid-mono{6-(meth)acryloyloxy-hexyl} ester magnesium, isophthalic acid-mono{6-(meth)acryloyloxy-hexyl} ester calcium, terephthalic acid-mono{2-(meth)acryloyloxy-ethyl} ester, terephthalic acid-mono{2-(meth)acryloyloxy-ethyl} ester lithium, terephthalic acid-mono{2-(meth)acryloyloxy-ethyl} ester sodium, terephthalic acid-mono{2-(meth)acryloyloxy-ethyl} ester potassium, terephthalic acid-mono{2-(meth)acryloyloxy-ethyl} ester ammonium, terephthalic acid-mono{2-(meth)acryloyloxy-ethyl} ester magnesium, terephthalic acid-mono{2-(meth)acryloyloxy-ethyl} ester calcium, terephthalic acid-mono{2-(meth)acryloyloxy-propyl} ester, terephthalic acid-mono{2-(meth)acryloyloxy-propyl} ester lithium, terephthalic acid-mono{2-(meth)acryloyloxy-propyl} ester sodium, terephthalic acid-mono{2-(meth)acryloyloxy-propyl} ester potassium, terephthalic acid-mono{2-(meth)acryloyloxy-propyl} ester ammonium, terephthalic acid-mono{2-(meth)acryloyloxy-propyl} ester magnesium, terephthalic acid-mono{2-(meth)acryloyloxy-propyl} ester calcium, terephthalic acid-mono{3-(meth)acryloyloxy-propyl} ester, terephthalic acid-mono{3-(meth)acryloyloxy-propyl} ester lithium, terephthalic acid-mono{3-(meth)acryloyloxy-propyl} ester sodium, terephthalic acid-mono{3-(meth)acryloyloxy-propyl} ester potassium, terephthalic acid-mono{3-(meth)acryloyloxy-propyl} ester ammonium, terephthalic acid-mono{3-(meth)acryloyloxy-propyl} ester magnesium, terephthalic acid-mono{3-(meth)acryloyloxy-propyl} ester calcium, terephthalic acid-mono{4-(meth)acryloyloxy-butyl} ester, terephthalic acid-mono{4-(meth)acryloyloxy-butyl} ester lithium, terephthalic acid-mono{4-(meth)acryloyloxy-butyl} ester sodium, terephthalic acid-mono{4-(meth)acryloyloxy-butyl} ester potassium, terephthalic acid-mono{4-(meth)acryloyloxy-butyl} ester ammonium, terephthalic acid-mono{4-(meth)acryloyloxy-butyl} ester magnesium, terephthalic acid-mono{4-(meth)acryloyloxy-butyl} ester calcium, terephthalic acid-mono{6-(meth)acryloyloxy-hexyl} ester, terephthalic acid-mono{6-(meth)acryloyloxy-hexyl} ester lithium, terephthalic acid-mono{6-(meth)acryloyloxy-hexyl} ester sodium, terephthalic acid-mono{6-(meth)acryloyloxy-hexyl} ester potassium, terephthalic acid-mono{6-(meth)acryloyloxy-hexyl} ester ammonium, terephthalic acid-mono{6-(meth)acryloyloxy-hexyl} ester magnesium, terephthalic acid-mono{6-(meth)acryloyloxy-hexyl} ester calcium, naphthalene dicarboxylic acid-mono{2-(meth)acryloyloxy-ethyl} ester, naphthalene dicarboxylic acid-mono{2-(meth)acryloyloxy-ethyl} ester lithium, naphthalene dicarboxylic acid-mono{2-(meth)acryloyloxy-ethyl} ester sodium, naphthalene dicarboxylic acid-mono{2-(meth)acryloyloxy-ethyl} ester potassium, naphthalene dicarboxylic acid-mono{2-(meth)acryloyloxy-ethyl} ester ammonium, naphthalene dicarboxylic acid-mono{2-(meth)acryloyloxy-ethyl} ester magnesium, naphthalene dicarboxylic acid-mono{2-(meth)acryloyloxy-ethyl} ester calcium, naphthalene dicarboxylic acid-mono{2-(meth)acryloyloxy-propyl} ester, naphthalene dicarboxylic acid-mono{2-(meth)acryloyloxy-propyl} ester lithium, naphthalene dicarboxylic acid-mono{2-(meth)acryloyloxy-propyl} ester sodium, naphthalene dicarboxylic acid-mono{2-(meth)acryloyloxy-propyl} ester potassium, naphthalene dicarboxylic acid-mono{2-(meth)acryloyloxy-propyl} ester ammonium, naphthalene dicarboxylic acid-mono{2-(meth)acryloyloxy-propyl} ester magnesium, naphthalene dicarboxylic acid-mono{2-(meth)acryloyloxy-propyl} ester calcium, naphthalene dicarboxylic acid-mono{3-(meth)acryloyloxy-propyl} ester, naphthalene dicarboxylic acid-mono{3-(meth)acryloyloxy-propyl} ester lithium, naphthalene dicarboxylic acid-mono{3-(meth)acryloyloxy-propyl} ester sodium, naphthalene dicarboxylic acid-mono{3-(meth)acryloyloxy-propyl} ester potassium, naphthalene dicarboxylic acid-mono{3-(meth)acryloyloxy-propyl} ester ammonium, naphthalene dicarboxylic acid-mono{3-(meth)acryloyloxy-propyl} ester magnesium, naphthalene dicarboxylic acid-mono{3-(meth)acryloyloxy-propyl} ester calcium, naphthalene dicarboxylic acid-mono{4-(meth)acryloyloxy-butyl} ester,

naphthalene dicarboxylic acid-mono{4-(meth)acryloyloxy-butyl} ester lithium, naphthalene dicarboxylic acid-mono{4-(meth)acryloyloxy-butyl} ester sodium, naphthalene dicarboxylic acid-mono{4-(meth)acryloyloxy-butyl} ester potassium, naphthalene dicarboxylic acid-mono{4-(meth)acryloyloxy-butyl} ester ammonium, naphthalene dicarboxylic acid-mono{4-(meth)acryloyloxy-butyl} ester magnesium, naphthalene dicarboxylic acid-mono{4-(meth)acryloyloxy-butyl} ester calcium, naphthalene dicarboxylic acid-mono{6-(meth)acryloyloxy-hexyl} ester, naphthalene dicarboxylic acid-mono{6-(meth)acryloyloxy-hexyl} ester lithium, naphthalene dicarboxylic acid-mono{6-(meth)acryloyloxy-hexyl} ester sodium, naphthalene dicarboxylic acid-mono{6-(meth)acryloyloxy-hexyl} ester potassium, naphthalene dicarboxylic acid-mono{6-(meth)acryloyloxy-hexyl} ester ammonium, naphthalene dicarboxylic acid-mono{6-(meth)acryloyloxy-hexyl} ester magnesium, naphthalene dicarboxylic acid-mono{6-(meth)acryloyloxy-hexyl} ester calcium and so on.

Of the compounds represented by the general formula (Id), those compounds represented by the general formula (Id-1) below are preferable. Those compounds represented by the general formula (Id-l) are also preferable.

[Chem. 42]

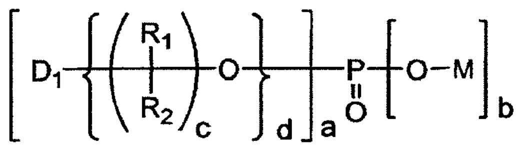

(I d−1)

In the formula (Id-1), $D_1$ represents a (meth) acryloyloxy group, a (meth)acryloylthio group, a (meth)acrylamide group, a vinyl group, an allyl group, an isopropenyl group or a styryl group; $R_1$ to $R_4$ each independently represent a hydrogen atom, a $C_{1-6}$ alkyl group or a $C_{1-6}$ alkoxy group; M represents a hydrogen ion, an ammonium ion, an alkali metal ion or an alkaline earth metal ion having 1/2 atomic valence; a and b are each 1 or 2, and a + b = 3; c is an integer of 1 to 20; d is an integer of 1 to 10; when c is 2 or greater, $R_1$s and $R_2$s each may be the same as or different from one another; when d is 2 or greater, $R_1$s and $R_2$s each may be the same as or different from one another; when a is 2, $D_1$s, $R_1$s and $R_2$s each may be the same as or different from each other; and when b is 2, Ms may be the same as or different from each other.

Examples of the compounds represented by the general formula (Id-1) include (meth)acryloyloxymethyl phosphorus, sodium (meth)acryloyloxymethyl phosphate, (meth)acryloyloxyethylphosphoric acid, monosodium (meth)acryloyloxyethylphosphate, disodium (meth)acryloyloxyethylphosphate, monopotassium (meth)acryloyloxyethylphosphate, dipotassium (meth)acryloyloxyethylphosphate, sodium bis{(meth)acryloyloxyethyl}phosphate, potassium bis{(meth)acryloyloxyethyl}phosphate, monosodium 5-(meth)acryloyloxy-3-oxapentyl phosphate, disodium 5-(meth)acryloyloxy-3-oxapentyl phosphate, sodium bis{5-(meth)acryloyloxy-3-oxapentyl}phosphate, monopotassium 5-(meth)acryloyloxy-3-oxapentyl phosphate, dipotassium 5-(meth)acryloyloxy-3-oxapentyl phosphate, potassium bis{5-(meth)acryloyloxy-3-oxapentyl}phosphate, monosodium 8-(meth)acryloyloxy-3,6-dioxaoctyl phosphate, disodium 8-(meth)acryloyloxy-3,6-dioxaoctyl phosphate, sodium bis{8-(meth)acryloyloxy-3,6-dioxaoctyl}phosphate, monosodium 11-(meth)acryloyloxy-3,6,9-trioxaundecyl phosphate, disodium 11-(meth)acryloyloxy-3,6,9-trioxaundecyl phosphate, monopotassium 11-(meth)acryloyloxy-3,6,9-trioxaundecyl phosphate, dipotassium 11-(meth)acryloyloxy-3,6,9-trioxaundecyl phosphate, monosodium styryloxyethyl phosphate, disodium styryloxyethyl phosphate, monopotassium styryloxyethyl phosphate, dipotassium styryloxyethyl phosphate and so on.

[Chem. 43]

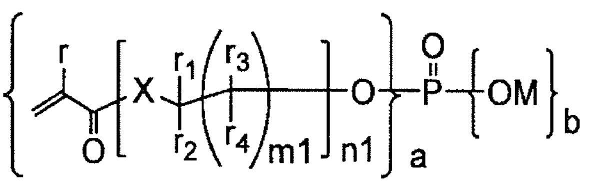

(I d−l)

In the formula (Id-l), X is -O-, -S-, -NH- or $-NCH_3-$; r represents a hydrogen atom or a methyl group; $r_1$ to $r_4$ each independently represent a hydrogen atom, a methyl group, an ethyl group or a hydroxyl group ; m1 is an integer of 0 to 10; n1 is an integer of 0 to 100; M represents a hydrogen ion, an ammonium ion, an alkali metal ion or an alkaline earth metal ion having 1/2 atomic valence; a and b are each an integer of 1 or 2, and a + b = 3; when a is 2, Xs, r's, and $r_1$s to $r_4$s each may be the same as or different from each other; and when b is 2, Ms may be the same as or different

from each other.

Examples of the compounds represented by the general formula (Id-1) include (meth)acryloyloxymethyl phosphoric acid, disodium (meth)acryloyloxymethyl phosphate, 2-(meth)acryloyloxy-ethyl phosphoric acid, lithium 2-(meth)acryloyloxy-ethyl phosphate, dilithium 2-(meth)acryloyloxy-ethyl phosphate, sodium 2-(meth)acryloyloxy-ethyl phosphate, disodium 2-(meth)acryloyloxy-ethyl phosphate, potassium 2-(meth)acryloyloxy-ethyl phosphate, dipotassium 2-(meth)acryloyloxy-ethyl phosphate, ammonium 2-(meth)acryloyloxy-ethyl phosphate, diammonium 2-(meth)acryloyloxy-ethyl phosphate, magnesium 2-(meth)acryloyloxy-ethyl phosphate, calcium 2-(meth)acryloyloxy-ethyl phosphate, bis{2-(meth)acryloyloxy-ethyl}phosphoric acid, lithium bis{2-(meth)acryloyloxy-ethyl}phosphate, sodium bis{2-(meth)acryloyloxy-ethyl}phosphate, potassium bis{2-(meth)acryloyloxy-ethyl}phosphate, ammonium bis{2-(meth)acryloyloxy-ethyl}phosphate, magnesium bis{2-(meth)acryloyloxy-ethyl}phosphate, calcium bis{2-(meth)acryloyloxy-ethyl}phosphate, 2-(meth)acryloyloxy-propyl phosphoric acid, lithium 2-(meth)acryloyloxy-propyl phosphate, dilithium 2-(meth)acryloyloxy-propyl phosphate, sodium 2-(meth)acryloyloxy-propyl phosphate, disodium 2-(meth)acryloyloxy-propyl phosphate, potassium 2-(meth)acryloyloxy-propyl phosphate, dipotassium 2-(meth)acryloyloxy-propyl phosphate, ammonium 2-(meth)acryloyloxy-propyl phosphate, diammonium 2-(meth)acryloyloxy-propyl phosphate, magnesium 2-(meth)acryloyloxy-propyl phosphate, calcium 2-(meth)acryloyloxy-propyl phosphate, bis{2-(meth)acryloyloxy-propyl}phosphoric acid, lithium bis{2-(meth)acryloyloxy-propyl}phosphate, sodium bis{2-(meth)acryloyloxy-propyl}phosphate, potassium bis{2-(meth)acryloyloxy-propyl}phosphate, ammonium bis{2-(meth)acryloyloxy-propyl}phosphate, magnesium bis{2-(meth)acryloyloxy-propyl}phosphate, calcium bis{2-(meth)acryloyloxy-propyl}phosphate, 3-(meth)acryloyloxy-propyl phosphoric acid, lithium 3-(meth)acryloyloxy-propyl phosphate, dilithium 3-(meth)acryloyloxy-propyl phosphate, sodium 3-(meth)acryloyloxy-propyl phosphate, disodium 3-(meth)acryloyloxy-propyl phosphate, potassium 3-(meth)acryloyloxy-propyl phosphate, dipotassium 3-(meth)acryloyloxy-propyl phosphate, ammonium 3-(meth)acryloyloxy-propyl phosphate, diammonium 3-(meth)acryloyloxy-propyl phosphate, magnesium 3-(meth)acryloyloxy-propyl phosphate, calcium 3-(meth)acryloyloxy-propyl phosphate, bis{3-(meth)acryloyloxy-propyl}phosphoric acid, lithium bis{3-(meth)acryloyloxy-propyl}phosphate, sodium bis{3-(meth)acryloyloxy-propyl}phosphate, potassium bis{3-(meth)acryloyloxy-propyl}phosphate, ammonium bis{3-(meth)acryloyloxy-propyl}phosphate, magnesium bis{3-(meth)acryloyloxy-propyl}phosphate, calcium bis{3-(meth)acryloyloxy-propyl}phosphate, 4-(meth)acryloyloxy-butyl phosphoric acid, lithium 4-(meth)acryloyloxy-butyl phosphate, dilithium 4-(meth)acryloyloxy-butyl phosphate, sodium 4-(meth)acryloyloxy-butyl phosphate, disodium 4-(meth)acryloyloxy-butyl phosphate, potassium 4-(meth)acryloyloxy-butyl phosphate, dipotassium 4-(meth)acryloyloxy-butyl phosphate, ammonium 4-(meth)acryloyloxy-butyl phosphate, diammonium 4-(meth)acryloyloxy-butyl phosphate, magnesium 4-(meth)acryloyloxy-butyl phosphate, calcium 4-(meth)acryloyloxy-butyl phosphate, bis{4-(meth)acryloyloxy-butyl}phosphoric acid, lithium bis{4-(meth)acryloyloxy-butyl}phosphate, sodium bis{4-(meth)acryloyloxy-butyl}phosphate, potassium bis{4-(meth)acryloyloxy-butyl}phosphate, ammonium bis{4-(meth)acryloyloxy-butyl}phosphate, magnesium bis{4-(meth)acryloyloxy-butyl}phosphate, calcium bis{4-(meth)acryloyloxy-butyl}phosphate, 6-(meth)acryloyloxy-hexyl phosphoric acid, lithium 6-(meth)acryloyloxy-hexyl phosphate, dilithium 6-(meth)acryloyloxy-hexyl phosphate, sodium 6-(meth)acryloyloxy-hexyl phosphate, disodium 6-(meth)acryloyloxy-hexyl phosphate, potassium 6-(meth)acryloyloxy-hexyl phosphate, dipotassium 6-(meth)acryloyloxy-hexyl phosphate, ammonium 6-(meth)acryloyloxy-hexyl phosphate, diammonium 6-(meth)acryloyloxy-hexyl phosphate, magnesium 6-(meth)acryloyloxy-hexyl phosphate, calcium 6-(meth)acryloyloxy-hexyl phosphate, bis{6-(meth)acryloyloxy-hexyl}phosphoric acid, lithium bis{6-(meth)acryloyloxy-hexyl}phosphate, sodium bis{6-(meth)acryloyloxy-hexyl}phosphate, potassium bis{6-(meth)acryloyloxy-hexyl}phosphate, ammonium bis{6-(meth)acryloyloxy-hexyl}phosphate, magnesium bis{6-(meth)acryloyloxy-hexyl}phosphate, calcium bis{6-(meth)acryloyloxy-hexyl}phosphate, 5-(meth)acryloyloxy-3-oxapentyl phosphoric acid, lithium 5-(meth)acryloyloxy-3-oxapentyl phosphate, dilithium 5-(meth)acryloyloxy-3-oxapentyl phosphate, sodium 5-(meth)acryloyloxy-3-oxapentyl phosphate, disodium 5-(meth)acryloyloxy-3-oxapentyl phosphate, potassium 5-(meth)acryloyloxy-3-oxapentyl phosphate, dipotassium 5-(meth)acryloyloxy-3-oxapentyl phosphate, ammonium 5-(meth)acryloyloxy-3-oxapentyl phosphate, diammonium 5-(meth)acryloyloxy-3-oxapentyl phosphate, magnesium 5-(meth)acryloyloxy-3-oxapentyl phosphate, calcium 5-(meth)acryloyloxy-3-oxapentyl phosphate, bis{5-(meth)acryloyloxy-3-oxapentyl}phosphoric acid, lithium bis{5-(meth)acryloyloxy-3-oxapentyl}phosphate, sodium bis{5-(meth)acryloyloxy-3-oxapentyl}phosphate, potassium bis{5-(meth)acryloyloxy-3-oxapentyl}phosphate, ammonium bis{5-(meth)acryloyloxy-3-oxapentyl}phosphate, magnesium bis{5-(meth)acryloyloxy-3-oxapentyl}phosphate, calcium bis{5-(meth)acryloyloxy-3-oxapentyl}phosphate, 8-(meth)acryloyloxy-3,6-dioxaoctyl phosphoric acid, lithium 8-(meth)acryloyloxy-3,6-dioxaoctyl phosphate, dilithium 8-(meth)acryloyloxy-3,6-dioxaoctyl phosphate, sodium 8-(meth)acryloyloxy-3,6-dioxaoctyl phosphate, disodium 8-(meth)acryloyloxy-3,6-dioxaoctyl phosphate, potassium 8-(meth)acryloyloxy-3,6-dioxaoctyl phosphate, dipotassium 8-(meth)acryloyloxy-3,6-dioxaoctyl phosphate, ammonium 8-(meth)acryloyloxy-3,6-dioxaoctyl phosphate, diammonium 8-(meth)acryloyloxy-3,6-dioxaoctyl phosphate, magnesium 8-(meth)acryloyloxy-3,6-dioxaoctyl phosphate, calcium 8-(meth)acryloyloxy-3,6-dioxaoctyl phosphate, bis{8-(meth)acryloyloxy-3,6-dioxaoctyl}phosphoric acid, lithium bis{8-(meth)acryloyloxy-3,6-dioxaoctyl}phosphate, sodium bis{8-(meth)acryloyloxy-3,6-dioxaoctyl}phosphate, potassium bis{8-(meth)acryloyloxy-3,6-dioxaoctyl}phosphate,

ammonium bis{8-(meth)acryloyloxy-3,6-dioxaoctyl}phosphate, magnesium bis{8-(meth)acryloyloxy-3,6-dioxaoctyl}phosphate, calcium bis{8-(meth)acryloyloxy-3,6-dioxaoctyl}phosphate and so on.

Of the compounds (I) having an anionic hydrophilic group, those compounds represented by the general formulas (Ii) to (Ik) below are also preferable.

[Chem. 44]

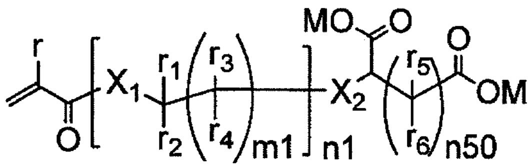

(I i)

In the formula (Ii), r represents a hydrogen atom or a methyl group; $r_1$ to $r_6$ each independently represent a hydrogen atom, a methyl group, an ethyl group or a hydroxyl group; n50 is an integer of 0 to 5; n1 is an integer of 0 to 100; m1 is an integer of 0 to 10; $X_1$ and $X_2$ are each independently -O-, -S-, -NH- or $-NCH_3-$; M at each occurrence represents a hydrogen ion, an ammonium ion, an alkali metal ion or an alkaline earth metal ion having 1/2 atomic valence; and when n1 is 2 or greater, $r_1$s to $r_4$s, and $X_1$s each may be the same as or different from one another.

Examples of the compounds represented by the general formula (Ii) include (meth)acryloyloxymalonic acid, lithium (meth)acryloyloxymalonate, dilithium (meth)acryloyloxymalonate, sodium (meth)acryloyloxymalonate, disodium (meth)acryloyloxymalonate, potassium (meth)acryloyloxymalonate, dipotassium (meth)acryloyloxymalonate, ammonium (meth)acryloyloxymalonate, diammonium (meth)acryloyloxymalonate, magnesium (meth)acryloyloxymalonate, calcium (meth)acryloyloxymalonate, (meth)acrylamido malonic acid, lithium (meth) acrylamido malonate, dilithium (meth)acrylamido malonate, sodium (meth)acrylamido malonate, disodium (meth)acrylamido malonate, potassium (meth)acrylamido malonate, dipotassium (meth)acrylamido malonate, ammonium (meth)acrylamido malonate, diammonium (meth)acrylamido malonate, magnesium (meth)acrylamido malonate, calcium (meth)acrylamido malonate, (meth)acryloyloxysuccinic acid, lithium (meth)acryloyloxysuccinate, dilithium (meth)acryloyloxysuccinate, sodium (meth)acryloyloxysuccinate, disodium (meth)acryloyloxysuccinate, potassium (meth)acryloyloxysuccinate, dipotassium (meth)acryloyloxysuccinate, ammonium (meth)acryloyloxysuccinate, diammonium (meth)acryloyloxysuccinate, magnesium (meth)acryloyloxysuccinate, calcium (meth)acryloyloxysuccinate, (meth)acryloylthio-succinic acid, lithium (meth)acryloylthio-succinate, dilithium (meth)acryloylthio-succinate, sodium (meth)acryloylthio-succinate, disodium (meth)acryloylthio-succinate, potassium (meth)acryloylthio-succinate, dipotassium (meth)acryloylthio-succinate, ammonium (meth)acryloylthio-succinate, diammonium (meth)acryloylthio-succinate, magnesium (meth)acryloylthio-succinate, calcium (meth)acryloylthio-succinate, malic acid(meth)acrylate, malic acid(meth)acrylate lithium, malic acid(meth)acrylate dilithium, malic acid(meth)acrylate sodium, malic acid(meth)acrylate disodium, malic acid(meth)acrylate potassium, malic acid(meth)acrylate dipotassium, malic acid(meth)acrylate ammonium, malic acid(meth)acrylate diammonium, malic acid(meth)acrylate magnesium, malic acid(meth)acrylate calcium, tartaric acid(meth)acrylate, tartaric acid(meth)acrylate lithium, tartaric acid(meth)acrylate dilithium, tartaric acid(meth)acrylate sodium, tartaric acid(meth)acrylate disodium, tartaric acid(meth)acrylate potassium, tartaric acid(meth)acrylate dipotassium, tartaric acid(meth)acrylate ammonium, tartaric acid(meth)acrylate diammonium, tartaric acid(meth)acrylate magnesium, tartaric acid(meth)acrylate calcium, N-(meth)acryloyl-aspartic acid, lithium N-(meth)acryloyl-aspartate, dilithium N-(meth)acryloyl-aspartate, sodium N-(meth)acryloyl-aspartate, disodium N-(meth)acryloyl-aspartate, potassium N-(meth)acryloyl-aspartate, dipotassium N-(meth)acryloyl-aspartate, ammonium N-(meth)acryloyl-aspartate, diammonium N-(meth)acryloyl-aspartate, magnesium N-(meth)acryloyl-aspartate, calcium N-(meth)acryloyl-aspartate, N-(meth)acryloyl-glutamic acid, lithium N-(meth)acryloyl-glutamate, dilithium N-(meth)acryloyl-glutamate, sodium N-(meth)acryloyl-glutamate, disodium N-(meth)acryloyl-glutamate, potassium N-(meth)acryloyl-glutamate, dipotassium N-(meth)acryloyl-glutamate, ammonium N-(meth)acryloyl-glutamate, diammonium N-(meth)acryloyl-glutamate, magnesium N-(meth)acryloyl-glutamate, calcium N-(meth)acryloyl-glutamate and so on.

[Chem. 45]

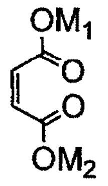

(I j)

Examples of the compounds represented by the general formula (Ij) include maleic acid, lithium maleate, dilithium maleate, sodium maleate, disodium maleate, potassium maleate, dipotassium maleate, ammonium maleate, diammonium maleate, magnesium maleate and calcium maleate.

In the formula (Ij), $M_1$ and $M_2$ each independently represent a hydrogen ion, an ammonium ion, an alkali metal ion or an alkaline earth metal ion having 1/2 atomic valence.

Examples of the compounds represented by the general formula (Ij) include maleic acid, lithium maleate, dilithium maleate, sodium maleate, disodium maleate, potassium maleate, dipotassium maleate, ammonium maleate, diammonium maleate, magnesium maleate, calcium maleate and so on.

[Chem. 46]

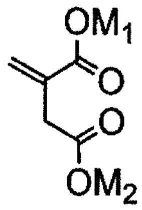

(I k)

In the formula (Ik), $M_1$ and $M_2$ each independently represent a hydrogen ion, an ammonium ion, an alkali metal ion or an alkaline earth metal ion having 1/2 atomic valence.

Examples of the compounds represented by the general formula (Ik) include itaconic acid, lithium itaconate, dilithium itaconate, sodium itaconate, disodium itaconate, potassium itaconate, dipotassium itaconate, ammonium itaconate, diammonium itaconate, magnesium itaconate, calcium itaconate and so on.

Examples of the compounds (I) having an anionic hydrophilic group and two or more functional groups with a polymerizable carbon-carbon double bond include those compounds represented by the general formulas (Iu) to (Iw) below.

[Chem. 47]

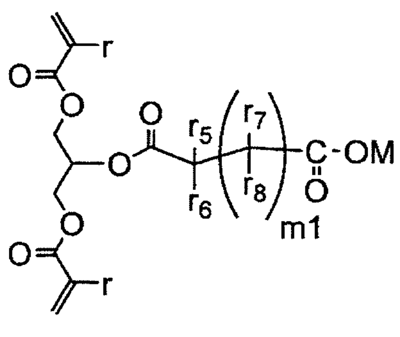

(I u)

In the formula (Iu), $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is each independently an integer of 0 to 10; and M represents a hydrogen ion, an ammonium ion, an alkali metal ion or an alkaline earth metal ion having 1/2 atomic valence.

Examples of the compounds represented by the general formula (Iu) include 1,3-(meth)acryloyloxy-propyl-2-malonic acid ester, 1,3-(meth)acryloyloxy-propyl-2-malonic acid ester sodium, 1,3-(meth)acryloyloxy-propyl-2-malonic acid ester potassium, 1,3-(meth)acryloyloxy-propyl-2-malonic acid ester ammonium, 1,3-(meth)acryloyloxy-propyl-2-malonic acid ester magnesium, 1,3-(meth)acryloyloxy-propyl-2-malonic acid ester calcium, 1,3-(meth)acryloyloxy-propyl-2-glutamic acid ester, 1,3-(meth)acryloyloxy-propyl-2-glutamic acid ester sodium, 1,3-(meth)acryloyloxy-propyl-2-glutamic acid ester potassium, 1,3-(meth)acryloyloxy-propyl-2-glutamic acid ester ammonium, 1,3-(meth)acryloyloxy-propyl-2-glutamic acid ester magnesium, 1,3-(meth)acryloyloxy-propyl-2-glutamic acid ester calcium, 1,3-(meth)acryloyloxy-propyl-2-adipic acid ester, 1,3-(meth)acryloyloxy-propyl-2-adipic acid ester sodium, 1,3-(meth)acryloyloxy-propyl-2-adipic acid ester potassium, 1,3-(meth)acryloyloxy-propyl-2-adipic acid ester ammonium, 1,3-(meth)acryloyloxy-propyl-2-adipic acid ester magnesium, 1,3-(meth)acryloyloxy-propyl-2-adipic acid ester calcium, 1,3-(meth)acryloyloxy-propyl-2-pimelic acid ester, 1,3-(meth)acryloyloxy-propyl-2-pimelic acid ester sodium, 1,3-(meth)acryloyloxy-propyl-2-pimelic acid ester potassium, 1,3-(meth)acryloyloxy-propyl-2-pimelic acid ester ammonium, 1,3-(meth)acryloyloxy-propyl-2-pimelic acid ester magnesium, 1,3-(meth)acryloyloxy-propyl-2-pimelic acid ester calcium, 1,3-(meth)acryloyloxy-propyl-2-suberic acid ester, 1,3-(meth)acryloyloxy-propyl-2-suberic acid ester sodium, 1,3-(meth)acryloyloxy-propyl-2-suberic acid ester potassium, 1,3-(meth)acryloyloxy-propyl-2-suberic acid ester ammonium, 1,3-(meth)acryloyloxy-propyl-2-suberic acid ester magnesium, 1,3-(meth)acryloyloxy-propyl-2-suberic acid ester calcium, 1,3-(meth)acryloyloxy-propyl-2-sebacic acid ester, 1,3-(meth)acryloyloxy-propyl-2-sebacic acid ester sodium, 1,3-(meth)acryloyloxy-propyl-2-sebacic acid ester potassium, 1,3-(meth)acryloyloxy-propyl-2-sebacic acid ester ammonium, 1,3-(meth)acryloyloxy-propyl-2-sebacic acid ester magnesium, 1,3-(meth)acryloyloxy-propyl-2-sebacic acid ester calcium, 1,3-(meth)acryloyloxy-propyl-2-dodecanedioic acid ester, 1,3-(meth)acryloyloxy-propyl-2-dodecanedioic acid ester sodium, 1,3-(meth)acryloyloxy-propyl-2-dodecanedioic acid ester potassium, 1,3-(meth)acryloyloxy-propyl-2-dodecanedioic acid ester ammonium, 1,3-(meth)acryloyloxy-propyl-2-dodecanedioic acid ester magnesium, 1,3-(meth)acryloyloxy-propyl-2-dodecanedioic acid ester calcium, 1,3-(meth)acryloyloxy-propyl-2-maleic acid ester, 1,3-(meth)acryloyloxy-propyl-2-maleic acid ester sodium, 1,3-(meth)acryloyloxy-propyl-2-maleic acid ester potassium, 1,3-(meth)acryloyloxy-propyl-2-maleic acid ester ammonium, 1,3-(meth)acryloyloxy-propyl-2-maleic acid ester magnesium, 1,3-(meth)acryloyloxy-propyl-2-maleic acid ester calcium, 1,3-(meth)acryloyloxy-propyl-2-itaconic acid ester, 1,3-(meth)acryloyloxy-propyl-2-itaconic acid ester sodium, 1,3-(meth)acryloyloxy-propyl-2-itaconic acid ester potassium, 1,3-(meth)acryloyloxy-propyl-2-itaconic acid ester ammonium, 1,3-(meth)acryloyloxy-propyl-2-itaconic acid ester magnesium, 1,3-(meth)acryloyloxy-propyl-2-itaconic acid ester calcium and so on.

[Chem. 48]

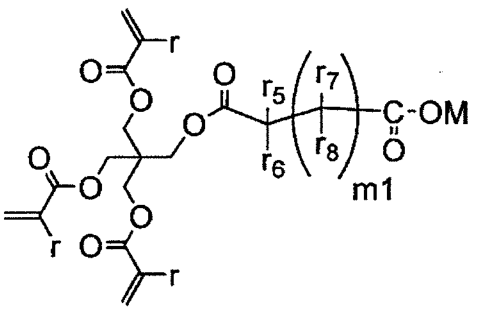

(I v)

In the formula (Iv), $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is each independently an integer of 0 to 10; and M represents a hydrogen ion, an ammonium ion, an alkali metal ion or an alkaline earth metal ion having 1/2 atomic valence.

Examples of the compounds represented by the general formula (Iv) include pentaerythritol tri(meth)acrylate-malonic acid ester, pentaerythritol tri(meth)acrylate-malonic acid ester sodium, pentaerythritol tri(meth)acrylate-malonic acid ester potassium, pentaerythritol tri (meth) acrylate-malonic acid ester ammonium, pentaerythritol tri(meth)acrylate-malonic acid ester magnesium, pentaerythritol tri(meth)acrylate-malonic acid ester calcium, pentaerythritol tri(meth)acrylate-glutamic acid ester, pentaerythritol tri(meth)acrylate-glutamic acid ester sodium, pentaerythritol tri (meth) acrylate-glutamic acid ester potassium, pentaerythritol tri(meth)acrylate-glutamic acid ester ammonium, pentaerythritol tri(meth)acrylate-glutamic acid ester magnesium, pentaerythritol tri (meth) acrylate-glutamic acid ester calcium, pentaerythritol tri(meth)acrylate-adipic acid ester, pentaerythritol tri(meth)acrylate-adipic acid ester sodium, pentaerythritol

tri (meth) acrylate-adipic acid ester potassium, pentaerythritol tri (meth) acrylate-adipic acid ester ammonium, pentaerythritol tri (meth) acrylate-adipic acid ester magnesium, pentaerythritol tri(meth)acrylate-adipic acid ester calcium, pentaerythritol tri(meth)acrylate-pimelic acid ester, pentaerythritol tri(meth)acrylate-pimelic acid ester sodium, pentaerythritol tri(meth)acrylate-pimelic acid ester potassium, pentaerythritol tri(meth)acrylate-pimelic acid ester ammonium, pentaerythritol tri(meth)acrylate-pimelic acid ester magnesium, pentaerythritol tri(meth)acrylate-pimelic acid ester calcium, pentaerythritol tri(meth)acrylate-suberic acid ester, pentaerythritol tri(meth)acrylate-suberic acid ester sodium, pentaerythritol tri(meth)acrylate-suberic acid ester potassium, pentaerythritol tri (meth) acrylate-suberic acid ester ammonium, pentaerythritol tri(meth)acrylate-suberic acid ester magnesium, pentaerythritol tri(meth)acrylate-suberic acid ester calcium, pentaerythritol tri (meth) acrylate-sebacic acid ester, pentaerythritol tri(meth)acrylate-sebacic acid ester sodium, pentaerythritol tri(meth)acrylate-sebacic acid ester potassium, pentaerythritol tri(meth)acrylate-sebacic acid ester ammonium, pentaerythritol tri(meth)acrylate-sebacic acid ester magnesium, pentaerythritol tri (meth) acrylate-sebacic acid ester calcium, pentaerythritol tri(meth)acrylate-dodecanedioic acid ester, pentaerythritol tri(meth)acrylate-dodecanedioic acid ester sodium, pentaerythritol tri(meth)acrylate-dodecanedioic acid ester potassium, pentaerythritol tri(meth)acrylate-dodecanedioic acid ester ammonium, pentaerythritol tri(meth)acrylate-dodecanedioic acid ester magnesium, pentaerythritol tri(meth)acrylate-dodecanedioic acid ester calcium, pentaerythritol tri (meth) acrylate-maleic acid ester, pentaerythritol tri(meth)acrylate-maleic acid ester sodium, pentaerythritol tri (meth) acrylate-maleic acid ester potassium, pentaerythritol tri (meth) acrylate-maleic acid ester ammonium, pentaerythritol tri (meth) acrylate-maleic acid ester magnesium, pentaerythritol tri(meth)acrylate-maleic acid ester calcium, pentaerythritol tri(meth)acrylate-itaconic acid ester, pentaerythritol tri (meth) acrylate-itaconic acid ester sodium, pentaerythritol tri(meth)acrylate-itaconic acid ester potassium, pentaerythritol tri(meth)acrylate-itaconic acid ester ammonium, pentaerythritol tri(meth)acrylate-itaconic acid ester magnesium, pentaerythritol tri(meth)acrylate-itaconic acid ester calcium and so on.

[Chem. 49]

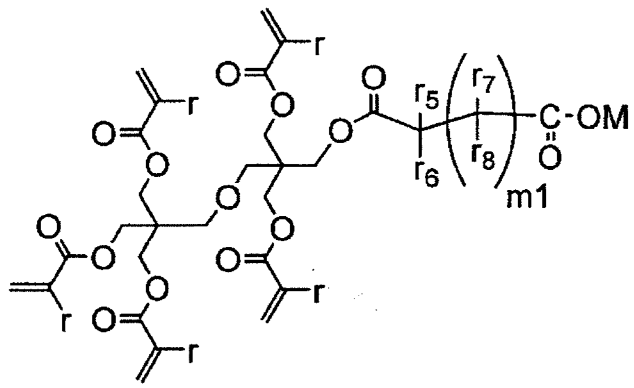

(I w)

In the formula (Iw), $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is each independently an integer of 0 to 10; and M represents a hydrogen ion, an ammonium ion, an alkali metal ion or an alkaline earth metal ion having 1/2 atomic valence.

Examples of the compounds represented by the general formula (Iu) include dipentaerythritol penta(meth)acrylate-malonic acid ester, dipentaerythritol penta(meth)acrylate-malonic acid ester sodium, dipentaerythritol penta(meth)acrylate-malonic acid ester potassium, dipentaerythritol penta(meth)acrylate-malonic acid ester ammonium, dipentaerythritol penta(meth)acrylate-malonic acid ester magnesium, dipentaerythritol penta(meth)acrylate-malonic acid ester calcium, dipentaerythritol penta(meth)acrylate-glutamic acid ester, dipentaerythritol penta(meth)acrylate-glutamic acid ester sodium, dipentaerythritol penta(meth)acrylate-glutamic acid ester potassium, dipentaerythritol penta(meth)acrylate-glutamic acid ester ammonium, dipentaerythritol penta(meth)acrylate-glutamic acid ester magnesium, dipentaerythritol penta(meth)acrylate-glutamic acid ester calcium, dipentaerythritol penta(meth)acrylate-adipic acid ester, dipentaerythritol penta(meth)acrylate-adipic acid ester sodium, dipentaerythritol penta(meth)acrylate-adipic acid ester potassium, dipentaerythritol penta(meth)acrylate-adipic acid ester ammonium, dipentaerythritol penta(meth)acrylate-adipic acid ester magnesium, dipentaerythritol penta(meth)acrylate-adipic acid ester calcium, dipentaerythritol penta(meth)acrylate-pimelic acid ester, dipentaerythritol penta(meth)acrylate-pimelic acid ester sodium, dipentaerythritol penta(meth)acrylate-pimelic acid ester potassium, dipentaerythritol penta(meth)acrylate-pimelic acid ester ammonium,

dipentaerythritol penta(meth)acrylate-pimelic acid ester magnesium, dipentaerythritol penta(meth)acrylate-pimelic acid ester calcium, dipentaerythritol penta(meth)acrylate-suberic acid ester, dipentaerythritol penta(meth)acrylate-suberic acid ester sodium, dipentaerythritol penta(meth)acrylate-suberic acid ester potassium, dipentaerythritol penta(meth)acrylate-suberic acid ester ammonium, dipentaerythritol penta(meth)acrylate-suberic acid ester magnesium, dipentaerythritol penta(meth)acrylate-suberic acid ester calcium, dipentaerythritol penta(meth)acrylate-sebacic acid ester, dipentaerythritol penta(meth)acrylate-sebacic acid ester sodium, dipentaerythritol penta(meth)acrylate-sebacic acid ester potassium, dipentaerythritol penta(meth)acrylate-sebacic acid ester ammonium, dipentaerythritol penta(meth)acrylate-sebacic acid ester magnesium, dipentaerythritol penta(meth)acrylate-sebacic acid ester calcium, dipentaerythritol penta(meth)acrylate-dodecanedioic acid ester, dipentaerythritol penta(meth)acrylate-dodecanedioic acid ester sodium, dipentaerythritol penta(meth)acrylate-dodecanedioic acid ester potassium, dipentaerythritol penta(meth)acrylate-dodecanedioic acid ester ammonium, dipentaerythritol penta(meth)acrylate-dodecanedioic acid ester magnesium, dipentaerythritol penta(meth)acrylate-dodecanedioic acid ester calcium, dipentaerythritol penta(meth)acrylate-maleic acid ester, dipentaerythritol penta (meth) acrylate-maleic acid ester sodium, dipentaerythritol penta(meth)acrylate-maleic acid ester potassium, dipentaerythritol. penta(meth)acrylate-maleic acid ester ammonium, dipentaerythritol penta(meth)acrylate-maleic acid ester magnesium, dipentaerythritol penta(meth)acrylate-maleic acid ester calcium, dipentaerythritol penta(meth)acrylate-itaconic acid ester, dipentaerythritol penta(meth)acrylate-itaconic acid ester sodium, dipentaerythritol penta(meth)acrylate-itaconic acid ester potassium, dipentaerythritol penta(meth)acrylate-itaconic acid ester ammonium, dipentaerythritol penta(meth)acrylate-itaconic acid ester magnesium, dipentaerythritol penta(meth)acrylate-itaconic acid ester calcium and so on.

Of the compounds (I) having a hydroxyl group, those compounds represented by the general formulas (Im) to (Iq) below are preferable.

[Chem. 50]

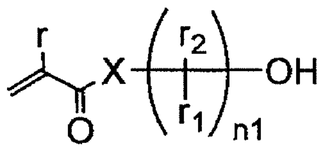

(I m)

In the formula (Im), X is -O-, -S-, -NH- or $-NCH_3-$; r represents a hydrogen atom or a methyl group; $r_1$ and $r_2$ each independently represent a hydrogen atom, a methyl group, an ethyl group or a hydroxyl group; n1 is an integer of 0 to 100; and when n1 is 2 or greater, $r_1$s and $r_2$s each may be the same as or different from one another.

Examples of the compounds represented by the general formula (Im) include hydroxymethyl(meth)acrylate, 2-hydroxyethyl(meth)acrylate, 2-hydroxypropyl(meth)acrylate, 3-hydroxypropyl(meth)acrylate, 4-hydroxybutyl(meth)acrylate, 3-hydroxybutyl(meth)acrylate, 3-hydroxybutyl-2-(meth)acrylate, 2-hydroxybutyl(meth)acrylate, 5-hydroxypentyl(meth)acrylate, 4-methyl-4-hydroxypentyl-2-(meth)acrylate, 6-hydroxyhexyl(meth)acrylate, 7-hydroxyheptyl(meth)acrylate, 8-hydroxyoctyl(meth)acrylate, 12-hydroxylauryl(meth)acrylate, 18-hydroxystearyl(meth)acrylate, (meth)acryloylthio-methanol, (meth)acryloylthio-2-ethanol, (meth)acryloylthio-2-propanol, (meth)acryloylthio-3-propanol, (meth)acryloylthio-4-butanol, (meth)acryloylthio-3-butanol, 2-(meth)acryloylthio-3-butanol, (meth)acryloylthio-2-butanol, (meth)acryloylthio-6-hexanol, (meth)acryloylthio-8-octanol, (meth)acryloylthio-12-lauryl alcohol, (meth)acryloylthio-18-stearyl alcohol, hydroxymethyl(meth)acrylamide, 2-hydroxyethyl(meth)acrylamide, 2-hydroxypropyl(meth)acrylamide, 3-hydroxypropyl(meth)acrylamide, 4-hydroxybutyl(meth)acrylamide, 4-hydroxybutyl(meth)acrylamide, 3-hydroxybutyl(meth)acrylamide, 3-hydroxybutyl-2-(meth)acrylamide, 2-hydroxybutyl(meth)acrylamide, 5-hydroxypentyl(meth)acrylamide, 4-methyl-4-hydroxypentyl-2-(meth)acrylamide, 6-hydroxyhexyl(meth)acrylamide, 7-hydroxyheptyl(meth)acrylamide, 8-hydroxyoctyl(meth)acrylamide, 12-hydroxylauryl(meth)acrylamide, 18-hydroxystearyl(meth)acrylamide and so on.

Of the compounds represented by the general formula (Im), those compounds represented by the general formula (Im-2) below are more preferable.

[Chem. 51]

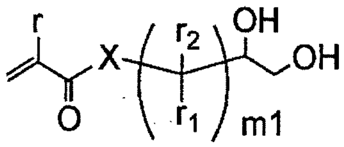

(Im-2)

In the formula (Im-2), X is -O-, -S-, -NH- or -$NCH_3$-; r represents a hydrogen atom or a methyl group; $r_1$ and $r_2$ each independently represent a hydrogen atom, a methyl group, an ethyl group or a hydroxyl group; m1 is an integer of 0 to 10; and when m1 is 2 or greater, $r_1$s and $r_2$s each may be the same as or different from one another.

Examples of the compounds represented by the general formula (Im-2) include 1-(meth)acryloyloxy-2,3-dihydroxypropane, 1-(meth)acryloylthio-2,3-dihydroxypropane, 1-(meth)acrylamido-2,3-dihydroxypropane, 1-(meth)acrylamido-3,4-dihydroxybutane, N-(meth)acryloyl-glucamine, 1-(meth)acryloyloxy-3,4-dihydroxybutane, 1-(meth)acryloyloxy-4,5-dihydroxyheptane, 1-(meth)acryloyloxy-5,6-dihydroxyhexane, 1-(meth)acryloyloxy-6,7-dihydroxyheptane, 1-(meth)acryloyloxy-7,8-dihydroxyoctane, 1-(meth)acryloyloxy-7,8-dihydroxyoctane, 1-(meth)acryloyloxy-8,9-dihydroxynonane, 1-(meth)acryloyloxy-9,10-dihydroxydecane, L-threitol(meth)acrylic acid ester{1-(meth)acryloyloxy-2,3,4-trihydroxybutane, etc.}, xylitol(meth)acrylic acid ester{1-(meth)acryloyloxy-2,3,4,5-tetrahydroxypentane, etc.}, sorbitol(meth)acrylic acid ester{1-(meth)acryloyloxy-2,3,4,5,6-pentahydroxyhexane, etc.} and so on.

[Chem. 52]

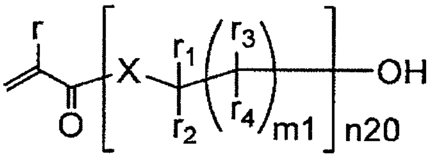

(In)

In the formula (In), m1 is an integer of 0 to 10; n20 is an integer of 2 to 100; r represents a hydrogen atom or a methyl group; X is -O-, -S-, -NH- or -$NCH_3$-; Xs may be the same as or different from one another; $r_1$ to $r_4$ each independently represent a hydrogen atom, a methyl group, an ethyl group or a hydroxyl group; and Xs, $r_1$s, $r_2$s, $r_3$s and $r_4$s each may be the same as or different from one another.

Examples of the compounds represented by the general formula (In) include di(ethylene glycol)mono{(meth)acrylate}, tri(ethylene glycol)mono{(meth)acrylate}, tetra(ethylene glycol)mono{(meth)acrylate}, penta(ethylene glycol)mono{(meth)acrylate}, hexa(ethylene glycol)mono{(meth)acrylate}, octa(ethylene glycol)mono{(meth)acrylate}, deca(ethylene glycol)mono{(meth)acrylate}, tetradeca(ethylene glycol)mono{(meth)acrylate}, dodeca(ethylene glycol)mono{(meth)acrylate}, octadeca(ethylene glycol)mono{(meth)acrylate}, di(1,3-propylene glycol)mono{(meth)acrylate}, tri(1,3-propylene glycol)mono{(meth)acrylate}, tetra(1,3-propylene glycol)mono{(meth)acrylate}, penta(1,3-propylene glycol)mono{(meth)acrylate}, hexa(1,3-propylene glycol)mono{(meth)acrylate}, octa(1,3-propylene glycol)mono{(meth)acrylate}, deca(1,3-propylene glycol)mono{(meth)acrylate}, tetradeca(1,3-propylene glycol)mono{(meth)acrylate}, dodeca(1,3-propylene glycol)mono{(meth)acrylate}, octadeca(1,3-propylene glycol)mono{(meth)acrylate}, di(1,2-propylene glycol)mono{(meth)acrylate}, tri(1,2-propylene glycol)mono{(meth)acrylate}, tetra(1,2-propylene glycol)mono{(meth)acrylate}, penta(1,2-propylene glycol)mono{(meth)acrylate}, hexa(1,2-propylene glycol)mono{(meth)acrylate}, octa(1,2-propylene glycol)mono{(meth)acrylate}, deca(1,2-propylene glycol)mono{(meth)acrylate}, tetradeca(1,2-propylene glycol)mono{(meth)acrylate}, dodeca(1,2-propylene glycol)mono{(meth)acrylate}, octadeca(1,2-propylene glycol)mono{(meth)acrylate}, di(1,4-butylene glycol)mono{(meth)acrylate}, tri(1,4-butylene glycol)mono{(meth)acrylate}, tetra(1,4-butylene glycol)mono{(meth)acrylate}, penta(1,4-butylene glycol)mono{(meth)acrylate}, hexa(1,4-butylene glycol)mono{(meth)acrylate}, octa(1,4-butylene glycol)mono{(meth)acrylate}, deca(1,4-butylene glycol)mono{(meth)acrylate}, tetradeca(1,4-butylene glycol)mono{(meth)acrylate}, dodeca(1,4-butylene glycol)mono{(meth)acrylate}, octadeca(1,4-butylene glycol)mono{(meth)acrylate}, di(1,2-butylene glycol)mono{(meth)acrylate}, tri(1,2-butylene glycol)mono{(meth)acrylate}, tetra(1,2-butylene glycol)mono{(meth)acrylate}, penta(1,2-butylene glycol)mono{(meth)acrylate}, hexa(1,2-butylene glycol)mono{(meth)acrylate}, octa(1,2-butylene glycol)mono{(meth)acrylate}, deca(1,2-butylene glycol)mono{(meth)acrylate}, tetradeca(1,2-butylene glycol)mono{(meth)acrylate}, dodeca(1,2-butylene glycol)mono{(meth)acrylate}, octadeca(1,2-butylene glycol)mono{(meth)acrylate}, di(1,3-butylene glycol)mono{(meth)acrylate},

tri(1,3-butylene glycol)mono{(meth)acrylate}, tetra(1,3-butylene glycol)mono{(meth)acrylate}, penta(1,3-butylene glycol)mono{(meth)acrylate}, hexa(1,3-butylene glycol)mono{(meth)acrylate}, octa(1,3-butylene glycol)mono{(meth)acrylate}, deca(1,3-butylene glycol)mono{(meth)acrylate}, tetradeca(1,3-butylene glycol)mono{(meth)acrylate}, dodeca(1,3-butylene glycol)mono{(meth)acrylate}, octadeca(1,3-butylene glycol)mono{(meth)acrylate}, di(2,3-butylene glycol)mono{(meth)acrylate}, tri(2,3-butylene glycol)mono{(meth)acrylate}, tetra(2,3-butylene glycol)mono{(meth)acrylate}, penta(2,3-butylene glycol)mono{(meth)acrylate}, hexa(2,3-butylene glycol)mono{(meth)acrylate}, octa(2,3-butylene glycol)mono{(meth)acrylate}, deca(2,3-butylene glycol)mono{(meth)acrylate}, tetradeca(2,3-butylene glycol)mono{(meth)acrylate}, dodeca(2,3-butylene glycol)mono{(meth)acrylate}, octadeca(2,3-butylene glycol)mono{(meth)acrylate}, di(1,5-pentylene glycol)mono{(meth)acrylate}, tri(1,5-pentylene glycol)mono{(meth)acrylate}, tetra(1,5-pentylene glycol)mono{(meth)acrylate}, penta(1,5-pentylene glycol)mono{(meth)acrylate}, hexa(1,5-pentylene glycol)mono{(meth)acrylate}, octa(1,5-pentylene glycol)mono{(meth)acrylate}, deca(1,5-pentylene glycol)mono{(meth)acrylate}, tetradeca(1,5-pentylene glycol)mono{(meth)acrylate}, dodeca(1,5-pentylene glycol)mono{(meth)acrylate}, octadeca(1,5-pentylene glycol)mono{(meth)acrylate}, di(1,6-hexylene glycol)mono{(meth)acrylate}, tri(1,6-hexylene glycol)mono{(meth)acrylate}, tetra(1,6-hexylene glycol)mono{(meth)acrylate}, penta(1,6-hexylene glycol)mono{(meth)acrylate}, hexa(1,6-hexylene glycol)mono{(meth)acrylate}, octa(1,6-hexylene glycol)mono{(meth)acrylate}, deca(1,6-hexylene glycol)mono{(meth)acrylate}, dodeca(1,6-hexylene glycol)mono{(meth)acrylate}, tetradeca(1,6-hexylene glycol)mono{(meth)acrylate}, octadeca(1,6-hexylene glycol)mono{(meth)acrylate}, mono{(meth)acryloylthioethyl}ethylene glycol, mono{(meth)acryloylthioethyl}-di(ethylene glycol), mono{(meth)acryloylthioethyl}-tri(ethylene glycol), mono{(meth)acryloylthioethyl}-tetra(ethylene glycol), mono{(meth)acryloylthioethyl}-penta(ethylene glycol), mono{(meth)acryloylthioethyl}-hexa(ethylene glycol), mono{(meth)acryloylthioethyl}-octa(ethylene glycol), mono{(meth)acryloylthioethyl}-deca(ethylene glycol), mono{(meth)acryloylthioethyl}-dodeca(ethylene glycol), mono{(meth)acryloylthioethyl}-tetradeca(ethylene glycol), mono{(meth)acryloylthioethyl}-octadeca(ethylene glycol), mono{1-(meth)acryloylthio-2-propyl ethyl}ethylene glycol, mono{1-(meth)acryloylthio-2-propyl ethyl}-di(ethylene glycol), mono{1-(meth)acryloylthio-2-propyl ethyl}-tri(ethylene glycol), mono{1-(meth)acryloylthio-2-propyl ethyl}-tetra(ethylene glycol), mono{1-(meth)acryloylthio-2-propyl ethyl}-penta(ethylene glycol), mono{1-(meth)acryloylthio-2-propyl ethyl}-hexa(ethylene glycol), mono{1-(meth)acryloylthio-2-propyl ethyl}-octa(ethylene glycol), mono{1-(meth)acryloylthio-2-propyl ethyl}-deca(ethylene glycol), mono{1-(meth)acryloylthio-2-propyl ethyl}-dodeca(ethylene glycol), mono{1-(meth)acryloylthio-2-propyl ethyl}-tetradeca(ethylene glycol), mono{1-(meth)acryloylthio-2-propyl ethyl}-octadeca(ethylene glycol), mono{1-(meth)acryloylthio-3-propyl ethyl}ethylene glycol, mono{1-(meth)acryloylthio-3-propyl ethyl}-di(ethylene glycol), mono{1-(meth)acryloylthio-3-propyl ethyl}-tri(ethylene glycol), mono{1-(meth)acryloylthio-3-propyl ethyl}-tetra(ethylene glycol), mono{1-(meth)acryloylthio-3-propyl ethyl}-penta(ethylene glycol), mono{1-(meth)acryloylthio-3-propyl ethyl}-hexa(ethylene glycol), mono{1-(meth)acryloylthio-3-propyl ethyl}-octa(ethylene glycol), mono{1-(meth)acryloylthio-3-propyl ethyl}-deca(ethylene glycol), mono{1-(meth)acryloylthio-3-propyl ethyl}-dodeca(ethylene glycol), mono{1-(meth)acryloylthio-3-propyl ethyl}-tetradeca(ethylene glycol), mono{1-(meth)acryloylthio-3-propyl ethyl}-octadeca(ethylene glycol), mono{1-(meth)acryloylthio-4-butyl ethyl}ethylene glycol, mono{1-(meth)acryloylthio-4-butyl ethyl}-di(ethylene glycol), mono{1-(meth)acryloylthio-4-butyl ethyl}-tri(ethylene glycol), mono{1-(meth)acryloylthio-4-butyl ethyl}-tetra(ethylene glycol), mono{1-(meth)acryloylthio-4-butyl ethyl}-penta(ethylene glycol), mono{1-(meth)acryloylthio-4-butyl ethyl}-hexa(ethylene glycol), mono{1-(meth)acryloylthio-4-butyl ethyl}-octa(ethylene glycol), mono{1-(meth)acryloylthio-4-butyl ethyl}-deca(ethylene glycol), mono{1-(meth)acryloylthio-4-butyl ethyl}-dodeca(ethylene glycol), mono{1-(meth)acryloylthio-4-butyl ethyl}-tetradeca(ethylene glycol), mono{1-(meth)acryloylthio-4-butyl ethyl}-octadeca(ethylene glycol), mono{(meth)acrylamido ethyl}ethylene glycol, mono{(meth)acrylamido ethyl}-di(ethylene glycol), mono{(meth)acrylamido ethyl}-tri(ethylene glycol), mono{(meth)acrylamido ethyl}-tetra(ethylene glycol), mono{(meth)acrylamido ethyl}-penta(ethylene glycol), mono{(meth)acrylamido ethyl}-hexa(ethylene glycol), mono{(meth)acrylamido ethyl}-octa(ethylene glycol), mono{(meth)acrylamido ethyl}-deca(ethylene glycol), mono{(meth)acrylamido ethyl}-dodeca(ethylene glycol), mono{(meth)acrylamido ethyl}-tetradeca(ethylene glycol), mono{(meth)acrylamido ethyl}-octadeca(ethylene glycol), mono{1-(meth)acrylamido 2-propyl ethyl}ethylene glycol, mono{1-(meth)acrylamido 2-propyl ethyl}-di(ethylene glycol), mono{1-(meth)acrylamido 2-propyl ethyl}-tri(ethylene glycol), mono{1-(meth)acrylamido 2-propyl ethyl}-tetra(ethylene glycol), mono{1-(meth)acrylamido 2-propyl ethyl}-penta(ethylene glycol), mono{1-(meth)acrylamido 2-propyl ethyl}-hexa(ethylene glycol), mono{1-(meth)acrylamido 2-propyl ethyl}-octa(ethylene glycol), mono{1-(meth)acrylamido 2-propyl ethyl}-deca(ethylene glycol), mono{1-(meth)acrylamido 2-propyl ethyl}-dodeca(ethylene glycol), mono{1-(meth)acrylamido 2-propyl ethyl}-tetradeca(ethylene glycol), mono{1-(meth)acrylamido 2-propyl ethyl}-octadeca(ethylene glycol), mono{1-(meth)acrylamido 3-propyl ethyl}ethylene glycol, mono{1-(meth)acrylamido 3-propyl ethyl}-di(ethylene glycol), mono{1-(meth)acrylamido 3-propyl ethyl}-tri(ethylene glycol), mono{1-(meth)acrylamido 3-propyl ethyl}-tetra(ethylene glycol), mono{1-(meth)acrylamido 3-propyl ethyl}-penta(ethylene glycol), mono{1-(meth)acrylamido 3-propyl ethyl}-hexa(ethylene glycol), mono{1-(meth)acrylamido 3-propyl ethyl}-octa(ethylene glycol), mono{1-(meth)acrylamido 3-propyl ethyl}-deca(ethylene glycol), mono{1-(meth)acrylamido 3-propyl ethyl}-dodeca(ethylene glycol), mono{1-(meth)acrylamido 3-propyl ethyl}-tetradeca(ethylene glycol), mono{1-(meth)acrylamido 3-propyl ethyl}-octadeca(ethylene glycol), mono{1-(meth)acrylamido 4-butyl ethyl}ethylene glycol, mono{1-(meth)acrylamido 4-butyl ethyl}-di(ethylene glycol), mono{1-(meth)acrylamido 4-butyl ethyl}-tri(ethylene glycol), mono{1-(meth)acrylamido 4-butyl ethyl}-tetra(ethylene glycol), mono{1-(meth)acrylamido 4-butyl ethyl}-penta(ethylene glycol), mono{1-(meth)acrylamido 4-butyl ethyl}-hexa(ethylene glycol), mono{1-(meth)acrylamido 4-butyl ethyl}-octa(ethylene glycol), mono{1-(meth)acrylamido 4-butyl ethyl}-deca(ethylene glycol), mono{1-(meth)acrylamido 4-butyl ethyl}-dodeca(ethylene glycol), mono{1-(meth)acrylamido 4-butyl ethyl}-tetradeca(ethylene glycol), mono{1-(meth)acrylamido 4-butyl ethyl}-octadeca(ethylene glycol), 5-{(meth)acryloyloxy}-3-thiapentyl alcohol, 8-{(meth)acryloyloxy}-3,6-dithiaoctyl alcohol, 5-{(meth)acryloylthio}-3-thiapentyl alcohol, 8-{(meth)acryloylthio}-3,6-dithiaoctyl alcohol, 5-{(meth)acrylamido}-3-thiapentyl alcohol, 8-{(meth)acrylamido}-3,6-dithiaoctyl alcohol and so on.

[Chem. 53]

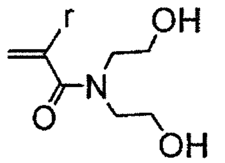

(I p)

In the formula (Ip), r represents a hydrogen atom or a methyl group.

Examples of the compounds represented by the general formula (Ip) include N-(meth)acryloyl-diethanolamine.

[Chem. 54]

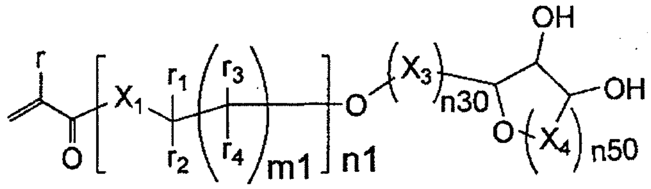

(I q)

In the formula (Iq), $X_1$ is -O-, -S-, -NH- or -$NCH_3$-; $X_3$ and $X_4$ are each -$CH_2$-, -CH (OH) - or -CO-; r represents a hydrogen atom or a methyl group; $r_1$ to $r_4$ each independently represent a hydrogen atom, a methyl group, an ethyl group or a hydroxyl group; m1 is an integer of 0 to 10; n1 is an integer of 0 to 100; n30 is an integer of 0 to 3; n50 is an integer of 0 to 5; when n1 is 2 or greater, $r_1$s to $r_4$s, and $X_1$s each may be the same as or different from one another; when n30 is 2 or greater, $X_3$s may be the same as or different from one another; and when n50 is 2 or greater, $X_4$s may be the same as or different from one another.

Examples of the compounds represented by the general formula (Ip) include ribose(meth)acrylate, ascorbic acid-(meth)acrylate, xylose-(meth)acrylate, sorbitan-(meth)acrylate, glucose-(meth)acrylate, glucono-1,5-lactone-(meth)acrylate, ribose(meth)acryloyloxyethyl, ascorbic acid-(meth)acryloyloxyethyl, xylose-(meth)acryloyloxyethyl, sorbitan-(meth)acryloyloxyethyl, glucose-(meth)acryloyloxyethyl, glucono-1,5-lactone-(meth)acryloyloxyethyl, ribose(meth)acryloyloxy-1,2-propyl, ascorbic acid-(meth)acryloyloxy-1,2-propyl, xylose-(meth)acryloyloxy-1,2-propyl, sorbitan-(meth)acryloyloxy-1,2-propyl, glucose-(meth)acryloyloxy-1,2-propyl, glucono-1,5-lactone-(meth)acryloyloxy-1,2-propyl, ribose(meth)acryloyloxy-2-hydroxy-1,3-propyl, ascorbic acid-(meth)acryloyloxy-2-hydroxy-1,3-propyl, xylose-(meth)acryloyloxy-2-hydroxy-1,3-propyl, sorbitan-(meth)acryloyloxy-2-hydroxy-1,3-propyl, glucose-(meth)acryloyloxy-2-hydroxy-1,3-propyl, glucono-1,5-lactone-(meth)acryloyloxy-2-hydroxy-1,3-propyl, ribose(meth)acryloyloxy-3-oxapentyl, ascorbic acid-(meth)acryloyloxy-3-oxapentyl, xylose-(meth)acryloyloxy-3-oxapentyl, sorbitan-(meth)acryloyloxy-3-oxapentyl, glucose-(meth)acryloyloxy-3-oxapentyl, glucono-1,5-lactone-(meth)acryloyloxy-3-oxapentyl, and adducts thereof such as ethylene oxide adduct, propylene oxide adduct, and butyrolactone adduct and so on.

Of the compounds having a hydroxyl group, those compounds represented by the general formulas (Im) to (In) are more preferable, those compounds represented by the general formula (Im) are still more preferable, and those compounds represented by the general formula (Im-2) are particularly preferable.

Of the compounds (I) having a cationic hydrophilic group, those compounds represented by the general formulas (Ir) to (It) below are preferable.

[Chem. 55]

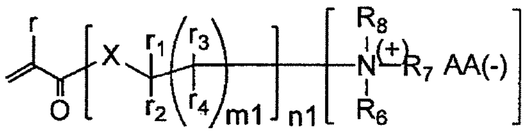

(I r)

In the formula (Ir), X is -O-, -S-, -NH- or -$NCH_3$-; $r_1$ to $r_4$ each independently represent a hydrogen atom, a methyl group, an ethyl group or a hydroxyl group; m1 is an integer of 0 to 10; n1 is an integer of 0 to 100; when n1 is 2 or greater, $r_1$s to $r_4$s, and Xs each may be the same as or different from one another; AA(-) is a halogen ion, a formate ion, an acetate ion, a sulfate ion, a hydrogen sulfate ion, a phosphate ion or a hydrogen phosphate ion; and $R_6$ to $R_8$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group.

Examples of the compounds represented by the general formula (Ir) include N,N-dimethyl aminoethyl(meth)acrylate hydrochloric acid salt, N,N-dimethyl aminoethyl (meth) acrylate hydrobromide salt, N,N-dimethyl aminoethyl(meth)acrylate sulfuric acid salt, N,N-dimethyl aminoethyl(meth)acrylate formic acid salt, N,N-dimethyl aminoethyl(meth)acrylate acetic acid salt, N-dimethyl aminoethyl(meth)acrylate phosphoric acid salt, N,N-dimethyl amino-propyl-2-(meth)acrylate hydrochloric acid salt, N,N-dimethyl amino-propyl-2-(meth)acrylate hydrochloric acid salt, N,N-dimethyl amino-propyl-2-(meth)acrylate hydrobromide salt, N,N-dimethyl amino-propyl-2-(meth)acrylate sulfuric acid salt, N,N-dimethyl amino-propyl-2-(meth)acrylate acetic acid salt, N,N-dimethyl amino-propyl-2-(meth)acrylate phosphoric acid salt, N,N-dimethyl amino-propyl-3-(meth)acrylate hydrochloric acid salt, N,N-dimethyl amino-propyl-3-(meth)acrylate hydrochloric acid salt, N,N-dimethyl amino-propyl-3-(meth)acrylate hydrobromide salt, N,N-dimethyl amino-propyl-3- (meth) acrylate sulfuric acid salt, N,N-dimethyl amino-propyl-3-(meth)acrylate acetic acid salt, N,N-dimethyl amino-propyl-3-(meth)acrylate phosphoric acid salt, N,N-dimethyl amino-butyl-4-(meth)acrylate hydrochloric acid salt, N,N-dimethyl amino-butyl-4-(meth)acrylate hydrochloric acid salt, N,N-dimethyl amino-butyl-4-(meth)acrylate hydrobromide salt, N,N-dimethyl amino-butyl-4- (meth) acrylate sulfuric acid salt, N, N-dimethyl amino-butyl-4-(meth)acrylate acetic acid salt, N,N-dimethyl amino-butyl-4-(meth)acrylate phosphoric acid salt, N,N-dimethyl amino-hexyl-6-(meth)acrylate hydrochloric acid salt, N,N-dimethyl amino-hexyl-6-(meth)acrylate hydrochloric acid salt, N,N-dimethyl amino-hexyl-6-(meth)acrylate hydrobromide salt, N,N-dimethyl amino-hexyl-6-(meth)acrylate sulfuric acid salt, N,N-dimethyl amino-hexyl-6- (meth) acrylate acetic acid salt, N,N-dimethyl amino-hexyl-6-(meth)acrylate phosphoric acid salt, N,N-dimethyl amino-octyl-8-(meth)acrylate hydrochloric acid salt, N,N-dimethyl amino-octyl-8-(meth)acrylate hydrochloric acid salt, N,N-dimethyl amino-octyl-8-(meth)acrylate hydrobromide salt, N,N-dimethyl amino-octyl-8- (meth) acrylate sulfuric acid salt, N,N-dimethyl amino-octyl-8-(meth)acrylate acetic acid salt, N,N-dimethyl amino-octyl-8-(meth)acrylate phosphoric acid salt, N,N-dimethyl amino-3-oxapentyl-5-(meth)acrylate hydrochloric acid salt, N,N-dimethyl amino-3-oxapentyl-5-(meth)acrylate hydrochloric acid salt, N,N-dimethyl amino-3-oxapentyl-5-(meth)acrylate hydrobromide salt, N,N-dimethyl amino-3-oxapentyl-5-(meth)acrylate sulfuric acid salt, N,N-dimethyl amino-3-oxapentyl-5-(meth)acrylate acetic acid salt, N,N-dimethyl amino-3-oxapentyl-5-(meth)acrylate phosphoric acid salt, N,N-diethyl aminoethyl(meth)acrylate hydrochloric acid salt, N,N-diethyl aminoethyl(meth)acrylate hydrobromide salt, N,N-diethyl aminoethyl(meth)acrylate sulfuric acid salt, N,N-diethyl aminoethyl(meth)acrylate formic acid salt, N,N-diethyl aminoethyl(meth)acrylate acetic acid salt, N-diethyl aminoethyl (meth) acrylate phosphoric acid salt, N,N-dipropyl aminoethyl (meth) acrylate hydrochloric acid salt, N,N-dipropyl aminoethyl (meth) acrylate hydrobromide salt, N,N-dipropyl aminoethyl(meth)acrylate sulfuric acid salt, N,N-dipropyl aminoethyl(meth)acrylate formic acid salt, N,N-dipropyl aminoethyl(meth)acrylate acetic acid salt, N-dipropyl aminoethyl(meth)acrylate phosphoric acid salt, 3-(meth)acryloyloxy-2-hydroxypropyl-1-triethylammonium chloride, 3-(meth)acryloyloxy-2-hydroxypropyl-1-triethylammonium bromide, 3-(meth)acryloyloxy-2-hydroxypropyl-1-triethylammonium sulfomide, 3-(meth)acryloyloxy-2-hydroxypropyl-1-triethylammonium phosphomide, N,N-dimethyl aminoethyl(meth)acrylamide hydrochloric acid salt, N,N-dimethyl aminoethyl(meth)acrylamide hydrobromide salt, N,N-dimethyl aminoethyl(meth)acrylamide sulfuric acid salt, N,N-dimethyl aminoethyl(meth)acrylamide formic acid salt, N,N-dimethyl aminoethyl(meth)acrylamide acetic acid salt, N-dimethyl aminoethyl (meth) acrylamide phosphoric acid salt, N, N-dimethyl amino-propyl-2-(meth)acrylamide hydrochloric acid salt, N,N-dimethyl amino-propyl-2-(meth)acrylamide hydrochloric acid salt, N,N-dimethyl amino-propyl-2-(meth)acrylamide hydrobromide salt, N,N-dimethyl amino-propyl-2-(meth)acrylamide sulfuric acid salt, N,N-dimethyl amino-propyl-2- (meth) acrylamide acetic acid salt, N,N-dimethyl amino-propyl-2-(meth) acrylamide phosphoric acid salt, N,N-dimethyl amino-propyl-3-(meth)acrylamide hydrochloric acid salt, N,N-dimethyl amino-propyl-3-(meth)acrylamide hydrochloric acid salt, N,N-dimethyl amino-propyl-3-(meth)acrylamide hydrobromide salt, N,N-dimethyl amino-propyl-3-(meth)acrylamide sulfuric acid salt, N,N-dimethyl amino-propyl-3-(meth)acrylamide acetic acid salt, N,N-dimethyl amino-propyl-3-(meth)acrylamide phosphoric acid salt, N,N-dimethyl

amino-butyl-4-(meth)acrylamide hydrochloric acid salt, N,N-dimethyl amino-butyl-4-(meth)acrylamide hydrochloric acid salt, N,N-dimethyl amino-butyl-4-(meth)acrylamide hydrobromide salt, N,N-dimethyl amino-butyl-4-(meth)acrylamide sulfuric acid salt, N,N-dimethyl amino-butyl-4- (meth) acrylamide acetic acid salt, N,N-dimethyl amino-butyl-4-(meth)acrylamide phosphoric acid salt and so on.

[Chem. 56]

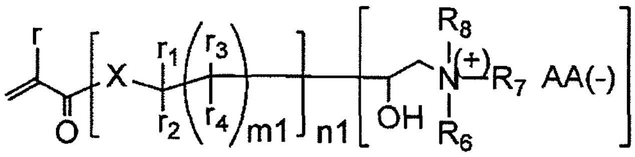

(I s)

In the formula (Is), X is -O-, -S-, -NH- or $-NCH_3-$; $r_1$ to $r_4$ each independently represent a hydrogen atom, a methyl group, an ethyl group or a hydroxyl group; m1 is an integer of 0 to 10; n1 is an integer of 0 to 100; when n1 is 2 or greater, $r_1$s to $r_4$s, and Xs each may be the same as or different from one another; AA(-) is a halogen ion, a formate ion, an acetate ion, a sulfate ion, a hydrogen sulfate ion, a phosphate ion or a hydrogen phosphate ion; and $R_6$ to $R_8$ each independently represent a hydrogen atom, a $C_{1-20}$ alkyl, alkylaryl, alkylbenzyl, alkylcycloalkyl, alkylcycloalkylmethyl cycloalkyl group, a phenyl group or a benzyl group.

Examples of the compounds represented by the general formula (Is) include
3-(meth)acryloyloxy-2-hydroxypropyl-1-trimethylammonium chloride,
3-(meth)acryloyloxy-2-hydroxypropyl-1-trimethylammonium bromide,
3-(meth)acryloyloxy-2-hydroxypropyl-1-trimethylammonium sulfomide,
3-(meth)acryloyloxy-2-hydroxypropyl-1-trimethylammonium phosphomide,
4-(meth)acryloyloxy-2-hydroxybutyl-1-trimethylammonium chloride,
4-(meth)acryloyloxy-2-hydroxybutyl-1-trimethylammonium bromide,
4-(meth)acryloyloxy-2-hydroxybutyl-1-trimethylammonium sulfomide,
4-(meth)acryloyloxy-2-hydroxybutyl-1-trimethylammonium phosphomide,
5-(meth)acryloyloxy-2-hydroxypentyl-1-trimethylammonium chloride,
5-(meth)acryloyloxy-2-hydroxypentyl-1-trimethylammonium bromide,
5-(meth)acryloyloxy-2-hydroxypentyl-1-trimethylammonium sulfomide,
5-(meth)acryloyloxy-2-hydroxypentyl-1-trimethylammonium phosphomide,
6-(meth)acryloyloxy-2-hydroxyhexyl-1-trimethylammonium chloride,
6-(meth)acryloyloxy-2-hydroxyhexyl-1-trimethylammonium bromide,
6-(meth)acryloyloxy-2-hydroxyhexyl-1-trimethylammonium sulfomide,
6-(meth)acryloyloxy-2-hydroxyhexyl-1-trimethylammonium phosphomide,
8-(meth)acryloyloxy-2-hydroxyoctyl-1-trimethylammonium chloride,
8-(meth)acryloyloxy-2-hydroxyoctyl-1-trimethylammonium bromide,
8-(meth)acryloyloxy-2-hydroxyoctyl-1-trimethylammonium sulfomide,
8-(meth)acryloyloxy-2-hydroxyoctyl-1-trimethylammonium phosphomide,
10-(meth)acryloyloxy-2-hydroxydecyl-1-trimethylammonium chloride,
10-(meth)acryloyloxy-2-hydroxydecyl-1-trimethylammonium bromide,
10-(meth)acryloyloxy-2-hydroxydecyl-1-trimethylammonium sulfomide,
10-(meth)acryloyloxy-2-hydroxydecyl-1-trimethylammonium phosphomide, 3-(meth)acryloylthio
2-hydroxypropyl-1-trimethylammonium chloride, 3-(meth)acryloylthio 2-hydroxypropyl-1-trimethylammonium bromide, 3-(meth)acryloylthio
2-hydroxypropyl-1-trimethylammonium sulfomide, 3-(meth)acryloylthio 2-hydroxypropyl-1-trimethylammonium phosphomide, 3-(meth)acrylamido
2-hydroxypropyl-1-trimethylammonium chloride, 3-(meth)acrylamido 2-hydroxypropyl-1-trimethylammonium bromide, 3-(meth)acrylamido
2-hydroxypropyl-1-trimethylammonium sulfomide, 3-(meth)acrylamido 2-hydroxypropyl-1-trimethylammonium phosphomide and so on.

[Chem. 57]

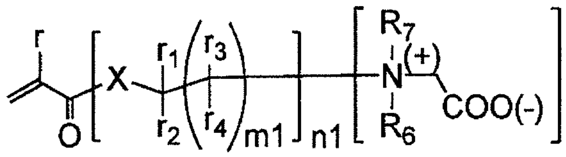

(I t)

In the formula (It), X is -O-, -S-, -NH- or $-NCH_3-$; $r_1$ to $r_4$ each independently represent a hydrogen atom, a methyl group, an ethyl group or a hydroxyl group; m1 is an integer of 0 to 10; n1 is an integer of 0 to 100; when n1 is 2 or greater, $r_1$s to $r_4$s, and Xs each may be the same as or different from one another; and $R_6$ and $R_7$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group.

Examples of the compounds represented by the general formula (It) include (meth)acryloyloxy-methyl betaine, 2-(meth)acryloyloxy-ethyl betaine, 2-(meth)acryloyloxy-propyl betaine, 3-(meth)acryloyloxy-propyl betaine, 4-(meth)acryloyloxy-butyl betaine, 5-(meth)acryloyloxy-pentyl betaine, 6-(meth)acryloyloxy-hexyl betaine, 7-(meth)acryloyloxy-heptyl betaine, 8-(meth)acryloyloxy-octyl betaine, 10-(meth)acryloyloxy-decyl betaine, 11-(meth)acryloyloxy-undecyl betaine, 5-(meth)acryloyloxy-3-oxapentyl betaine, 5-(meth)acryloyloxy-2,5-dimethyl-3-oxapentyl betaine, 8-(meth)acryloyloxy-2,5,8-trimethyl-3,6-dioxaoctyl betaine and so on.

Of the compounds having a cationic hydrophilic group, those compounds represented by the general formulas (Ir) to (Is) are more preferable, and those compounds represented by the general formula (Is) are still more preferable.

The molecular weight of the compounds (I) is usually 72 to 18,000, preferably 72 to 3,000, and more preferably 72 to 1000.

The compounds (I) may be used singly, or two or more may be used in combination.

The composition of the invention contains the compound (I). At least some of the molecules of the compound (I) may be reacted to form an oligomer in the composition. Here, the oligomer usually contains 2 to 20 repeating units derived from the compound (I).

The compounds (I) may be produced by a known method or by a method in accordance with a known method. Alternatively, the compounds (I) may be purchased from the market.

[Compounds (II)]

The compound (II) that is a constituent of the inventive composition has two or more (meth)acryloyl groups that are functional groups with a polymerizable carbon-carbon double bond. Unlike the compound (I), the compound (II) is free from anionic hydrophilic groups such as sulfonate groups, carboxyl groups and phosphate groups, and is preferably such that the compound may contain a hydroxyl group but is free from anionic hydrophilic groups and cationic hydrophilic groups. As a result of the incorporation of such a compound, the polymerization of the composition provides cured products having a sufficient degree of crosslinking. The term (meth)acryloyl is a collective term for acryloyl and methacryloyl.

Examples of the (meth)acryloyl groups include (meth)acryloyloxy groups, (meth)acryloylthio groups and (meth)acrylamide groups. Of these (meth)acryloyl groups, (meth)acryloyloxy groups and (meth)acryloylthio groups are preferable.

Preferred compounds (II) are those compounds which have one or more hydroxyl groups, and two or more (meth)acryloyl groups; those compounds which have one or more bonds selected from ether bonds and thioether bonds, and two or more (meth) acryloyl groups; those compounds which have one or more ester bonds (except ester bonds also forming moieties of (meth) acryloyl groups), and two or more (meth) acryloyl groups; those compounds which have one or more groups selected from alicyclic groups and aromatic groups, and two or more (meth)acryloyl groups; and those compounds which have one or more heterorings, and two or more (meth)acryloyl groups.

Examples of the compounds (II) include ethylene glycol di(meth)acrylate, 1,2-propanediol di(meth)acrylate, 1,3-propanediol di(meth)acrylate, 1,4-butanediol di(meth)acrylate, 1,6-hexanediol di(meth)acrylate, 1,9-nonanediol di(meth)acrylate, 1,10-decanediol di(meth)acrylate, neopentyl glycol di(meth)acrylate, 2-methyl-1,8-octanediol di(meth)acrylate, 2-butyl-2-ethyl-1,3-propanediol di(meth)acrylate, 1,2-bis{3-(meth)acryloyloxy-2-hydroxy-propyloxy}ethane, 1,2-bis{3-(meth)acryloyloxy-2-hydroxy-propyloxylpropane, 1,3-bis{3-(meth)acryloyloxy-2-hydroxy-propyloxy}propane, 1,4-bis{3-(meth)acryloyloxy-2-hydroxy-propyloxy}heptane, 1,6-bis{3-(meth)acryloyloxy-2-hydroxy-propyloxy}hexane; neopentyl glycol hydroxypivalic acid di(meth)acrylate; polyethylene glycol di(meth)acrylate, 1,2-polypropylene glycol di(meth)acrylate, 1,3-polypropylene glycol di(meth)acrylate, 1,4-polybutylene glycol di(meth)acrylate, polyethylene glycol-bis{3-(meth)acryloyloxy-2-hydroxy-propyl} ether, 1,2-polypropylene glycol-bis{3-(meth)acryloyloxy-2-hydroxy-propyl} ether; 1,2-polypropylene glycol-bis{(meth)acryloyl-poly(oxyethylene)} ether; 1,3-polypropylene glycol di(meth)acrylate, 1,4-polybutylene glycol di(meth)acrylate, 1,4-polybutylene glycol-bis{3-(meth)acryloyloxy-2-hydroxy-propyl} ether and so on.

Further, examples of the compounds (II) include bis{2-(meth)acryloylthio-ethyl}sulfide, bis{5-(meth)acryloylthio-3-thiapentyl}sulfide; cyclohexanediol di(meth)acrylate, bis{(meth)acryloyloxy-methyl}cyclohexane, bis{7-(meth)acryloyloxy-2,5-dioxaheptyl}cyclohexane, bis{(meth)acryloyloxy-poly(ethyleneoxy)-methyl}cyclohexane ; tricyclodecane dimethanol di(meth)acrylate; 2-propenoic acid{2-(1,1,-dimethyl-2-{(1-oxo-2-propenyl)oxy}ethyl)-5-et hyl-1,3-dioxane-5-yl}methyl ester (KAYARAD R-604, manufactured by Nippon Kayaku Co., Ltd.); N,N',N"-tris{2-(meth)acryloyloxy-ethyl}isocyanurate; xylylenediol di(meth)acrylate, bis{7-(meth)acryloyloxy-2,5-dioxaheptyl}benzene, bis{(meth)acryloyloxy-poly(ethyleneoxy)-methyl}benzene; bisphenol A di(meth)acrylate, bis{(meth)acryloyl-oxyethyl}bisphenol A, bis{(meth)acryloyl-oxypropyl}bisphenol A, bis{(meth)acryloyl-poly(oxyethylene)}bisphenol A, bis{(meth)acryloyl-poly(oxy-1,2-propylene)}bisphenol A, bis{3-(meth)acryloyloxy-2-hydroxy-propyl}bisphenol A, bis{3-(meth)acryloyloxy-2-hydroxy-propyl-oxyethyl}bispheno 1 A, bis{3-(meth)acryloyloxy-2-hydroxy-propyl-oxypropyl}bisphen ol A, bis{3-(meth)acryloyloxy-2-hydroxy-propyl-poly(oxyethylene) }bisphenol A, bis{3-(meth)acryloyloxy-2-hydroxy-propyl-poly(oxy-1,2-prop ylene)}bisphenol A;
bis{(meth)acryloyl-oxyethyl-oxypropyl}bisphenol A, bis{(meth)acryloyl
poly(oxyethylene)-poly(oxy-1,2-propylene)}bisphenol A; naphthalenediol di(meth)acrylate,
bis{3-(meth)acryloyloxy-2-hydroxy-propyl-oxy}naphthalene; 9,9-fluorenediol di(meth)acrylate,
9,9-bis{4-(2-(meth)acryloyloxy-ethyl-oxy)}fluorene, 9,9-bis{3-phenyl-4-(meth)acryloyloxy-poly(ethyleneoxy)}flu orene; and so on.

Further, examples of the compounds (II) include phenol novolak epoxy (meth)acrylate (trade names "NK Oligo EA-6320, EA-7120 and EA-7420", manufactured by Shin-Nakamura Chemical Co., Ltd.); glycerol-1,3-di(meth)acrylate, 1-acryloyloxy-2-hydroxy-3-methacryloyloxy-propane, 2,6,10-trihydroxy-4,8-dioxaundecane-1,11-di(meth)acrylate, 1,3-bis{3-(meth)acryloyloxy-2-hydroxy-propyl-oxy}-2-hydrox ypropane, 1,2,3-tris{3-(meth)acryloyloxy-2-hydroxy-propyl-oxy}propan e, 1,2,3-tris{2-(meth)acryloyloxy-ethyl-oxy}propane, 1,2,3-tris{2-(meth)acryloyloxy-propyl-oxy}propane, 1,2,3-tris{(meth)acryloyloxy-poly(1,2-ethyleneoxy)}propane, 1,2,3-tris{(meth)acryloyloxy-poly(1,2-propyleneoxy)}propan e,
1,2,3-tris{(meth)acryloyloxy-poly(1,3-propyleneoxy)}propan e; trimethylolpropane tri(meth)acrylate,
trimethylolpropane-tris{(meth)acryloyloxy-ethyl-oxy} ether, trimethylolpropane-tris{2-(meth)acryloyloxy-propyl-oxy} ether,
trimethylolpropane-tris{(meth)acryloyloxy-poly(ethyleneoxy )} ether,
trimethylolpropane-tris{(meth)acryloyloxy-poly(1,2-propyle neoxy)} ether, pentaerythritol tri(meth)acrylate, pentaerythritol tetra(meth)acrylate,
pentaerythritol-tetrakis{(meth)acryloyloxy-ethyl-oxy} ether, pentaerythritol-tetrakis{2-(meth)acryloyloxy-propyl-oxy} ether,
pentaerythritol-tetrakis{(meth)acryloyloxy-poly(ethyleneox y)} ether,
pentaerythritol-tetrakis{(meth)acryloyloxy-poly(1,2-propyl eneoxy)} ether; ditrimethylolpropane tetra(meth)acrylate, ditrimethylolpropane-tetrakis{(meth)acryloyloxy-ethyl-oxy} ether,
ditrimethylolpropane-tetrakis{2-(meth)acryloyloxy-propyl-o xy} ether,
ditrimethylolpropane-tetrakis{(meth)acryloyloxy-poly(ethyl eneoxy)} ether,
ditrimethylolpropane-tetrakis{(meth)acryloyloxy-poly(1,2-p ropyleneoxy)} ether, dipentaerythritol penta(meth)acrylate, dipentaerythritol hexa(meth)acrylate,
dipentaerythritol-hexa{(meth)acryloyloxy-ethyl-oxy} ether, dipentaerythritol-hexa{2-(meth)acryloyloxy-propyl-oxy} ether,
dipentaerythritol-hexa{(meth)acryloyloxy-poly(ethyleneoxy) } ether,
dipentaerythritol-hexa{(meth)acryloyloxy-poly(1,2-propylen eoxy)} ether; and so on.

In addition, examples of the compounds (II) include a urethane reaction product of hexamethylene diisocyanate with 2-hydroxyethyl(meth)acrylate, 2-hydroxypropyl(meth)acrylate, 3-hydroxypropyl(meth)acrylate, or
4-hydroxybutyl(meth)acrylate; a urethane reaction product of isophorone diisocyanate with 2-hydroxyethyl(meth)acrylate, 2-hydroxypropyl(meth)acrylate,
3-hydroxypropyl(meth)acrylate, or
4-hydroxybutyl(meth)acrylate; a urethane reaction product of bis(isocyanatomethyl)norbornane with
2-hydroxyethyl(meth)acrylate, 2-hydroxypropyl(meth)acrylate, 3-hydroxypropyl(meth)acrylate, or
4-hydroxybutyl(meth)acrylate; a urethane reaction product of norbis(4-isocyanatocyclohexyl)methane with
2-hydroxyethyl(meth)acrylate, 2-hydroxypropyl(meth)acrylate, 3-hydroxypropyl(meth)acrylate, or
4-hydroxybutyl(meth)acrylate; a urethane reaction product of 1,3-bis(isocyanatomethyl)cyclohexane with
2-hydroxyethyl(meth)acrylate, 2-hydroxypropyl(meth)acrylate, 3-hydroxypropyl(meth)acrylate, or
4-hydroxybutyl(meth)acrylate; a urethane reaction product of m-xylylene diisocyanate with 2-hydroxyethyl(meth)acrylate,

2-hydroxypropyl(meth)acrylate,
3-hydroxypropyl(meth)acrylate, or
4-hydroxybutyl(meth)acrylate; and so on.

The compounds (II) may be used singly, or two or more may be used in combination. The compounds (II) may be produced by a known method or by a method in accordance with a known method, or may be purchased from the market.

The compound (I) and the compound (II) are preferably blended in such a ratio that the amount of the compound (I) is 0.1 to 50 wt% and the amount of the compound (II) is 99.9 to 50 wt% relative to the total weight of the compound (I) and the compound (II). More preferably, the amount of the compound (I) is 0.3 to 30 wt% and the amount of the compound (II) is 99.7 to 70 wt%. Still more preferably, the amount of the compound (I) is 0.5 to 20 wt% and the amount of the compound (II) is 99.5 to 80 wt%.

[Surfactants (III) and compounds (IV)]

In addition to the compound (I) and the compound (II), the composition of the invention includes at least one compound selected from surfactants (III) having a hydrophilic moiety including an anionic hydrophilic group, a cationic hydrophilic group or two or more hydroxyl groups, and a hydrophobic moiety including an organic residue, and compounds (IV) having a siloxane bond and a molecular weight of 200 to 1,000,000. The surfactants (III) and the compounds (IV) have no polymerizable carbon-carbon double bonds.

The surfactant (III) facilitates for the hydrophilic groups derived from the compound (I) to be concentrated on the surface of a cured product formed by the polymerization of the composition. When, for example, the cured product is a monolayer film, the enrichment of the hydrophilic groups at the surface is facilitated.

The composition which includes the surfactant (III), desirably a compound (III') having a sulfonate group and a molecular weight of 200 to 1000,000 (and being free from polymerizable carbon-carbon double bonds) or which includes the compound (IV) can give, upon polymerization, cured products that exhibit high and long-lasting hydrophilicity and have high surface smoothness.

When the composition contains such a compound (III'), the surface of the composition in contact with the air comes to have a decreased surface energy. Consequently, the leveling properties (the surface smoothness) can be enhanced without causing a decrease in the hydrophilicity of cured products obtained from the composition.

Although the detailed mechanism for this effect is not fully understood, the present inventors assume that the phenomenon described below occurs when the inventive composition is applied to objects such as substrates. The organic residue except the sulfonate group present in the compound (III') has a lower cohesive energy and higher hydrophobicity than the sulfonic acid. It is therefore probable that when the inventive composition is applied to an object such as a substrate, the moieties based on the organic residues in the compound (III') move to the surface in contact with the air and form a certain ordered structure. As a result, the surface of the coating of the composition that is in contact with the air comes to exhibit a low surface tension to provide an enhancement in the leveling properties (the surface smoothness) of the surface in contact with the air. Further, it is probable that the moieties based on the sulfonate groups in the compound (III') are oriented to the side opposite to the surface of the composition (toward the inside). As a result, the moieties based on the sulfonate groups interact with the moieties based on the hydrophilic groups, preferably the anionic hydrophilic groups, present in the compound (I) so as to facilitate for the hydrophilic groups, preferably the anionic hydrophilic groups, derived from the compound (I) to be concentrated near the surface of the composition in contact with the air, resulting in the enrichment of the hydrophilic groups, preferably the anionic hydrophilic groups, at the surface. Polymerization causes this structure of the inventive composition to be fixed, thus forming a cured product in which the hydrophilic groups, preferably the anionic hydrophilic groups, are enriched at the surface in contact with the air.

The enhancement in hydrophilicity tends to favor a compound (III') having a larger number of sulfonate groups, whilst the enhancement in leveling properties tends to prefer a compound having a relatively small number of sulfonate groups and a high molecular weight of the organic residue moiety. In view of this fact, the molecular weight of the compound (III') is usually in the range of 200 to 1,000,000, preferably in the range of 250 to 100,000, and more preferably in the range of 300 to 10,000. This molecular weight ensures that the obtainable coating film exhibits high hydrophilicity and excellent leveling properties.

Of the surfactants, those compounds represented by the general formula (300) below are preferable.

[Chem. 58]

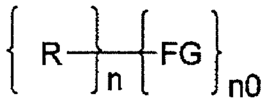

(3 0 0)

In the formula (300), R represents a $C_{4-100}$ organic residue; FG represents a hydrophilic group including at least one group selected from anionic hydrophilic groups, cationic hydrophilic groups and hydroxyl groups; n indicates the number of Rs bonded to FG and is 1 or 2; n0 indicates the number of FGs bonded to R and is an integer of 1 to 5; and when FG is a group including one hydroxyl group, n0 is an integer of 2 to 5.

Examples of the groups FG including an anionic hydrophilic group include those hydrophilic groups represented by the general formulas (301) to (308) below.

[Chem. 59]

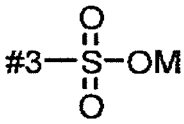

(3 0 1)

In the formula (301), M is a hydrogen atom, an alkali metal, an alkaline earth metal having 1/2 atomic valence or an ammonium ion; and #3 indicates a hand bonded to a carbon atom present in R in the formula (300).

[Chem. 60]

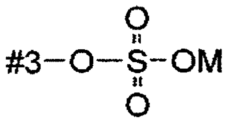

(3 0 2)

In the formula (302), M is a hydrogen atom, an alkali metal, an alkaline earth metal having 1/2 atomic valence or an ammonium ion; and #3 indicates a hand bonded to a carbon atom present in R in the formula (300).

[Chem. 61]

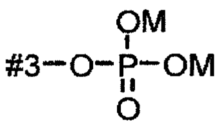

(3 0 3)

In the formula (303), M at each occurrence is a hydrogen atom, an alkali metal, an alkaline earth metal having 1/2 atomic valence or an ammonium ion; and #3 indicates a hand bonded to a carbon atom present in R in the formula (300).

[Chem. 62]

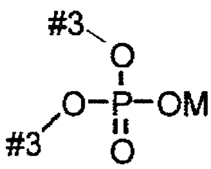

(3 0 4)

In the formula (304), M is a hydrogen atom, an alkali metal, an alkaline earth metal having 1/2 atomic valence or an ammonium ion; and #3 at each occurrence indicates a hand bonded to a carbon atom present in R in the formula (300).

[Chem. 63]

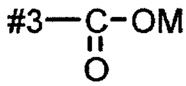

(3 0 5)

In the formula (305), M is a hydrogen atom, an alkali metal, an alkaline earth metal having 1/2 atomic valence or an ammonium ion; and #3 indicates a hand bonded to a carbon atom present in R in the formula (300).

[Chem. 64]

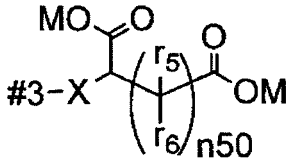

(3 0 6)

In the formula (306), $r_5$ and $r_6$ each independently represent a hydrogen atom, a methyl group, an ethyl group or a hydroxyl group; n50 is an integer of 0 to 5; X is -O-, -S-, -NH- or $-NCH_3-$; M at each occurrence is a hydrogen atom, an alkali metal, an alkaline earth metal having 1/2 atomic valence or an ammonium ion; and #3 indicates a hand bonded to a carbon atom present in R in the formula (300).

[Chem. 65]

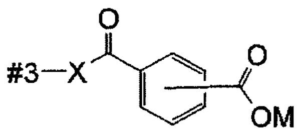

(3 0 7)

In the formula (307), X is -O-, -S-, -NH- or $-NCH_3-$; M is a hydrogen atom, an alkali metal, an alkaline earth metal having 1/2 atomic valence or an ammonium ion; and #3 indicates a hand bonded to a carbon atom present in R in the formula (300) .

[Chem. 66]

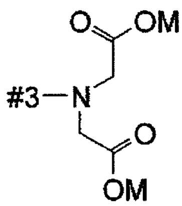

(3 0 8)

In the formula (308), M at each occurrence is a hydrogen atom, an alkali metal, an alkaline earth metal having 1/2 atomic valence or an ammonium ion; and #3 indicates a hand bonded to a carbon atom present in R in the formula (300).

Examples of the surfactants in which FG is represented by the general formula (301) include alkylsulfonic acid surfactants, alkenylsulfonic acid surfactants (in which the alkenyl groups present in the surfactants are not polymerizable), alkyl acetic acid sulfonic acid surfactants, N-acylsulfonic acid surfactants, hydroxyalkanesulfonic acid surfactants, arylsulfonic acid surfactants and sulfosuccinic acid ester surfactants.

Examples of the alkyl sulfonic acid surfactants include sodium butyl sulfonate, sodium pentyl sulfonate, sodium

hexyl sulfonate, sodium heptyl sulfonate, octylsulfonic acid, sodium octyl sulfonate, potassium octyl sulfonate, ammonium octyl sulfonate, magnesium octyl sulfonate, calcium octyl sulfonate, nonylsulfonic acid, sodium nonyl sulfonate, potassium nonyl sulfonate, ammonium nonyl sulfonate, magnesium nonyl sulfonate, calcium nonyl sulfonate, decylsulfonic acid, sodium decyl sulfonate, potassium decyl sulfonate, ammonium decyl sulfonate, magnesium decyl sulfonate, calcium decyl sulfonate, sodium undecyl sulfonate, dodecylsulfonic acid, sodium dodecyl sulfonate, potassium dodecyl sulfonate, ammonium dodecyl sulfonate, magnesium dodecyl sulfonate, calcium dodecyl sulfonate, sodium tridecyl sulfonate, tetradecylsulfonic acid, sodium tetradecyl sulfonate, potassium tetradecyl sulfonate, ammonium tetradecyl sulfonate, magnesium tetradecyl sulfonate, calcium tetradecyl sulfonate, sodium pentadecyl sulfonate, hexadecylsulfonic acid, sodium hexadecyl sulfonate, potassium hexadecyl sulfonate, ammonium hexadecyl sulfonate, magnesium hexadecyl sulfonate, calcium hexadecyl sulfonate, sodium hexadecyl sulfonate, sodium heptadecyl sulfonate, octadecylsulfonic acid, sodium octadecyl sulfonate, potassium octadecyl sulfonate, ammonium octadecyl sulfonate, magnesium octadecyl sulfonate, calcium octadecyl sulfonate, sodium nonadecyl sulfonate, sodium icosanyl sulfonate and so on.

Examples of the alkenylsulfonic acid surfactants include butynylsulfonic acid, hexynylsulfonic acid, octynylsulfonic acid, decynylsulfonic acid, dodecynylsulfonic acid, tetradecynylsulfonic acid, hexadecynylsulfonic acid, octadecynylsulfonic acid, icosanylsulfonic acid, butynyloxysulfonic acid, hexynyloxysulfonic acid, octynyloxysulfonic acid, decynyloxysulfonic acid, dodecynyloxysulfonic acid, tetradecynyloxysulfonic acid, hexadecynyloxysulfonic acid, octadecynyloxysulfonic acid, icosanyloxysulfonic acid, butynyloxy-3-oxapentylsulfonic acid, hexynyloxy-3-oxapentylsulfonic acid, octynyloxy-3-oxapentylsulfonic acid, decynyloxy-3-oxapentylsulfonic acid, dodecynyloxy-3-oxapentylsulfonic acid, tetradecynyloxy-3-oxapentylsulfonic acid, hexadecynyloxy-3-oxapentylsulfonic acid, octadecynyloxy-3-oxapentylsulfonic acid, icosanyloxy-3-oxapentylsulfonic acid, butynyloxy-3,6-dioxaoctylsulfonic acid, hexynyloxy-3,6-dioxaoctylsulfonic acid, octynyloxy-3,6-dioxaoctylsulfonic acid, decynyloxy-3,6-dioxaoctylsulfonic acid, dodecynyloxy-3,6-dioxaoctylsulfonic acid, tetradecynyloxy-3,6-dioxaoctylsulfonic acid, hexadecynyloxy-3,6-dioxaoctylsulfonic acid, octadecynyloxy-3,6-dioxaoctylsulfonic acid, icosanyloxy-3,6-dioxaoctylsulfonic acid, butynyloxy-3,6,9-trioxaundecylsulfonic acid, hexynyloxy-3,6,9-trioxaundecylsulfonic acid, octynyloxy-3,6,9-trioxaundecylsulfonic acid, decynyloxy-3,6,9-trioxaundecylsulfonic acid, dodecynyloxy-3,6,9-trioxaundecylsulfonic acid, tetradecynyloxy-3,6,9-trioxaundecylsulfonic acid, hexadecynyloxy-3,6,9-trioxaundecylsulfonic acid, octadecynyloxy-3,6,9-trioxaundecylsulfonic acid, icosanyloxy-3,6,9-trioxaundecylsulfonic acid, and salts thereof such as sodium salt, potassium salt, ammonium salt, triethanolamine salt, magnesium salt, and calcium salt and so on.

Examples of the alkyl acetic acid sulfonic acid surfactants include α-sulfoacetic acid ethyl sodium, α-sulfoacetic acid propyl sodium, butyl α-sulfoacetate, α-sulfoacetic acid butyl sodium, α-sulfoacetic acid butyl potassium salt, α-sulfoacetic acid butyl ammonium, α-sulfoacetic acid butyl magnesium, α-sulfoacetic acid butyl calcium, pentyl α-sulfoacetate, α-sulfoacetic acid pentyl sodium, α-sulfoacetic acid pentyl potassium salt, α-sulfoacetic acid pentyl ammonium, α-sulfoacetic acid pentyl magnesium, α-sulfoacetic acid pentyl calcium, hexyl α-sulfoacetate, α-sulfoacetic acid hexyl sodium, α-sulfoacetic acid hexyl potassium salt, α-sulfoacetic acid hexyl ammonium, α-sulfoacetic acid hexyl magnesium, α-sulfoacetic acid hexyl calcium, heptyl α-sulfoacetate, α-sulfoacetic acid heptyl sodium, α-sulfoacetic acid heptyl potassium salt, α-sulfoacetic acid heptyl ammonium, α-sulfoacetic acid heptyl magnesium, α-sulfoacetic acid heptyl calcium, octyl α-sulfoacetate, α-sulfoacetic acid octyl sodium, α-sulfoacetic acid octyl potassium salt, α-sulfoacetic acid octyl ammonium, α-sulfoacetic acid octyl magnesium, α-sulfoacetic acid octyl calcium, nonyl α-sulfoacetate, α-sulfoacetic acid nonyl sodium, α-sulfoacetic acid nonyl potassium salt, α-sulfoacetic acid nonyl ammonium, α-sulfoacetic acid nonyl magnesium, α-sulfoacetic acid nonyl calcium, decyl α-sulfoacetate, α-sulfoacetic acid decyl sodium, α-sulfoacetic acid decyl potassium salt, α-sulfoacetic acid decyl ammonium, α-sulfoacetic acid decyl magnesium, α-sulfoacetic acid decyl calcium, dodecyl α-sulfoacetate, α-sulfoacetic acid dodecyl sodium, α-sulfoacetic acid dodecyl potassium salt, α-sulfoacetic acid dodecyl ammonium, α-sulfoacetic acid dodecyl magnesium, α-sulfoacetic acid dodecyl calcium, tetradecyl α-sulfoacetate, α-sulfoacetic acid tetradecyl sodium, α-sulfoacetic acid tetradecyl potassium salt, α-sulfoacetic acid tetradecyl ammonium, α-sulfoacetic acid tetradecyl magnesium, α-sulfoacetic acid tetradecyl calcium, hexadecyl α-sulfoacetate, α-sulfoacetic acid hexadecyl sodium, α-sulfoacetic acid hexadecyl potassium salt, α-sulfoacetic acid hexadecyl ammonium, α-sulfoacetic acid hexadecyl magnesium, α-sulfoacetic acid hexadecyl calcium, octadecyl α-sulfoacetate, α-sulfoacetic acid octadecyl sodium, α-sulfoacetic acid octadecyl potassium salt, α-sulfoacetic acid octadecyl ammonium, α-sulfoacetic acid octadecyl magnesium, α-sulfoacetic acid octadecyl calcium, icosyl α-sulfoacetate, α-sulfoacetic acid icosyl sodium, α-sulfoacetic acid icosyl potassium salt, α-sulfoacetic acid icosyl ammonium, α-sulfoacetic acid icosyl magnesium, α-sulfoacetic acid icosyl calcium and so on.

Examples of the N-acylsulfonic acid surfactants include 2-hexylic acid amide-ethanesulfonic acid, 2-octylic acid amide-ethanesulfonic acid, 2-lauric acid amide-ethanesulfonic acid, 2-myristic acid amide-ethanesulfonic acid, 2-palmitic acid amide-ethanesulfonic acid, 2-stearic acid amide-ethanesulfonic acid, 2-oleic acid amide-ethanesulfonic acid, 2-behenic acid amide-ethanesulfonic acid, N-methyl-2--hexylic acid amide-ethanesulfonic acid, N-methyl-2-octylic acid amide-ethanesulfonic acid, N-methyl-2-lauric acid amide-ethanesulfonic acid, N-methyl-2-myristic acid amide-ethanesulfonic acid, N-methyl-2-palmitic acid amide-ethanesulfonic acid, N-methyl-2-stearic acid amide-ethanesulfonic acid, N-methyl-2-oleic acid amide-ethanesulfonic acid, N-methyl-2-behenic acid amide-ethanesulfonic acid, 3-hexylic acid amido-propanesulfonic acid, 3-octylic acid amido-propanesulfonic acid, 3-lauric acid amido-propanesulfonic acid, 3-myristic acid amido-propanesulfonic acid, 3-palmitic acid amido-propanesulfonic acid, 3-stearic acid amido-propanesulfonic acid, 3-oleic acid amido-propanesulfonic acid, 3-behenic acid amido-propanesulfonic acid, and salts thereof such as sodium salt, potassium salt, ammonium salt, magnesium salt, and calcium salt, and so on.

Examples of the hydroxyalkanesulfonic acid surfactants include sodium 2-hydroxybutyl sulfonate, sodium 2-hydroxypentyl sulfonate, sodium 2-hydroxyhexyl sulfonate, sodium 2-hydroxyheptyl sulfonate, sodium 2-hydroxyoctyl sulfonate, sodium 2-hydroxynonyl sulfonate, sodium 2-hydroxydecyl sulfonate, sodium 2-hydroxyundecyl sulfonate, sodium 2-hydroxydodecyl sulfonate, sodium 2-hydroxytridecyl sulfonate, sodium 2-hydroxytetradecyl sulfonate, sodium 2-hydroxypentadecyl sulfonate, sodium 2-hydroxyhexadecyl sulfonate, sodium 2-hydroxyheptadecyl sulfonate, 2-hydroxyoctadecylsulfonic acid, sodium 2-hydroxyoctadecyl sulfonate, potassium 2-hydroxyoctadecyl sulfonate, ammonium 2-hydroxyoctadecyl sulfonate, magnesium 2-hydroxyoctadecyl sulfonate, calcium 2-hydroxyoctadecyl sulfonate, sodium 2-hydroxynonadecyl sulfonate, sodium 2-hydroxyicosanyl sulfonate, sodium 3-hydroxybutyl sulfonate, sodium 3-hydroxypentyl sulfonate, sodium 3-hydroxyhexyl sulfonate, sodium 3-hydroxyheptyl sulfonate, sodium 3-hydroxyoctyl sulfonate, sodium 3-hydroxynonyl sulfonate, sodium 3-hydroxydecyl sulfonate, sodium 3-hydroxyundecyl sulfonate, sodium 3-hydroxydodecyl sulfonate, sodium 3-hydroxytridecyl sulfonate, sodium 3-hydroxytetradecyl sulfonate, sodium 3-hydroxypentadecyl sulfonate, sodium 3-hydroxyhexadecyl sulfonate, sodium 3-hydroxyheptadecyl sulfonate, 3-hydroxyoctadecylsulfonic acid, sodium 3-hydroxyoctadecyl sulfonate, potassium 3-hydroxyoctadecyl sulfonate, ammonium 3-hydroxyoctadecyl sulfonate, magnesium 3-hydroxyoctadecyl sulfonate, calcium 3-hydroxyoctadecyl sulfonate, sodium 3-hydroxynonadecyl sulfonate, sodium 3-hydroxyicosanyl sulfonate, sodium 4-hydroxybutyl sulfonate, sodium 4-hydroxypentyl sulfonate, sodium 4-hydroxyhexyl sulfonate, sodium 4-hydroxyheptyl sulfonate, sodium 4-hydroxyoctyl sulfonate, sodium 4-hydroxynonyl sulfonate, sodium 4-hydroxydecyl sulfonate, sodium 4-hydroxyundecyl sulfonate, sodium 4-hydroxydodecyl sulfonate, sodium 4-hydroxytridecyl sulfonate, sodium 4-hydroxytetradecyl sulfonate, sodium 4-hydroxypentadecyl sulfonate, sodium 4-hydroxyhexadecyl sulfonate, sodium 4-hydroxyheptadecyl sulfonate, 4-hydroxyoctadecylsulfonic acid, sodium 4-hydroxyoctadecyl sulfonate, potassium 4-hydroxyoctadecyl sulfonate, ammonium 4-hydroxyoctadecyl sulfonate, magnesium 4-hydroxyoctadecyl sulfonate, calcium 4-hydroxyoctadecyl sulfonate, sodium 4-hydroxynonadecyl sulfonate, sodium 4-hydroxyicosanyl sulfonate and so on.

Examples of the aryl sulfonic acid surfactants include sodium phenyl sulfonate, sodium methyl benzenesulfonate, sodium ethyl benzenesulfonate, sodium propyl benzenesulfonate, sodium butyl benzenesulfonate, sodium pentyl benzenesulfonate, sodium hexyl benzenesulfonate, sodium heptyl benzenesulfonate, sodium octyl benzenesulfonate, nonyl benzenesulfonic acid, sodium nonyl benzenesulfonate, potassium nonyl benzenesulfonate, ammonium nonyl benzenesulfonate, magnesium nonyl benzenesulfonate, calcium nonyl benzenesulfonate, sodium decyl benzenesulfonate, sodium undecyl benzenesulfonate, dodecyl benzenesulfonic acid, sodium dodecyl benzenesulfonate, potassium dodecyl benzenesulfonate, ammonium dodecyl benzenesulfonate, magnesium dodecyl benzenesulfonate, calcium dodecyl benzenesulfonate, sodium tridecyl benzenesulfonate, sodium tetradecyl benzenesulfonate, sodium pentadecyl benzenesulfonate, sodium hexadecyl benzenesulfonate, sodium heptadecyl benzenesulfonate, sodium octadecyl benzenesulfonate, sodium nonadecyl benzenesulfonate, sodium icosanyl benzenesulfonate, sodium di(methyl)benzenesulfonate, sodium di(ethyl)benzenesulfonate, sodium di(propyl)benzenesulfonate, sodium di(butyl)benzenesulfonate, sodium di(pentyl)benzenesulfonate, sodium di(hexyl)benzenesulfonate, sodium di(heptyl)benzenesulfonate, sodium di(octyl)benzenesulfonate, sodium di(nonyl)benzenesulfonate, sodium di(decyl)benzenesulfonate, sodium di(undecyl)benzenesulfonate, sodium di(dodecyl)benzenesulfonate, sodium di(tridecyl)benzenesulfonate, sodium di(tetradecyl)benzenesulfonate, sodium di(pentadecyl)benzenesulfonate, sodium di(hexadecyl)benzenesulfonate, sodium di(heptadecyl)benzenesulfonate, sodium di(octadecyl)benzenesulfonate, sodium di(nonadecyl)benzenesulfonate, sodium di(icosanyl)benzenesulfonate, sodium tri(methyl)benzenesulfonate, sodium tri(ethyl)benzenesulfonate, sodium tri(propyl)benzenesulfonate, sodium tri(butyl)benzenesulfonate, sodium tri(pentyl)benzenesulfonate, sodium tri(hexyl)benzenesulfonate, sodium tri(heptyl)benzenesulfonate, sodium tri(octyl)benzenesulfonate, sodium tri(nonyl)benzenesulfonate, sodium tri(decyl)benzenesulfonate, sodium tri(undecyl)benzenesulfonate, sodium tri(dodecyl)benzenesulfonate, sodium tri(tridecyl)benzenesulfonate, sodium tri(tetradecyl)benzenesulfonate, sodium tri(pentadecyl)benzenesulfonate, sodium tri(hexadecyl)benzenesulfonate, sodium tri(heptadecyl)benzenesulfonate, sodium tri(octadecyl)benzenesulfonate, sodium tri(nonadecyl)benzenesulfonate, sodium tri(icosanyl)benzenesulfonate, sodium naphthalenesulfonate, sodium methyl naphthalenesulfonate, sodium ethyl naphthalenesulfonate, sodium propyl naphthalenesulfonate, sodium butyl naphthalenesulfonate, sodium pentyl naphthalenesulfonate, sodium hexyl naphthalenesulfonate, sodium heptyl naphthalenesulfonate, sodium octyl naphthalenesulfonate, sodium nonyl naphthalenesulfonate, sodium decyl naphthalenesulfonate, sodium undecyl naphthalenesulfonate, sodium dodecyl naphthalenesulfonate, sodium tridecyl naphthalenesulfonate, sodium tetradecyl naphthalenesulfonate, sodium pentadecyl naphthalenesulfonate, sodium hexadecyl naphthalenesulfonate, sodium heptadecyl naphthalenesulfonate, octadecylnaphthalenesulfonic acid(stearyl naphthalenesulfonic acid), sodium octadecylnaphthalenesulfonate(sodium stearyl naphthalenesulfonate), potassium octadecylnaphthalenesulfonate(potassium stearyl naphthalenesulfonate), ammonium octadecylnaphthalenesulfonate(ammonium stearyl naphthalenesulfonate), magnesium octadecylnaphthalenesulfonate(magnesium stearyl naphthalenesulfonate), calcium octadecylnaphthalenesulfonate(calcium stearyl naphthalenesulfonate), sodium nonadecyl naphthalenesulfonate, sodium icosanyl naphthalenesulfonate, sodium di(methyl)naphthalenesulfonate, sodium di(ethyl)naphthalenesulfonate, sodium di(propyl)naphthalenesulfonate, sodium di(butyl)naphthalenesulfonate, sodium di(pentyl)naphthalenesulfonate, sodium di(hexyl)naphthalenesulfonate, sodium di(heptyl)naphthalenesulfonate, sodium di(octyl)naphthalenesulfonate, sodium di(nonyl)naphthalenesulfonate, sodium di(decyl)naphthalenesulfonate, sodium di(undecyl)naphthalenesulfonate, sodium di(dodecyl)naphthalenesulfonate, sodium di(tridecyl)naphthalenesulfonate, sodium di(tetradecyl)naphthalenesulfonate, sodium di(pentadecyl)naphthalenesulfonate, sodium di(hexadecyl)naphthalenesulfonate, sodium di(heptadecyl)naphthalenesulfonate, sodium di(octadecyl)naphthalenesulfonate, sodium di(nonadecyl)naphthalenesulfonate, sodium di(icosanyl)naphthalenesulfonate, sodium tri(methyl)naphthalenesulfonate, sodium tri(ethyl)naphthalenesulfonate, sodium tri(propyl)naphthalenesulfonate, sodium tri(butyl)naphthalenesulfonate, sodium tri(pentyl)naphthalenesulfonate, sodium tri(hexyl)naphthalenesulfonate, sodium tri(heptyl)naphthalenesulfonate, sodium tri(octyl)naphthalenesulfonate, sodium tri(nonyl)naphthalenesulfonate, sodium tri(decyl)naphthalenesulfonate, sodium tri(undecyl)naphthalenesulfonate, sodium tri(dodecyl)naphthalenesulfonate, sodium tri(tridecyl)naphthalenesulfonate, sodium tri(tetradecyl)naphthalenesulfonate, sodium tri(pentadecyl)naphthalenesulfonate, sodium tri(hexadecyl)naphthalenesulfonate, sodium tri(heptadecyl)naphthalenesulfonate, sodium tri(octadecyl)naphthalenesulfonate, sodium tri(nonadecyl)naphthalenesulfonate, sodium tri(icosanyl)naphthalenesulfonate, sodium naphthalenesulfonate formalin condensate, sodium methyl naphthalenesulfonate formalin condensate, sodium ethyl naphthalenesulfonate formalin condensate, sodium propyl naphthalenesulfonate formalin condensate, sodium butyl naphthalenesulfonate formalin condensate, sodium pentyl naphthalenesulfonate formalin condensate, sodium hexyl naphthalenesulfonate formalin condensate, sodium heptyl naphthalenesulfonate formalin condensate, sodium octyl naphthalenesulfonate formalin condensate, sodium nonyl naphthalenesulfonate formalin condensate, sodium decyl naphthalenesulfonate formalin condensate, sodium undecyl naphthalenesulfonate formalin condensate, sodium dodecyl naphthalenesulfonate formalin condensate, sodium tridecyl naphthalenesulfonate formalin condensate, sodium tetradecyl naphthalenesulfonate formalin condensate, sodium pentadecyl naphthalenesulfonate formalin condensate, sodium hexadecyl naphthalenesulfonate formalin condensate, sodium heptadecyl naphthalenesulfonate formalin condensate, octadecylnaphthalenesulfonic acid(stearyl naphthalenesulfonic acid)formalin condensate, sodium octadecylnaphthalenesulfonate(sodium stearyl naphthalenesulfonate) formalin condensate, potassium octadecylnaphthalenesulfonate(potassium stearyl naphthalenesulfonate) formalin condensate, ammonium octadecylnaphthalenesulfonate(ammonium stearyl naphthalenesulfonate) formalin condensate, magnesium octadecylnaphthalenesulfonate(magnesium stearyl naphthalenesulfonate) formalin condensate, calcium octadecylnaphthalenesulfonate(calcium stearyl naphthalenesulfonate) formalin condensate, sodium nonadecyl naphthalenesulfonate formalin condensate, sodium icosanyl naphthalenesulfonate formalin condensate, sodium di(methyl)naphthalenesulfonate formalin condensate, sodium di(ethyl)naphthalenesulfonate formalin condensate, sodium di(propyl)naphthalenesulfonate formalin condensate, sodium di(butyl)naphthalenesulfonate formalin condensate, sodium di(pentyl)naphthalenesulfonate formalin condensate, sodium di(hexyl)naphthalenesulfonate formalin condensate, sodium di(heptyl)naphthalenesulfonate formalin condensate, sodium di(octyl)naphthalenesulfonate formalin condensate, sodium di(nonyl)naphthalenesulfonate formalin condensate, sodium di(decyl)naphthalenesulfonate formalin condensate, sodium di(undecyl)naphthalenesulfonate formalin condensate, sodium di(dodecyl)naphthalenesulfonate formalin condensate, sodium di(tridecyl)naphthalenesulfonate formalin condensate, sodium di(tetradecyl)naphthalenesulfonate formalin condensate, sodium di(pentadecyl)naphthalenesulfonate formalin condensate, sodium di(hexadecyl)naphthalenesulfonate formalin condensate, sodium di(heptadecyl)naphthalenesulfonate formalin condensate, sodium di(octadecyl)naphthalenesulfonate formalin condensate, sodium di(nonadecyl)naphthalenesulfonate formalin condensate, sodium di(icosanyl)naphthalenesulfonate formalin condensate, sodium tri(methyl)naphthalenesulfonate formalin condensate, sodium tri(ethyl)naphthalenesulfonate formalin condensate, sodium tri(propyl)naphthalenesulfonate formalin condensate, sodium tri(butyl)naphthalenesulfonate formalin condensate, sodium tri(pentyl)naphthalenesulfonate formalin condensate, sodium tri(hexyl)naphthalenesulfonate formalin condensate, sodium tri(heptyl)naphthalenesulfonate formalin condensate, sodium tri(octyl)naphthalenesulfonate formalin condensate, sodium tri(nonyl)naphthalenesulfonate formalin condensate, sodium tri(decyl)naphthalenesulfonate formalin condensate, sodium tri(undecyl)naphthalenesulfonate formalin condensate, sodium tri(dodecyl)naphthalenesulfonate formalin condensate, sodium tri(tridecyl)naphthalenesulfonate formalin condensate, sodium tri(tetradecyl)naphthalenesulfonate formalin condensate, sodium tri(pentadecyl)naphthalenesulfonate formalin condensate, sodium tri(hexadecyl)naphthalenesulfonate formalin condensate, sodium tri(heptadecyl)naphthalenesulfonate formalin condensate, sodium tri(octadecyl)naphthalenesulfonate formalin condensate, sodium tri(nonadecyl)naphthalenesulfonate formalin condensate, sodium tri(icosanyl)naphthalenesulfonate formalin condensate, sodium diphenyl ether sulfonate, sodium methyl diphenyl ether sulfonate, sodium ethyl diphenyl ether sulfonate, sodium propyl diphenyl ether sulfonate, sodium butyl diphenyl ether sulfonate, sodium pentyl diphenyl ether sulfonate, sodium hexyl diphenyl ether sulfonate, sodium heptyl diphenyl ether sulfonate, sodium octyl diphenyl ether sulfonate, nonyl diphenyl ether sulfonic acid, sodium nonyl diphenyl ether sulfonate, potassium nonyl diphenyl ether sulfonate, ammonium nonyl diphenyl ether sulfonate, magnesium nonyl diphenyl ether sulfonate, calcium nonyl diphenyl ether sulfonate, sodium decyl diphenyl

ether sulfonate, sodium undecyl diphenyl ether sulfonate, dodecyl diphenyl ether sulfonic acid, sodium dodecyl diphenyl ether sulfonate, potassium dodecyl diphenyl ether sulfonate, ammonium dodecyl diphenyl ether sulfonate, magnesium dodecyl diphenyl ether sulfonate, calcium dodecyl diphenyl ether sulfonate, sodium tridecyl diphenyl ether sulfonate, sodium tetradecyl diphenyl ether sulfonate, sodium pentadecyl diphenyl ether sulfonate, sodium hexadecyl diphenyl ether sulfonate, sodium heptadecyl diphenyl ether sulfonate, sodium octadecyl diphenyl ether sulfonate, sodium nonadecyl diphenyl ether sulfonate, sodium icosanyl diphenyl ether sulfonate, sodium diphenyl ether disulfonate, sodium methyl diphenyl ether disulfonate, sodium ethyl diphenyl ether disulfonate, sodium propyl diphenyl ether disulfonate, sodium butyl diphenyl ether disulfonate, sodium pentyl diphenyl ether disulfonate, sodium hexyl diphenyl ether disulfonate, sodium heptyl diphenyl ether disulfonate, sodium octyl diphenyl ether disulfonate, nonyl diphenyl ether disulfonic acid, sodium nonyl diphenyl ether disulfonate, potassium nonyl diphenyl ether disulfonate, ammonium nonyl diphenyl ether disulfonate, magnesium nonyl diphenyl ether disulfonate, calcium nonyl diphenyl ether disulfonate, sodium decyl diphenyl ether disulfonate, sodium undecyl diphenyl ether disulfonate, dodecyl diphenyl ether disulfonic acid, sodium dodecyl diphenyl ether disulfonate, potassium dodecyl diphenyl ether disulfonate, ammonium dodecyl diphenyl ether disulfonate, magnesium dodecyl diphenyl ether disulfonate, calcium dodecyl diphenyl ether disulfonate, sodium tridecyl diphenyl ether disulfonate, sodium tetradecyl diphenyl ether disulfonate, sodium pentadecyl diphenyl ether disulfonate, sodium hexadecyl diphenyl ether disulfonate, sodium heptadecyl diphenyl ether disulfonate, sodium octadecyl diphenyl ether disulfonate, sodium nonadecyl diphenyl ether disulfonate, sodium icosanyl diphenyl ether disulfonate and so on.

Examples of the sulfosuccinic acid ester surfactants include mono(methyl)sulfosuccinic acid ester disodium, mono(ethyl)sulfosuccinic acid ester disodium, mono(propyl)sulfosuccinic acid ester disodium, mono(butyl)sulfosuccinic acid ester, mono(butyl)sulfosuccinic acid ester disodium, mono(butyl)sulfosuccinic acid ester dipotassium, mono(butyl)sulfosuccinic acid ester diammonium, mono(butyl)sulfosuccinic acid ester magnesium, mono(butyl)sulfosuccinic acid ester calcium, mono(pentyl)sulfosuccinic acid ester disodium, mono(hexyl)sulfosuccinic acid ester disodium, mono(heptyl)sulfosuccinic acid ester disodium, mono(octyl)sulfosuccinic acid ester, mono(octyl)sulfosuccinic acid ester disodium, mono(octyl)sulfosuccinic acid ester dipotassium, mono(octyl)sulfosuccinic acid ester diammonium, mono(octyl)sulfosuccinic acid ester magnesium, mono(octyl)sulfosuccinic acid ester calcium, (nonyl)sulfosuccinic acid ester, mono(nonyl)sulfosuccinic acid ester disodium, mono(nonyl)sulfosuccinic acid ester dipotassium, mono(nonyl)sulfosuccinic acid ester diammonium, mono(nonyl)sulfosuccinic acid ester magnesium, mono(nonyl)sulfosuccinic acid ester calcium, mono(decyl)sulfosuccinic acid ester disodium, mono(undecyl)sulfosuccinic acid ester disodium, mono(dodecyl)sulfosuccinic acid ester, mono(dodecyl)sulfosuccinic acid ester disodium, mono(dodecyl)sulfosuccinic acid ester dipotassium, mono(dodecyl)sulfosuccinic acid ester diammonium, mono(dodecyl)sulfosuccinic acid ester magnesium, mono(dodecyl)sulfosuccinic acid ester calcium, mono(tridecyl)sulfosuccinic acid ester, mono(tridecyl)sulfosuccinic acid ester disodium, mono(tridecyl)sulfosuccinic acid ester dipotassium, mono(tridecyl)sulfosuccinic acid ester diammonium, mono(tridecyl)sulfosuccinic acid ester magnesium, mono(tridecyl)sulfosuccinic acid ester calcium, mono(tetradecyl)sulfosuccinic acid ester, mono(tetradecyl)sulfosuccinic acid ester disodium, mono(tetradecyl)sulfosuccinic acid ester dipotassium, mono(tetradecyl)sulfosuccinic acid ester diammonium, mono(tetradecyl)sulfosuccinic acid ester magnesium, mono(tetradecyl)sulfosuccinic acid ester calcium, mono(pentadecyl)sulfosuccinic acid ester disodium, mono(hexadecyl)sulfosuccinic acid ester, mono(hexadecyl)sulfosuccinic acid ester disodium, mono(hexadecyl)sulfosuccinic acid ester dipotassium, mono(hexadecyl)sulfosuccinic acid ester diammonium, mono(hexadecyl)sulfosuccinic acid ester magnesium, mono(hexadecyl)sulfosuccinic acid ester calcium, mono(heptadecyl)sulfosuccinic acid ester disodium, mono(octadecyl)sulfosuccinic acid ester, mono(octadecyl)sulfosuccinic acid ester disodium, mono(octadecyl)sulfosuccinic acid ester dipotassium, mono(octadecyl)sulfosuccinic acid ester diammonium, mono(octadecyl)sulfosuccinic acid ester magnesium, mono(octadecyl)sulfosuccinic acid ester calcium, mono(nonadecyl)sulfosuccinic acid ester disodium, mono(icosanyl)sulfosuccinic acid ester disodium, mono(benzyl)sulfosuccinic acid ester disodium, mono(butoxyethyl)sulfosuccinic acid ester disodium, mono(hexyloxyethyl)sulfosuccinic acid ester disodium, mono(octyloxyethyl)sulfosuccinic acid ester disodium, mono(nonyloxyethyl)sulfosuccinic acid ester disodium, mono(decyloxyethyl)sulfosuccinic acid ester disodium, mono(undecyloxyethyl)sulfosuccinic acid ester disodium, mono(dodecyloxyethyl)sulfosuccinic acid ester disodium, mono(tridecyloxyethyl)sulfosuccinic acid ester disodium, mono(tetradecyloxyethyl)sulfosuccinic acid ester disodium, mono(pentadecyloxyethyl)sulfosuccinic acid ester disodium, mono(hexadecyloxyethyl)sulfosuccinic acid ester disodium, mono(heptadecyloxyethyl)sulfosuccinic acid ester disodium, mono(octadecyloxyethyl)sulfosuccinic acid ester sodium, mono(octadecyloxyethyl)sulfosuccinic acid ester disodium, mono(octadecyloxyethyl)sulfosuccinic acid ester potassium, mono(octadecyloxyethyl)sulfosuccinic acid ester dipotassium, mono(octadecyloxyethyl)sulfosuccinic acid ester ammonium, mono(octadecyloxyethyl)sulfosuccinic acid ester diammonium, mono(octadecyloxyethyl)sulfosuccinic acid ester calcium, mono(nonadecyloxyethyl)sulfosuccinic acid ester disodium, mono(icosanyloxyethyl)sulfosuccinic acid ester disodium, di(methyl)sulfosuccinic acid ester sodium, di(ethyl)sulfosuccinic acid ester sodium, di(propyl)sulfosuccinic acid ester sodium, di(butyl)sulfosuccinic acid ester, di(butyl)sulfosuccinic acid ester sodium, di (butyl) sulfosuccinic acid ester potassium, di(butyl)sulfosuccinic acid ester ammonium, di(butyl)sulfosuccinic acid ester magnesium, di(butyl)sulfosuccinic acid ester calcium, di(pentyl)sulfosuccinic acid ester sodium, di(hexyl)sulfosuccinic acid ester sodium, di(heptyl)sulfosuccinic acid ester sodium, di(octyl)sulfosuccinic acid ester, di(octyl)sulfosuccinic acid ester sodium,

di (octyl) sulfosuccinic acid ester potassium, di(octyl)sulfosuccinic acid ester ammonium, di(octyl)sulfosuccinic acid ester magnesium, di(octyl)sulfosuccinic acid ester calcium, (nonyl)sulfosuccinic acid ester, di(nonyl)sulfosuccinic acid ester sodium, di(nonyl)sulfosuccinic acid ester potassium, di(nonyl)sulfosuccinic acid ester ammonium, di(nonyl)sulfosuccinic acid ester magnesium, di(nonyl)sulfosuccinic acid ester calcium, di(decyl)sulfosuccinic acid ester sodium, di(undecyl)sulfosuccinic acid ester sodium, di(dodecyl)sulfosuccinic acid ester, di(dodecyl)sulfosuccinic acid ester sodium, di(dodecyl)sulfosuccinic acid ester potassium, di(dodecyl)sulfosuccinic acid ester ammonium, di(dodecyl)sulfosuccinic acid ester magnesium, di(dodecyl)sulfosuccinic acid ester calcium, di(tridecyl)sulfosuccinic acid ester, di(tridecyl)sulfosuccinic acid ester sodium, di(tridecyl)sulfosuccinic acid ester potassium, di(tridecyl)sulfosuccinic acid ester ammonium, di(tridecyl)sulfosuccinic acid ester magnesium, di(tridecyl)sulfosuccinic acid ester calcium, di(tetradecyl)sulfosuccinic acid ester, di(tetradecyl)sulfosuccinic acid ester sodium, di(tetradecyl)sulfosuccinic acid ester potassium, di(tetradecyl)sulfosuccinic acid ester ammonium, di(tetradecyl)sulfosuccinic acid ester magnesium, di(tetradecyl)sulfosuccinic acid ester calcium, di(pentadecyl)sulfosuccinic acid ester sodium, di(hexadecyl)sulfosuccinic acid ester, di(hexadecyl)sulfosuccinic acid ester sodium, di(hexadecyl)sulfosuccinic acid ester potassium, di(hexadecyl)sulfosuccinic acid ester ammonium, di(hexadecyl)sulfosuccinic acid ester magnesium, di(hexadecyl)sulfosuccinic acid ester calcium, di(heptadecyl)sulfosuccinic acid ester sodium, di(octadecyl)sulfosuccinic acid ester, di(octadecyl)sulfosuccinic acid ester sodium, di(octadecyl)sulfosuccinic acid ester potassium, di(octadecyl)sulfosuccinic acid ester ammonium, di(octadecyl)sulfosuccinic acid ester magnesium, di(octadecyl)sulfosuccinic acid ester calcium, di(nonadecyl)sulfosuccinic acid ester sodium, di(icosanyl)sulfosuccinic acid ester sodium, dibenzylsulfosuccinic acid ester sodium, di(butoxyethyl)sulfosuccinic acid ester sodium, di(hexyloxyethyl)sulfosuccinic acid ester sodium, di(octyloxyethyl)sulfosuccinic acid ester sodium, di(nonyloxyethyl)sulfosuccinic acid ester sodium, di(decyloxyethyl)sulfosuccinic acid ester sodium, di(undecyloxyethyl)sulfosuccinic acid ester sodium, di(dodecyloxyethyl)sulfosuccinic acid ester sodium, di(tridecyloxyethyl)sulfosuccinic acid ester sodium, di(tetradecyloxyethyl)sulfosuccinic acid ester sodium, di(pentadecyloxyethyl)sulfosuccinic acid ester sodium, di(hexadecyloxyethyl)sulfosuccinic acid ester sodium, di(octadecyloxyethyl)sulfosuccinic acid ester sodium, di(octadecyloxyethyl)sulfosuccinic acid ester potassium, di(octadecyloxyethyl)sulfosuccinic acid ester ammonium, di(octadecyloxyethyl)sulfosuccinic acid ester magnesium, di(octadecyloxyethyl)sulfosuccinic acid ester calcium, (nonadecyloxyethyl)sulfosuccinic acid ester sodium, (icosanyloxyethyl)sulfosuccinic acid ester sodium and so on.

Of the surfactants in which FG is represented by the general formula (301), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable. Of the surfactants described above, sulfosuccinic acid ester surfactants are relatively preferable.

In a preferred embodiment, the compounds (III') are sulfosuccinic acid ester surfactants represented by the general formula (301-A) below. In such compounds, the sulfonate group is present relatively near the center of the organic residue, and the organic residue as a whole has a relatively high molecular weight. Thus, the application of the composition including such a compound onto an object such as a substrate tends to result in a coating film in which the compound is uniformly dispersed over the surface in contact with the air so as to provide a low surface tension. Thus, an enhancement in leveling properties can be expected.

[Chem. 67]

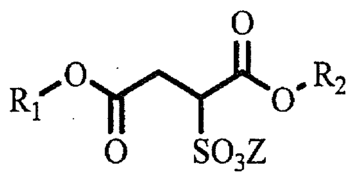

(3 0 1 −A)

In the formula (301-A), Z represents a hydrogen ion, an ammonium ion, an alkali metal ion or an alkaline earth metal ion having 1/2 atomic valence. Of the ions Z, alkali metal ions are preferable, and sodium ions and potassium ions are more preferable.

In the formula (301-A), $R_1$ and $R_2$ each independently represent a $C_{1-100}$ ester residue. $R_1$ and $R_2$ are preferably ester residues having 4 to 50 carbon atoms, and more preferably ester residues having 6 to 30 carbon atoms. Examples of the ester residues that tend to be preferable include alkyl esters, alkylaryl esters, alkyletheralkylene esters and alkylaryletheralkyl esters.

Examples of the compounds represented by general formula (301-A) wherein the ester residue is an alkyl ester include methyl sulfosuccinate, sulfosuccinic acid methyl sodium, sulfosuccinic acid methyl potassium, ethyl sulfosuccinate, sulfosuccinic acid ethyl sodium, sulfosuccinic acid ethyl potassium, propyl sulfosuccinate, sulfosuccinic acid propyl sodium, sulfosuccinic acid propyl potassium, butyl sulfosuccinate, sulfosuccinic acid butyl sodium, sulfosuccinic acid

butyl potassium, pentyl sulfosuccinate, sulfosuccinic acid pentyl sodium, sulfosuccinic acid pentyl potassium, hexyl sulfosuccinate, sulfosuccinic acid hexyl sodium, sulfosuccinic acid hexyl potassium, octyl sulfosuccinate, sulfosuccinic acid octyl sodium, sulfosuccinic acid octyl potassium, nonyl sulfosuccinate, sulfosuccinic acid nonyl sodium, sulfosuccinic acid nonyl potassium, decyl sulfosuccinate, sulfosuccinic acid decyl sodium, sulfosuccinic acid decyl potassium, undecyl sulfosuccinate, sulfosuccinic acid undecyl sodium, sulfosuccinic acid undecyl potassium, lauryl sulfosuccinate, sulfosuccinic acid lauryl sodium, sulfosuccinic acid lauryl potassium, myristyl sulfosuccinate, sulfosuccinic acid myristyl sodium, sulfosuccinic acid myristyl potassium, cetyl sulfosuccinate, sulfosuccinic acid cetyl sodium, sulfosuccinic acid cetyl potassium, stearyl sulfosuccinate, sulfosuccinic acid stearyl sodium, sulfosuccinic acid stearyl potassium, oleyl sulfosuccinate, sulfosuccinic acid oleyl sodium, sulfosuccinic acid oleyl potassium, linolyl sulfosuccinate, sulfosuccinic acid linolyl sodium, sulfosuccinic acid linolyl potassium and so on.

Examples of the compounds represented by general formula (301-A) wherein the ester residue is an alkylaryl ester include phenyl sulfosuccinate, sulfosuccinic acid phenyl sodium, sulfosuccinic acid phenyl potassium, methylphenyl sulfosuccinate, sulfosuccinic acid methylphenyl sodium, sulfosuccinic acid methylphenyl potassium, ethylphenyl sulfosuccinate, sulfosuccinic acid ethylphenyl sodium, sulfosuccinic acid ethylphenyl potassium, propylphenyl sulfosuccinate, sulfosuccinic acid propylphenyl sodium, sulfosuccinic acid propylphenyl potassium, butylphenyl sulfosuccinate, sulfosuccinic acid butylphenyl sodium, sulfosuccinic acid butylphenyl potassium, hexylphenyl sulfosuccinate, sulfosuccinic acid hexylphenyl sodium, sulfosuccinic acid hexylphenyl potassium, octylphenyl sulfosuccinate, sulfosuccinic acid octylphenyl sodium, sulfosuccinic acid octylphenyl potassium, nonylphenyl sulfosuccinate, sulfosuccinic acid nonylphenyl sodium, sulfosuccinic acid nonylphenyl potassium, decylphenyl sulfosuccinate, sulfosuccinic acid decylphenyl sodium, sulfosuccinic acid decylphenyl potassium, laurylphenyl sulfosuccinate, sulfosuccinic acid laurylphenyl sodium, sulfosuccinic acid laurylphenyl potassium, myristylphenyl sulfosuccinate, sulfosuccinic acid myristylphenyl sodium, sulfosuccinic acid myristylphenyl potassium, cetylphenyl sulfosuccinate, sulfosuccinic acid cetylphenyl sodium, sulfosuccinic acid cetylphenyl potassium, stearylphenyl sulfosuccinate, sulfosuccinic acid stearylphenyl sodium, sulfosuccinic acid stearylphenyl potassium and so on.

Examples of the compounds represented by general formula (301-A) wherein the ester residue is an alkyletheralkylene ester include butoxyethyl sulfosuccinate, sulfosuccinic acid butoxyethyl sodium, sulfosuccinic acid butoxyethyl potassium, hexyloxyethyl sulfosuccinate, sulfosuccinic acid hexyloxyethyl sodium, sulfosuccinic acid hexyloxyethyl potassium, octyloxyethyl sulfosuccinate, sulfosuccinic acid octyloxyethyl sodium, sulfosuccinic acid octyloxyethyl potassium, nonyloxyethyl sulfosuccinate, sulfosuccinic acid nonyloxyethyl sodium, sulfosuccinic acid nonyloxyethyl potassium, decyloxyethyl sulfosuccinate, sulfosuccinic acid decyloxyethyl sodium, sulfosuccinic acid decyloxyethyl potassium, lauryloxyethyl sulfosuccinate, sulfosuccinic acid lauryloxyethyl sodium, sulfosuccinic acid lauryloxyethyl potassium, myristyloxyethyl sulfosuccinate, sulfosuccinic acid myristyloxyethyl sodium, sulfosuccinic acid myristyloxyethyl potassium, cetyloxyethyl sulfosuccinate, sulfosuccinic acid cetyloxyethyl sodium, sulfosuccinic acid cetyloxyethyl potassium, stearyloxyethyl sulfosuccinate, sulfosuccinic acid stearyloxyethyl sodium, sulfosuccinic acid stearyloxyethyl potassium, butoxypropyl sulfosuccinate, sulfosuccinic acid butoxypropyl sodium, sulfosuccinic acid butoxypropyl potassium, hexyloxypropyl sulfosuccinate, sulfosuccinic acid hexyloxypropyl sodium, sulfosuccinic acid hexyloxypropyl potassium, octyloxypropyl sulfosuccinate, sulfosuccinic acid octyloxypropyl sodium, sulfosuccinic acid octyloxypropyl potassium, nonyloxypropyl sulfosuccinate, sulfosuccinic acid nonyloxypropyl sodium, sulfosuccinic acid nonyloxypropyl potassium, decyloxypropyl sulfosuccinate, sulfosuccinic acid decyloxypropyl sodium, sulfosuccinic acid decyloxypropyl potassium, lauryloxypropyl sulfosuccinate, sulfosuccinic acid lauryloxypropyl sodium, sulfosuccinic acid lauryloxypropyl potassium, myristyloxypropyl sulfosuccinate, sulfosuccinic acid myristyloxypropyl sodium, sulfosuccinic acid myristyloxypropyl potassium, cetyloxypropyl sulfosuccinate, sulfosuccinic acid cetyloxypropyl sodium, sulfosuccinic acid cetyloxypropyl potassium, stearyloxypropyl sulfosuccinate, sulfosuccinic acid stearyloxypropyl sodium, sulfosuccinic acid stearyloxypropyl potassium and so on.

Examples of the compounds represented by general formula (301-A) wherein the ester residue is an alkylaryletheralkyl ester include butylphenyloxyethyl sulfosuccinate, sulfosuccinic acid butylphenyloxyethyl sodium, sulfosuccinic acid butylphenyloxyethyl potassium, octylphenyloxyethyl sulfosuccinate, sulfosuccinic acid octylphenyloxyethyl sodium, sulfosuccinic acid octylphenyloxyethyl potassium, nonylphenyloxyethyl sulfosuccinate, sulfosuccinic acid nonylphenyloxyethyl sodium, sulfosuccinic acid nonylphenyloxyethyl potassium, laurylphenyloxyethyl sulfosuccinate, sulfosuccinic acid laurylphenyloxyethyl sodium, sulfosuccinic acid laurylphenyloxyethyl potassium, myristylphenyloxyethyl sulfosuccinate, sulfosuccinic acid myristylphenyloxyethyl sodium, sulfosuccinic acid myristylphenyloxyethyl potassium, cetylphenyloxyethyl sulfosuccinate, sulfosuccinic acid cetylphenyloxyethyl sodium, sulfosuccinic acid cetylphenyloxyethyl potassium, stearylphenyloxyethyl sulfosuccinate, sulfosuccinic acid stearylphenyloxyethyl sodium, sulfosuccinic acid stearylphenyloxyethyl potassium, butylphenyloxypropyl sulfosuccinate, sulfosuccinic acid butylphenyloxypropyl sodium, sulfosuccinic acid butylphenyloxypropyl potassium, octylphenyloxypropyl sulfosuccinate, sulfosuccinic acid octylphenyloxypropyl sodium, sulfosuccinic acid octylphenyloxypropyl potassium, nonylphenyloxypropyl sulfosuccinate, sulfosuccinic acid nonylphenyloxypropyl sodium, sulfosuccinic acid nonylphenyloxypropyl potassium, laurylphenyloxypropyl sulfosuccinate, sulfosuccinic acid laurylphenyloxypropyl sodium, sulfosuccinic acid laurylphenyloxypropyl potassium, myristylphenyloxypropyl sulfosuccinate, sulfosuccinic acid myristylphenyloxypropyl sodium, sulfosuccinic acid myristylphenyloxypropyl potassium, cetylphenyloxypropyl sulfosuccinate, sulfosuccinic acid cetylphenyloxypropyl sodium, sulfosuccinic acid cetylphenyloxypropyl potassium, stearylphenyloxypropyl sulfosuccinate, sulfosuccinic acid stearylphenyloxypropyl sodium, sulfosuccinic acid stearylphenyloxypropyl potassium and so on.

Examples of the surfactants in which FG is represented by the general formula (302) include alcohol sulfuric acid ester salt surfactants, aryl sulfuric acid ester salt surfactants and alkenyl sulfuric acid salt surfactants (in which the alkenyl groups present in the surfactants are not polymerizable).

Examples of the alcohol sulfuric acid ester salt surfactants include butyl sulfuric acid ester sodium, pentyl sulfuric acid ester sodium, hexyl sulfuric acid ester sodium, heptyl sulfuric acid ester sodium, octyl sulfuric acid ester sodium, nonyl sulfuric acid ester sodium, decyl sulfuric acid ester sodium, undecyl sulfuric acid ester sodium, dodecyl sulfuric acid ester triethanolamine salt, dodecyl sulfuric acid ester ammonium, dodecyl sulfuric acid ester sodium, dodecyl sulfuric acid ester potassium, dodecyl sulfuric acid ester ammonium, dodecyl sulfuric acid ester magnesium, dodecyl sulfuric acid ester calcium, tridecyl sulfuric acid ester sodium, tetradecyl sulfuric acid ester sodium, pentadecyl sulfuric acid ester sodium, hexadecyl sulfuric acid ester sodium, heptadecyl sulfuric acid ester sodium, octadecyl sulfuric acid ester sodium, nonadecyl sulfuric acid ester sodium, icosanyl sulfuric acid ester sodium, 3-lauric acid-2-hydroxy-propyl sulfuric acid ester sodium, 3-lauric acid-2-hydroxy-propyl sulfuric acid ester potassium, 3-lauric acid-2-hydroxy-propyl sulfuric acid ester ammonium, 3-lauric acid-2-hydroxy-propyl sulfuric acid ester magnesium, 3-lauric acid-2-hydroxy-propyl sulfuric acid ester calcium, 3-myristic acid-2-hydroxy-propyl sulfuric acid ester sodium, 3-myristic acid-2-hydroxy-propyl sulfuric acid ester potassium, 3-myristic acid-2-hydroxy-propyl sulfuric acid ester ammonium, 3-myristic acid-2-hydroxy-propyl sulfuric acid ester magnesium, 3-myristic acid-2-hydroxy-propyl sulfuric acid ester calcium, 3-palmitic acid-2-hydroxy-propyl sulfuric acid ester sodium, 3-palmitic acid-2-hydroxy-propyl sulfuric acid ester potassium, 3-palmitic acid-2-hydroxy-propyl sulfuric acid ester ammonium, 3-palmitic acid-2-hydroxy-propyl sulfuric acid ester magnesium, 3-palmitic acid-2-hydroxy-propyl sulfuric acid ester calcium, 3-stearic acid-2-hydroxy-propyl sulfuric acid ester sodium, 3-stearic acid-2-hydroxy-propyl sulfuric acid ester potassium, 3-stearic acid-2-hydroxy-propyl sulfuric acid ester ammonium, 3-stearic acid-2-hydroxy-propyl sulfuric acid ester magnesium, 3-stearic acid-2-hydroxy-propyl sulfuric acid ester calcium, 3-oleic acid-2-hydroxy-propyl sulfuric acid ester sodium, 3-oleic acid-2-hydroxy-propyl sulfuric acid ester potassium, 3-oleic acid-2-hydroxy-propyl sulfuric acid ester ammonium, 3-oleic acid-2-hydroxy-propyl sulfuric acid ester magnesium, 3-oleic acid-2-hydroxy-propyl sulfuric acid ester calcium, 3-behenic acid-2-hydroxy-propyl sulfuric acid ester sodium, 3-behenic acid-2-hydroxy-propyl sulfuric acid ester potassium, 3-behenic acid-2-hydroxy-propyl sulfuric acid ester ammonium, 3-behenic acid-2-hydroxy-propyl sulfuric acid ester magnesium, 3-behenic acid-2-hydroxy-propyl sulfuric acid ester calcium, ethylene glycol mono(octylphenyl) ether sulfuric acid ester sodium, ethylene glycol mono(octylphenyl) ether sulfuric acid ester potassium, ethylene glycol mono(octylphenyl) ether sulfuric acid ester ammonium, ethylene glycol mono(octylphenyl) ether sulfuric acid ester magnesium, ethylene glycol mono(octylphenyl) ether sulfuric acid ester calcium, diethylene glycol mono(octylphenyl) ether sulfuric acid ester sodium, diethylene glycol mono(octylphenyl) ether sulfuric acid ester potassium, diethylene glycol mono(octylphenyl) ether sulfuric acid ester ammonium, diethylene glycol mono (octylphenyl) ether sulfuric acid ester magnesium, diethylene glycol mono(octylphenyl) ether sulfuric acid ester calcium, triethylene glycol mono (octylphenyl) ether sulfuric acid ester sodium, triethylene glycol mono(octylphenyl) ether sulfuric acid ester potassium, triethylene glycol mono (octylphenyl) ether sulfuric acid ester ammonium, triethylene glycol mono (octylphenyl) ether sulfuric acid ester magnesium, triethylene glycol mono(octylphenyl) ether sulfuric acid ester calcium, tetraethylene glycol mono(octylphenyl) ether sulfuric acid ester sodium, tetraethylene glycol mono(octylphenyl) ether sulfuric acid ester potassium, tetraethylene glycol mono (octylphenyl) ether sulfuric acid ester ammonium, tetraethylene glycol mono(octylphenyl) ether sulfuric acid ester magnesium, tetraethylene glycol mono(octylphenyl) ether sulfuric acid ester calcium, polyethylene glycol mono(octylphenyl) ether sulfuric acid ester sodium, polyethylene glycol mono(octylphenyl) ether sulfuric acid ester potassium, polyethylene glycol mono(octylphenyl) ether sulfuric acid ester ammonium, polyethylene glycol mono(octylphenyl) ether sulfuric acid ester magnesium, polyethylene glycol mono(octylphenyl) ether sulfuric acid ester calcium, ethylene glycol mono(nonylphenyl) ether sulfuric acid ester sodium, ethylene glycol mono(nonylphenyl) ether sulfuric acid ester potassium, ethylene glycol mono(nonylphenyl) ether sulfuric acid ester ammonium, ethylene glycol mono(nonylphenyl) ether sulfuric acid ester magnesium, ethylene glycol mono(nonylphenyl) ether sulfuric acid ester calcium, diethylene glycol mono(nonylphenyl) ether sulfuric acid ester sodium, diethylene glycol mono(nonylphenyl) ether sulfuric acid ester potassium, diethylene glycol mono(nonylphenyl) ether sulfuric acid ester ammonium, diethylene glycol mono(nonylphenyl) ether sulfuric acid ester magnesium, diethylene glycol mono (nonylphenyl) ether sulfuric acid ester calcium, triethylene glycol mono(nonylphenyl) ether sulfuric acid ester sodium, triethylene glycol mono(nonylphenyl) ether sulfuric acid ester potassium, triethylene glycol mono(nonylphenyl) ether sulfuric acid ester ammonium, triethylene glycol mono (nonylphenyl) ether sulfuric acid ester magnesium, triethylene glycol mono(nonylphenyl) ether sulfuric acid ester calcium, tetraethylene glycol mono(nonylphenyl) ether sulfuric acid ester sodium, tetraethylene glycol mono(nonylphenyl) ether sulfuric acid ester potassium, tetraethylene glycol mono (nonylphenyl) ether sulfuric acid ester ammonium, tetraethylene glycol mono(nonylphenyl) ether sulfuric acid ester magnesium, tetraethylene glycol mono(nonylphenyl) ether sulfuric acid ester calcium, polyethylene glycol mono(nonylphenyl) ether sulfuric acid ester sodium, polyethylene glycol mono(nonylphenyl) ether sulfuric acid ester potassium, polyethylene glycol mono(nonylphenyl) ether sulfuric acid ester ammonium, polyethylene glycol mono(nonylphenyl) ether sulfuric acid ester magnesium, polyethylene glycol mono(nonylphenyl) ether sulfuric acid ester calcium, butyloxyethyl sulfuric acid ester sodium, isobutyloxyethyl sulfuric acid ester sodium, t-butyloxyethyl sulfuric acid ester sodium, pentyloxyethyl sulfuric acid ester sodium, hexyloxyethyl sulfuric acid ester sodium, heptyloxyethyl sulfuric acid ester sodium, octyloxyethyl sulfuric acid ester sodium, nonyloxyethyl sulfuric acid ester sodium, decyloxyethyl sulfuric acid ester sodium, undecyloxyethyl sulfuric acid ester sodium, dodecyloxyethyl sulfuric acid ester (lauryloxyethyl sulfuric acid ester) triethanolamine, dodecyloxyethyl sulfuric acid ester (lauryloxyethyl sulfuric acid ester) sodium, dodecyloxyethyl sulfuric acid ester (lauryloxyethyl sulfuric acid ester) potassium, dodecyloxyethyl sulfuric acid ester (lauryloxyethyl sulfuric acid ester) ammonium, dodecyloxyethyl sulfuric acid ester (lauryloxyethyl sulfuric acid ester) magnesium, dodecyloxyethyl sulfuric acid ester (lauryloxyethyl sulfuric acid ester) calcium, tridecyloxyethyl sulfuric acid ester sodium, tetradecyloxyethyl sulfuric acid ester sodium, pentadecyloxyethyl sulfuric acid ester sodium, hexadecyloxyethyl sulfuric acid ester sodium, heptadecyloxyethyl sulfuric acid ester sodium, octadecyloxyethyl sulfuric acid ester sodium, nonadecyloxyethyl sulfuric acid ester sodium, icosanyloxyethyl sulfuric acid ester sodium, butyloxypropyl-2-sulfuric acid ester sodium, isobutyloxypropyl-2-sulfuric acid ester sodium, t-butyloxypropyl-2-sulfuric acid ester sodium, pentyloxypropyl-2-sulfuric acid ester sodium, hexyloxypropyl-2-sulfuric acid ester sodium, heptyloxypropyl-2-sulfuric acid ester sodium, octyloxypropyl-2-sulfuric acid ester sodium, nonyloxypropyl-2-sulfuric acid ester sodium, decyloxypropyl-2-sulfuric acid ester sodium, undecyloxypropyl-2-sulfuric acid ester sodium, dodecyloxypropyl-2-sulfuric acid ester (lauryloxypropyl-2-sulfuric acid ester), dodecyloxypropyl-2-sulfuric acid ester (lauryloxypropyl-2-sulfuric acid ester) sodium, dodecyloxypropyl-2-sulfuric acid ester (lauryloxypropyl-2-sulfuric acid ester) potassium, dodecyloxypropyl-2-sulfuric acid ester (lauryloxypropyl-2-sulfuric acid ester) ammonium, dodecyloxypropyl-2-sulfuric acid ester (lauryloxypropyl-2-sulfuric acid ester) magnesium, dodecyloxypropyl-2-sulfuric acid ester (lauryloxypropyl-2-sulfuric acid ester) calcium, tridecyloxypropyl-2-sulfuric acid ester sodium, tetradecyloxypropyl-2-sulfuric acid ester sodium, pentadecyloxypropyl-2-sulfuric acid ester sodium, hexadecyloxypropyl-2-sulfuric acid ester sodium, heptadecyloxypropyl-2-sulfuric acid ester sodium, octadecyloxypropyl-2-sulfuric acid ester sodium, nonadecyloxypropyl-2-sulfuric acid ester sodium, icosanyloxypropyl-2-sulfuric acid ester sodium, butyloxy-3-oxapentyl sulfuric acid ester sodium, isobutyloxy-3-oxapentyl sulfuric acid ester sodium, t-butyloxy-3-oxapentyl sulfuric acid ester sodium, pentyloxy-3-oxapentyl sulfuric acid ester sodium, hexyloxy-3-oxapentyl sulfuric acid ester sodium, heptyloxy-3-oxapentyl sulfuric acid ester sodium, octyloxy-3-oxapentyl sulfuric acid ester sodium, nonyloxy-3-oxapentyl sulfuric acid ester sodium, decyloxy-3-oxapentyl sulfuric acid ester sodium, undecyloxy-3-oxapentyl sulfuric acid ester sodium, dodecyloxy-3-oxapentyl sulfuric acid ester (lauryloxy-3-oxapentyl sulfuric acid ester) triethanolamine, dodecyloxy-3-oxapentyl sulfuric acid ester (lauryloxy-3-oxapentyl sulfuric acid ester) sodium, dodecyloxy-3-oxapentyl sulfuric acid ester (lauryloxy-3-oxapentyl sulfuric acid ester) potassium, dodecyloxy-3-oxapentyl sulfuric acid ester (lauryloxy-3-oxapentyl sulfuric acid ester) ammonium, dodecyloxy-3-oxapentyl sulfuric acid ester (lauryloxy-3-oxapentyl sulfuric acid ester) magnesium, dodecyloxy-3-oxapentyl sulfuric acid ester (lauryloxy-3-oxapentyl sulfuric acid ester) calcium, tridecyloxy-3-oxapentyl sulfuric acid ester sodium, tetradecyloxy-3-oxapentyl sulfuric acid ester sodium, pentadecyloxy-3-oxapentyl sulfuric acid ester sodium, hexadecyloxy-3-oxapentyl sulfuric acid ester sodium, heptadecyloxy-3-oxapentyl sulfuric acid ester sodium, octadecyloxy-3-oxapentyl sulfuric acid ester sodium, nonadecyloxy-3-oxapentyl sulfuric acid ester sodium, icosanyloxy-3-oxapentyl sulfuric acid ester sodium, butyloxy-3,6-dioxaoctyl sulfuric acid ester sodium, isobutyloxy-3,6-dioxaoctyl sulfuric acid ester sodium, t-butyloxy-3,6-dioxaoctyl sulfuric acid ester sodium, pentyloxy-3,6-dioxaoctyl sulfuric acid ester sodium, hexyloxy-3,6-dioxaoctyl sulfuric acid ester sodium, heptyloxy-3,6-dioxaoctyl sulfuric acid ester sodium, octyloxy-3,6-dioxaoctyl sulfuric acid ester sodium, nonyloxy-3,6-dioxaoctyl sulfuric acid ester sodium, decyloxy-3,6-dioxaoctyl sulfuric acid ester sodium, undecyloxy-3,6-dioxaoctyl sulfuric acid ester sodium, dodecyloxy-3,6-dioxaoctyl sulfuric acid ester (lauryloxy-3,6-dioxaoctyl sulfuric acid ester), dodecyloxy-3,6-dioxaoctyl sulfuric acid ester (lauryloxy-3,6-dioxaoctyl sulfuric acid ester) sodium, dodecyloxy-3,6-dioxaoctyl sulfuric acid ester (lauryloxy-3,6-dioxaoctyl sulfuric acid ester) potassium, dodecyloxy-3,6-dioxaoctyl sulfuric acid ester (lauryloxy-3,6-dioxaoctyl sulfuric acid ester) ammonium, dodecyloxy-3,6-dioxaoctyl sulfuric acid ester (lauryloxy-3,6-dioxaoctyl sulfuric acid ester) magnesium, tridecyloxy-3,6-dioxaoctyl sulfuric acid ester sodium, tetradecyloxy-3,6-dioxaoctyl sulfuric acid ester sodium, pentadecyloxy-3,6-dioxaoctyl sulfuric acid ester sodium, hexadecyloxy-3,6-dioxaoctyl sulfuric acid ester sodium, heptadecyloxy-3,6-dioxaoctyl sulfuric acid ester sodium, octadecyloxy-3,6-dioxaoctyl sulfuric acid ester sodium, nonadecyloxy-3,6-dioxaoctyl sulfuric acid ester sodium, icosanyloxy-3,6-dioxaoctyl sulfuric acid ester sodium and so on.

Examples of the aryl sulfuric acid ester salt surfactants include phenyl sulfuric acid ester sodium, methyl benzene sulfuric acid ester sodium, ethyl benzene sulfuric acid ester sodium, propyl benzene sulfuric acid ester sodium, butyl benzene sulfuric acid ester sodium, pentyl benzene sulfuric acid ester sodium, hexyl benzene sulfuric acid ester sodium, heptyl benzene sulfuric acid ester sodium, octyl benzene sulfuric acid ester sodium, nonyl benzene sulfuric acid ester sodium, decyl benzene sulfuric acid ester sodium, undecyl benzene sulfuric acid ester sodium, dodecyl benzene sulfuric acid ester sodium, tridecyl benzene sulfuric acid ester sodium, tetradecyl benzene sulfuric acid ester sodium, pentadecyl benzene sulfuric acid ester sodium, hexadecyl benzene sulfuric acid ester sodium, heptadecyl benzene sulfuric acid

ester sodium, octadecyl benzene sulfuric acid ester sodium, nonadecyl benzene sulfuric acid ester sodium, icosanyl benzene sulfuric acid ester sodium, 7-ethyl-2-methyl-undecane-4-sulfuric acid ester sodium, di(methyl)benzene sulfuric acid ester sodium, di(ethyl)benzene sulfuric acid ester sodium, di(propyl)benzene sulfuric acid ester sodium, di(butyl)benzene sulfuric acid ester sodium, di(pentyl)benzene sulfuric acid ester sodium, di(hexyl)benzene sulfuric acid ester sodium, di(heptyl)benzene sulfuric acid ester sodium, di(octyl)benzene sulfuric acid ester sodium, di(nonyl)benzene sulfuric acid ester sodium, di(decyl)benzene sulfuric acid ester sodium, di(undecyl)benzene sulfuric acid ester sodium, di(dodecyl)benzene sulfuric acid ester sodium, di(tridecyl)benzene sulfuric acid ester sodium, di(tetradecyl)benzene sulfuric acid ester sodium, di(pentadecyl)benzene sulfuric acid ester sodium, di(hexadecyl)benzene sulfuric acid ester sodium, di(heptadecyl)benzene sulfuric acid ester sodium, di(octadecyl)benzene sulfuric acid ester sodium, di(nonadecyl)benzene sulfuric acid ester sodium, di(icosanyl)benzene sulfuric acid ester sodium, tri(methyl)benzene sulfuric acid ester sodium, tri(ethyl)benzene sulfuric acid ester sodium, tri(propyl)benzene sulfuric acid ester sodium, tri(butyl)benzene sulfuric acid ester sodium, tri(pentyl)benzene sulfuric acid ester sodium, tri(hexyl)benzene sulfuric acid ester sodium, tri(heptyl)benzene sulfuric acid ester sodium, tri(octyl)benzene sulfuric acid ester sodium, tri(nonyl)benzene sulfuric acid ester sodium, tri(decyl)benzene sulfuric acid ester sodium, tri(undecyl)benzene sulfuric acid ester sodium, tri(dodecyl)benzene sulfuric acid ester sodium, tri(tridecyl)benzene sulfuric acid ester sodium, tri(tetradecyl)benzene sulfuric acid ester sodium, tri(pentadecyl)benzene sulfuric acid ester sodium, tri(hexadecyl)benzene sulfuric acid ester sodium, tri(heptadecyl)benzene sulfuric acid ester sodium, tri(octadecyl)benzene sulfuric acid ester sodium, tri(nonadecyl)benzene sulfuric acid ester sodium, tri(icosanyl)benzene sulfuric acid ester sodium, naphthalene sulfuric acid ester sodium, methyl naphthalene sulfuric acid ester sodium, ethyl naphthalene sulfuric acid ester sodium, propyl naphthalene sulfuric acid ester sodium, butyl naphthalene sulfuric acid ester sodium, pentyl naphthalene sulfuric acid ester sodium, hexyl naphthalene sulfuric acid ester sodium, heptyl naphthalene sulfuric acid ester sodium, octyl naphthalene sulfuric acid ester sodium, nonyl naphthalene sulfuric acid ester sodium, decyl naphthalene sulfuric acid ester sodium, undecyl naphthalene sulfuric acid ester sodium, dodecyl naphthalene sulfuric acid ester sodium, tridecyl naphthalene sulfuric acid ester sodium, tetradecyl naphthalene sulfuric acid ester sodium, pentadecyl naphthalene sulfuric acid ester sodium, hexadecyl naphthalene sulfuric acid ester sodium, heptadecyl naphthalene sulfuric acid ester sodium, octadecylnaphthalene sulfuric acid ester sodium, nonadecyl naphthalene sulfuric acid ester sodium, icosanyl naphthalene sulfuric acid ester sodium, di(methyl)naphthalene sulfuric acid ester sodium, di (ethyl) naphthalene sulfuric acid ester sodium, di (propyl) naphthalene sulfuric acid ester sodium, di(butyl)naphthalene sulfuric acid ester sodium, di(pentyl)naphthalene sulfuric acid ester sodium, di(hexyl)naphthalene sulfuric acid ester sodium, di(heptyl)naphthalene sulfuric acid ester sodium, di(octyl)naphthalene sulfuric acid ester sodium, di(nonyl)naphthalene sulfuric acid ester sodium, di(decyl)naphthalene sulfuric acid ester sodium, di(undecyl)naphthalene sulfuric acid ester sodium, di(dodecyl)naphthalene sulfuric acid ester sodium, di(tridecyl)naphthalene sulfuric acid ester sodium, di(tetradecyl)naphthalene sulfuric acid ester sodium, di(pentadecyl)naphthalene sulfuric acid ester sodium, di(hexadecyl)naphthalene sulfuric acid ester sodium, di(heptadecyl)naphthalene sulfuric acid ester sodium, di(octadecyl)naphthalene sulfuric acid ester sodium, di(nonadecyl)naphthalene sulfuric acid ester sodium, di(icosanyl)naphthalene sulfuric acid ester sodium, tri(methyl)naphthalene sulfuric acid ester sodium, tri(ethyl)naphthalene sulfuric acid ester sodium, tri(propyl)naphthalene sulfuric acid ester sodium, tri(butyl)naphthalene sulfuric acid ester sodium, tri(pentyl)naphthalene sulfuric acid ester sodium, tri(hexyl)naphthalene sulfuric acid ester sodium, tri(heptyl)naphthalene sulfuric acid ester sodium, tri(octyl)naphthalene sulfuric acid ester sodium, tri(nonyl)naphthalene sulfuric acid ester sodium, tri(decyl)naphthalene sulfuric acid ester sodium, tri(undecyl)naphthalene sulfuric acid ester sodium, tri(dodecyl)naphthalene sulfuric acid ester sodium, tri(tridecyl)naphthalene sulfuric acid ester sodium, tri(tetradecyl)naphthalene sulfuric acid ester sodium, tri(pentadecyl)naphthalene sulfuric acid ester sodium, tri(hexadecyl)naphthalene sulfuric acid ester sodium, tri(heptadecyl)naphthalene sulfuric acid ester sodium, tri(octadecyl)naphthalene sulfuric acid ester sodium, tri(nonadecyl)naphthalene sulfuric acid ester sodium, tri (icosanyl) naphthalene sulfuric acid ester sodium and so on.

Examples of the alkenyl sulfuric acid salt surfactants include butynyl sulfuric acid ester, hexynyl sulfuric acid ester, octynyl sulfuric acid ester, decynyl sulfuric acid ester, dodecynyl sulfuric acid ester, tetradecynyl sulfuric acid ester, hexadecynyl sulfuric acid ester, octadecynyl sulfuric acid ester, icosanyl sulfuric acid ester, butynyloxysulfuric acid ester, hexynyloxysulfuric acid ester, octynyloxysulfuric acid ester, decynyloxysulfuric acid ester, dodecynyloxysulfuric acid ester, tetradecynyloxysulfuric acid ester, hexadecynyloxysulfuric acid ester, octadecynyloxysulfuric acid ester, icosanyloxy sulfuric acid ester, butynyloxy-3-oxapentyl sulfuric acid ester, hexynyloxy-3-oxapentyl sulfuric acid ester, octynyloxy-3-oxapentyl sulfuric acid ester, decynyloxy-3-oxapentyl sulfuric acid ester, dodecynyloxy-3-oxapentyl sulfuric acid ester, tetradecynyloxy-3-oxapentyl sulfuric acid ester, hexadecynyloxy-3-oxapentyl sulfuric acid ester, octadecynyloxy-3-oxapentyl sulfuric acid ester, icosanyloxy-3-oxapentyl sulfuric acid ester, butynyloxy-3,6-dioxaoctyl sulfuric acid ester, hexynyloxy-3,6-dioxaoctyl sulfuric acid ester, octynyloxy-3,6-dioxaoctyl sulfuric acid ester, decynyloxy-3,6-dioxaoctyl sulfuric acid ester, dodecynyloxy-3,6-dioxaoctyl sulfuric acid ester, tetradecynyloxy-3,6-dioxaoctyl sulfuric acid ester, hexadecynyloxy-3,6-dioxaoctyl sulfuric acid ester, octadecynyloxy-3,6-dioxaoctyl sulfuric acid ester, icosanyloxy-3,6-dioxaoctyl sulfuric acid ester, butynyloxy-3,6,9-trioxaundecyl sulfuric acid ester, hexynyloxy-3,6,9-trioxaundecyl sulfuric acid ester, octynyloxy-3,6,9-trioxaundecyl sulfuric acid ester, decynyloxy-3,6,9-trioxaundecyl sulfuric acid ester, dodecynyloxy-3,6,9-trioxaundecyl sulfuric acid ester, tetradecynyloxy-3,6,9-trioxaundecyl sulfuric acid ester, hexadecynyloxy-3,6,9-trioxaundecyl sulfuric acid ester, octadecynyloxy-3,6,9-trioxaundecyl sulfuric acid ester, icosanyloxy-3,6,9-trioxaundecyl sulfuric acid ester, and salts thereof such as sodium salt, potassium salt, ammonium salt, triethanolamine salt, magnesium salt, and calcium salt, and so on.

Of the surfactants in which FG is represented by the general formula (302), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable. Of the surfactants described above, alcohol sulfuric acid ester salt surfactants are relatively preferable.

Examples of the surfactants in which FG is represented by the general formula (303) include alkylphosphoric acid surfactants, alkoxyalkylphosphoric acid surfactants, arylphosphoric acid surfactants and aryloxyalkylphosphoric acid surfactants.

Examples of the alkylphosphoric acid surfactants include butyl phosphoric acid monoester, pentyl phosphoric acid monoester, hexyl phosphoric acid monoester, heptyl phosphoric acid monoester, octyl phosphoric acid monoester, nonyl phosphoric acid monoester, decyl phosphoric acid monoester, undecyl phosphoric acid monoester, dodecyl phosphoric acid monoester(lauryl phosphoric acid monoester), tridecyl phosphoric acid monoester, tetradecyl phosphoric acid monoester, pentadecyl phosphoric acid monoester, hexadecyl phosphoric acid monoester, heptadecyl phosphoric acid monoester, octadecyl phosphoric acid monoester, nonadecyl phosphoric acid monoester, icosanyl phosphoric acid monoester, and salts thereof such as sodium salt, potassium salt, ammonium salt, magnesium salt, and calcium salt, and so on.

Examples of the alkoxyalkylphosphoric acid surfactants include butyloxyethyl phosphoric acid monoester, pentyloxyethyl phosphoric acid monoester, hexyloxyethyl phosphoric acid monoester, heptyloxyethyl phosphoric acid monoester, octyloxyethyl phosphoric acid monoester, nonyloxyethyl phosphoric acid monoester, decyloxyethyl phosphoric acid monoester, undecyloxyethyl phosphoric acid monoester, dodecyloxyethyl phosphoric acid monoester(lauryloxyethyl phosphoric acid monoester), tridecyloxyethyl phosphoric acid monoester, tetradecyloxyethyl phosphoric acid monoester, pentadecyloxyethyl phosphoric acid monoester, hexadecyloxyethyl phosphoric acid monoester, heptadecyloxyethyl phosphoric acid monoester, octadecyloxyethyl phosphoric acid monoester, nonadecyloxyethyl phosphoric acid monoester, icosanyloxyethyl phosphoric acid monoester, butyloxy-3-oxapentyl phosphoric acid monoester, pentyloxy-3-oxapentyl phosphoric acid monoester, hexyloxy-3-oxapentyl phosphoric acid monoester, heptyloxy-3-oxapentyl phosphoric acid monoester, octyloxy-3-oxapentyl phosphoric acid monoester, nonyloxy-3-oxapentyl phosphoric acid monoester, decyloxy-3-oxapentyl phosphoric acid monoester, undecyloxy-3-oxapentyl phosphoric acid monoester, dodecyloxy-3-oxapentyl phosphoric acid monoester(lauryloxy-3-oxapentyl phosphoric acid monoester), tridecyloxy-3-oxapentyl phosphoric acid monoester, tetradecyloxy-3-oxapentyl phosphoric acid monoester, pentadecyloxy-3-oxapentyl phosphoric acid monoester, hexadecyloxy-3-oxapentyl phosphoric acid monoester, heptadecyloxy-3-oxapentyl phosphoric acid monoester, octadecyloxy-3-oxapentyl phosphoric acid monoester, nonadecyloxy-3-oxapentyl phosphoric acid monoester, icosanyloxy-3-oxapentyl phosphoric acid monoester, butyloxy-3,6-dioxaoctyl phosphoric acid monoester, pentyloxy-3,6-dioxaoctyl phosphoric acid monoester, hexyloxy-3,6-dioxaoctyl phosphoric acid monoester, heptyloxy-3,6-dioxaoctyl phosphoric acid monoester, octyloxy-3,6-dioxaoctyl phosphoric acid monoester, nonyloxy-3,6-dioxaoctyl phosphoric acid monoester, decyloxy-3,6-dioxaoctyl phosphoric acid monoester, undecyloxy-3,6-dioxaoctyl phosphoric acid monoester, dodecyloxy-3,6-dioxaoctyl phosphoric acid monoester(lauryloxy-3,6-dioxaoctyl phosphoric acid monoester), tridecyloxy-3,6-dioxaoctyl phosphoric acid monoester, tetradecyloxy-3,6-dioxaoctyl phosphoric acid monoester, pentadecyloxy-3,6-dioxaoctyl phosphoric acid monoester, hexadecyloxy-3,6-dioxaoctyl phosphoric acid monoester, heptadecyloxy-3,6-dioxaoctyl phosphoric acid monoester, octadecyloxy-3,6-dioxaoctyl phosphoric acid monoester, nonadecyloxy-3,6-dioxaoctyl phosphoric acid monoester, icosanyloxy-3,6-dioxaoctyl phosphoric acid monoester, and salts thereof such as sodium salt, potassium salt, ammonium salt, triethanolamine salt, magnesium salt, and calcium salt, and so on.

Examples of the arylphosphoric acid surfactants include methylphenyl phosphoric acid monoester, ethylphenyl phosphoric acid monoester, propylphenyl phosphoric acid monoester, butylphenyl phosphoric acid monoester, pentylphenyl phosphoric acid monoester, hexylphenyl phosphoric acid monoester, heptylphenyl phosphoric acid monoester, octylphenyl phosphoric acid monoester, nonylphenyl phosphoric acid monoester, decylphenyl phosphoric acid monoester, undecylphenyl phosphoric acid monoester, dodecylphenylphosphoric acid monoester(laurylphenyl phosphoric acid monoester), tridecylphenyl phosphoric acid monoester, tetradecylphenyl phosphoric acid monoester, pentadecylphenyl phosphoric acid monoester, hexadecylphenyl phosphoric acid monoester, heptadecylphenyl phosphoric acid monoester, octadecylphenyl phosphoric acid monoester, nonadecylphenyl phosphoric acid monoester, icosanylphenyl phosphoric acid monoester, butylphenyl phosphoric acid diester, pentylphenyl phosphoric acid diester, hexylphenyl phosphoric acid diester, heptylphenyl phosphoric acid diester, octylphenyl phosphoric acid diester, nonylphenyl phosphoric acid diester, decylphenyl phosphoric acid diester, undecylphenyl phosphoric acid diester, dodecylphenylphosphoric acid diester(laurylphenyl phosphoric acid diester), tridecylphenyl phosphoric acid diester, tetradecylphenyl phosphoric acid diester, pentadecylphenyl phosphoric acid diester, hexadecylphenyl phosphoric acid diester, heptadecylphenyl phosphoric acid diester, octadecylphenyl phosphoric acid diester, nonadecylphenyl phosphoric acid diester, icosanylphenyl phosphoric acid diester, and salts thereof such as sodium salt, potassium salt, ammonium salt, triethanolamine salt, magnesium salt, and calcium salt, and so on.

Examples of the aryloxyalkylphosphoric acid surfactants include methylphenoxyethyl phosphoric acid monoester, ethylphenoxyethyl phosphoric acid monoester, propylphenoxyethyl phosphoric acid monoester, butylphenoxyethyl phosphoric acid monoester, pentylphenoxyethyl phosphoric acid monoester, hexylphenoxyethyl phosphoric acid monoester, heptylphenoxyethyl phosphoric acid monoester, octylphenoxyethyl phosphoric acid monoester, nonylphenoxyethyl phosphoric acid monoester, decylphenoxyethyl phosphoric acid monoester, undecylphenoxyethyl phosphoric acid monoester, dodecylphenoxyethyl phosphoric acid monoester(laurylphenoxyethyl phosphoric acid monoester), tridecylphenoxyethyl phosphoric acid monoester, tetradecylphenoxyethyl phosphoric acid monoester, pentadecylphenoxyethyl phosphoric acid monoester, hexadecylphenoxyethyl phosphoric acid monoester, heptadecylphenoxyethyl phosphoric acid monoester, octadecylphenoxyethyl phosphoric acid monoester, nonadecylphenoxyethyl phosphoric acid monoester, icosanylphenoxyethyl phosphoric acid monoester, butylphenoxy-3-oxapentyl phosphoric acid monoester, pentylphenoxy-3-oxapentyl phosphoric acid monoester, hexylphenoxy-3-oxapentyl phosphoric acid monoester, heptylphenoxy-3-oxapentyl phosphoric acid monoester, octylphenoxy-3-oxapentyl phosphoric acid monoester, nonylphenoxy-3-oxapentyl phosphoric acid monoester, decylphenoxy-3-oxapentyl phosphoric acid monoester, undecylphenoxy-3-oxapentyl phosphoric acid monoester, dodecylphenoxy-3-oxapentyl phosphoric acid monoester(laurylphenoxy-3-oxapentyl phosphoric acid monoester), tridecylphenoxy-3-oxapentyl phosphoric acid monoester, tetradecylphenoxy-3-oxapentyl phosphoric acid monoester, pentadecylphenoxy-3-oxapentyl phosphoric acid monoester, hexadecylphenoxy-3-oxapentyl phosphoric acid monoester, heptadecylphenoxy-3-oxapentyl phosphoric acid monoester, octadecylphenoxy-3-oxapentyl phosphoric acid monoester, nonadecylphenoxy-3-oxapentyl phosphoric acid monoester, icosanylphenoxy-3-oxapentyl phosphoric acid monoester, butylphenoxy-3,6-dioxaoctyl phosphoric acid monoester, pentylphenoxy-3,6-dioxaoctyl phosphoric acid monoester, hexylphenoxy-3,6-dioxaoctyl phosphoric acid monoester, heptylphenoxy-3,6-dioxaoctyl phosphoric acid monoester, octylphenoxy-3,6-dioxaoctyl phosphoric acid monoester, nonylphenoxy-3,6-dioxaoctyl phosphoric acid monoester, decylphenoxy-3,6-dioxaoctyl phosphoric acid monoester, undecylphenoxy-3,6-dioxaoctyl phosphoric acid monoester, dodecylphenoxy-3,6-dioxaoctyl phosphoric acid monoester(laurylphenoxy-3,6-dioxaoctyl phosphoric acid monoester), tridecylphenoxy-3,6-dioxaoctyl phosphoric acid monoester, tetradecylphenoxy-3,6-dioxaoctyl phosphoric acid monoester, pentadecylphenoxy-3,6-dioxaoctyl phosphoric acid monoester, hexadecylphenoxy-3,6-dioxaoctyl phosphoric acid monoester, heptadecylphenoxy-3,6-dioxaoctyl phosphoric acid monoester, octadecylphenoxy-3,6-dioxaoctyl phosphoric acid monoester, nonadecylphenoxy-3,6-dioxaoctyl phosphoric acid monoester, icosanylphenoxy-3,6-dioxaoctyl phosphoric acid monoester, butylphenoxy-3,6,9-trioxaundecyl phosphoric acid monoester, pentylphenoxy-3,6,9-trioxaundecyl phosphoric acid monoester, hexylphenoxy-3,6,9-trioxaundecyl phosphoric acid monoester, heptylphenoxy-3,6,9-trioxaundecyl phosphoric acid monoester, octylphenoxy-3,6,9-trioxaundecyl phosphoric acid monoester, nonylphenoxy-3,6,9-trioxaundecyl phosphoric acid monoester, decylphenoxy-3,6,9-trioxaundecyl phosphoric acid monoester, undecylphenoxy-3,6,9-trioxaundecyl phosphoric acid monoester, dodecylphenoxy-3,6,9-trioxaundecyl phosphoric acid monoester(laurylphenoxy-3,6,9-trioxaundecyl phosphoric acid monoester), dodecylphenoxy-3,6,9-trioxaundecyl phosphoric acid monoester(laurylphenoxy-3,6,9-trioxaundecyl phosphoric acid monoester), tridecylphenoxy-3,6,9-trioxaundecyl phosphoric acid monoester, tetradecylphenoxy-3,6,9-trioxaundecyl phosphoric acid monoester, pentadecylphenoxy-3,6,9-trioxaundecyl phosphoric acid monoester, hexadecylphenoxy-3,6,9-trioxaundecyl phosphoric acid monoester, heptadecylphenoxy-3,6,9-trioxaundecyl phosphoric acid monoester, octadecylphenoxy-3,6,9-trioxaundecyl phosphoric acid monoester, nonadecylphenoxy-3,6,9-trioxaundecyl phosphoric acid monoester, icosanylphenoxy-3,6,9-trioxaundecyl phosphoric acid monoester, methyl naphthalenoxyethyl phosphoric acid monoester, ethyl naphthalenoxyethyl phosphoric acid monoester, propyl naphthalenoxyethyl phosphoric acid monoester, butyl naphthalenoxyethyl phosphoric acid monoester, pentyl naphthalenoxyethyl phosphoric acid monoester, hexyl naphthalenoxyethyl phosphoric acid monoester, heptyl naphthalenoxyethyl phosphoric acid monoester, octyl naphthalenoxyethyl phosphoric acid monoester, nonyl naphthalenoxyethyl phosphoric acid monoester, decyl naphthalenoxyethyl phosphoric acid monoester, undecyl naphthalenoxyethyl phosphoric acid monoester, dodecyl naphthalenoxyethyl phosphoric acid monoester(lauryl naphthalenoxyethyl phosphoric acid monoester), tridecyl naphthalenoxyethyl phosphoric acid monoester, tetradecyl naphthalenoxyethyl phosphoric acid monoester, pentadecyl naphthalenoxyethyl phosphoric acid monoester, hexadecyl naphthalenoxyethyl phosphoric acid monoester, heptadecyl naphthalenoxyethyl phosphoric acid monoester, octadecyl naphthalenoxyethyl phosphoric acid monoester, nonadecyl naphthalenoxyethyl phosphoric acid monoester, icosanyl naphthalenoxyethyl phosphoric acid monoester, butyl naphthalenoxy 3-oxapentyl phosphoric acid monoester, pentyl naphthalenoxy 3-oxapentyl phosphoric acid monoester, hexyl naphthalenoxy 3-oxapentyl phosphoric acid monoester, heptyl naphthalenoxy 3-oxapentyl phosphoric acid monoester, octyl naphthalenoxy 3-oxapentyl phosphoric acid monoester, nonyl naphthalenoxy 3-oxapentyl phosphoric acid monoester, decyl naphthalenoxy 3-oxapentyl phosphoric acid monoester, undecyl naphthalenoxy 3-oxapentyl phosphoric acid monoester, dodecyl naphthalenoxy 3-oxapentyl phosphoric acid monoester(lauryl naphthalenoxy 3-oxapentyl phosphoric acid monoester), tridecyl

naphthalenoxy 3-oxapentyl phosphoric acid monoester, tetradecyl naphthalenoxy 3-oxapentyl phosphoric acid monoester, pentadecyl naphthalenoxy 3-oxapentyl phosphoric acid monoester, hexadecyl naphthalenoxy 3-oxapentyl phosphoric acid monoester, heptadecyl naphthalenoxy 3-oxapentyl phosphoric acid monoester, octadecyl naphthalenoxy 3-oxapentyl phosphoric acid monoester, nonadecyl naphthalenoxy 3-oxapentyl phosphoric acid monoester, icosanyl naphthalenoxy 3-oxapentyl phosphoric acid monoester, butyl naphthalenoxy 3,6-dioxaoctyl phosphoric acid monoester, pentyl naphthalenoxy 3, 6-dioxaoctyl phosphoric acid monoester, hexyl naphthalenoxy 3,6-dioxaoctyl phosphoric acid monoester, heptyl naphthalenoxy 3, 6-dioxaoctyl phosphoric acid monoester, octyl naphthalenoxy 3, 6-dioxaoctyl phosphoric acid monoester, nonyl naphthalenoxy 3, 6-dioxaoctyl phosphoric acid monoester, decyl naphthalenoxy 3, 6-dioxaoctyl phosphoric acid monoester, undecyl naphthalenoxy 3,6-dioxaoctyl phosphoric acid monoester, dodecyl naphthalenoxy 3,6-dioxaoctyl phosphoric acid monoester (lauryl naphthalenoxy 3, 6-dioxaoctyl phosphoric acid monoester), tridecyl naphthalenoxy 3,6-dioxaoctyl phosphoric acid monoester, tetradecyl naphthalenoxy 3,6-dioxaoctyl phosphoric acid monoester, pentadecyl naphthalenoxy 3,6-dioxaoctyl phosphoric acid monoester, hexadecyl naphthalenoxy 3,6-dioxaoctyl phosphoric acid monoester, heptadecyl naphthalenoxy 3, 6-dioxaoctyl phosphoric acid monoester, octadecyl naphthalenoxy 3,6-dioxaoctyl phosphoric acid monoester, nonadecyl naphthalenoxy 3,6-dioxaoctyl phosphoric acid monoester, icosanyl naphthalenoxy 3, 6-dioxaoctyl phosphoric acid monoester, butyl naphthalenoxy 3,6,9-trioxaundecyl phosphoric acid monoester, pentyl naphthalenoxy 3,6,9-trioxaundecyl phosphoric acid monoester, hexyl naphthalenoxy 3, 6, 9-trioxaundecyl phosphoric acid monoester, heptyl naphthalenoxy 3,6,9-trioxaundecyl phosphoric acid monoester, octyl naphthalenoxy 3,6,9-trioxaundecyl phosphoric acid monoester, nonyl naphthalenoxy 3,6,9-trioxaundecyl phosphoric acid monoester, decyl naphthalenoxy 3,6,9-trioxaundecyl phosphoric acid monoester, undecyl naphthalenoxy 3,6,9-trioxaundecyl phosphoric acid monoester, dodecyl naphthalenoxy 3,6,9-trioxaundecyl phosphoric acid monoester(lauryl naphthalenoxy 3, 6, 9-trioxaundecyl phosphoric acid monoester), tridecyl naphthalenoxy 3,6,9-trioxaundecyl phosphoric acid monoester, tetradecyl naphthalenoxy 3,6,9-trioxaundecyl phosphoric acid monoester, pentadecyl naphthalenoxy 3,6,9-trioxaundecyl phosphoric acid monoester, hexadecyl naphthalenoxy 3,6,9-trioxaundecyl phosphoric acid monoester, heptadecyl naphthalenoxy 3,6,9-trioxaundecyl phosphoric acid monoester, octadecyl naphthalenoxy 3,6,9-trioxaundecyl phosphoric acid monoester, nonadecyl naphthalenoxy 3,6,9-trioxaundecyl phosphoric acid monoester, icosanyl naphthalenoxy 3,6,9-trioxaundecyl phosphoric acid monoester, and salts thereof such as sodium salt, potassium salt, ammonium salt, triethanolamine salt, magnesium salt, and calcium salt, and so on.

Of the surfactants in which FG is represented by the general formula (303), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable. Of the surfactants described above, alkoxyalkylphosphoric acid ester surfactants and aryloxyalkylphosphoric acid ester surfactants are relatively preferable.

Examples of the surfactants in which FG is represented by the general formula (304) include alkyl phosphoric acid ester surfactants, aryl phosphoric acid ester surfactants and aryloxyalkyl phosphoric acid ester surfactants.

Examples of the alkyl phosphoric acid ester surfactants include butyl phosphoric acid diester, pentyl phosphoric acid diester, hexyl phosphoric acid diester, heptyl phosphoric acid diester, octyl phosphoric acid diester, nonyl phosphoric acid diester, decyl phosphoric acid diester, undecyl phosphoric acid diester, dodecyl phosphoric acid diester(lauryl phosphoric acid diester), tridecyl phosphoric acid diester, tetradecyl phosphoric acid diester, pentadecyl phosphoric acid diester, hexadecyl phosphoric acid diester, heptadecyl phosphoric acid diester, octadecyl phosphoric acid diester, nonadecyl phosphoric acid diester, icosanyl phosphoric acid diester, and salts thereof such as sodium salt, potassium salt, ammonium salt, triethanolamine salt, magnesium salt, and calcium salt, and so on.

Examples of the aryl phosphoric acid ester surfactants include butyloxyethyl phosphoric acid diester, pentyloxyethyl phosphoric acid diester, hexyloxyethyl phosphoric acid diester, heptyloxyethyl phosphoric acid diester, octyloxyethyl phosphoric acid diester, nonyloxyethyl phosphoric acid diester, decyloxyethyl phosphoric acid diester, undecyloxyethyl phosphoric acid diester, dodecyloxyethyl phosphoric acid diester, tridecyloxyethyl phosphoric acid diester, tetradecyloxyethyl phosphoric acid diester, pentadecyloxyethyl phosphoric acid diester, hexadecyloxyethyl phosphoric acid diester, heptadecyloxyethyl phosphoric acid diester, octadecyloxyethyl phosphoric acid diester, nonadecyloxyethyl phosphoric acid diester, icosanyloxyethyl phosphoric acid diester, butyloxy-3-oxapentyl phosphoric acid diester, pentyloxy-3-oxapentyl phosphoric acid diester, hexyloxy-3-oxapentyl phosphoric acid diester, heptyloxy-3-oxapentyl phosphoric acid diester, octyloxy-3-oxapentyl phosphoric acid diester, nonyloxy-3-oxapentyl phosphoric acid diester, decyloxy-3-oxapentyl phosphoric acid diester, undecyloxy-3-oxapentyl phosphoric acid diester, dodecyloxy-3-oxapentyl phosphoric acid diester, tridecyloxy-3-oxapentyl phosphoric acid diester, tetradecyloxy-3-oxapentyl phosphoric acid diester, pentadecyloxy-3-oxapentyl phosphoric acid diester, hexadecyloxy-3-oxapentyl phosphoric acid diester, heptadecyloxy-3-oxapentyl phosphoric acid diester, octadecyloxy-3-oxapentyl phosphoric acid diester, nonadecyloxy-3-oxapentyl phosphoric acid diester, icosanyloxy-3-oxapentyl phosphoric acid diester, butyloxy-3,6-dioxaoctyl phosphoric acid diester, pentyloxy-3,6-dioxaoctyl phosphoric acid diester, hexyloxy-3,6-dioxaoctyl phosphoric acid diester, heptyloxy-3,6-dioxaoctyl phosphoric acid diester, octyloxy-3,6-dioxaoctyl phosphoric acid diester, nonyloxy-3,6-dioxaoctyl phosphoric acid diester, decyloxy-3,6-dioxaoctyl phosphoric acid diester, undecyloxy-3,6-dioxaoctyl phosphoric acid diester,

dodecyloxy-3,6-dioxaoctyl phosphoric acid diester(lauryloxy-3,6-dioxaoctyl phosphoric acid diester), tridecyloxy-3,6-dioxaoctyl phosphoric acid diester, tetradecyloxy-3,6-dioxaoctyl phosphoric acid diester, pentadecyloxy-3,6-dioxaoctyl phosphoric acid diester, hexadecyloxy-3,6-dioxaoctyl phosphoric acid diester, heptadecyloxy-3,6-dioxaoctyl phosphoric acid diester, octadecyloxy-3,6-dioxaoctyl phosphoric acid diester, nonadecyloxy-3,6-dioxaoctyl phosphoric acid diester, icosanyloxy-3,6-dioxaoctyl phosphoric acid diester, butyloxy-3,6,9-trioxaundecyl phosphoric acid diester, pentyloxy-3,6,9-trioxaundecyl phosphoric acid diester, hexyloxy-3,6,9-trioxaundecyl phosphoric acid diester, heptyloxy-3,6,9-trioxaundecyl phosphoric acid diester, octyloxy-3,6,9-trioxaundecyl phosphoric acid diester, nonyloxy-3,6,9-trioxaundecyl phosphoric acid diester, decyloxy-3,6,9-trioxaundecyl phosphoric acid diester, undecyloxy-3,6,9-trioxaundecyl phosphoric acid diester, dodecyloxy-3,6,9-trioxaundecyl phosphoric acid diester(lauryloxy-3,6,9-trioxaundecyl phosphoric acid diester), tridecyloxy-3,6,9-trioxaundecyl phosphoric acid diester, tetradecyloxy-3,6,9-trioxaundecyl phosphoric acid diester, pentadecyloxy-3,6,9-trioxaundecyl phosphoric acid diester, hexadecyloxy-3,6,9-trioxaundecyl phosphoric acid diester, heptadecyloxy-3,6,9-trioxaundecyl phosphoric acid diester, octadecyloxy-3,6,9-trioxaundecyl phosphoric acid diester, nonadecyloxy-3,6,9-trioxaundecyl phosphoric acid diester, icosanyloxy-3,6,9-trioxaundecyl phosphoric acid diester, and salts thereof such as sodium salt, potassium salt, ammonium salt, triethanolamine salt, magnesium salt, and calcium salt, and so on.

Examples of the aryloxyalkyl phosphoric acid ester surfactants include butylphenoxyethyl phosphoric acid diester, pentylphenoxyethyl phosphoric acid diester, hexylphenoxyethyl phosphoric acid diester, heptylphenoxyethyl phosphoric acid diester, octylphenoxyethyl phosphoric acid diester, nonylphenoxyethyl phosphoric acid diester, decylphenoxyethyl phosphoric acid diester, undecylphenoxyethyl phosphoric acid diester, dodecylphenoxyethyl phosphoric acid diester(laurylphenoxyethyl phosphoric acid diester), dodecylphenoxyethyl phosphoric acid diester(laurylphenoxyethyl phosphoric acid diester), tridecylphenoxyethyl phosphoric acid diester, tetradecylphenoxyethyl phosphoric acid diester, pentadecylphenoxyethyl phosphoric acid diester, hexadecylphenoxyethyl phosphoric acid diester, heptadecylphenoxyethyl phosphoric acid diester, octadecylphenoxyethyl phosphoric acid diester, nonadecylphenoxyethyl phosphoric acid diester, icosanylphenoxyethyl phosphoric acid diester, butylphenoxy-3-oxapentyl phosphoric acid diester, pentylphenoxy-3-oxapentyl phosphoric acid diester, hexylphenoxy-3-oxapentyl phosphoric acid diester, heptylphenoxy-3-oxapentyl phosphoric acid diester, octylphenoxy-3-oxapentyl phosphoric acid diester, nonylphenoxy-3-oxapentyl phosphoric acid diester, decylphenoxy-3-oxapentyl phosphoric acid diester, undecylphenoxy-3-oxapentyl phosphoric acid diester, dodecylphenoxy-3-oxapentyl phosphoric acid diester(laurylphenoxy-3-oxapentyl phosphoric acid diester), dodecylphenoxy-3-oxapentyl phosphoric acid diester(laurylphenoxy-3-oxapentyl phosphoric acid diester), tridecylphenoxy-3-oxapentyl phosphoric acid diester, tetradecylphenoxy-3-oxapentyl phosphoric acid diester, pentadecylphenoxy-3-oxapentyl phosphoric acid diester, hexadecylphenoxy-3-oxapentyl phosphoric acid diester, heptadecylphenoxy-3-oxapentyl phosphoric acid diester, octadecylphenoxy-3-oxapentyl phosphoric acid diester, nonadecylphenoxy-3-oxapentyl phosphoric acid diester, icosanylphenoxy-3-oxapentyl phosphoric acid diester, butylphenoxy-3,6-dioxaoctyl phosphoric acid diester, pentylphenoxy-3,6-dioxaoctyl phosphoric acid diester, hexylphenoxy-3,6-dioxaoctyl phosphoric acid diester, heptylphenoxy-3,6-dioxaoctyl phosphoric acid diester, octylphenoxy-3,6-dioxaoctyl phosphoric acid diester, nonylphenoxy-3,6-dioxaoctyl phosphoric acid diester, decylphenoxy-3,6-dioxaoctyl phosphoric acid diester, undecylphenoxy-3,6-dioxaoctyl phosphoric acid diester, dodecylphenoxy-3,6-dioxaoctyl phosphoric acid diester(laurylphenoxy-3,6-dioxaoctyl phosphoric acid diester), dodecylphenoxy-3,6-dioxaoctyl phosphoric acid diester(laurylphenoxy-3,6-dioxaoctyl phosphoric acid diester), tridecylphenoxy-3,6-dioxaoctyl phosphoric acid diester, tetradecylphenoxy-3,6-dioxaoctyl phosphoric acid diester, pentadecylphenoxy-3,6-dioxaoctyl phosphoric acid diester, hexadecylphenoxy-3,6-dioxaoctyl phosphoric acid diester, heptadecylphenoxy-3,6-dioxaoctyl phosphoric acid diester, octadecylphenoxy-3,6-dioxaoctyl phosphoric acid diester, nonadecylphenoxy-3,6-dioxaoctyl phosphoric acid diester, icosanylphenoxy-3,6-dioxaoctyl phosphoric acid diester, butylphenoxy-3,6,9-trioxaundecyl phosphoric acid diester, pentylphenoxy-3,6,9-trioxaundecyl phosphoric acid diester, hexylphenoxy-3,6,9-trioxaundecyl phosphoric acid diester, heptylphenoxy-3,6,9-trioxaundecyl phosphoric acid diester, octylphenoxy-3,6,9-trioxaundecyl phosphoric acid diester, nonylphenoxy-3,6,9-trioxaundecyl phosphoric acid diester, decylphenoxy-3,6,9-trioxaundecyl phosphoric acid diester, undecylphenoxy-3,6,9-trioxaundecyl phosphoric acid diester, dodecylphenoxy-3,6,9-trioxaundecyl phosphoric acid diester(laurylphenoxy-3,6,9-trioxaundecyl phosphoric acid diester), tridecylphenoxy-3,6,9-trioxaundecyl phosphoric acid diester, tetradecylphenoxy-3,6,9-trioxaundecyl phosphoric acid diester, pentadecylphenoxy-3,6,9-trioxaundecyl phosphoric acid diester, hexadecylphenoxy-3,6,9-trioxaundecyl phosphoric acid diester, heptadecylphenoxy-3,6,9-trioxaundecyl phosphoric acid diester, octadecylphenoxy-3,6,9-trioxaundecyl phosphoric acid diester, nonadecylphenoxy-3,6,9-trioxaundecyl phosphoric acid diester, icosanylphenoxy-3,6,9-trioxaundecyl phosphoric acid diester, butyl naphthalenoxyethyl phosphoric acid diester, pentyl naphthalenoxyethyl phosphoric acid diester, hexyl naphthalenoxyethyl phosphoric acid diester, heptyl naphthalenoxyethyl phosphoric acid diester, octyl naphthalenoxyethyl phosphoric acid diester, nonyl naphthalenoxyethyl phosphoric acid diester, decyl naphthalenoxyethyl phosphoric acid diester, undecyl naphthalenoxyethyl phosphoric acid diester, dodecyl naphthalenoxyethyl phosphoric acid diester(lauryl naphthalenoxyethyl phosphoric acid diester), dodecyl naphthalenoxyethyl phosphoric acid diester(lauryl naphthalenoxyethyl phosphoric acid diester), tridecyl naphthalenoxyethyl phosphoric acid diester, tetradecyl naphthalenoxyethyl phosphoric acid diester, pentadecyl naphthalenoxyethyl phosphoric acid diester, hexadecyl

naphthalenoxyethyl phosphoric acid diester, heptadecyl naphthalenoxyethyl phosphoric acid diester, octadecyl naphthalenoxyethyl phosphoric acid diester, nonadecyl naphthalenoxyethyl phosphoric acid diester, icosanyl naphthalenoxyethyl phosphoric acid diester, butyl naphthalenoxy 3-oxapentyl phosphoric acid diester, pentyl naphthalenoxy 3-oxapentyl phosphoric acid diester, hexyl naphthalenoxy 3-oxapentyl phosphoric acid diester, heptyl naphthalenoxy 3-oxapentyl phosphoric acid diester, octyl naphthalenoxy 3-oxapentyl phosphoric acid diester, nonyl naphthalenoxy 3-oxapentyl phosphoric acid diester, decyl naphthalenoxy 3-oxapentyl phosphoric acid diester, undecyl naphthalenoxy 3-oxapentyl phosphoric acid diester, dodecyl naphthalenoxy 3-oxapentyl phosphoric acid diester(lauryl naphthalenoxy 3-oxapentyl phosphoric acid diester), dodecyl naphthalenoxy 3-oxapentyl phosphoric acid diester(lauryl naphthalenoxy 3-oxapentyl phosphoric acid diester), tridecyl naphthalenoxy 3-oxapentyl phosphoric acid diester, tetradecyl naphthalenoxy 3-oxapentyl phosphoric acid diester, pentadecyl naphthalenoxy 3-oxapentyl phosphoric acid diester, hexadecyl naphthalenoxy 3-oxapentyl phosphoric acid diester, heptadecyl naphthalenoxy 3-oxapentyl phosphoric acid diester, octadecyl naphthalenoxy 3-oxapentyl phosphoric acid diester, nonadecyl naphthalenoxy 3-oxapentyl phosphoric acid diester, icosanyl naphthalenoxy 3-oxapentyl phosphoric acid diester, butyl naphthalenoxy 3,6,9-trioxaundecyl phosphoric acid diester, pentyl naphthalenoxy 3,6,9-trioxaundecyl phosphoric acid diester, hexyl naphthalenoxy 3,6,9-trioxaundecyl phosphoric acid diester, heptyl naphthalenoxy 3,6,9-trioxaundecyl phosphoric acid diester, octyl naphthalenoxy 3,6,9-trioxaundecyl phosphoric acid diester, nonyl naphthalenoxy 3,6,9-trioxaundecyl phosphoric acid diester, decyl naphthalenoxy 3,6,9-trioxaundecyl phosphoric acid diester, undecyl naphthalenoxy 3, 6, 9-trioxaundecyl phosphoric acid diester, dodecyl naphthalenoxy 3,6,9-trioxaundecyl phosphoric acid diester(lauryl naphthalenoxy 3,6,9-trioxaundecyl phosphoric acid diester), dodecyl naphthalenoxy 3,6,9-trioxaundecyl phosphoric acid diester(lauryl naphthalenoxy 3,6,9-trioxaundecyl phosphoric acid diester), tridecyl naphthalenoxy 3,6,9-trioxaundecyl phosphoric acid diester, tetradecyl naphthalenoxy 3,6,9-trioxaundecyl phosphoric acid diester, pentadecyl naphthalenoxy 3,6,9-trioxaundecyl phosphoric acid diester, hexadecyl naphthalenoxy 3,6,9-trioxaundecyl phosphoric acid diester, heptadecyl naphthalenoxy 3,6,9-trioxaundecyl phosphoric acid diester, octadecyl naphthalenoxy 3,6,9-trioxaundecyl phosphoric acid diester, nonadecyl naphthalenoxy 3,6,9-trioxaundecyl phosphoric acid diester, icosanyl naphthalenoxy 3,6,9-trioxaundecyl phosphoric acid diester, and salts thereof such as sodium salt, potassium salt, ammonium salt, triethanolamine salt, magnesium salt, and calcium salt, and so on.

Of the surfactants in which FG is represented by the general formula (304), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable. Of the surfactants described above, alkoxyalkylphosphoric acid ester surfactants and aryloxyalkylphosphoric acid ester surfactants are relatively preferable.

Examples of the surfactants in which FG is represented by the general formula (305) include aliphatic carboxylic acid surfactants, alkyloxy aliphatic carboxylic acid surfactants, aryloxy aliphatic carboxylic acid surfactants, aromatic carboxylic acid surfactants and N-acylamino acid surfactants.

Examples of the aliphatic carboxylic acid surfactants include butyric acid, valeric acid, caproic acid, caprylic acid, capric acid, lauric acid, myristic acid, palmitic acid, stearic acid, isostearic acid, oleic acid, behenic acid, cyclohexanecarboxylic acid, phenyl acetic acid, soybean oil, coconut oil, palm oil, flaxseed oil, cotton oil, canola oil, tung oil, castor oil, polyacrylic acid, copolymer of acrylic acid and methyl methacrylate, and salts thereof such as sodium salt, potassium salt, ammonium salt, triethanolamine salt, magnesium salt, and calcium salt, and so on.

Examples of the alkyloxy aliphatic carboxylic acid surfactants include butoxyethyloxyacetic acid, pentyloxyethyloxyacetic acid, hexyloxyethyloxyacetic acid, heptyloxyethyloxyacetic acid, octyloxyethyloxyacetic acid, nonyloxyethyloxyacetic acid, decyloxyethyloxyacetic acid, undecyloxyethyloxyacetic acid, dodecyloxyethyloxyacetic acid, tridecyloxyethyloxyacetic acid, tetradecyloxyethyloxyacetic acid, pentadecyloxyethyloxyacetic acid, hexadecyloxyethyloxyacetic acid, heptadecyloxyethyloxyacetic acid, octadecyloxyethyloxyacetic acid, nonadecyloxyethyloxyacetic acid, icosanyloxyethyloxyacetic acid, butoxy-3-oxapentyloxyacetic acid, pentyloxy-3-oxapentyloxyacetic acid, hexyloxy-3-oxapentyloxyacetic acid, heptyloxy-3-oxapentyloxyacetic acid, octyloxy-3-oxapentyloxyacetic acid, nonyloxy-3-oxapentyloxyacetic acid, decyloxy-3-oxapentyloxyacetic acid, undecyloxy-3-oxapentyloxyacetic acid, dodecyloxy-3-oxapentyloxyacetic acid, tridecyloxy-3-oxapentyloxyacetic acid, tetradecyloxy-3-oxapentyloxyacetic acid, pentadecyloxy-3-oxapentyloxyacetic acid, hexadecyloxy-3-oxapentyloxyacetic acid, heptadecyloxy-3-oxapentyloxyacetic acid, octadecyloxy-3-oxapentyloxyacetic acid, nonadecyloxy-3-oxapentyloxyacetic acid, icosanyloxy-3-oxapentyloxyacetic acid, butoxy-3,6-dioxaoctyloxyacetic acid, pentyloxy-3,6-dioxaoctyloxyacetic acid, hexyloxy-3,6-dioxaoctyloxyacetic acid, heptyloxy-3,6-dioxaoctyloxyacetic acid, octyloxy-3,6-dioxaoctyloxyacetic acid, nonyloxy-3,6-dioxaoctyloxyacetic acid, decyloxy-3,6-dioxaoctyloxyacetic acid, undecyloxy-3,6-dioxaoctyloxyacetic acid, dodecyloxy-3,6-dioxaoctyloxyacetic acid, tridecyloxy-3,6-dioxaoctyloxyacetic acid, tetradecyloxy-3,6-dioxaoctyloxyacetic acid, pentadecyloxy-3,6-dioxaoctyloxyacetic acid, hexadecyloxy-3,6-dioxaoctyloxyacetic acid, heptadecyloxy-3,6-dioxaoctyloxyacetic acid, octadecyloxy-3,6-dioxaoctyloxyacetic acid, nonadecyloxy-3,6-dioxaoctyloxyacetic acid, icosanyloxy-3,6-dioxaoctyloxyacetic acid, butoxy-3,6,9-trioxaundecyloxyacetic acid, pentyloxy-3,6,9-trioxaundecyloxyacetic acid, hexyloxy-3,6,9-trioxaundecyloxyacetic acid, heptyloxy-3,6,9-trioxaundecyloxyacetic acid, octyloxy-3,6,9-trioxaundecyloxyacetic acid, nonyloxy-3,6,9-trioxaundecyloxyacetic acid, decyloxy-3,6,9-trioxaundecyloxyacetic acid, undecyloxy-3,6,9-trioxaundecyloxyacetic acid, dodecyloxy-3,6,9-trioxaundecyloxyacetic acid, tridecyloxy-3,6,9-trioxaundecyloxyacetic acid, tetradecyloxy-3,6,9-trioxaundecyloxyacetic acid, pentadecyloxy-3,6,9-trioxaundecyloxyacetic acid, hexadecyloxy-3,6,9-trioxaundecyloxyacetic acid, heptadecyloxy-3,6,9-trioxaundecyloxyacetic acid, octadecyloxy-3,6,9-trioxaundecyloxyacetic acid, nonadecyloxy-3,6,9-trioxaundecyloxyacetic acid, icosanyloxy-3,6,9-trioxaundecyloxyacetic acid, and salts thereof such as sodium salt, potassium salt, ammonium salt, triethanolamine salt, magnesium salt, and calcium salt, and so on.

Examples of the aryloxy aliphatic carboxylic acid surfactants include butylphenoxyethyloxyacetic acid, pentylphenoxyethyloxyacetic acid, hexylphenoxyethyloxyacetic acid, heptylphenoxyethyloxyacetic acid, octylphenoxyethyloxyacetic acid, nonylphenoxyethyloxyacetic acid, decylphenoxyethyloxyacetic acid, undecylphenoxyethyloxyacetic acid, dodecylphenoxyethyloxyacetic acid, tridecylphenoxyethyloxyacetic acid, tetradecylphenoxyethyloxyacetic acid, pentadecylphenoxyethyloxyacetic acid, hexadecylphenoxyethyloxyacetic acid, heptadecylphenoxyethyloxyacetic acid, octadecylphenoxyethyloxyacetic acid, nonadecylphenoxyethyloxyacetic acid, icosanylphenoxyethyloxyacetic acid, butylphenoxy-3-oxapentyloxyacetic acid, pentylphenoxy-3-oxapentyloxyacetic acid, hexylphenoxy-3-oxapentyloxyacetic acid, heptylphenoxy-3-oxapentyloxyacetic acid, octylphenoxy-3-oxapentyloxyacetic acid, nonylphenoxy-3-oxapentyloxyacetic acid, decylphenoxy-3-oxapentyloxyacetic acid, dodecylphenoxy-3-oxapentyloxyacetic acid, tridecylphenoxy-3-oxapentyloxyacetic acid, tetradecylphenoxy-3-oxapentyloxyacetic acid, pentadecylphenoxy-3-oxapentyloxyacetic acid, hexadecylphenoxy-3-oxapentyloxyacetic acid, heptadecylphenoxy-3-oxapentyloxyacetic acid, octadecylphenoxy-3-oxapentyloxyacetic acid, nonadecylphenoxy-3-oxapentyloxyacetic acid, icosanylphenoxy-3-oxapentyloxyacetic acid, butylphenoxy-3,6-dioxaoctyloxyacetic acid, pentylphenoxy-3,6-dioxaoctyloxyacetic acid, hexylphenoxy-3,6-dioxaoctyloxyacetic acid, heptylphenoxy-3,6-dioxaoctyloxyacetic acid, octylphenoxy-3,6-dioxaoctyloxyacetic acid, nonylphenoxy-3,6-dioxaoctyloxyacetic acid, decylphenoxy-3,6-dioxaoctyloxyacetic acid, undecylphenoxy-3,6-dioxaoctyloxyacetic acid, dodecylphenoxy-3,6-dioxaoctyloxyacetic acid(laurylphenoxy-3,6-dioxaoctyloxyacetic acid), tridecylphenoxy-3,6-dioxaoctyloxyacetic acid, tetradecylphenoxy-3,6-dioxaoctyloxyacetic acid, pentadecylphenoxy-3,6-dioxaoctyloxyacetic acid, hexadecylphenoxy-3,6-dioxaoctyloxyacetic acid, heptadecylphenoxy-3,6-dioxaoctyloxyacetic acid, octadecylphenoxy-3,6-dioxaoctyloxyacetic acid, nonadecylphenoxy-3,6-dioxaoctyloxyacetic acid, icosanylphenoxy-3,6-dioxaoctyloxyacetic acid, butylphenoxy-3,6,9-trioxaundecyloxyacetic acid, pentylphenoxy-3,6,9-trioxaundecyloxyacetic acid, hexylphenoxy-3,6,9-trioxaundecyloxyacetic acid, heptylphenoxy-3,6,9-trioxaundecyloxyacetic acid, octylphenoxy-3,6,9-trioxaundecyloxyacetic acid, nonylphenoxy-3,6,9-trioxaundecyloxyacetic acid, decylphenoxy-3,6,9-trioxaundecyloxyacetic acid, undecylphenoxy-3,6,9-trioxaundecyloxyacetic acid, dodecylphenoxy-3,6,9-trioxaundecyloxyacetic acid(laurylphenoxy-3,6,9-trioxaundecyloxyacetic acid), tridecylphenoxy-3,6,9-trioxaundecyloxyacetic acid, tetradecylphenoxy-3,6,9-trioxaundecyloxyacetic acid, pentadecylphenoxy-3,6,9-trioxaundecyloxyacetic acid, hexadecylphenoxy-3,6,9-trioxaundecyloxyacetic acid, heptadecylphenoxy-3,6,9-trioxaundecyloxyacetic acid, octadecylphenoxy-3,6,9-trioxaundecyloxyacetic acid, nonadecylphenoxy-3,6,9-trioxaundecyloxyacetic acid, icosanylphenoxy-3,6,9-trioxaundecyloxyacetic acid, and salts thereof such as sodium salt, potassium salt, ammonium salt, triethanolamine salt, magnesium salt, and calcium salt, and so on.

Examples of the aromatic carboxylic acid surfactants include benzoic acid, toluic acid, chlorobenzoic acid, nitrobenzoic acid, hydroxybenzoic acid, methoxybenzoic acid, butoxybenzoic acid, pentyloxybenzoic acid, hexyloxybenzoic acid, heptyloxybenzoic acid, octyloxybenzoic acid, nonyloxybenzoic acid, decyloxybenzoic acid, undecyloxybenzoic acid, dodecyloxybenzoic acid, tridecyloxybenzoic acid, tetradecyloxybenzoic acid, pentadecyloxybenzoic acid, hexadecyloxybenzoic acid, heptadecyloxybenzoic acid, octadecyloxybenzoic acid, nonadecyloxybenzoic acid, icosanyloxybenzoic acid, and salts thereof such as sodium salt, potassium salt, ammonium salt, triethanolamine salt, magnesium salt, and calcium salt, and so on.

Examples of the N-acylamino acid surfactants include -N-acyl ester of butyric acid with glycine, -N-acyl ester of valeric acid with glycine, -N-acyl ester of caproic acid with glycine, -N-acyl ester of caprylic acid with glycine, -N-acyl ester of capric acid with glycine, -N-acyl ester of lauric acid with glycine, -N-acyl ester of myristic acid with glycine, -N-acyl ester of palmitic acid with glycine, -N-acyl ester of stearic acid with glycine, -N-acyl ester of isostearic acid with glycine, -N-acyl ester of oleic acid with glycine, -N-acyl ester of behenic acid with glycine, -N-acyl ester of cyclohexanecarboxylic acid with glycine, -N-acyl ester of phenyl acetic acid with glycine, -N-acyl ester of butyric acid with N-methyl glycine, -N-acyl ester of valeric acid with N-methyl glycine, -N-acyl ester of caproic acid with N-methyl glycine, -N-acyl ester of caprylic acid with N-methyl glycine, -N-acyl ester of capric acid with N-methyl glycine, -N-acyl ester of lauric acid with N-methyl glycine, -N-acyl ester of myristic acid with N-methyl glycine, -N-acyl ester of palmitic acid with N-methyl glycine, -N-acyl ester of stearic acid with N-methyl glycine, -N-acyl ester of isostearic acid with N-methyl glycine, -N-acyl ester of oleic acid with N-methyl glycine, -N-acyl ester of behenic acid with N-methyl glycine, -N-acyl ester of cyclohexanecarboxylic acid with N-methyl glycine, -N-acyl ester of phenyl acetic acid with N-methyl glycine, -N-acyl ester of butyric acid with alanine, -N-acyl ester of valeric acid with alanine, -N-acyl ester of caproic acid with alanine, -N-acyl ester of caprylic acid with alanine, -N-acyl ester of capric acid with alanine, -N-acyl ester of lauric acid with alanine, -N-acyl ester of myristic acid with alanine, -N-acyl ester of palmitic acid with alanine, -N-acyl ester of stearic acid with alanine, -N-acyl ester of isostearic acid with alanine, -N-acyl ester of oleic acid with alanine, -N-acyl ester of behenic acid with

alanine, -N-acyl ester of cyclohexanecarboxylic acid with alanine, -N-acyl ester of phenyl acetic acid with alanine, -N-acyl ester of butyric acid with N-methyl alanine, -N-acyl ester of valeric acid with N-methyl alanine, -N-acyl ester of caproic acid with N-methyl alanine, -N-acyl ester of caprylic acid with N-methyl alanine, -N-acyl ester of capric acid with N-methyl alanine, -N-acyl ester of lauric acid with N-methyl alanine, -N-acyl ester of myristic acid with N-methyl alanine, -N-acyl ester of palmitic acid with N-methyl alanine, -N-acyl ester of stearic acid with N-methyl alanine, -N-acyl ester of isostearic acid with N-methyl alanine, -N-acyl ester of oleic acid with N-methyl alanine, -N-acyl ester of behenic acid with N-methyl alanine, -N-acyl ester of cyclohexanecarboxylic acid with N-methyl alanine, -N-acyl ester of phenyl acetic acid with N-methyl alanine, -N-acyl ester of butyric acid with collagen peptide, -N-acyl ester of valeric acid with collagen peptide, -N-acyl ester of caproic acid with collagen peptide, -N-acyl ester of caprylic acid with collagen peptide, -N-acyl ester of capric acid with collagen peptide, -N-acyl ester of lauric acid with collagen peptide, -N-acyl ester of myristic acid with collagen peptide, -N-acyl ester of palmitic acid with collagen peptide, -N-acyl ester of stearic acid with collagen peptide, -N-acyl ester of isostearic acid with collagen peptide, -N-acyl ester of oleic acid with collagen peptide, -N-acyl ester of behenic acid with collagen peptide, -N-acyl ester of cyclohexanecarboxylic acid with collagen peptide, -N-acyl ester of phenyl acetic acid with collagen peptide, and salts thereof such as sodium salt, potassium salt, ammonium salt, triethanolamine salt, magnesium salt, and calcium salt, and so on.

Of the surfactants in which FG is represented by the general formula (305), those compounds in which the organic residue has 8 to 60 carbon atoms are more preferable. Glycine -N-acyl esters in which the organic residue has 10 to 40 carbon atoms are still more preferable.

Examples of the surfactants in which FG is represented by the general formula (306) include alkylsuccinic acid surfactants, alkyl ether succinic acid surfactants, alkyl ester succinic acid surfactants, succinic acid thioester surfactants, N-acylaminosuccinic acid ester surfactants and N-acylglutamic acid ester surfactants.

Examples of the alkylsuccinic acid surfactants include butyl succinic acid, pentyl succinic acid, hexyl succinic acid, heptyl succinic acid, octyl succinic acid, nonyl succinic acid, decyl succinic acid, undecyl succinic acid, dodecyl succinic acid, tridecyl succinic acid, tetradecyl succinic acid, pentadecyl succinic acid, hexadecyl succinic acid, heptadecyl succinic acid, octadecyl succinic acid, nonadecyl succinic acid, icosanyl succinic acid, and salts thereof such as sodium salt, potassium salt, ammonium salt, triethanolamine salt, magnesium salt, and calcium salt, and so on.

Examples of the alkyl ether succinic acid surfactants include butyloxysuccinic acid, pentyloxysuccinic acid, hexyloxysuccinic acid, heptyloxysuccinic acid, octyloxysuccinic acid, nonyloxysuccinic acid, decyloxysuccinic acid, undecyloxysuccinic acid, dodecyloxysuccinic acid, tridecyloxysuccinic acid, tetradecyloxysuccinic acid, pentadecyloxysuccinic acid, hexadecyloxysuccinic acid, heptadecyloxysuccinic acid, octadecyloxysuccinic acid, nonadecyloxysuccinic acid, icosanyloxysuccinic acid, and salts thereof such as sodium salt, potassium salt, ammonium salt, triethanolamine salt, magnesium salt, and calcium salt, and so on.

Examples of the alkyl ester succinic acid surfactants include ester of butyric acid with hydroxysuccinic acid, ester of valeric acid with hydroxysuccinic acid, ester of caproic acid with hydroxysuccinic acid, ester of caprylic acid with hydroxysuccinic acid, ester of capric acid with hydroxysuccinic acid, ester of lauric acid with hydroxysuccinic acid, ester of myristic acid with hydroxysuccinic acid, ester of palmitic acid with hydroxysuccinic acid, ester of stearic acid with hydroxysuccinic acid, ester of isostearic acid with hydroxysuccinic acid, ester of oleic acid with hydroxysuccinic acid, ester of behenic acid with hydroxysuccinic acid, ester of cyclohexanecarboxylic acid with hydroxysuccinic acid, ester of phenyl acetic acid with hydroxysuccinic acid and salts thereof such as sodium salt, potassium salt, ammonium salt, triethanolamine salt, magnesium salt, and calcium salt, and so on.

Examples of the succinic acid thioester surfactants include thioester of butyric acid with mercaptosuccinic acid, thioester of valeric acid with mercaptosuccinic acid, thioester of caproic acid with mercaptosuccinic acid, thioester of caprylic acid with mercaptosuccinic acid, thioester of capric acid with mercaptosuccinic acid, thioester of lauric acid with mercaptosuccinic acid, thioester of myristic acid with mercaptosuccinic acid, thioester of palmitic acid with mercaptosuccinic acid, thioester of stearic acid with mercaptosuccinic acid, thioester of isostearic acid with mercaptosuccinic acid, thioester of oleic acid with mercaptosuccinic acid, thioester of behenic acid with mercaptosuccinic acid, thioester of cyclohexanecarboxylic acid with mercaptosuccinic acid, thioester of phenyl acetic acid with mercaptosuccinic acid and salts thereof such as sodium salt, potassium salt, ammonium salt, triethanolamine salt, magnesium salt, and calcium salt, and so on.

Examples of the N-acylaminosuccinic acid ester surfactants include N-acyl ester of butyric acid with aminosuccinic acid, N-acyl ester of valeric acid with aminosuccinic acid, N-acyl ester of caproic acid with aminosuccinic acid, N-acyl ester of caprylic acid with aminosuccinic acid, N-acyl ester of capric acid with aminosuccinic acid, N-acyl ester of lauric acid with aminosuccinic acid, N-acyl ester of myristic acid with aminosuccinic acid, N-acyl ester of palmitic acid with aminosuccinic acid, N-acyl ester of stearic acid with aminosuccinic acid, N-acyl ester of isostearic acid with aminosuccinic acid, N-acyl ester of oleic acid with aminosuccinic acid, N-acyl ester of behenic acid with aminosuccinic acid, N-acyl ester of cyclohexanecarboxylic acid with aminosuccinic acid, N-acyl ester of phenyl acetic acid with aminosuccinic acid, and salts thereof such as sodium salt, potassium salt, ammonium salt, triethanolamine salt, magnesium salt, and calcium salt, and so on.

Examples of the N-acylglutamic acid ester surfactants include N-acyl ester of butyric acid with glutamic acid, N-acyl ester of valeric acid with glutamic acid, N-acyl ester of caproic acid with glutamic acid, N-acyl ester of caprylic acid with glutamic acid, N-acyl ester of capric acid with glutamic acid, N-acyl ester of lauric acid with glutamic acid, N-acyl ester of myristic acid with glutamic acid, N-acyl ester of palmitic acid with glutamic acid, N-acyl ester of stearic acid with glutamic acid, N-acyl ester of isostearic acid with glutamic acid, N-acyl ester of oleic acid with glutamic acid, N-acyl ester of behenic acid with glutamic acid, N-acyl ester of cyclohexanecarboxylic acid with glutamic acid, N-acyl ester of phenyl acetic acid with glutamic acid, and salts thereof such as sodium salt, potassium salt, ammonium salt, triethanolamine salt, magnesium salt, and calcium salt, and so on.

Of the surfactants in which FG is represented by the general formula (306), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Examples of the surfactants in which FG is represented by the general formula (307) include phthalic acid ester surfactants.

Examples of the phthalic acid ester surfactants include butyl phthalate, pentyl phthalate, hexyl phthalate, heptyl phthalate, octyl phthalate, nonyl phthalate, decyl phthalate, undecyl phthalate, phthalic acid dodecyl(lauryl), tridecyl phthalate, tetradecyl phthalate, pentadecyl phthalate, hexadecyl phthalate, heptadecyl phthalate, octadecyl phthalate, nonadecyl phthalate, icosanyl phthalate, phthalic acid butyloxy, phthalic acid hexyloxy, phthalic acid octyloxy, phthalic acid decyloxy, phthalic acid dodecyloxy, phthalic acid tetradecyloxy, phthalic acid hexadecyloxy, phthalic acid octadecyloxy, phthalic acid icosanyloxy, phthalic acid butyloxy-3-oxapentyl, phthalic acid hexyloxy-3-oxapentyl, phthalic acid octyloxy-3-oxapentyl, phthalic acid decyloxy-3-oxapentyl, phthalic acid dodecyloxy-3-oxapentyl, phthalic acid tetradecyloxy-3-oxapentyl, phthalic acid hexadecyloxy-3-oxapentyl, phthalic acid octadecyloxy-3-oxapentyl, phthalic acid icosanyloxy-3-oxapentyl, phthalic acid butyloxy-3,6-dioxaoctyl, phthalic acid hexyloxy-3,6-dioxaoctyl, phthalic acid octyloxy-3,6-dioxaoctyl, phthalic acid decyloxy-3,6-dioxaoctyl, phthalic acid dodecyloxy-3,6-dioxaoctyl, phthalic acid tetradecyloxy-3,6-dioxaoctyl, phthalic acid hexadecyloxy-3,6-dioxaoctyl, phthalic acid octadecyloxy-3,6-dioxaoctyl, phthalic acid icosanyloxy-3,6-dioxaoctyl, phthalic acid butyloxy-3,6,9-trioxaundecyl, phthalic acid hexyloxy-3,6,9-trioxaundecyl, phthalic acid octyloxy-3,6,9-trioxaundecyl, phthalic acid decyloxy-3,6,9-trioxaundecyl, phthalic acid dodecyloxy-3,6,9-trioxaundecyl, phthalic acid tetradecyloxy-3,6,9-trioxaundecyl, phthalic acid hexadecyloxy-3,6,9-trioxaundecyl, phthalic acid octadecyloxy-3,6,9-trioxaundecyl, phthalic acid icosanyloxy-3,6,9-trioxaundecyl, and salts thereof such as sodium salt, potassium salt, ammonium salt, triethanolamine salt, magnesium salt, and calcium salt, and so on.

Of the surfactants in which FG is represented by the general formula (307), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Examples of the surfactants in which FG is represented by the general formula (308) include iminodiacetic acid-N-acyl ester surfactants.

Examples of the iminodiacetic acid-N-acyl ester surfactants include -N-acyl ester of butyric acid with iminodiacetic acid, -N-acyl ester of valeric acid with iminodiacetic acid, -N-acyl ester of caproic acid with iminodiacetic acid, -N-acyl ester of caprylic acid with iminodiacetic acid, -N-acyl ester of capric acid with iminodiacetic acid, -N-acyl ester of lauric acid with iminodiacetic acid, -N-acyl ester of myristic acid with iminodiacetic acid, -N-acyl ester of palmitic acid with iminodiacetic acid, -N-acyl ester of stearic acid with iminodiacetic acid, -N-acyl ester of isostearic acid with iminodiacetic acid, -N-acyl ester of oleic acid with iminodiacetic acid, -N-acyl ester of behenic acid with iminodiacetic acid, -N-acyl ester of cyclohexanecarboxylic acid with iminodiacetic acid, -N-acyl ester of phenyl acetic acid with iminodiacetic acid, and salts thereof such as sodium salt, potassium salt, ammonium salt, triethanolamine salt, magnesium salt, and calcium salt, and so on.

Of the surfactants in which FG is represented by the general formula (308), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Examples of the groups FG including a hydroxyl group include those hydrophilic groups represented by the general formulas (309), (310), (312) and (313) below.

[Chem. 68]

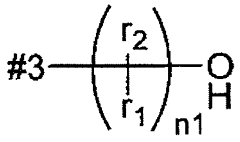

(3 0 9)

In the formula (309), $r_1$ and $r_2$ each independently represent a hydrogen atom, a methyl group, an ethyl group or a hydroxyl group; n1 is an integer of 0 to 100; and #3 indicates a hand bonded to a carbon atom present in R in the formula (300) . When the group represented by the formula (309) contains one hydroxyl group, n0 in the formula (300) is an integer of 2 to 5.

[Chem. 69]

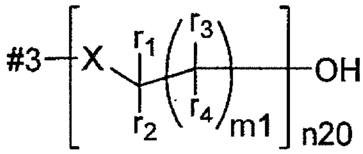

(3 1 0)

In the formula (310), X is -O-, -S-, -NH- or $-NCH_3-$; Xs may be the same as or different from one another; m1 is an integer of 0 to 10; n20 is an integer of 2 to 100; r represents a hydrogen atom or a methyl group; $r_1$ to $r_4$ each independently represent a hydrogen atom, a methyl group, an ethyl group or a hydroxyl group; Xs, $r_1$s, $r_2$s, $r_3$s and $r_4$s each may be the same as or different from one another; and #3 indicates a hand bonded to a carbon atom present in R in the formula (300). When the group represented by the formula (310) contains one hydroxyl group, n0 in the formula (300) is an integer of 2 to 5.

[Chem. 70]

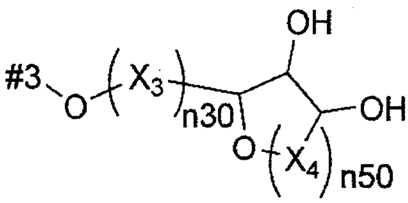

(3 1 2)

In the formula (312), $X_3$ and $X_4$ are each independently $-CH_2-$, -CH(OH)- or -CO-; n30 is an integer of 0 to 3; n50 is an integer of 0 to 5; when n30 is 2 or greater, $X_3$s may be the same as or different from one another; when n50 is 2 or greater, $X_4$s may be the same as or different from one another; and #3 indicates a hand bonded to a carbon atom present in R in the formula (300).

[Chem. 71]

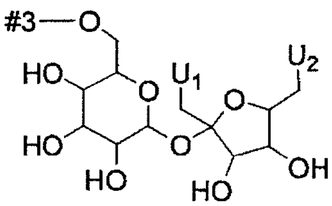

(3 1 3)

In the formula (313), #3 indicates a hand bonded to a carbon atom present in R in the formula (300); and $U_1$ to $U_3$ each independently represent a hydroxyl group or an oxygen atom bonded to a carbon atom present in R (O-#3).

Examples of the surfactants wherein FG is represented by the general formula (309) include butyric acid trimethylolpropane monoester, valeric acid trimethylolpropane monoester, caproic acid trimethylolpropane monoester, caprylic acid trimethylolpropane monoester, capric acid trimethylolpropane monoester, lauric acid trimethylolpropane monoester, myristic acid trimethylolpropane monoester, palmitic acid trimethylolpropane monoester, stearic acid trimethylolpropane monoester, isostearic acid trimethylolpropane monoester, oleic acid trimethylolpropane monoester, behenic acid trimethylolpropane monoester, cyclohexanecarboxylic acid trimethylolpropane monoester, phenyl acetic acid trimethylolpropane monoester, butyric acid pentaerythritol monoester, valeric acid pentaerythritol monoester, caproic acid pentaerythritol monoester, caprylic acid pentaerythritol monoester, capric acid pentaerythritol monoester, lauric acid pentaerythritol monoester, myristic acid pentaerythritol monoester, palmitic acid pentaerythritol monoester, stearic acid pentaerythritol monoester, isostearic acid pentaerythritol monoester, oleic acid pentaerythritol monoester, behenic acid pentaerythritol monoester, cyclohexanecarboxylic acid pentaerythritol monoester, phenyl acetic acid pentaerythritol monoester, butyric acid pentaerythritol diester, valeric acid pentaerythritol diester, caproic acid pentaerythritol diester, caprylic acid pentaerythritol diester, capric acid pentaerythritol diester, lauric acid pentaerythritol diester, myristic acid pentaerythritol diester, palmitic acid pentaerythritol diester, stearic acid pentaerythritol diester, isostearic acid pentaerythritol diester, oleic acid pentaerythritol diester, behenic acid pentaerythritol diester, cyclohexanecarboxylic acid pentaerythritol diester, phenyl acetic acid pentaerythritol diester, butyric acid dipentaerythritol diester, valeric acid dipentaerythritol diester, caproic acid dipentaerythritol diester, caprylic acid dipentaerythritol diester, capric acid dipentaerythritol diester, lauric acid dipentaerythritol diester, myristic acid dipentaerythritol diester, palmitic acid dipentaerythritol diester, stearic acid dipentaerythritol diester, isostearic acid dipentaerythritol diester, oleic acid dipentaerythritol diester, behenic acid dipentaerythritol diester, cyclohexanecarboxylic acid dipentaerythritol diester, phenyl acetic acid dipentaerythritol diester, butyric acid dipentaerythritol triester, valeric acid dipentaerythritol triester, caproic acid dipentaerythritol triester, caprylic acid dipentaerythritol triester, capric acid dipentaerythritol triester, lauric acid dipentaerythritol triester, myristic acid dipentaerythritol triester, palmitic acid dipentaerythritol triester, stearic acid dipentaerythritol triester, isostearic acid dipentaerythritol triester, oleic acid dipentaerythritol triester, behenic acid dipentaerythritol triester, cyclohexanecarboxylic acid dipentaerythritol triester, phenyl acetic acid dipentaerythritol triester, butyric acid dipentaerythritol tetraester, valeric acid dipentaerythritol tetraester, caproic acid dipentaerythritol tetraester, caprylic acid dipentaerythritol tetraester, capric acid dipentaerythritol tetraester, lauric acid dipentaerythritol tetraester, myristic acid dipentaerythritol tetraester, palmitic acid dipentaerythritol tetraester, stearic acid dipentaerythritol tetraester, isostearic acid dipentaerythritol tetraester, oleic acid dipentaerythritol tetraester, behenic acid dipentaerythritol tetraester, cyclohexanecarboxylic acid dipentaerythritol tetraester, phenyl acetic acid dipentaerythritol tetraester, and adducts thereof such as ethylene oxide adduct, propylene oxide adduct, and butyrolactone adduct and so on.

Of the surfactants represented by the general formula (309), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Examples of the surfactants wherein FG is represented by the general formula (310) include butyric acid glycerol monoester, valeric acid glycerol monoester, caproic acid glycerol monoester, caprylic acid glycerol monoester, capric acid glycerol monoester, lauric acid glycerol monoester, myristic acid glycerol monoester, palmitic acid glycerol monoester, stearic acid glycerol monoester, isostearic acid glycerol monoester, oleic acid glycerol monoester, behenic acid glycerol monoester, cyclohexanecarboxylic acid glycerol monoester, phenyl acetic acid glycerol monoester, glycerol butyl ether, glycerol pentyl ether, glycerol hexyl ether, glycerol heptyl ether, glycerol octyl ether, glycerol nonyl ether, glycerol decyl ether, glycerol undecyl ether, glycerol dodecyl ether, glycerol tridecyl tetradecyl ether, glycerol pentadecyl ether, glycerol hexadecyl ether, glycerol heptadecyl ether, glycerol octadecyl ether, glycerol nonadecyl ether, glycerol icosanyl ether, glycerol-butyloxyethyl ether, glycerol-pentyloxyethyl ether, glycerol-hexyloxyethyl ether, glycerol-heptyloxyethyl ether, glycerol-octyloxyethyl ether, glycerol-nonyloxyethyl ether, glycerol-decyloxyethyl ether, glycerol-undecyloxyethyl ether, glycerol-dodecyloxyethyl ether, glycerol-tridecyl tetradecyloxyethyl ether, glycerol-pentadecyloxyethyl ether, glycerol-hexadecyloxyethyl ether, glycerol-heptadecyloxyethyl ether, glycerol-octadecyloxyethyl ether, glycerol-nonadecyloxyethyl ether, glycerol-icosanyloxyethyl ether, butyric acid diglycerol monoester, valeric acid diglycerol monoester, caproic acid diglycerol monoester, caprylic acid diglycerol monoester, capric acid diglycerol monoester, lauric acid diglycerol monoester, myristic acid diglycerol monoester, palmitic acid diglycerol monoester, stearic acid diglycerol monoester, isostearic acid diglycerol monoester, oleic acid diglycerol monoester, behenic acid diglycerol monoester, cyclohexanecarboxylic acid diglycerol monoester, phenyl acetic acid diglycerol monoester, butyric acid thioglycerol monothioester, valeric acid thioglycerol monothioester, caproic acid thioglycerol monothioester, caprylic acid thioglycerol monothioester, capric acid thioglycerol monothioester, lauric acid thioglycerol monothioester, myristic acid thioglycerol monothioester, palmitic acid thioglycerol monothioester, stearic acid thioglycerol monothioester, isostearic acid thioglycerol monothioester, oleic acid thioglycerol monothioester, behenic acid thioglycerol monothioester, cyclohexanecarboxylic acid thioglycerol monothioester, phenyl acetic acid thioglycerol monothioester, 1-butyric acid amido-2,3-propanediol, 1-valeric acid amido-2,3-propanediol, 1-caproic acid amido-2,3-propanediol, 1-caprylic acid amido-2,3-propanediol, 1-capric acid amido-2,3-propanediol, 1-lauric acid amido-2,3-propanediol, 1-myristic acid amido-2,3-propanediol, 1-palmitic acid amido-2,3-propanediol, 1-stearic acid amido-2,3-propanediol, 1-isostearic acid amido-2,3-propanediol, 1-oleic acid amido-2,3-propanediol, 1-behenic acid amido-2,3-propanediol, 1-cyclohexanecarboxylic acid amido-2,3-propanediol, 1-phenyl acetic acid amido-2,3-propanediol, butyric acid sorbitol monoester, valeric acid sorbitol monoester, caproic acid sorbitol monoester, caprylic acid sorbitol monoester, capric acid sorbitol monoester, lauric acid sorbitol monoester, myristic acid sorbitol monoester, palmitic acid sorbitol monoester, stearic acid sorbitol monoester, isostearic acid sorbitol monoester, oleic acid sorbitol monoester, behenic acid sorbitol monoester, cyclohexanecarboxylic acid sorbitol monoester, phenyl acetic acid sorbitol monoester, butyric acid sorbitol diester, valeric acid sorbitol diester, caproic acid sorbitol diester, caprylic acid sorbitol diester, capric acid sorbitol diester, lauric acid sorbitol diester, myristic acid sorbitol diester, palmitic acid sorbitol diester, stearic acid sorbitol diester, isostearic acid sorbitol diester, oleic acid sorbitol diester, behenic acid sorbitol diester, cyclohexanecarboxylic acid sorbitol diester, phenyl acetic acid sorbitol diester, butyric acid mannitol monoester, valeric acid mannitol monoester, caproic acid mannitol monoester, caprylic acid mannitol monoester, capric acid mannitol monoester, lauric acid mannitol monoester, myristic acid mannitol monoester, palmitic acid mannitol monoester, stearic acid mannitol monoester, isostearic acid mannitol monoester, oleic acid mannitol monoester, behenic acid mannitol monoester, cyclohexanecarboxylic acid mannitol monoester, phenyl acetic acid mannitol monoester, butyric acid mannitol diester, valeric acid mannitol diester, caproic acid mannitol diester, caprylic acid mannitol diester, capric acid mannitol diester, lauric acid mannitol diester, myristic acid mannitol diester, palmitic acid mannitol diester, stearic acid mannitol diester, isostearic acid mannitol diester, oleic acid mannitol diester, behenic acid mannitol diester, cyclohexanecarboxylic acid mannitol diester, phenyl acetic acid mannitol diester, butyric acid mannitol triester, valeric acid mannitol triester, caproic acid mannitol triester, caprylic acid mannitol triester, capric acid mannitol triester, lauric acid mannitol triester, myristic acid mannitol triester, palmitic acid mannitol triester, stearic acid mannitol triester, isostearic acid mannitol triester, oleic acid mannitol triester, behenic acid mannitol triester, cyclohexanecarboxylic acid mannitol triester, phenyl acetic acid mannitol triester, butyric acid mannitol tetraester, valeric acid mannitol tetraester, caproic acid mannitol tetraester, caprylic acid mannitol tetraester, capric acid mannitol tetraester, lauric acid mannitol tetraester, myristic acid mannitol tetraester, palmitic acid mannitol tetraester, stearic acid mannitol tetraester, isostearic acid mannitol tetraester, oleic acid mannitol tetraester, behenic acid mannitol tetraester, cyclohexanecarboxylic acid mannitol tetraester, phenyl acetic acid mannitol tetraester, and adducts thereof such as ethylene oxide adduct, propylene oxide adduct, and butyrolactone adduct and so on.

Of the surfactants represented by the general formula (310), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Examples of the surfactants wherein FG is represented by the general formula (312) include butyric acid ribose, valeric acid ribose, caproic acid ribose, caprylic acid ribose, capric acid ribose, lauric acid ribose, myristic acid ribose, palmitic acid ribose, stearic acid ribose, isostearic acid ribose, oleic acid ribose, behenic acid ribose, cyclohexanecarboxylic acid ribose, phenyl acetic acid ribose, butyric acid ascorbic acid, valeric acid ascorbic acid, caproic acid ascorbic acid, caprylic acid ascorbic acid, capric acid ascorbic acid, lauric acid ascorbic acid, myristic acid ascorbic acid, palmitic acid ascorbic acid, stearic acid ascorbic acid, isostearic acid ascorbic acid, oleic acid ascorbic acid, behenic acid ascorbic acid, cyclohexanecarboxylic acid ascorbic acid, phenyl acetic acid ascorbic acid, butyric acid xylol, valeric acid xylol, caproic acid xylol, caprylic acid xylol, capric acid xylol, lauric acid xylol, myristic acid xylol, palmitic acid xylol, stearic acid xylol, isostearic acid xylol, oleic acid xylol, behenic acid xylol, cyclohexanecarboxylic acid xylol, phenyl acetic acid xylol, butyric acid sorbitan, valeric acid sorbitan, caproic acid sorbitan, caprylic acid sorbitan, capric acid sorbitan, lauric acid sorbitan, myristic acid sorbitan, palmitic acid sorbitan, stearic acid sorbitan, isostearic acid sorbitan, oleic acid sorbitan, behenic acid sorbitan, cyclohexanecarboxylic acid sorbitan, phenyl acetic acid sorbitan, butyric acid glucose, valeric acid glucose, caproic acid glucose, caprylic acid glucose, capric acid glucose, lauric acid glucose, myristic acid glucose, palmitic acid glucose, stearic acid glucose, isostearic acid glucose, oleic acid glucose, behenic acid glucose, cyclohexanecarboxylic acid glucose, phenyl acetic acid glucose, butyric acid glucono-1,5-lactone, valeric acid glucono-1,5-lactone, caproic acid glucono-1,5-lactone, caprylic acid glucono-1,5-lactone, capric acid glucono-1,5-lactone, lauric acid glucono-1,5-lactone, myristic acid glucono-1,5-lactone, palmitic acid glucono-1,5-lactone, stearic acid glucono-1,5-lactone, isostearic acid glucono-1,5-lactone, oleic acid glucono-1,5-lactone, behenic acid glucono-1,5-lactone, cyclohexanecarboxylic acid glucono-1,5-lactone, phenyl acetic acid glucono-1,5-lactone, and adducts thereof such as ethylene oxide adduct, propylene oxide adduct, and butyrolactone adduct, and the dehydration-condensed multimer thereof and so on.

Of the surfactants represented by the general formula (312), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Examples of the surfactants wherein FG is represented by the general formula (313) include butyric acid

sucrose, valeric acid sucrose, caproic acid sucrose, caprylic acid sucrose, capric acid sucrose, lauric acid sucrose, myristic acid sucrose, palmitic acid sucrose, stearic acid sucrose, isostearic acid sucrose, oleic acid sucrose, behenic acid sucrose, cyclohexanecarboxylic acid sucrose, phenyl acetic acid sucrose, and adducts thereof such as ethylene oxide adduct, propylene oxide adduct, and butyrolactone adduct, and the dehydration-condensed multimer thereof and so on.

Of the surfactants in which FG is represented by the general formula (313), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Of the surfactants in which FG is represented by any of the general formulas (309) to (313) and has two or more hydroxyl groups, those surfactants in which FG is represented by the general formula (310) or (312) are relatively preferable.

Examples of the groups FG including a cationic hydrophilic group include those hydrophilic groups represented by the general formulas (314) to (319) below.

[Chem. 72]

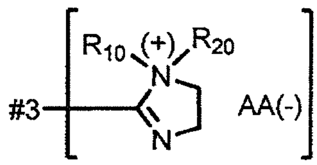

(3 1 4)

In the formula (314), AA(-) is a halogen ion, a formate ion, an acetate ion, a sulfate ion, a hydrogen sulfate ion, a phosphate ion or a hydrogen phosphate ion; $R_{10}$ and $R_{20}$ each independently represent a hydrogen atom, a $C_{1-4}$ alkyl group, a hydroxyl group or a $C_{1-4}$ hydroxyalkyl group; and #3 indicates a hand bonded to a carbon atom present in R in the formula (300) .

[Chem. 73]

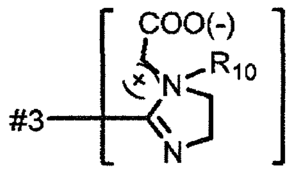

(3 1 5)

In the formula (315), $R_{10}$ represents a hydrogen atom, a $C_{1-4}$ alkyl group, a hydroxyl group or a $C_{1-4}$ hydroxyalkyl group; and #3 indicates a hand bonded to a carbon atom present in R in the formula (300).

[Chem. 74]

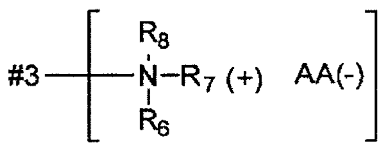

(3 1 6)

In the formula (316), AA(-) is a halogen ion, a formate ion, an acetate ion, a sulfate ion, a hydrogen sulfate ion, a phosphate ion or a hydrogen phosphate ion; $R_6$ to $R_8$ each independently represent a hydrogen atom, a $C_{1-20}$ alkyl, alkylaryl, alkylbenzyl, alkylcycloalkyl, alkylcycloalkylmethyl cycloalkyl group, a phenyl group or a benzyl group; and #3 indicates a hand bonded to a carbon atom present in R in the formula (300).

[Chem. 75]

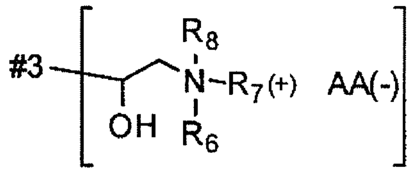

(3 1 7)

In the formula (317), AA(-) is a halogen ion, a formate ion, an acetate ion, a sulfate ion, a hydrogen sulfate ion, a phosphate ion or a hydrogen phosphate ion; $R_6$ to $R_8$ each independently represent a hydrogen atom, a $C_{1-20}$ alkyl, alkylaryl, alkylbenzyl, alkylcycloalkyl, alkylcycloalkylmethyl cycloalkyl group, a phenyl group or a benzyl group; and #3 indicates a hand bonded to a carbon atom present in R in the formula (300).

[Chem. 76]

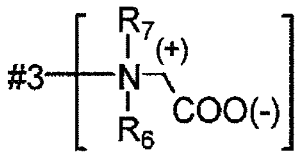

(3 1 8)

In the formula (318), $R_6$ and $R_7$ each independently represent a hydrogen atom, a $C_{1-20}$ alkyl, alkylaryl, alkylbenzyl, alkylcycloalkyl, alkylcycloalkylmethyl cycloalkyl group, a phenyl group or a benzyl group; and #3 indicates a hand bonded to R (a carbon atom present in R) in the formula (300).

[Chem. 77]

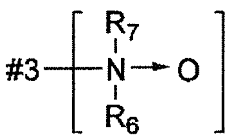

(3 1 9)

In the formula (319), $R_6$ and $R_7$ each independently represent a hydrogen atom, a $C_{1-20}$ alkyl, alkylaryl, alkylbenzyl, alkylcycloalkyl, alkylcycloalkylmethyl cycloalkyl group, a phenyl group or a benzyl group; and #3 indicates a hand bonded to a carbon atom present in R in the formula (300). In the formula (319), N→O indicates a group expressed as $N^+$-$O^-$ or N=O.

Examples of the surfactants wherein FG is represented by the general formula (314) include 2-octyl-N-hydroxyethyl-N-methyl-imidazoline chloride, 2-octyl-N-hydroxyethyl imidazoline chloride, 2-octyl-N-hydroxyethyl-N-ethyl-imidazoline chloride, 2-octyl-N-hydroxyethyl-N-propyl-imidazoline chloride, 2-octyl-N-hydroxyethyl-N-butyl-imidazoline chloride, 2-decyl-N-hydroxyethyl-N-methyl-imidazoline chloride, 2-decyl-N-hydroxyethyl imidazoline chloride, 2-decyl-N-hydroxyethyl-N-ethyl-imidazoline chloride, 2-decyl-N-hydroxyethyl-N-propyl-imidazoline chloride, 2-decyl-N-hydroxyethyl-N-butyl-imidazoline chloride, 2-dodecyl-N-hydroxyethyl-N-methyl-imidazoline chloride, 2-dodecyl-N-hydroxyethyl imidazoline chloride, 2-dodecyl-N-hydroxyethyl-N-ethyl-imidazoline chloride, 2-dodecyl-N-hydroxyethyl-N-propyl-imidazoline chloride, 2-dodecyl-N-hydroxyethyl-N-butyl-imidazoline chloride, 2-tetradecyl N-hydroxyethyl-N-methyl-imidazoline chloride, 2-tetradecyl N-hydroxyethyl imidazoline chloride, 2-tetradecyl N-hydroxyethyl-N-ethyl-imidazoline chloride, 2-tetradecyl N-hydroxyethyl-N-propyl-imidazoline chloride, 2-tetradecyl N-hydroxyethyl-N-butyl-imidazoline chloride, 2-octadecyl N-hydroxyethyl-N-methyl-imidazoline chloride, 2-octadecyl N-hydroxyethyl imidazoline chloride, 2-octadecyl N-hydroxyethyl-N-ethyl-imidazoline chloride, 2-octadecyl N-hydroxyethyl-N-propyl-imidazoline chloride, 2-octadecyl N-hydroxyethyl-N-butyl-imidazoline chloride, 2-icosanyl N-hydroxyethyl-N-methyl-imidazoline chloride, 2-icosanyl N-hydroxyethyl imidazoline chloride, 2-icosanyl N-hydroxyethyl-N-ethyl-imidazoline chloride, 2-icosanyl N-hydroxyethyl-N-propyl-imidazoline chloride, 2-icosanyl N-hydroxyethyl-N-butyl-imidazoline chloride, 2-octyl-N-hydroxyethyl-N-methyl-imidazoline bromide, 2-octyl-N-hydroxyethyl imidazoline bromide, 2-octyl-N-hydroxyethyl-N-ethyl-imidazoline bromide,

2-octyl-N-hydroxyethyl-N-propyl-imidazoline bromide, 2-octyl-N-hydroxyethyl-N-butyl-imidazoline bromide, 2-decyl-N-hydroxyethyl-N-methyl-imidazoline bromide, 2-decyl-N-hydroxyethyl imidazoline bromide, 2-decyl-N-hydroxyethyl-N-ethyl-imidazoline bromide, 2-decyl-N-hydroxyethyl-N-propyl-imidazoline bromide, 2-decyl-N-hydroxyethyl-N-butyl-imidazoline bromide, 2-dodecyl-N-hydroxyethyl-N-methyl-imidazoline bromide, 2-dodecyl-N-hydroxyethyl imidazoline bromide, 2-dodecyl-N-hydroxyethyl-N-ethyl-imidazoline bromide, 2-dodecyl-N-hydroxyethyl-N-propyl-imidazoline bromide, 2-dodecyl-N-hydroxyethyl-N-butyl-imidazoline bromide, 2-tetradodecyl-N-hydroxyethyl-N-methyl-imidazoline bromide, 2-tetradecyl N-hydroxyethyl imidazoline bromide, 2-tetradecyl N-hydroxyethyl-N-ethyl-imidazoline bromide, 2-tetradecyl N-hydroxyethyl-N-propyl-imidazoline bromide, 2-tetradecyl N-hydroxyethyl-N-butyl-imidazoline bromide, 2-octadecyl N-hydroxyethyl-N-methyl-imidazoline bromide, 2-octadecyl N-hydroxyethyl imidazoline bromide, 2-octadecyl N-hydroxyethyl-N-ethyl-imidazoline bromide, 2-octadecyl N-hydroxyethyl-N-propyl-imidazoline bromide, 2-octadecyl N-hydroxyethyl-N-butyl-imidazoline bromide, 2-icosanyl N-hydroxyethyl-N-methyl-imidazoline bromide, 2-icosanyl N-hydroxyethyl imidazoline bromide, 2-icosanyl N-hydroxyethyl-N-ethyl-imidazoline bromide, 2-icosanyl N-hydroxyethyl-N-propyl-imidazoline bromide, 2-icosanyl N-hydroxyethyl-N-butyl-imidazoline bromide, and adducts thereof such as ethylene oxide adduct, propylene oxide adduct, and caprolactone adduct and so on.

Of the surfactants in which FG is represented by the general formula (314), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Examples of the surfactants wherein FG is represented by the general formula (315) include 2-octyl-N-carboxymethyl-N-methyl-imidazolinium betaine, 2-octyl N-carboxymethyl-imidazolinium betaine, 2-octyl-N-carboxymethyl-N-ethyl-imidazolinium betaine, 2-octyl-N-carboxymethyl-N-propyl-imidazolinium betaine, 2-octyl-N-carboxymethyl-N-butyl-imidazolinium betaine, 2-octyl-N-carboxymethyl-N-hydroxy-imidazolinium betaine, 2-octyl-N-carboxymethyl-N-hydroxymethyl-imidazolinium betaine,

2-octyl-N-carboxymethyl-N-hydroxyethyl-imidazolinium betaine,

2-octyl-N-carboxymethyl-N-hydroxypropyl-imidazolinium betaine,

2-octyl-N-carboxymethyl-N-hydroxybutyl-imidazolinium betaine, 2-nonyl-N-carboxymethyl-N-methyl-imidazolinium betaine, 2-nonyl-N-carboxymethyl-imidazolinium betaine, 2-nonyl-N-carboxymethyl-N-ethyl-imidazolinium betaine, 2-nonyl-N-carboxymethyl-N-propyl-imidazolinium betaine, 2-nonyl-N-carboxymethyl-N-butyl-imidazolinium betaine, 2-nonyl-N-carboxymethyl-N-hydroxy-imidazolinium betaine, 2-nonyl-N-carboxymethyl-N-hydroxymethyl-imidazolinium betaine, 2-nonyl-N-carboxymethyl-N-hydroxyethyl-imidazolinium betaine,

2-nonyl-N-carboxymethyl-N-hydroxypropyl-imidazolinium betaine, 2-nonyl-N-carboxymethyl-N-hydroxybutyl-imidazolinium betaine, 2-decyl-N-carboxymethyl-N-methyl-imidazolinium betaine, 2-decyl-N-carboxymethyl-imidazolinium betaine, 2-decyl-N-carboxymethyl-N-ethyl-imidazolinium betaine, 2-decyl-N-carboxymethyl-N-propyl-imidazolinium betaine, 2-decyl-N-carboxymethyl-N-butyl-imidazolinium betaine, 2-decyl-N-carboxymethyl-N-hydroxy-imidazolinium betaine, 2-decyl-N-carboxymethyl-N-hydroxymethyl-imidazolinium betaine,

2-decyl-N-carboxymethyl-N-hydroxyethyl-imidazolinium betaine,

2-decyl-N-carboxymethyl-N-hydroxypropyl-imidazolinium betaine,

2-decyl-N-carboxymethyl-N-hydroxybutyl-imidazolinium betaine, 2-dodecyl-N-carboxymethyl-N-methyl-imidazolinium betaine, 2-dodecyl-N-carboxymethyl-imidazolinium betaine, 2-dodecyl-N-carboxymethyl-N-ethyl-imidazolinium betaine, 2-dodecyl-N-carboxymethyl-N-propyl-imidazolinium betaine, 2-dodecyl-N-carboxymethyl-N-butyl-imidazolinium betaine, 2-dodecyl-N-carboxymethyl-N-hydroxy-imidazolinium betaine, 2-dodecyl-N-carboxymethyl-N-hydroxymethyl-imidazolinium betaine,

2-dodecyl-N-carboxymethyl-N-hydroxyethyl-imidazolinium betaine,

2-dodecyl-N-carboxymethyl-N-hydroxypropyl-imidazolinium betaine,

2-dodecyl-N-carboxymethyl-N-hydroxybutyl-imidazolinium betaine,

2-tetradecyl-N-carboxymethyl-N-methyl-imidazolinium betaine, 2-tetradecyl-N-carboxymethyl-imidazolinium betaine, 2-tetradecyl-N-carboxymethyl-N-ethyl-imidazolinium betaine, 2-tetradecyl-N-carboxymethyl-N-propyl-imidazolinium betaine, 2-tetradecyl-N-carboxymethyl-N-butyl-imidazolinium betaine, 2-tetradecyl-N-carboxymethyl-N-hydroxy-imidazolinium betaine,

2-tetradecyl-N-carboxymethyl-N-hydroxymethyl-imidazolinium betaine,

2-tetradecyl-N-carboxymethyl-N-hydroxyethyl-imidazolinium betaine,

2-tetradecyl-N-carboxymethyl-N-hydroxypropyl-imidazolinium betaine,

2-tetradecyl-N-carboxymethyl-N-hydroxybutyl-imidazolinium betaine, 2-hexadecyl-N-carboxymethyl-N-methyl-imidazolinium betaine, 2-hexadecyl-N-carboxymethyl-imidazolinium betaine, 2-hexadecyl-N-carboxymethyl-N-ethyl-imidazolinium betaine, 2-hexadecyl-N-carboxymethyl-N-propyl-imidazolinium betaine, 2-hexadecyl-N-carboxymethyl-N-butyl-imidazolinium betaine, 2-hexadecyl-N-carboxymethyl-N-hydroxy-imidazolinium betaine, 2-hexadecyl-N-carboxymethyl-N-hydroxymethyl-imidazolinium betaine,
2-hexadecyl-N-carboxymethyl-N-hydroxyethyl-imidazolinium betaine,
2-hexadecyl-N-carboxymethyl-N-hydroxypropyl-imidazolinium betaine,

2-hexadecyl-N-carboxymethyl-N-hydroxybutyl-imidazolinium betaine, 2-octadecyl-N-carboxymethyl-N-methyl-imidazolinium betaine, 2-octadecyl-N-carboxymethyl-imidazolinium betaine, 2-octadecyl-N-carboxymethyl-N-ethyl-imidazolinium betaine, 2-octadecyl-N-carboxymethyl-N-propyl-imidazolinium betaine, 2-octadecyl-N-carboxymethyl-N-butyl-imidazolinium betaine, 2-octadecyl-N-carboxymethyl-N-hydroxy-imidazolinium betaine, 2-octadecyl-N-carboxymethyl-N-hydroxymethyl-imidazolinium betaine,
2-octadecyl-N-carboxymethyl-N-hydroxyethyl-imidazolinium betaine,
2-octadecyl-N-carboxymethyl-N-hydroxypropyl-imidazolinium betaine,
2-octadecyl-N-carboxymethyl-N-hydroxybutyl-imidazolinium betaine, and adducts thereof such as ethylene oxide adduct, propylene oxide adduct, caprolactone adduct, hydrogen halide adduct, carvone adduct, ammonia adduct, amine adduct, alkali metal hydroxide adduct, and alkaline-earth metal hydroxide adduct and so on.

Of the surfactants in which FG is represented by the general formula (315), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Examples of the surfactants wherein FG is represented by the general formula (316) include octyl-trimethylammonium chloride, nonyl-trimethylammonium chloride, decyl-trimethylammonium chloride, dodecyl-trimethylammonium chloride, tetradecyl-trimethylammonium chloride, hexadecyl-trimethylammonium chloride, octadecyl-trimethylammonium chloride, icosanyl-trimethylammonium chloride, octyl-benzyldimethylammonium chloride, nonyl-benzyldimethylammonium chloride, decyl-benzyldimethylammonium chloride, dodecyl-benzyldimethylammonium chloride, tetradecyl-benzyldimethylammonium chloride, hexadecyl-benzyldimethylammonium chloride, octadecyl-benzyldimethylammonium chloride, icosanyl-benzyldimethylammonium chloride, octyl-dodecyl dimethylammonium chloride, nonyl-dodecyl dimethylammonium chloride, decyl-dodecyl dimethylammonium chloride, dodecyl-dodecyl dimethylammonium chloride, tetradecyl-dodecyl dimethylammonium chloride, hexadecyl-dodecyl dimethylammonium chloride, octadecyl-dodecyl dimethylammonium chloride, icosanyl-dodecyl dimethylammonium chloride, octyl-octadecyl dimethylammonium chloride, nonyl-octadecyl dimethylammonium chloride, decyl-octadecyl dimethylammonium chloride, dodecyl-octadecyl dimethylammonium chloride, tetradecyl-octadecyl dimethylammonium chloride, hexadecyl-octadecyl dimethylammonium chloride, octadecyl-octadecyl dimethylammonium chloride, icosanyl-octadecyl dimethylammonium chloride, octyl-trimethylammonium bromide, nonyl-trimethylammonium bromide, decyl-trimethylammonium bromide, dodecyl-trimethylammonium bromide, tetradecyl-trimethylammonium bromide, hexadecyl-trimethylammonium bromide, octadecyl-trimethylammonium bromide, icosanyl-trimethylammonium bromide, octyl-benzyldimethylammonium bromide, nonyl-benzyldimethylammonium bromide, decyl-benzyldimethylammonium bromide, dodecyl-benzyldimethylammonium bromide, tetradecyl-benzyldimethylammonium bromide, hexadecyl-benzyldimethylammonium bromide, octadecyl-benzyldimethylammonium bromide, icosanyl-benzyldimethylammonium bromide, octyl-dodecyl dimethylammonium bromide, nonyl-dodecyl dimethylammonium bromide, decyl-dodecyl dimethylammonium bromide, dodecyl-dodecyl dimethylammonium bromide, tetradecyl-dodecyl dimethylammonium bromide, hexadecyl-dodecyl dimethylammonium bromide, octadecyl-dodecyl dimethylammonium bromide, icosanyl-dodecyl dimethylammonium bromide, octyl-octadecyl dimethylammonium bromide, nonyl-octadecyl dimethylammonium bromide, decyl-octadecyl dimethylammonium bromide, dodecyl-octadecyl dimethylammonium bromide, tetradecyl-octadecyl dimethylammonium bromide, hexadecyl-octadecyl dimethylammonium bromide, octadecyl-octadecyl dimethylammonium bromide, icosanyl-octadecyl dimethylammonium bromide, dibutyl-dimethyl-ammonium chloride, dipentyl-dimethyl-ammonium chloride, dihexyl-dimethyl-ammonium chloride, dipentyl-dimethyl-ammonium chloride, dioctyl-dimethyl-ammonium chloride, dinonyl-dimethyl-ammonium chloride, didecyl-dimethyl-ammonium chloride, diundecyl-dimethyl-ammonium chloride, ditridecyl-dimethyl-ammonium chloride, ditetradecyl-dimethyl-ammonium chloride, dipentadecyl-dimethyl-ammonium chloride, dihexadecyl-dimethyl-ammonium chloride, diheptadecyl-dimethyl-ammonium chloride, dioctadecyl-dimethyl-ammonium chloride, dinonadecyl-dimethyl-ammonium chloride, diicosanyl-dimethyl-ammonium chloride, dibutyl-dimethyl-ammonium bromide, dipentyl-dimethyl-ammonium bromide, dihexyl-dimethyl-ammonium bromide, dipentyl-dimethyl-ammonium bromide, dioctyl-dimethyl-ammonium bromide, dinonyl-dimethyl-ammonium bromide, didecyl-dimethyl-ammonium bromide, diundecyl-dimethyl-ammonium bromide, ditridecyl-dimethyl-ammonium bromide, ditetradecyl-dimethyl-ammonium bromide, dipentadecyl-dimethyl-ammonium bromide, dihexadecyl-dimethyl-ammonium bromide, diheptadecyl-dimethyl-ammonium bromide, dioctadecyl-dimethyl-ammonium bromide, dinonadecyl-dimethyl-ammonium bromide, diicosanyl-dimethyl-ammonium bromide and so on.

Of the surfactants in which FG is represented by the general formula (316), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are

still more preferable.

Examples of the surfactants wherein FG is represented by the general formula (317) include octyl-2-hydroxyethyl-trimethylammonium chloride, nonyl-2-hydroxyethyl-trimethylammonium chloride, decyl-2-hydroxyethyl-trimethylammonium chloride, dodecyl-2-hydroxyethyl-trimethylammonium chloride, tetradecyl-2-hydroxyethyl-trimethylammonium chloride, hexadecyl-2-hydroxyethyl-trimethylammonium chloride, octadecyl-2-hydroxyethyl-trimethylammonium chloride, icosanyl-2-hydroxyethyl-trimethylammonium chloride, octyl-2-hydroxyethyl-benzyldimethylammonium chloride, nonyl-2-hydroxyethyl-benzyldimethylammonium chloride, decyl-2-hydroxyethyl-benzyldimethylammonium chloride, dodecyl-2-hydroxyethyl-benzyldimethylammonium chloride, tetradecyl-2-hydroxyethyl-benzyldimethylammonium chloride, hexadecyl-2-hydroxyethyl-benzyldimethylammonium chloride, octadecyl-2-hydroxyethyl-benzyldimethylammonium chloride, icosanyl-2-hydroxyethyl-benzyldimethylammonium chloride, octyl-2-hydroxyethyl-cyclohexyl dimethylammonium chloride, nonyl-2-hydroxyethyl-cyclohexyl dimethylammonium chloride, decyl-2-hydroxyethyl-cyclohexyl dimethylammonium chloride, dodecyl-2-hydroxyethyl-cyclohexyl dimethylammonium chloride, tetradecyl-2-hydroxyethyl-cyclohexyl dimethylammonium chloride, hexadecyl-2-hydroxyethyl-cyclohexyl dimethylammonium chloride, octadecyl-2-hydroxyethyl-cyclohexyl dimethylammonium chloride, icosanyl-2-hydroxyethyl-cyclohexyl dimethylammonium chloride, octyl-2-hydroxyethyl-trimethylammonium bromide, nonyl-2-hydroxyethyl-trimethylammonium bromide, decyl-2-hydroxyethyl-trimethylammonium bromide, dodecyl-2-hydroxyethyl-trimethylammonium bromide, tetradecyl-2-hydroxyethyl-trimethylammonium bromide, hexadecyl-2-hydroxyethyl-trimethylammonium bromide, octadecyl-2-hydroxyethyl-trimethylammonium bromide, icosanyl-2-hydroxyethyl-trimethylammonium bromide, octyl-2-hydroxyethyl-benzyldimethylammonium bromide, nonyl-2-hydroxyethyl-benzyldimethylammonium bromide, decyl-2-hydroxyethyl-benzyldimethylammonium bromide, dodecyl-2-hydroxyethyl-benzyldimethylammonium bromide, tetradecyl-2-hydroxyethyl-benzyldimethylammonium bromide, hexadecyl-2-hydroxyethyl-benzyldimethylammonium bromide, octadecyl-2-hydroxyethyl-benzyldimethylammonium bromide, icosanyl-2-hydroxyethyl-benzyldimethylammonium bromide, octyl-2-hydroxyethyl-cyclohexyl dimethylammonium bromide, nonyl-2-hydroxyethyl-cyclohexyl dimethylammonium bromide, decyl-2-hydroxyethyl-cyclohexyl dimethylammonium bromide, dodecyl-2-hydroxyethyl-cyclohexyl dimethylammonium bromide, tetradecyl-2-hydroxyethyl-cyclohexyl dimethylammonium bromide, hexadecyl-2-hydroxyethyl-cyclohexyl dimethylammonium bromide, octadecyl-2-hydroxyethyl-cyclohexyl dimethylammonium bromide, icosanyl-2-hydroxyethyl-cyclohexyl dimethylammonium bromide and so on.

Of the surfactants in which FG is represented by the general formula (317), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Examples of the surfactants wherein FG is represented by the general formula (318) include butyl-dimethyl betaine, pentyl-dimethyl betaine, hexyl-dimethyl betaine, heptyl-dimethyl betaine, octyl-dimethyl betaine, nonyl-dimethyl betaine, decyl-dimethyl betaine, undecyl-dimethyl betaine, dodecyl-dimethyl betaine, tetradecyl-dimethyl betaine, tridecyl-dimethyl betaine, pentadecyl-dimethyl betaine, hexadecyl-dimethyl betaine, heptadecyl-dimethyl betaine, octadecyl-dimethyl betaine, nonadecyl-dimethyl betaine, icosanyl-dimethyl betaine, butyl-benzylmethyl betaine, pentyl-benzylmethyl betaine, hexyl-benzylmethyl betaine, heptyl-benzylmethyl betaine, octyl-benzylmethyl betaine, nonyl-benzylmethyl betaine, decyl-benzylmethyl betaine, undecyl-benzylmethyl betaine, dodecyl-benzylmethyl betaine, tridecyl benzylmethyl betaine, tetradecyl benzylmethyl betaine, pentadecyl-benzylmethyl betaine, hexadecyl-benzylmethyl betaine, heptadecyl-benzylmethyl betaine, octadecyl-benzylmethyl betaine, nonadecyl-benzylmethyl betaine, icosanyl-benzylmethyl betaine, butyl-cyclohexyl methyl betaine, pentyl-cyclohexyl methyl betaine, hexyl-cyclohexyl methyl betaine, heptyl-cyclohexyl methyl betaine, octyl-cyclohexyl methyl betaine, nonyl-cyclohexyl methyl betaine, decyl-cyclohexyl methyl betaine, undecyl-cyclohexyl methyl betaine, dodecyl-cyclohexyl methyl betaine, tridecyl cyclohexyl methyl betaine, tetradecyl cyclohexyl methyl betaine, pentadecyl-cyclohexyl methyl betaine, hexadecyl-cyclohexyl methyl betaine, heptadecyl-cyclohexyl methyl betaine, octadecyl-cyclohexyl methyl betaine, nonadecyl-cyclohexyl methyl betaine, icosanyl-cyclohexyl methyl betaine, butyl-dodecyl methyl betaine, pentyl-dodecyl methyl betaine, hexyl-dodecyl methyl betaine, heptyl-dodecyl methyl betaine, octyl-dodecyl methyl betaine, nonyl-dodecyl methyl betaine, decyl-dodecyl methyl betaine, undecyl-dodecyl methyl betaine, dodecyl-dodecyl methyl betaine, tridecyl dodecyl methyl betaine, tetradecyl dodecyl methyl betaine, pentadecyl-dodecyl methyl betaine, hexadecyl-dodecyl methyl betaine, heptadecyl-dodecyl methyl betaine, octadecyl-dodecyl methyl betaine, nonadecyl-dodecyl methyl betaine, icosanyl-dodecyl methyl betaine, and adducts thereof such as hydrogen halide adduct, carvone adduct, ammonia adduct, amine adduct, alkali metal hydroxide adduct, and alkaline-earth metal hydroxide adduct and so on.

Of the surfactants in which FG is represented by the general formula (318), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Examples of the surfactants wherein FG is represented by the general formula (319) include butyl-dimethylamine oxide, pentyl-dimethylamine oxide, hexyl-dimethylamine oxide, heptyl-dimethylamine oxide, octyl-dimethylamine oxide,

nonyl-dimethylamine oxide, decyl-dimethylamine oxide, undecyl-dimethylamine oxide, dodecyl-dimethylamine oxide, tetradecyl-dimethylamine oxide, tridecyl-dimethylamine oxide, pentadecyl-dimethylamine oxide, hexadecyl-dimethylamine oxide, heptadecyl-dimethylamine oxide, octadecyl-dimethylamine oxide, nonadecyl-dimethylamine oxide, icosanyl-dimethylamine oxide, butyl-benzylmethylamine oxide, pentyl-benzylmethylamine oxide, hexyl-benzylmethylamine oxide, heptyl-benzylmethylamine oxide, octyl-benzylmethylamine oxide, nonyl-benzylmethylamine oxide, decyl-benzylmethylamine oxide, undecyl-benzylmethylamine oxide, dodecyl-benzylmethylamine oxide, tridecyl benzylmethylamine oxide, tetradecyl benzylmethylamine oxide, pentadecyl-benzylmethylamine oxide, hexadecyl-benzylmethylamine oxide, heptadecyl-benzylmethylamine oxide, octadecyl-benzylmethylamine oxide, nonadecyl-benzylmethylamine oxide, icosanyl-benzylmethylamine oxide, butyl-cyclohexyl methylamine oxide, pentyl-cyclohexyl methylamine oxide, hexyl-cyclohexyl methylamine oxide, heptyl-cyclohexyl methylamine oxide, octyl-cyclohexyl methylamine oxide, nonyl-cyclohexyl methylamine oxide, decyl-cyclohexyl methylamine oxide, undecyl-cyclohexyl methylamine oxide, dodecyl-cyclohexyl methylamine oxide, tridecyl cyclohexyl methylamine oxide, tetradecyl cyclohexyl methylamine oxide, pentadecyl-cyclohexyl methylamine oxide, hexadecyl-cyclohexyl methylamine oxide, heptadecyl-cyclohexyl methylamine oxide, octadecyl-cyclohexyl methylamine oxide, nonadecyl-cyclohexyl methylamine oxide, icosanyl-cyclohexyl methylamine oxide, butyl-dodecyl methylamine oxide, pentyl-dodecyl methylamine oxide, hexyl-dodecyl methylamine oxide, heptyl-dodecyl methylamine oxide, octyl-dodecyl methylamine oxide, nonyl-dodecyl methylamine oxide, decyl-dodecyl methylamine oxide, undecyl-dodecyl methylamine oxide, dodecyl-dodecyl methylamine oxide, tridecyl dodecyl methylamine oxide, tetradecyl dodecyl methylamine oxide, pentadecyl-dodecyl methylamine oxide, hexadecyl-dodecyl methylamine oxide, heptadecyl-dodecyl methylamine oxide, octadecyl-dodecyl methylamine oxide, nonadecyl-dodecyl methylamine oxide, icosanyl-dodecyl methylamine oxide and so on.

Of the surfactants in which FG is represented by the general formula (319), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Of the cationic surfactants in which FG is represented by any of the general formulas (314) to (319), those surfactants in which FG is represented by the general formula (316) or (318) are relatively preferable.

The composition of the invention contains the surfactant (III) usually in the range of 0.0001 to 50 wt%, preferably in the range of 0.001 to 20 wt%, and more preferably in the range of 0.01 to 10 wt% relative to the total of the compound (I) and the compound (II). This amount of the surfactant (III) in the composition ensures that the hydrophilic groups derived from the compound (I) will be easily concentrated at the surface of a cured product formed by the polymerization of the composition. When, for example, the cured product is a monolayer film, the enrichment of the hydrophilic groups at the surface is facilitated.

The surfactants (III) may be used singly, or two or more may be used in combination.

The compound (IV) has a siloxane bond and a molecular weight of 200 to 1000,000. (The compound has no polymerizable carbon-carbon double bonds, and does not belong to the compounds (I) and (II).) When the composition contains such a compound (IV), the surface of the composition in contact with the air comes to have a decreased surface energy to make it possible to enhance the leveling properties (the surface smoothness) of cured products of the composition, for example, monolayer films.

Of the compounds (IV), those compounds represented by the general formula (200) below are preferable.

[Chem. 78]

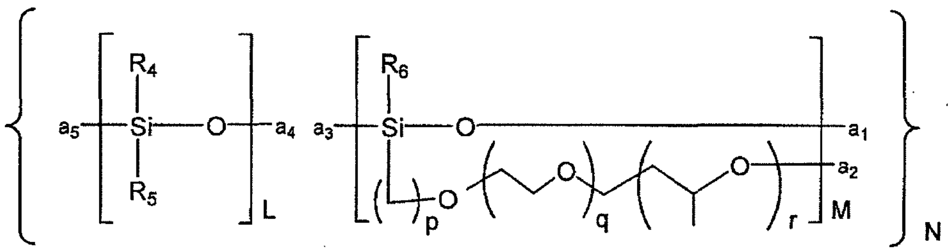

(200)

In the formula (200), L and M indicate a ratio (a molar ratio) of the units; L is 0 to 0.99; M is 0.1 to 1.00; L + M = 1.00; N indicates the total number of the two types of groups that are enclosed in the square brackets with the letters L and M, and is an integer of 1 to 10000; p is an integer of 1 to 30; q and r are each independently an integer of 0 to 10000; and $R_4$ to $R_6$ each independently represent a hydrogen atom, a $C_{1-10}$ alkyl group or a phenyl group.

In the formula (200), $a_1$, $a_2$ and $a_4$ each independently represent a hydrogen atom, a $C_{1-10}$ alkyl group, a phenyl group, a hand bonded to $a_5$ or a hand bonded to $a_3$; and when $a_1$, $a_2$ or $a_4$ is a terminal of the compound (I), it is each independently a hydrogen atom, a $C_{1-10}$ alkyl group or a phenyl group.

In the formula (200), $a_3$ and $a_5$ each independently represent a hydrogen atom, a hydroxyl group, a $C_{1-10}$ alkyl group, a phenyl group, a $C_{1-10}$ alkoxy group, a phenyloxy group, a hand bonded to $a_1$, a hand bonded to $a_2$ or a hand bonded to $a_4$; and when $a_3$ or $a_5$ is a terminal of the compound (I), it is each independently a hydrogen atom, a hydroxyl group, a $C_{1-10}$ alkyl group, a phenyl group, a $C_{1-10}$ alkoxy group or a phenyloxy group.

Examples of the compounds represented by the general formula (200) include polycondensation product of dimethyldimethoxysilane and poly(ethyleneoxy)propyl-methyl-dimethoxysilane, polycondensation product of dimethyldimethoxysilane and poly(propyleneoxy)propyl-methyl-dimethoxysilane, polycondensation product of dimethyldimethoxysilane and poly(butyleneoxy)propyl-methyl-dimethoxysilane, polycondensation product of dimethyldimethoxysilane and poly(hexyleneoxy)propyl-methyl-dimethoxysilane, polycondensation product of dimethyldimethoxysilane and poly(propyleneoxy)poly(ethyleneoxy)propyl-methyl-dimethoxy silane, polycondensation product of diethyldiethoxysilane and poly(ethyleneoxy)propyl-methyl-dimethoxysilane, polycondensation product of diethyldiethoxysilane and poly(propyleneoxy)propyl-methyl-dimethoxysilane, polycondensation product of diethyldiethoxysilane and poly(butyleneoxy)propyl-methyl-dimethoxysilane, polycondensation product of diethyldiethoxysilane and poly(hexyleneoxy)propyl-methyl-dimethoxysilane, polycondensation product of diethyldiethoxysilane and poly(propyleneoxy)poly(ethyleneoxy)propyl-methyl-dimethoxy silane, polycondensation product of diethyldiethoxysilane and poly(ethyleneoxy)propyl-methyl-diethoxysilane, polycondensation product of diethyldiethoxysilane and poly(propyleneoxy)propyl-methyl-diethoxysilane, polycondensation product of diethyldiethoxysilane and poly(butyleneoxy)propyl-methyl-diethoxysilane, polycondensation product of diethyldiethoxysilane and poly(hexyleneoxy)propyl-methyl-diethoxysilane, polycondensation product of diethyldiethoxysilane and poly(propyleneoxy)poly(ethyleneoxy)propyl-methyl-diethoxys ilane; polycondensation product of phenylmethyldimethoxysilane and poly(ethyleneoxy)propyl-methyl-dimethoxysilane, polycondensation product of phenylmethyldimethoxysilane and poly(propyleneoxy)propyl-methyl-dimethoxysilane, polycondensation product of phenylmethyldimethoxysilane and poly(butyleneoxy)propyl-methyl-dimethoxysilane, polycondensation product of phenylmethyldimethoxysilane and poly(hexyleneoxy)propyl-methyl-dimethoxysilane, polycondensation product of phenylmethyldimethoxysilane and poly(propyleneoxy)poly(ethyleneoxy)propyl-methyl-dimethoxy silane; polycondensation product of dimethyldimethoxysilane and poly(ethyleneoxy)propyl-phenyldimethoxysilane, polycondensation product of dimethyldimethoxysilane and poly(propyleneoxy)propyl-phenyldimethoxysilane, polycondensation product of dimethyldimethoxysilane and poly(butyleneoxy)propyl-phenyldimethoxysilane, polycondensation product of dimethyldimethoxysilane and poly(hexyleneoxy)propyl-phenyldimethoxysilane, polycondensation product of dimethyldimethoxysilane and poly(propyleneoxy)poly(ethyleneoxy)propyl-phenyldimethoxys ilane; polycondensation product of dimethyldimethoxysilane and poly(ethyleneoxy)ethyl-methyldimethoxysilane, polycondensation product of dimethyldimethoxysilane and poly(propyleneoxy)ethyl-methyldimethoxysilane, polycondensation product of dimethyldimethoxysilane and poly(butyleneoxy)ethyl-methyldimethoxysilane, polycondensation product of dimethyldimethoxysilane and poly(hexyleneoxy)ethyl-methyldimethoxysilane, polycondensation product of dimethyldimethoxysilane and poly(propyleneoxy)poly(ethyleneoxy)ethyl-methyldimethoxysi lane; polycondensation product of dimethyldimethoxysilane and poly(ethyleneoxy)propyl-butyldimethoxysilane, polycondensation product of dimethyldimethoxysilane and poly(propyleneoxy)propyl-butyldimethoxysilane, polycondensation product of dimethyldimethoxysilane and poly(butyleneoxy)propyl-butyldimethoxysilane, polycondensation product of dimethyldimethoxysilane and poly(hexyleneoxy)propyl-butyldimethoxysilane, polycondensation product of dimethyldimethoxysilane and poly(propyleneoxy)poly(ethyleneoxy)propyl-butyldimethoxysi lane and so on.

The compounds (IV) may be used singly, or two or more may be used in combination.

The composition of the invention contains at least one compound selected from the surfactants (III) (typically the compounds (III')) and the compounds (IV) usually in the range of 0.0001 to 50 wt% relative to the total of the compound (I) and the compound (II). This amount of the surfactant (III) (typically the compound (III')) or the compound (IV) ensures that cured products obtained from the composition will exhibit higher hydrophilicity and enhanced leveling properties (surface smoothness).

The leveling properties tend to be enhanced more efficiently with increasing amounts of the surfactants (III) (typically the compounds (III')) and the compounds (IV). However, adding these compounds in an excessively large amount often results in a decrease in the transparency of the obtainable cured products. To achieve an enhancement in leveling properties while maintaining high transparency, the at least one compound selected from the surfactants (III) (typically the compounds (III')) and the compounds (IV) is preferably added in an amount in the range of 0.001 to 20 wt%, and more preferably in the range of 0.01 to 10 wt% relative to the total of the compound (I) and the compound (II).

In a preferred embodiment of the composition of the invention, the surfactant (III) (typically the compound (III')) and the compound (IV) are used in combination in order to enhance leveling properties while maintaining hydrophilicity and transparency.

When the composition of the invention contains both the surfactant (III) (typically the compound (III')) and the

compound (IV), the amount of the surfactant (III) is preferably in the range of 0.001 to 20 wt%, and more preferably in the range of 0.01 to 10 wt% relative to the total of the compound (I) and the compound (II).

When the composition of the invention contains both the surfactant (III) (typically the compound (III')) and the compound (IV), the amount of the compound (IV) is preferably in the range of 0.001 to 10 wt%, and more preferably in the range of 0.005 to 5 wt% relative to the total of the compound (I) and the compound (II).

[Additional components]

The composition of the invention may further contain additional components as required.

Examples of the additional components include silica particles (V). The silica particles (V) enhance the leveling properties of the inventive composition and impart matte effects (control the gloss).

In the composition of the invention, the silica particles (V) are usually present in the range of 0.00001 to 50 wt%, preferably in the range of 0.0001 to 30 wt%, more preferably 0.001 to 20 wt%, and still more preferably in the range of 0.001 to 15 mass% relative to the total of the compound (I) and the compound (II).

Examples of the additional components other than the silica particles (V) which may be added to the inventive composition include such additives as polymerization initiators, polymerization accelerators, UV absorbers, hindered amine light stabilizers (HALSs), solvents, catalysts, infrared absorbers, radical scavengers, internal mold release agents, antioxidants, polymerization inhibitors, dyes, binders, dispersants and leveling agents.

For the production of hydrophilic cured products of the invention, for example, monolayer films from the composition, the composition is polymerized. When the composition is polymerized with radiations such as UV lights, a photopolymerization initiator is added to the mixture. In the case of thermal polymerization, a thermal polymerization initiator is added.

Examples of the photopolymerization initiators include photo radical polymerization initiators, photo cationic polymerization initiators and photo anionic polymerization initiators. Of these photopolymerization initiators, photo radical polymerization initiators are preferable.

Examples of the photo radical polymerization initiators include IRGACURE 127 (manufactured by Ciba Specialty Chemicals Inc.), IRGACURE 651 (manufactured by Ciba Specialty Chemicals Inc.), IRGACURE 184 (manufactured by Ciba Specialty Chemicals Inc.), DAROCUR 1173 (manufactured by Ciba Specialty Chemicals, Inc.), benzophenone, 4-phenylbenzophenone, IRGACURE 500 (manufactured by Ciba Specialty Chemicals Inc.), IRGACURE 2959 (manufactured by Ciba Specialty Chemicals Inc.), IRGACURE 907 (manufactured by Ciba Specialty Chemicals Inc.), IRGACURE 369 (manufactured by Ciba Specialty Chemicals Inc.), IRGACURE 1300 (manufactured by Ciba Specialty Chemicals Inc.), IRGACURE 819 (manufactured by Ciba Specialty Chemicals Inc.), IRGACURE 1800 (manufactured by Ciba Specialty Chemicals Inc.), DAROCUR TPO (manufactured by Ciba Specialty Chemicals Inc.), DAROCUR 4265 (manufactured by Ciba Specialty Chemicals Inc.), IRGACURE OXE01 (manufactured by Ciba Specialty Chemicals, Inc.), IRGACURE OXE02 (manufactured by Ciba Specialty Chemicals Inc.), ESACURE KT55 (manufactured by Lamberti S.P.A.), ESACURE ONE (manufactured by Lamberti S.P.A.), ESACURE KIP150 (manufactured by Lamberti S.P.A.), ESACURE KIP100F (manufactured by Lamberti S.P.A.), ESACURE KT37 (manufactured by Lamberti S.P.A.), ESACURE KTO46 (manufactured by Lamberti S.P.A.), ESACURE 1001M (manufactured by Lamberti S.P.A.), ESACURE KIP/EM (manufactured by Lamberti S.P.A.), ESACURE DP250 (manufactured by Lamberti S.P.A.), ESACURE KB1 (manufactured by Lamberti S.P.A.) and 2,4-diethylthioxanthone.

Of the above photo polymerization initiators, for example, IRGACURE 127 (manufactured by Ciba Specialty Chemicals Inc.), IRGACURE 184 (manufactured by Ciba Specialty Chemicals Inc.), DAROCUR 1173 (manufactured by Ciba Specialty Chemicals Inc.), IRGACURE 500 (manufactured by Ciba Specialty Chemicals Inc.), IRGACURE 819 (manufactured by Ciba Specialty Chemicals Inc.), DAROCUR TPO (manufactured by Ciba Specialty Chemicals Inc.), ESACURE ONE (manufactured by Lamberti S.P.A.), ESACURE KIP100F (manufactured by Lamberti S.P.A.), ESACURE KT37 (manufactured by Lamberti S.P.A.) and ESACURE KTO46 (manufactured by Lamberti S.P.A.) are preferable.

Examples of the photo cationic polymerization initiators include IRGACURE 250 (manufactured by Ciba Specialty Chemicals Inc.), IRGACURE 784 (manufactured by Ciba Specialty Chemicals Inc.), ESACURE 1064 (manufactured by Lamberti S.P.A.), CYRAURE UVI6990 (manufactured by Union Carbide Corp. Japan), ADEKA OPTOMER SP-172 (manufactured by ADEKA CORPORATION), ADEKA OPTOMER SP-170 (manufactured by ADEKA CORPORATION), ADEKA OPTOMER SP-152 (manufactured by ADEKA CORPORATION) and ADEKA OPTOMER SP-150 (manufactured by ADEKA CORPORATION).

Examples of the thermal polymerization initiators include:

ketone peroxides such as methyl isobutyl ketone peroxide and cyclohexanone peroxide;
diacyl peroxides such as isobutyryl peroxide, o-chlorobenzoyl peroxide and benzoyl peroxide;
dialkyl peroxides such as tris(t-butylperoxy)triazine and t-butylcumyl peroxide;
peroxyketals such as 2,2-bis(4,4-di-t-butylperoxycyclohexyl)propane and 2,2-di(t-butylperoxy)butane;

alkyl peresters such as α-cumyl peroxyneodecanoate, t-butyl peroxypivalate, 2,4,4-trimethylpentyl peroxy-2-ethylhexanoate, t-butyl peroxy-2-ethylhexanoate and t-butyl peroxy-3,5,5-trimethylhexanoate; and

percarbonates such as di-3-methoxybutyl peroxydicarbonate, bis(4-t-butylcyclohexyl) peroxydicarbonate, t-butyl peroxyisopropyl carbonate and diethylene glycol bis(t-butyl peroxycarbonate).

The amount of the photopolymerization initiators and the thermal polymerization initiators is preferably in the range of 0.1 to 20 wt%, more preferably in the range of 0.5 to 10 wt%, and still more preferably in the range of 1 to 5 wt% relative to the total of the compounds (I) and (II).

The photopolymerization initiators may be used in combination with photopolymerization accelerators. Examples of the photopolymerization accelerators include 2,2-bis(2-chlorophenyl)-4,5'-tetraphenyl-2'H-<1,2'>biimida zolyl, tris(4-dimethylaminophenyl)methane, 4,4'-bis(dimethylamino)benzophenone, 2-ethylanthraquinone and camphorquinone.

To ensure that the inventive hydrophilic cured products, for example, monolayer films used as, for example, antifouling materials or antifogging materials will not be denatured even by prolonged exposure to the outdoor, it is desirable to impart weather resistance to the composition of the invention by the addition of a UV absorber and/or a hindered amine light stabilizer.

The UV absorbers are not particularly limited. Various UV absorbers may be used, with examples including benzotriazole UV absorbers, triazine UV absorbers, benzophenone UV absorbers, benzoate UV absorbers, propanedioate ester UV absorbers and oxanilide UV absorbers.

Examples of the UV absorbers include benzotriazole UV absorbers such as 2-(2H-benzotriazol-2-yl)-p-cresol, 2-(2H-benzotriazol-2-yl)-4-tert-butylphenol, 2-(2H-benzotriazol-2-yl)-4,6-di-tert-butylphenol, 2-(2H-benzotriazol-2-yl)-4,6-bis(1-methyl-1-phenylethyl)ph enol,

2-(2H-benzotriazol-2-yl)-4-(1,1,3,3-tetramethylbutyl)-6-(1 -methyl-1-phenylethyl)phenol,

2-(2H-benzotriazol-2-yl)-4-(3-on-4-oxa-dodecyl)-6-tert-but yl-phenol,

2-{5-chloro(2H)-benzotriazol-2-yl}-4-(3-on-4-oxa-dodecyl)-6-tert-butyl-phenol,

2-{5-chloro(2H)-benzotriazol-2-yl}-4-methyl-6-tert-butyl-p henol, 2-(2H-benzotriazol-2-yl)-4,6-di-tert-pentylphenol, 2-(5-chloro(2H)-benzotriazol-2-yl}-4,6-di-tert-butylphenol, 2-(2H-benzotriazol-2-yl)-4-tert-octylphenol, 2-(2H-benzotriazol-2-yl)-4-methyl-6-n-dodecylphenol, and methyl-3-{3-(2H-benzotriazol-2-yl)-5-tert-butyl-4-hydroxyp henyl} propionate/polyethylene glycol 300 reaction product;

triazine UV absorbers such as 2-(4-phenoxy-2-hydroxy-phenyl)-4,6-diphenyl-1,3,5-triazine, 2-(2-hydroxy-4-oxa-hexadecyloxy)-4,6-di(2,4-dimethyl-pheny l)-1,3,5-triazine, 2-(2-hydroxy-4-oxa-heptadecyloxy)-4,6-di(2,4-dimethyl-phen yl)-1,3,5-triazine, 2-(2-hydroxy-4-iso-octyloxy-phenyl)-4,6-di(2,4-dimethyl-ph enyl)-1,3,5-triazine, TINUVIN 400 (trade name, manufactured by Ciba Specialty Chemicals, Inc.), TINUVIN 405 (trade name, manufactured by Ciba Specialty Chemicals, Inc.), TINUVIN 460 (trade name, manufactured by Ciba Specialty Chemicals, Inc.) and TINUVIN 479 (trade name, manufactured by Ciba Specialty Chemicals, Inc.);

benzophenone UV absorbers such as 2-hydroxy-4-n-octoxybenzophenone;

benzoate UV absorbers such as 2,4-di-tert-butylphenyl-3,5-di-tert-butyl-4-hydroxybenzoat e;

propanedioate ester UV absorbers such as {(4-methoxyphenyl)-methylene}-dimethyl propanedioate ester, HOSTAVIN PR-25 (trade name, manufactured by Clariant (Japan) K.K.) and HOSTAVIN B-CAP (trade name, manufactured by Clariant (Japan) K.K.); and

oxanilide UV absorbers such as 2-ethyl-2'-ethoxy-oxanilide and Sanduvor VSU (trade name, manufactured by Clariant (Japan) K.K.). Of these UV absorbers, triazine UV absorbers tend to be preferable.

The hindered amine light stabilizers (written as HALSs) are a general term for compounds which usually have a 2,2,6,6-tetramethylpiperidine skeleton, and are broadly categorized according to molecular weight into low-molecular weight HALSs, medium-molecular weight HALSs, high-molecular weight HALSs and reactive HALSs. Examples of the hindered amine light stabilizers include TINUVIN 111FDL (trade name, (manufactured by Ciba Specialty Chemicals Inc.), bis(1-octyloxy-2,2,6,6-tetramethyl-4-piperidyl) sebacate (TINUVIN 123 (trade name, manufactured by Ciba Specialty Chemicals Inc.)), TINUVIN 144 (trade name, manufactured by Ciba Specialty Chemicals Inc.), TINUVIN 292 (trade name, manufactured by Ciba Specialty Chemicals Inc.), TINUVIN 765 (trade name, manufactured by Ciba Specialty Chemicals Inc.), TINUVIN 770 (trade name, manufactured by Ciba Specialty Chemicals Inc.),

N,N'-bis(3-aminopropyl)ethylenediamine-2,4-bis[N-butyl-N-( 1,2,2,6,6-pentamethyl-4-piperidyl)amino]-6-chloro-1,3,5-triazine condensate (CHIMASSORB 119FL (trade name, manufactured by Ciba Specialty Chemicals Inc.)), CHIMASSORB 2020FDL (trade name, manufactured by Ciba Specialty Chemicals Inc.), dimethyl succinate-1-(2-hydroxyethyl)-4-hydroxy-2,2,6,6-tetramethyl piperidine polycondensate (CHIMASSORB 622LD (trade name, manufactured by Ciba Specialty Chemicals Inc.)), poly[{6-(1,1,3,3-tetramethyl-butyl)amino-1,3,5-triazine-2, 4-diyl}{(2,2,6,6-tetramethyl-4-piperidyl)imino}hexamethyle ne{(2,2,6,6-tetramethyllauryl-4-piperidyl)imino}] (CHIMASSORB 944FD (trade name, manufactured by Ciba Specialty Chemicals Inc.)), Sanduvor 3050 Liq. (trade name, manufactured by Clariant (Japan) K.K.), Sanduvor 3052 Liq. (trade name, (manufactured by Clariant (Japan) K.K.), Sanduvor 3058 Liq. (trade name, manufactured by Clariant (Japan) K.K.), Sanduvor 3051 Powder. (trade name, manufactured by Clariant (Japan) K.K.), Sanduvor 3070 Powder. (trade name, manufactured by Clariant (Japan) K.K.), VP Sanduvor PR-31 (trade name, manufactured by Clariant (Japan) K.K.), HOSTAVIN N20 (trade name, manufactured by Clariant (Japan) K.K.), HOSTAVIN N24 (trade name, manufactured by Clariant (Japan) K.K.), HOSTAVIN N30 (trade name, manufactured by Clariant (Japan) K.K.), HOSTAVIN N321 (trade name, manufactured by Clariant (Japan) K.K.), HOSTAVIN PR-31 (trade name, manufactured by Clariant (Japan) K.K.), HOSTAVIN 845 (trade name, manufactured by Clariant (Japan) K.K.) and NYLOSTAB S-EED (trade name, manufactured by Clariant (Japan) K.K.).

The UV absorber and the hindered amine light stabilizer may be added in any amounts without limitation. The amount of the UV absorber is usually 0.1 to 20 wt%, and preferably 0.5 to 10 wt%, and the amount of the hindered amine light stabilizer is usually 0.1 to 10 wt%, preferably 0.5 to 5 wt%, and more preferably 1 to 3 wt% relative to the total of the compounds (I) and (II). These amounts of the UV absorber and the hindered amine light stabilizer ensure that the composition of the invention will give hydrophilic cured products, for example, monolayer films that exhibit markedly improved weather resistance. The UV absorber and the hindered amine light stabilizer added in amounts below the above ranges tend to produce only small effects in the enhancement of the weather resistance of the obtainable hydrophilic cured products, for example, monolayer films. On the other hand, adding the UV absorber and the hindered amine light stabilizer in amounts exceeding the above ranges may result in insufficient polymerization of the monomer composition.

When the composition of the invention contains the surfactant (III) in addition to the compound (I) and the compound (II), the obtainable cured products are enriched with the hydrophilic groups at the surface even in the case where the composition contains no solvents.

However, the inventive composition may include a solvent in view of aspects such as the workability during the fabrication of cured products, for example, monolayer films from the composition.

The solvents are not particularly limited as long as the composition can give cured products having a hydrophilic surface. It is, however, not preferable to use solvents which have excessively strong interactions with the constituents present in the monomer composition in the invention, for example, solvents which can react or form salts with the constituents, or to use solvents having an excessively high boiling point, for example, solvents having a boiling point of above 200°C. For example, ethanolamine compounds having a hydroxyethylamino structure [NRaRb ($CH_2CH_2OH$): Ra and Rb are each independently hydrogen, a $C_{1-15}$ alkyl group or a $CH_2CH_2OH$ group] are prone to interact with the hydrophilic groups present in the compound (I), for example, the anionic hydrophilic groups such as the sulfonate groups to form a salt or a pseudo salt, and are difficult to evaporate. When an attempt is made to remove such a solvent from the mixture applied, the solvent barely moves to the surface in contact with the air and tends to remain in the inside. Consequently, the hydrophilic groups present in the compound (I) tend to be prevented from being enriched (concentrated) at the surface of the coating in contact with the air. Thus, such ethanolamine compounds are not suited for use as the solvents. Examples of such compounds include ethanolamine, diethanolamine, triethanolamine, N-ethyl-ethanolamine, N-(2-ethylhexyl)ethanolamine, N-butyl-diethanolamine, N-hexyl-diethanolamine, N-lauryl-diethanolamine and N-cetyl-diethanolamine.

Appropriate solvents except the solvents described above may be used in consideration of aspects such as the solubility of the compound (I), the compound (II), the surfactant (III) and the compound (IV).

Examples of the solvents which can be preferably used in the invention include polar solvents, specifically, monohydric alcohols such as methanol, ethanol, isopropanol (IPA), 1-propanol, 1-butanol, isobutanol, 2-butanol, 1-pentanol (1-amyl alcohol), isopentanol, methoxyethanol, isopropoxyethanol, n-butoxyethanol, 1-methoxy-2-propanol and 2-methoxy-1-propanol, polyhydric alcohols such as ethylene glycol, 1,3-propylene glycol, 1,2-propylene glycol and glycerin;

ketones such as acetone, methyl ethyl ketone, 2-pentanone, methyl isobutyl ketone and cyclohexanone;

carboxylic acids such as formic acid, acetic acid and propionic acid;

carboxylate esters such as ethyl acetate, n-propyl acetate, isopropyl acetate, n-butyl acetate and isobutyl acetate;

carbonate esters such as ethylene carbonate and 1,2-propylene carbonate;

ethers such as diethyl ether, di-n-propyl ether, diisopropyl ether, di-n-butyl ether and tetrahydrofuran;

aprotic sulfones such as sulfolane;

aprotic sulfoxides such as DMSO (dilauryl sulfoxide);

amides such as N,N'-dimethylformamide (DMF), N,N'-dimethylimidazolidinone (DMI) and N,N'-dimethylacetamide (DMAC);

nitriles such as acetonitrile and butyronitrile; and water and mixtures of water and the compounds described above, for example, mixtures of water and alcohols.

The solvents described above have a relatively high polarity. When a solvent is added to the inventive composition, favorable results tend to be obtained by using a highly polar solvent. When the composition contains a highly polar solvent, the process in which the solvent is removed from the coating of the composition takes place in such a manner that the compound (I) having an anionic hydrophilic group is enriched (concentrated) at the surface of the coating (this surface, when the mixture including the monomer composition is applied onto a substrate, is the surface opposite

to the surface in contact with the substrate) in association with the removal of the solvent from the surface of the coating in contact with the air, thus resulting in a concentration-graded structure. In view of this process, the solvent preferably has an appropriate interaction with the anionic hydrophilic groups present in the composition so that the enrichment (the concentration) is facilitated.

The solubility parameter (the SP value) is widely known as an index for such polarity. The solubility parameter (the SP value) can be easily calculated by a simplified calculation method described below.

Equations for calculating solubility parameter σ

1) Latent heat of vaporization per 1 mol
Hb = 21 x (273 + Tb) (unit: cal/mol), Tb: boiling point (°C)
2) Latent heat of vaporization per 1 mol at 25°C
H25 = Hb x {1 + 0.175 x (Tb - 25) /100} (unit: cal/mol), Tb: boiling point (°C)
3) Intermolecular binding energy E = H25 - 596 (unit: cal/mol)
4) Intermolecular binding energy per 1 ml ($cm^3$) of solvent
E1 = E x D/Mw (unit: $cal/cm^3$), D: density ($g/cm^3$), MW: molecular weight
5) Solubility parameter (SP value) σ = $(E1)^{1/2}$ (unit: $cal/cm^3)^{1/2}$

Of the polar solvents described above, those solvents which have a solubility parameter (SP value) σ $(cal/cm^3)^{1/2}$ of 9.0 or above according to the simplified calculation method are preferable. The solubility parameter of the solvents is more preferably 9.3 or above, and still more preferably 9.5 or above. If the composition contains a large amount of a solvent having a solubility parameter (SP value) less than the above range, the application of the composition onto an object such as a substrate will form a coating which has an incomplete structure of the hydrophilic cured product according to the invention, for example, a monolayer film, specifically, an incomplete gradation (enrichment) of the concentration of the anionic hydrophilic groups at the surface. Consequently, the hydrophilicity tends to be decreased.

Examples of the solvents which have a solubility parameter in the preferred range include methanol, ethanol, 1-propanol, isopropanol (IPA), 1-butanol, isobutanol, 1-pentanol (1-amyl alcohol), cyclohexanol, 1-methoxy-2-propanol, 2-methoxy-1-propanol (methoxypropanol), 2-methoxy-1-ethanol (methoxyethanol), 2-ethoxy-1-ethanol (ethoxyethanol), acetonitrile and water.

When the composition of the invention contains the compound (I), the compound (II) and the surfactant (III), even the use of a solvent having a SP value of less than 9.3 does not cause a failure for the composition to give cured products which are enriched with the hydrophilic groups at the surface.

Examples of the solvents which have a SP value in the preferred range include methanol, ethanol, 1-propanol, isopropanol (IPA), 1-butanol, isobutanol, 1-pentanol (1-amyl alcohol), isopentanol, 2-pentanol, 3-pentanol, cyclohexanol, 1-methoxy-2-propanol (methoxypropanol), 2-methoxy-1-propanol, 2-methoxy-1-ethanol (methoxyethanol), 2-isopropoxy-1-ethanol, acetonitrile and water. Of these solvents, primary alcohols having a SP value of not less than 9.0 $(cal/cm^3)^{1/2}$ such as methanol, ethanol, 1-propanol, 1-butanol and 1-pentanol (1-amyl alcohol), and alkoxy alcohols having a SP value of not less than 9.0 $(cal/cm^3)^{1/2}$ such as 1-methoxy-2-propanol (methoxypropanol), 2-methoxy-1-ethanol (methoxyethanol) and 2-isopropoxy-1-ethanol are more preferable.

The amount of the solvent added to the inventive composition may be determined appropriately in consideration of aspects such as properties of hydrophilic cured products, for example, monolayer films obtained according to the invention, and the economic efficiency.

The solvent is usually used in such an amount that the concentration of the solids in the composition (the total of the compounds (I) to (IV), the optional silica (IV) and the additives) (solids / (solids + solvent) x 100) will be 1 wt% or above, preferably 10 to 90 wt%, more preferably 20 to 80 wt%, and still more preferably 30 to 70 wt%.

Where necessary, the composition may contain additives other than those additives described hereinabove. For example, additives such as titanium oxides, metals and metal oxides may be added to the inventive composition for purposes such as enhancing the mechanical and thermal strengths of the obtainable hydrophilic cured products, and imparting properties such as photoresponsive properties and bactericidal properties. For purposes such as increasing the refractive index of the obtainable hydrophilic cured products, sulfur-containing compounds may be added. For purposes such as imparting bactericidal properties and antibacterial properties, salts of metals such as silver and lithium, and such materials as iodine and iodonium salts may be added to the composition. The amount of these additives may be determined appropriately in accordance with the purpose, but is usually in the range of 0.01 to 200 wt%, and preferably in the range of 0.1 to 100 wt% relative to the total of the compound (I) and the compound (II).

When the composition of the invention contains the solvent described hereinabove, it is preferable that the coating of the composition applied onto an object such as a substrate be treated by heating or the like to sufficiently remove the solvent before the polymerization described later is performed. If the removal of the solvent from the composition is insufficient, the hydrophilic groups derived from the compound (I) (at least one type of hydrophilic groups selected from anionic hydrophilic groups, cationic hydrophilic groups and hydroxyl groups) are not allowed to move

efficiently to the surface of the coating in contact with the air. As a result, the properties such as the hydrophilicity of the obtainable hydrophilic cured products tend to be decreased. Even if the hydrophilic groups have successfully moved to the surface of the coating in contact with the air, the residual solvent in the composition exhibits a repelling interaction with the air (which is hydrophobic) present on the surface in contact with the air so as to tend to facilitate the movement of the hydrophilic groups toward the inside of the coating. As a result, the obtainable hydrophilic cured products, for example, monolayer films often have an insufficient enrichment of the hydrophilic groups at the surface thereof in contact with the air, and also exhibit poor hydrophilicity at times. Further, the adhesion with respect to the substrate tends to be decreased. Thus, more favorable results tend to be obtained with decreasing amount of the residual solvent present in the composition immediately before the polymerization. The amount is usually not more than 10 wt%, preferably not more than 5 wt%, more preferably not more than 3 wt%, and still more preferably not more than 1 wt%.

The temperature during the removal of the solvent may be determined appropriately, but is usually in the range of room temperature to 200°C, preferably in the range of 30 to 150°C, more preferably 40 to 120°C, and particularly preferably in the range of 40 to 100°C.

The removal of the solvent from the composition may be performed for an appropriately determined time. In consideration of productivity, a shorter time tends to be preferable. For example, the solvent removal is usually performed for not more than 30 minutes, preferably not more than 10 minutes, more preferably not more than 5 minutes, still more preferably not more than 3 minutes, and particularly preferably not more than 2 minutes. The solvent removal may take place in the air atmosphere or in an inert gas such as nitrogen. An atmosphere having a lower humidity tends to be more preferable for reasons such as that the obtainable hydrophilic cured products (for example, monolayer films) are free from deteriorations in appearance (such as the occurrence of orange peels, and a decrease in transparency). Specifically, the humidity in the atmosphere is preferably not more than 80%, more preferably not more than 70%, still more preferably not more than 65%, further preferably not more than 60%, and particularly preferably not more than 55%.

When the solvent is removed by the application of wind, the wind speed is preferably not more than 30 m/sec, more preferably in the range of 0.1 to 30 m/sec, still more preferably in the range of 0.2 to 20 m/sec, and particularly preferably in the range of 0.3 to 10 m/sec.

The pressure during the solvent removal is not particularly limited. Normal pressure or a reduced pressure is relatively preferable. A slightly increased pressure may also be used.

A hydrophilic cured product, for example, a monolayer film according to the present invention can be obtained by applying the inventive composition onto an object such as a substrate and polymerizing the composition. The polymerization method is not particularly limited. For example, the composition may be polymerized by heat or irradiation, or by both in combination.

The polymerization may be performed in air atmosphere. However, the polymerization time can be advantageously reduced by performing the polymerization in an inert gas atmosphere such as nitrogen.

When the polymerization involves heating, a thermal radical generator such as an organic peroxide is usually added to the composition and the mixture is heated at a temperature in the range of room temperature to 300°C.

In the case of radiation polymerization, an energy ray having a wavelength in the range of 0.0001 to 800 nm can be used as the radiation. Such radiations are categorized into $\alpha$-rays, $\beta$-rays, $\gamma$-rays, X-rays, electron beams, UV lights and visible lights. An appropriate radiation may be selected in accordance with the chemical composition of the mixture. Of the radiations, UV lights are preferable. The output peak of the UV lights is preferably in the range of 200 to 450 nm, more preferably in the range of 230 to 445 nm, still more preferably in the range of 240 to 430 nm, and particularly preferably in the range of 250 to 400 nm. The use of UV lights having an output peak in the above range is advantageous in that defects such as yellowing and thermal deformation during the polymerization are remedied and the polymerization can be completed in a relatively short time even when the composition contains the UV absorber.

When the composition contains the UV absorber and/or the hindered amine stabilizer, it is preferable to use UV lights having an output peak in the range of 250 to 280 nm or 370 to 430 nm.

In order to prevent the radiation polymerization of the composition from being inhibited by oxygen, the polymerization may be performed in such a manner that after the composition is applied onto an object such as a substrate and optional treatments such as the removal of the solvent from the composition are performed, a covering material (such as a film) is applied onto the coating layer and thereafter the covered coating layer is irradiated. The coating layer is desirably covered with the covering material tightly so that air (oxygen) will not be entrapped between the coating layer and the covering material. By blocking oxygen, for example, the amount of the (photo)polymerization initiator and the radiation dose can be reduced at times.

The covering materials are not particularly limited, and various materials can be used in various forms as long as oxygen can be blocked. Films are preferable in terms of handling. Of the films, transparent films allowing for easy radiation polymerization are preferable. The thickness of the films is usually in the range of 3 to 200 $\mu$m, preferably 5 to 100 $\mu$m, and more preferably 10 to 50 $\mu$m.

Examples of the film materials suitably used as the covering materials include vinyl alcohol polymers such as polyvinyl alcohols (PVAs) and ethylene · vinyl alcohol copolymers, polyacrylamides, polyisopropylacrylamides, polyacrylonitriles, polycarbonates (PCs), polymethyl methacrylates (PMMAs), polyethylene terephthalates (PETs), polystyrenes (PSs) and biaxially oriented polypropylenes (OPPs).

Electron beams in the range of 0.01 to 0.002 nm are preferable as the radiations because the polymerization can be completed in a short time, although such apparatuses are expensive.

A monolayer film obtained as described above that includes a hydrophilic cured product of the invention usually has a gradient (a ratio of the concentrations of hydrophilic groups) (Sa/Da) of not less than 1.1, preferably not less than 1.2, more preferably not less than 1.3, and still more preferably not less than 1.5 wherein Sa is the surface concentration of at least one type of hydrophilic groups selected from anionic hydrophilic groups (typically sulfonate groups, carboxyl groups and phosphate groups), cationic hydrophilic groups and hydroxyl groups, and Da is the deep concentration of the hydrophilic groups at 1/2 of the thickness of the monolayer film. The gradient (the ratio of the concentrations of hydrophilic groups) (Sa/Da) is usually not more than 20.0.

The monolayer film of the invention, which contains the hydrophilic groups described above, is usually disposed as a coating on at least one surface of a substrate. In the monolayer film, the hydrophilic groups are distributed from a deep portion near the substrate to the surface of the film. In particular, the concentration distribution (the gradient (the ratio of the concentrations of hydrophilic groups) (Sa/Da)) is such that the concentration is higher on the top surface of the monolayer film in contact with the air.

The reason for the occurrence of such a distribution is probably because when an energy for polymerization such as heat or a radiation is applied to the composition spread on an object such as a substrate, the at least one type of hydrophilic groups selected from anionic hydrophilic groups, cationic hydrophilic groups and hydroxyl groups are self-assembled at the surface in contact with the air and the cured monolayer film is formed after the formation of such a self-assembly.

Because the hydrophilic groups are present in a high concentration on the surface, the monolayer film including the inventive hydrophilic cured product exhibits excellent properties such as antifogging properties, antifouling properties or self-cleaning properties, and antistatic properties or anti-dust properties.

The gradient (the ratio of the concentrations of hydrophilic groups) is determined by a process in which a prescribed sample of the monolayer film is cut at a bevel, the concentrations of groups that contain anionic hydrophilic groups (such as, for example, sulfonate groups, carboxyl groups and phosphate groups), cationic hydrophilic groups (such as, for example, quaternary ammonium groups) and hydroxyl groups are measured with respect to the surface of the monolayer film in contact with the air and the point at 1/2 of the thickness of the monolayer film with use of a time-of-flight secondary ion mass spectrometer (TOF-SIMS), and the ratio of the (relative) intensities of the fragment ions is calculated.

The monolayer film including the inventive hydrophilic cured product usually has a water contact angle of not more than 50°, preferably not more than 30°, more preferably not more than 20°, and still more preferably not more than 10°.

With this water contact angle, the monolayer film exhibits high hydrophilicity and serves as an excellent hydrophilic material which is highly compatible (wettable) with water. Thus, the monolayer films are useful as, for example, antifogging materials, antifogging films (hereinafter, also written as antifogging coats), antifouling materials, antifouling films or self-cleaning coats, and antistatic materials, antistatic films or anti-dust coats. When, for example, used as an antifogging coat, the film allows water droplets to spread on the surface to form a water film, thus achieving excellent antifogging effects. When used as a self-cleaning coat, water can penetrate into between the dirt and the coating surface to lift and remove the dirt, thus achieving excellent antifouling effects. Further, the capability of the hydrophilic monolayer film to allow water to spread leads to an increased evaporation area and thus provides an enhanced evaporation speed, namely, quick drying.

Because the monolayer films of the invention are enriched with (have a higher concentration of) the hydrophilic groups at the surface, their antistatic properties are excellent as compared to those of conventional hydrophilic films having no such enrichment. When the monolayer films of the invention contain anionic hydrophilic groups as the hydrophilic groups, the antistatic properties of the films compare favorably even to those of conventional films having nonionic hydrophilic groups. Thus, the monolayer films of the invention are useful also in applications such as antistatic materials, antistatic films or anti-dust coats.

When the water contact angle is not more than 30°, preferably not more than 20 °, and more preferably not more than 10°, the monolayer films including the hydrophilic cured products of the invention are particularly suited for use as antifogging materials, antifouling materials, quick-dry materials and antistatic materials. The water contact angle is usually 0° or above.

The surfactant (III) present in the composition allows the hydrophilic groups derived from the compound (I) to be enriched (concentrated) at the surface of polymerized cured products, for example, monolayer films in the absence of solvents. This characteristic allows highly hydrophilic cured products to be produced under a wider range of conditions. In addition, the transparency of the cured products is relatively increased probably due to the compatibilizing effect that prevents the separation of the compound (I) and the compound (II). A conventional method (for example, WO

2007/064003) causes hydrophilic groups to be enriched (concentrated) at the surface in synchronism with the evaporation of a polar solvent. Such a method has been incapable of realizing the enrichment for some of the general hydrophilic polymerizable compounds (for example, hydrophilic polymerizable compounds except those compounds described in the claims of WO 2007/064003). In contrast, the use of the surfactant (III) makes it possible to produce hydrophilic cured products in which hydrophilic groups are enriched (concentrated) at the surface even when the compositions include those barely enriched hydrophilic groups. When, further, the compositions include those hydrophilic compounds which are described in the above publication, the obtainable cured products, for example, monolayer films tend to have a higher concentration (a higher enrichment) of the hydrophilic groups at the surface and thus tend to exhibit higher hydrophilicity. The use of low-polarity solvents having a solubility parameter (SP value) of less than 9.3 conventionally encounters a difficulty in obtaining the enrichment. Even in such cases, the inventive technique makes it relatively easy to obtain hydrophilic cured products in which hydrophilic groups are enriched (concentrated) at the surface. Thus, as compared to the conventional techniques, the invention increases the easiness and the options of materials in the manufacturing of cured monolayer films having high hydrophilicity and high transparency as well as highly hydrophilic stacks including such monolayer films.

Upon polymerization, the composition which contains the surfactant (III) (typically the compound (III')) or the compound (IV) can give a cured product having excellent leveling properties, for example, a monolayer film or a stack including at least one such a monolayer film. When, in particular, the composition contains the surfactant (III) (typically the compound (III'), cured products having higher hydrophilicity can be obtained. Such cured products having high surface smoothness (leveling properties), for example, such monolayer films are resistant to external attacks (for example, the erosion by hot water or the like) and tend to achieve enhanced durability.

Further, the composition which contains both the surfactant (III) (typically the compound (III')) and the compound (IV) tends to give cured products and monolayer films having higher surface smoothness (leveling properties) than when the composition contains only the surfactant (III).

The thickness of the hydrophilic cured products of the invention, typically the monolayer films (copolymers) may be determined appropriately in accordance with the applications, but is usually in the range of 0.0001 to 500 $\mu$m, preferably 0.05 to 500 $\mu$m, more preferably 0.1 to 300 $\mu$m, still more preferably 0.5 to 100 $\mu$m, further preferably 1 to 50 $\mu$m, and particularly preferably 2 to 30 $\mu$m.

The hydrophilic cured products of the invention, for example, monolayer films may be formed by any methods without limitation. For example, the cured products can be formed by applying the composition onto the surface of a substrate, optionally performing treatments such as the removal of the solvent from the composition, and thereafter polymerizing the composition.

Examples of the substrates include substrates made of inorganic materials such as glasses, silicas, metals and metal oxides; substrates made of organic materials such as polyacrylamides, polyisopropylacrylamides, polyacrylonitriles, polymethyl methacrylates (PMMAs), polycarbonates, polyethylene terephthalates, polyethylenes, polypropylenes, polystyrenes, polyurethane resins, epoxy resins, vinyl chloride resins, silicone resins, papers and pulps; organic inorganic substrates such as SMCs and BMCs which include composites of unsaturated polyester resins, fillers such as calcium carbonate, and such materials as glass fibers; and substrates having a cured coating layer in which a coating is formed on the surface of substrates made of any of the above inorganic materials, organic materials and organic inorganic composite materials.

In order to activate the substrate surface, the surface of these substrates may be optionally subjected to physical or chemical treatments such as corona treatment, ozone treatment, low-temperature plasma treatment using a gas such as oxygen gas or nitrogen gas, glow discharge treatment, oxidation treatment with agents such as chemicals, and flame treatment. Instead of or in addition to such treatments, the substrate surface may be subjected to primer treatment, undercoating treatment or anchor coating treatment.

Examples of the coating agents used in the primer treatment, the undercoating treatment and the anchor coating treatment include coating agents containing, as the main components of vehicles, resins such as polyester resins, polyamide resins, polyurethane resins, epoxy resins, phenolic resins, (meth)acrylic resins, polyvinyl acetate resins, polyolefin resins including polyethylenes and polypropylenes as well as copolymers thereof and modified resins thereof, and cellulose resins. The coating agents may be any of solvent-based coating agents and aqueous coating agents.

Of the coating agents, preferred coating agents are:

modified polyolefin coating agents, ethyl vinyl alcohol coating agents, polyethyleneimine coating agents, polybutadiene coating agents, polyurethane coating agents;

polyester polyurethane emulsion coating agents, polyvinyl chloride emulsion coating agents, urethane acrylic emulsion coating agents, silicon acrylic emulsion coating agents, vinyl acetate acrylic emulsion coating agents, acrylic emulsion coating agents;

styrene-butadiene copolymer latex coating agents, acrylonitrile-butadiene copolymer latex coating agents, methyl methacrylate-butadiene copolymer latex coating agents, chloroprene latex coating agents, rubber latex coating

agents containing polybutadiene latex, polyacrylate ester latex coating agents, polyvinylidene chloride latex coating agents, polybutadiene latex coating agents, and coating agents which include latexes or dispersions resulting from the carboxylic acid modification of the resins present in the above latex coating agents.

For example, these coating agents may be applied by methods such as gravure coating methods, reverse roll coating methods, knife coating methods and kiss-roll coating methods. The mass of coating on the substrate is usually 0.05 g/$m^2$ to 10 g/$m^2$, and preferably 0.05 g/$m^2$ to 5 g/$m^2$ as measured after the removal of the solvent from the composition.

Of the coating agents, polyurethane coating agents are more preferable. The polyurethane coating agents have urethane bonds in the main chains or side chains of the resins present in the coating agents. For example, the polyurethane coating agents contain a polyurethane obtained by reacting a polyol such as a polyester polyol, a polyether polyol or an acrylic polyol, with an isocyanate compound.

Of the polyurethane coating agents, those polyurethane coating agents which are obtained by mixing a polyester polyol such as a condensed polyester polyol or a lactone-based polyester polyol with an isocyanate compound such as tolylene diisocyanate, hexamethylene diisocyanate or xylene diisocyanate are preferable because of their excellent adhesion.

The polyol compounds and the isocyanate compounds may be mixed with each other by any methods without limitation. The mixing ratio is not particularly limited. When, however, the amount of the isocyanate compound is excessively small, curing failures may be caused. Thus, the equivalent ratio of the OH groups of the polyol compound to the NCO groups of the isocyanate compound is preferably in the range of 2/1 to 1/40.

The substrates in the invention may have a surface that has been treated by the aforementioned surface activation.

The substrate whose surface is coated with a monolayer film including a hydrophilic cured product of the invention may be used as a stack including the substrate and the monolayer film. For example, the monolayer film is an antifogging film, an antifouling film, a quick-dry film or an antistatic film. That is, the stack includes the substrate coated with such an antifogging film, antifouling film, quick-dry film or antistatic film.

When the substrate is a film, a pressure-sensitive adhesive layer described later may be provided on, for example, the surface of the substrate on which the monolayer film of the invention is not disposed. Further, a release film may be provided on the surface of the pressure-sensitive adhesive layer. The pressure-sensitive adhesive layers that are laminated on the surface of the substrate films opposite to the inventive monolayer films allow users to attach easily the stack films as antifogging films or antifouling films onto objects such as glasses, bathroom mirrors or the like, surfaces of display devices such as displays and televisions, information boards such as signboards, advertisements and guideboards, signs such as railroad signs and traffic signs, exterior walls of buildings, and window glasses.

The pressure-sensitive adhesives used in the pressure-sensitive adhesive layers are not particularly limited, and known pressure-sensitive adhesives may be used. Examples of the pressure-sensitive adhesives include acrylic pressure-sensitive adhesives, rubber pressure-sensitive adhesives, vinyl ether polymer pressure-sensitive adhesives and silicone pressure-sensitive adhesives. The thickness of the pressure-sensitive adhesive layers is usually in the range of 2 to 50 $\mu$m, and preferably in the range of 5 to 30 $\mu$m.

In the inventive monolayer film and a stack including the monolayer film, the surface of the monolayer film in contact with the air may be covered with a covering material. The covering material disposed on the single monolayer film or the monolayer film constituting a stack can prevent the monolayer film from being scratched or fouled during actions such as transportation, storage and laying out.

As described hereinabove, a covering material is provided in close contact with the coating during the formation of an inventive monolayer film on an object such as a substrate by radiation polymerization. This covering material may be continuously used as the covering material for the above purposes.

Examples of the film materials suitably used as the covering materials include vinyl alcohol polymers such as polyvinyl alcohols (PVAs), polyacetyl celluloses (TACs) and ethylene · vinyl alcohol copolymers, polyacrylamides, polyisopropylacrylamides, polyacrylonitriles, polycarbonates (PCs), polymethyl methacrylates (PMMAs), polyethylene terephthalates (PETs), polyacrylonitrile·butadiene·styrene copolymers (ABSs), polystyrenes (PSs) and biaxially oriented polypropylenes (OPPs) .

The composition of the invention may be polymerized in molds having various shapes. In this manner, cured products such as monolayer films and articles can be formed in various shapes.

The hydrophilic cured products obtained in accordance with the invention, for example, monolayer films, and stacks including the monolayer films can be suitably used as such materials as antifogging materials, antifouling materials, quick-dry materials and antistatic materials.

Coatings formed of the hydrophilic cured products, for example, monolayer films and stacks, can be used to impart hydrophilicity, antifogging properties, quick-dry properties and antifouling properties to, for example, vehicles and vehicle materials; ships and ship materials; aircraft and aircraft materials; buildings and building materials; windows, mirrors, exterior walls, exteriors, bodies, wheels, interior walls, interiors and floors in structures such as vehicles, ships,

aircraft and buildings; furniture and furniture materials; utilities such as pipes and wires, and materials for such utilities; fiber products such as garments and cloths; household equipment such as sinks, bathrooms, restrooms, ventilation fans and kitchens, and materials for such equipment; electric appliances such as washing machines, dish dryers, refrigerators, microwaves, ovens and shavers, and materials for such appliances; displays and display materials; optical products such as optical films, optical disks, optical lenses, eyeglass lenses, contact lenses and goggles; dental materials such as artificial teeth and dentures; lighting items such as lamps and lights, and materials for such items; heat exchanger components such as cooling fins, and materials for such components; record printing materials such as photoresists and inkjet recording plates; cosmetic containers and materials for such containers; reflective materials such as reflective films and reflective boards; sound insulating boards located at places such as expressways; display materials; printing or typing primers; other primers; flat panels; touch panels; sheets; films; tapes; and transparent materials such as transparent resins and glasses. Further, the coatings can impart anti-condensation properties and antistatic properties.

EXAMPLES

Hereinbelow, the present invention will be described in further detail by discussions such as examples. The scope of the invention is not limited to such examples.
Properties of films in the invention were evaluated as described below.

(Measurement of ratio of concentrations of hydrophilic groups (anions)〉

A sample was cut at a bevel as illustrated in the sample preparation in Fig. 1. With use of a time-of-flight secondary ion mass spectrometer (TOF-SIMS), the sample was analyzed with respect to fragment ions of a hydrophilic compound having hydrophilic groups, namely, any of anionic hydrophilic groups (sulfonate groups, carboxyl groups and phosphate groups), cationic hydrophilic groups (quaternary ammonium groups) and hydroxyl groups. Specifically, the concentration of the fragment ions derived from the hydrophilic compound (for example, the concentration of anions in the case of anionic hydrophilic groups) that were present at the top surface was measured (Sa). Further, the concentration of the fragment ions (for example, the concentration of anions in the case of anionic hydrophilic groups) that were present at half the thickness was measured (Da). The concentration of the hydrophilic groups derived from the hydrophilic compound that were present at the top surface of the film in contact with the air was expressed as a ratio to the concentration of the hydrophilic groups that were present at the middle point between the bottom surface and the top surface of the film. In this manner, the gradient (Sa/Da) of hydrophilic group concentration (for example, anion concentration in the case of anionic hydrophilic groups) was determined.

(Analyzer and measurement conditions)

TOF-SIMS: TOF-SIMS 5 manufactured by ION · TOF
Primary ions: $Bi_3^{2+}$ (accelerating voltage 25 kV)
Measurement area: 400 $\mu m^2$

In the measurement, a neutralizing gun for correcting electric charges was used.

(Preparation and analysis of sample)

As illustrated in Fig. 1, a sample in which a coating layer 20 was disposed on a surface of a substrate 10 was cut at a bevel accurately in a cutting direction 30. Thereafter, an approximately 10 x 10 $mm^2$ piece was cut out, and a mesh was placed on the measurement surface. The sample was then fixed to a sample holder, and the concentration of hydrophilic groups (for example, the concentration of anions in the case of anionic hydrophilic groups) was measured with the time-of-flight secondary ion mass spectrometer (TOF-SIMS) with respect to a surface 40 of the coating layer in contact with the air and to an inner portion 50 of the coating layer which was located inside the film (at 1/2 of the film thickness, a surface exposed at the inside of the coating layer in contact with the substrate 10).

(Evaluation)

The evaluation was made using the equation described below. The ion concentrations at the respective measurement points were relative intensities (relative to the total of the detected ions).
Sa/Da (ratio of concentrations of hydrophilic groups (for example, ratio of concentrations of anions in the case

of anionic hydrophilic groups), gradient) = Concentration of hydrophilic groups at surface 40 of coating layer/Concentration of hydrophilic groups at 1/2 of film thickness of coating layer 20

(Measurement of water contact angle)

The water contact angle was measured with respect to 3 points for each sample with use of water contact angle meter CA-V manufactured by Kyowa Interface Science Co., Ltd. The water contact angles measured were averaged.

(Measurement of haze)

The haze was measured with respect to 4 points for each sample with use of haze meter NDH2000 manufactured by NIPPON DENSHOKU INDUSTRIES CO., LTD. The haze values measured were averaged.

(Evaluation of adhesion)

The adhesion was evaluated by a crosscut adhesion test.

(Evaluation of surface smoothness)

Long waves (LW) and short waves (SW) were measured with use of Wave-Scan Dual (BYK Additives & Instrument). The smoothness was evaluated based on the averages of the results. The lower the value, the higher the smoothness.

(Evaluation of antifouling properties)

The surface was marked with oil-based marker "Mackee Gokuboso (ultrafine)" (black, code: MO-120-MC-BK) manufactured by ZEBRA CO., LTD. Water droplets were dropped on the marked surface, allowed to stand for 30 seconds, and wiped with tissue paper.
In the four-grade evaluation, the antifouling properties were evaluated as SS when the mark had been lifted by water before wiping and could be easily removed, as AA when the mark was cleanly removed, as BB when the mark partially remained, and as CC when the mark could not be wiped off.
In the three-grade evaluation, the antifouling properties were evaluated as AA' when the mark was completely or substantially completely wiped off, as BB' when about half of the mark was wiped off, and as CC' when the mark could not be wiped off.

(Evaluation of resistance to breath fogging)

The resistance to breath fogging was evaluated as AA when the surface did not become fogged with breath, and as BB when the surface became fogged with breath.

(Method of hot water treatment)

A sample applied on a substrate was immersed in boiling water (inside temperature 103°C) for 1 hour. The surface of the film was washed with running water, dried and evaluated.

(Evaluation of appearance)

After UV curing, the surface was washed with water, dried and inspected for any defects in appearance.

[Example 1A]

(Preparation of polymerizable composition 1A)

A polymerizable composition 1A having a solid concentration of 80 wt% was prepared in accordance with the formulation described in Table 1A below.

[Table 1A]

Table 1A
Polymerizable composition 1A (solid concentration 80 wt%)

| Materials | Amount (g) | Concentration (wt%) |
|---|---|---|
| SPA-K | 1.50 | 1.18 |
| A-GLY-9E | 20.00 | 15.75 |
| A-9530 | 80.00 | 62.99 |
| S-EED | 0.10 | 0.08 |
| Methanol | 25.40 | 20.00 |
| Total | 127.00 | 100.00 |

[Chem. 79]

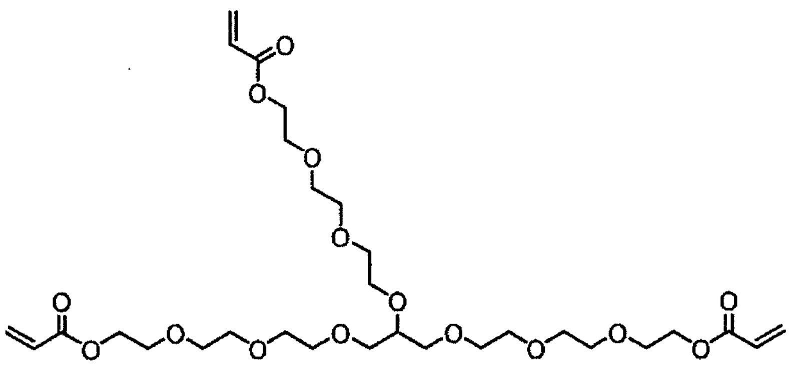

A-GLY-9E

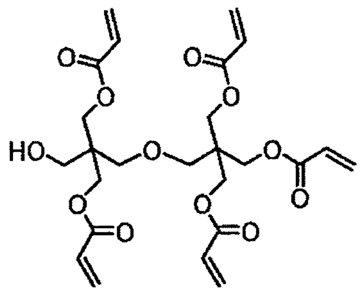

A-9530

(Preparation Example 1A: Preparation of 10 wt% surfactant)

With a homomixer (ROBOMIX (registered trademark) S-model manufactured by PRIMIX Corporation), 10 g of sodium distearylsulfosuccinate (hereinafter, written as DS-Na), 30 g of water and 60 g of 1-methoxy-2-propanol (hereinafter, written as PGM) were mixed together at 15000 rpm for 3 minutes to give a DS-Na mixture liquid having a solid concentration of 10 wt%.

[Chem. 80]

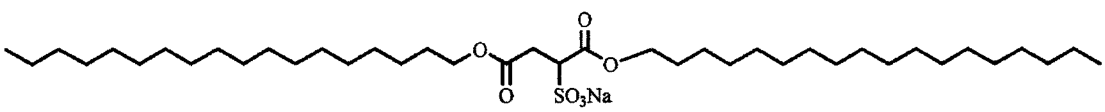

DS-Na

(Addition of surfactant and removal of solvent)

An experimental apparatus illustrated in Fig. 2 that had been shielded from light with an aluminum foil was loaded with 125 g of the polymerizable composition 1A and 1 g of the 10 wt% DS-Na mixture liquid. While bubbling the liquid with dried air (having a dew point of -30°C or below), the mixture was held at a reduced pressure (< 100 mmHg) for 3 days (room temperature) to remove the solvent. In this manner, a slightly white, highly viscous polymerizable liquid was obtained.

The highly viscous liquid was analyzed by GC (internal standard method), and the amount of the residual solvent (methanol) was measured to be < 0.1 wt%.

The GC conditions are described below. GC analysis conditions

GC device: Shimadzu Corporation, GC-2010
Column: J & W Science, DB-624, ϕ 0.53 mm x 75 m (thickness 3 μm)
Carrier gas: He 100 cm/sec
Inj.: 240°C
Det.: FID, 260°C
Sample Preparation
IS (internal standard): 2-methoxy-1-ethanol 50 mg
Sample: polymerizable composition 100 mg
Diluting solvent: dichloromethane 10 ml
Injection volume: 1 μl

(Preparation of coating composition 1A)

To 10.0 g of the highly viscous polymerizable liquid (solvent content < 0.1 wt%) obtained above, 0.3 g of DAROCUR 1173 (BASF) as a polymerization initiator was added. The mixture was mixed carefully with a stirring rod to give a coating composition 1A having a solid concentration of 100 wt%.

(Application to substrate and UV irradiation)

The coating composition 1A was applied onto a polycarbonate plate (hereinafter, written as PC plate, Takiron Co., Ltd.) with a bar coater #10. The coating was allowed to stand at room temperature (23°C-27% RH) for 30 minutes and was irradiated with UV (electrodeless discharge lamp, H valve 240 W/cm, intensity 200 mW/cm$^2$, accumulated dose 150 mJ/cm$^2$, measured with UIT-150 manufactured by USHIO INC.) to form, on the PC plate, a 14 μm thick monolayer film which included the crosslinked resin having a hydrophilic surface. Lastly, the surface of the film was washed with running water and was dried with an air gun. An evaluation sample was thus fabricated. The evaluation results are described in Table 2A.

[Comparative Example 1A]

A highly viscous polymerizable liquid and a coating composition were prepared, and the coating composition was applied onto a substrate and was UV irradiated to give a monolayer film in the same manner as in Example 1A except that the 10 wt% DS-Na mixture liquid as the surfactant was not added to the polymerizable composition 1A. The surface of the monolayer film obtained was washed with running water and was dried with an air gun. The monolayer film was tested, the results being described in Table 2A.

[Table 2A]

Table 2A

| | Example 1A (Surfactant used) | Comparative Example 1A (No surfactant used) |
|---|---|---|
| Appearance | Transparent | Slightly white |
| Water contact angle (°) | 9 | 61 |
| Haze (%) | 1.7 | 4.2 |
| Tackiness | Absent | Absent |
| Analysis in direction of thickness (sulfonate groups) | | |
| Intensity* of sulfonate groups at surface of film | 6.3E-02 | 2.5E-02 |
| Intensity* of sulfonate groups at middle of film | 4.8E-02 | 2.6E-02 |
| Intensity* of sulfonate groups at bottom of film | 3.8E-02 | 2.9E-02 |

(continued)

| | Example 1A (Surfactant used) | Comparative Example 1A (No surfactant used) |
|---|---|---|
| Ratio of sulfonate concentrations (surface/middle) | 1.3 | 1.0 |
| *Relative intensity of secondary ions $SO_3^-$ (m/z 80) Analyzer: TOF-SIMS 5 manufactured by ION-TOF Measurement conditions: primary ions applied $Bi_3^{2+}$, primary ion accelerating voltage 25 kV, measurement area 400 μm x 400 μm | | |

[Example 2A]

(Preparation of polymerizable composition 2A)

A uniform polymerizable composition 2A having a solid concentration of 80 wt% was prepared in accordance with the formulation described in Table 3A below.

[Table 3A]

Table 3A

Polymerizable composition 2A (solid concentration 80%)

| Materials | Amount (g) | Concentration (wt%) | Remarks |
|---|---|---|---|
| SPA-K | 1.74 | 1.37 | Compound (I) |
| EA-5721 | 20.00 | 15.71 | Compound (II) |
| A-BPE-10 | 10.00 | 7.86 | Compound (II) |
| U-15HA | 70.00 | 54.99 | Compound (II) |
| S-EED | 0.10 | 0.08 | Stabilizer |
| Methanol | 25.46 | 20.00 | Solvent |
| Total | 127.30 | 100.00 | |

[Chem. 81]

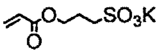

SPA-K
232.30

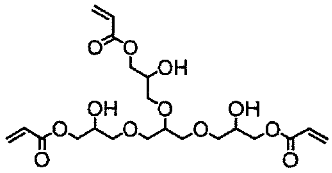

EA-5721: 476.47

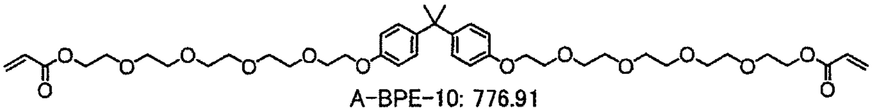

A-BPE-10: 776.91

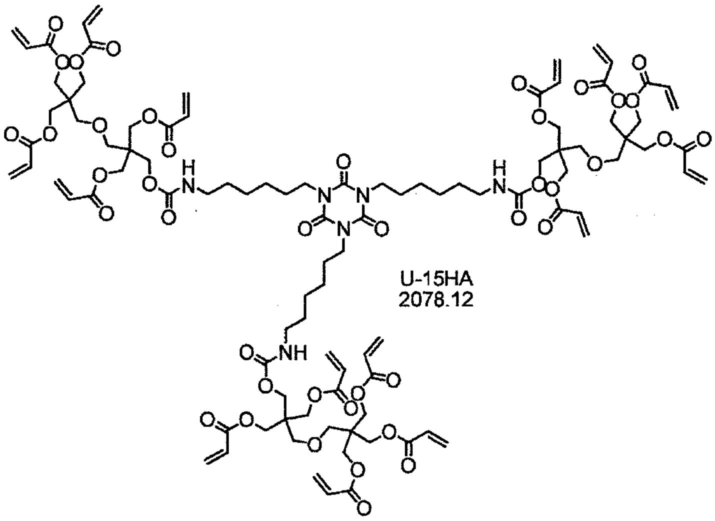

U-15HA
2078.12

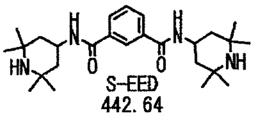

S-EED
442.64

(Preparation of coating composition 2A)

To 12.5 g of the polymerizable composition 2A were added 0.1 g of the 10 wt% DS-Na mixture liquid (Preparation Example 1A) as a surfactant, 0.3 g of DAROCUR 1173 (BASF) as a UV polymerization initiator and 4.4 g of methanol as a diluting solvent. The mixture was mixed to give a coating composition 2A having a solid concentration of 60 wt%.

(Application to substrate and UV irradiation)

The coating composition 2A (solid concentration 60 wt%) was applied onto a polycarbonate plate (hereinafter, written as PC plate, Takiron Co., Ltd.) with a bar coater #04. The coated plate was held in a 50-60°C hot air dryer for 2 minutes to remove the solvent present in the composition. The sample sufficiently cleaned of the solvent was UV irradiated by being passed through a UV conveyor (electrodeless H valve 240 W/cm, intensity 650 mW/cm$^2$, accumulated dose 230 mJ/cm$^2$, measured with UIT-150 manufactured by USHIO INC.) to form, on the PC plate, a 3 $\mu$m thick monolayer film which included the crosslinked resin having a hydrophilic surface. Lastly, the surface of the film was washed with running water and was dried with an air gun. An evaluation sample was thus fabricated. The evaluation results are described in Table 4A.

[Examples 3A to 10A]

Coating compositions were prepared, applied onto substrates and UV irradiated to give monolayer films in the same manner as in Example 2A except that the diluting solvent was changed as described in Table 4A. The surface of the monolayer films obtained was washed with running water and was dried with an air gun. The monolayer films were

tested, the results being described in Table 4A.

[Table 4A]

Table 4A

| | Diluting solvent | *Solubility parameter | Appearance | Water contact angle (°) | Haze (%) | Antifogging properties | Antifouling properties | Sa/Da ratio is 1.1 or above. |
|---|---|---|---|---|---|---|---|---|
| Ex. 2A | Methanol | 13.1 | Transparent | 4 | 0.3 | AA | SS | Yes |
| Ex. 3A | Acetonitrile | 12.0 | Transparent | 5 | 0.2 | AA | SS | Yes |
| Ex. 4A | EGM: 2-methoxy-1-ethanol | 10.8 | Transparent | 5 | 0.2 | AA | SS | Yes |
| Ex. 5A | IPA: isopropanol | 10.0 | Transparent | 6 | 0.2 | AA | SS | Yes |
| Ex. 6A | PGM: 1-methoxy-2-propanol | 9.6 | Transparent | 6 | 0.2 | AA | SS | Yes |
| Ex. 7A | 1-Pentanol | 9.5 | Transparent | 6 | 0.2 | AA | SS | Yes |
| Ex. 8A | Isopentanol | 9.3 | Transparent | 5 | 0.3 | AA | SS | Yes |
| Ex. 9A | 2-Pentanone | 8.9 | Transparent | 5 | 0.2 | AA | SS | Yes |
| Ex. 10A | MIBK: methyl isobutyl ketone | 8.4 | Transparent | 5 | 0.5 | AA | SS | Yes |

*Values calculated by the simplified calculation method.

[Example 11A]

(Preparation Example 2A: Preparation of 10 wt% hydrophilic compound (compound (I))

2-Acrylamido-2-methylsulfonic acid (hereinafter, written as ATBS) was neutralized with an aqueous sodium hydroxide solution, and thereafter the liquid was sufficiently dehydrated. To 1 g of sodium 2-acrylamido-2-methylsulfonate (hereinafter, written as ATBS-Na) thus obtained, 3 g of water was added. The mixture was ultrasonically mixed to give a solution. Next, 6 g of 1-methoxy-2-propanol (hereinafter, written as PGM) was added. The mixture was vigorously mixed by stirring to give an ATBS-Na mixture liquid having a solid concentration of 10 wt%.

(Preparation of coating composition 11A)

50 g of the 10 wt% ATBS-Na mixture liquid (Preparation Example 2A) as a compound (I), 100 g of dipentaerythritol pentaacrylate (hereinafter, written as A-9530) as a compound (II), 20 g of the 10 wt% DS-Na mixture liquid (Preparation Example 1A) as a surfactant (III), 3 g of DAROCUR 1173 as a polymerization initiator, and 2-methoxy-1-ethanol (hereinafter, written as EGM) as a diluting solvent (95 g) were combined together so that the solid concentration would be 41 wt%. The mixture was mixed to give a solution as a coating composition 11A.

(Application to substrate and UV irradiation)

The coating composition 11A (solid concentration 41 wt%) was applied onto a polycarbonate plate (hereinafter,

written as PC plate, Takiron Co., Ltd.) with a bar coater #07. The coated plate was held in a 60°C hot air dryer for 3 minutes to remove the solvent present in the composition. The sample sufficiently cleaned of the solvent was UV irradiated by being passed through a UV conveyor (electrodeless H valve 240 W/cm, intensity 230 mW/cm$^2$, accumulated dose 150 mJ/cm$^2$, measured with UIT-150 manufactured by USHIO INC.) to form, on the PC plate, a 4 $\mu$m thick monolayer film which included the crosslinked resin having a hydrophilic surface. Lastly, the surface of the film was washed with running water and was dried with an air gun. An evaluation sample was thus fabricated. The evaluation results are described in Table 5A.

[Examples 12A to 16A]

Coating compositions were prepared, applied onto substrates and UV irradiated to give monolayer films in the same manner as in Example 11A except that the amount of the surfactant (III) was changed as described in Table 5A. The surface of the monolayer films obtained was washed with running water and was dried with an air gun. The monolayer films were tested, the results being described in Table 5A.

[Comparative Examples 2A to 6A]

Coating compositions were prepared, applied onto substrates and UV irradiated to give monolayer films in the same manner as in Example 11A except that the surfactant was not added and the amount of the compound (I) was changed as described in Table 5A. The surface of the monolayer films obtained was washed with running water and was dried with an air gun. The monolayer films were tested, the results being described in Table 5A.

[Table 5A]

Table 5A

| No. | Compound (I) | | Compound (II) | | Surfactant | | Appearance | Water contact angle | Haze | Antifouling properties |
|---|---|---|---|---|---|---|---|---|---|---|
| | Type | g | Type | g | Type | g | | (°) | (%) | |
| Ex. 11A | ATBS-Na | 5.0 | A-9530 | 100.0 | DS-Na | 2.0 | Slightly white | 34 | 7.1 | AA |
| Ex. 12A | ATBS-Na | 5.0 | A-9530 | 100.0 | DS-Na | 1.0 | Slightly white | 34 | 4.8 | AA |
| Ex. 13A | ATBS-Na | 5.0 | A-9530 | 100.0 | DS-Na | 0.5 | Transparent | 21 | 1.2 | AA |
| Ex. 14A | ATBS-Na | 5.0 | A-9530 | 100.0 | DS-Na | 0.3 | Transparent | 17 | 0.7 | AA |
| Ex. 15A | ATBS-Na | 5.0 | A-9530 | 100.0 | DS-Na | 0.2 | Transparent | 34 | 0.8 | AA |
| Ex. 16A | ATBS-Na | 5.0 | A-9530 | 100.0 | DS-Na | 0.1 | Slightly white | 33 | 2.2 | AA |
| Comp. Ex. 2A | ATBS-Na | 15.0 | A-9530 | 100.0 | None | 0 | Slightly white | 65 | 7.6 | CC |
| Comp. Ex. 3A | ATBS-Na | 7.5 | A-9530 | 100.0 | None | 0 | Slightly white | 65 | 2.9 | CC |
| Comp. Ex. 4A | ATBS-Na | 5.0 | A-9530 | 100.0 | None | 0 | Slightly white | 64 | 2.3 | CC |
| Comp. Ex. 5A | ATBS-Na | 2.5 | A-9530 | 100.0 | None | 0 | Slightly white | 60 | 2.7 | CC |
| Comp. Ex. 6A | None | - | A-9530 | 100.0 | None | 0 | Transparent | 68 | 0.1 | CC |

[Chem. 82]

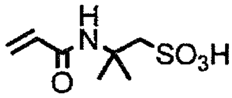
ATBS

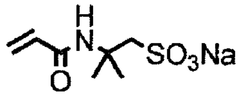
ATBS-Na

[Examples 17A to 27A, and Comparative Examples 7A and 8A]

Coating compositions were prepared, applied onto substrates and UV irradiated to give monolayer films in the same manner as in Example 11A except that the type and amount of the surfactant were changed as described in Table 6A. The surface of the monolayer films obtained was washed with running water and was dried with an air gun. The monolayer films were tested, the results being described in Table 6A.

[Table 6A]

Table 6A

| No. | Compound (I) | | Compound (II) | | Surfactant | | Appearance | Water contact angle | Haze | Antifouling properties |
|---|---|---|---|---|---|---|---|---|---|---|
| | Type | g | Type | g | Type | g | | (°) | (%) | |
| Ex. 17A | ATBS-Na | 5.0 | A-9530 | 100.0 | LS-Na | 2.0 | White | 21 | 11.0 | AA |
| Ex. 18A | ATBS-Na | 2.0 | A-9530 | 100.0 | LS-Na | 0.2 | Transparent | 7 | 1.6 | AA |
| Ex. 19A | ATBS-Na | 2.0 | A-9530 | 100.0 | LBS-Na | 0.2 | Transparent | 26 | 2.6 | AA |
| Ex. 20A | ATBS-Na | 2.0 | A-9530 | 100.0 | TDP<br>BTDP | 0.1<br>0.1 | Transparent | 22 | 1.5 | AA |
| Ex. 21A | ATBS-Na | 2.0 | A-9530 | 100.0 | NPP<br>BNPP | 0.1<br>0.1 | Transparent | 20 | 1.4 | AA |
| Ex. 22A | ATBS-Na | 2.0 | A-9530 | 100.0 | SSA-K | 0.5 | Transparent | 44 | 1.8 | BB |
| Ex. 23A | ATBS-Na | 2.0 | A-9530 | 100.0 | DSA-CL | 0.5 | Transparent | 39 | 0.7 | BB |
| Ex. 24A | ATBS-Na | 2.0 | A-9530 | 100.0 | LB | 0.5 | Transparent | 38 | 1.3 | BB |
| Ex. 25A | ATBS-Na | 2.0 | A-9530 | 100.0 | LMG-Na | 0.5 | Transparent | 29 | 3.1 | BB |
| Ex. 26A | ATBS-Na | 2.0 | A-9530 | 100.0 | SSE | 0.5 | Transparent | 20 | 2.4 | AA |
| Ex. 27A | ATBS-Na | 2.0 | A-9530 | 100.0 | BTA | 0.5 | Slightly white | 28 | 3.1 | AA |
| Comp. Ex. 7A | ATBS-Na | 2.0 | A-9530 | 100.0 | EGL | 0.5 | Transparent | 62 | 6.5 | CC |
| Comp. Ex. 8A | ATBS-Na | 2.0 | A-9530 | 100.0 | None | - | Slightly white | 63 | 7.0 | CC |

[Chem. 83]

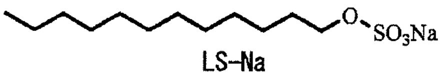
LS-Na

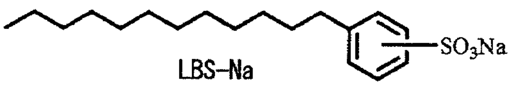
LBS-Na

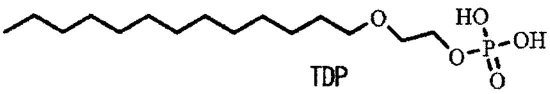
TDP

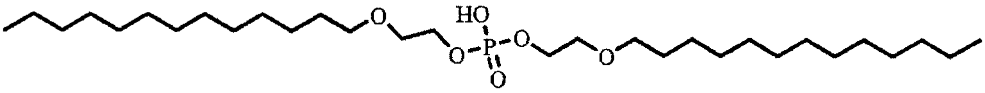
BTDP

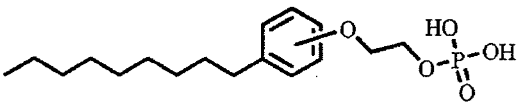
NPP

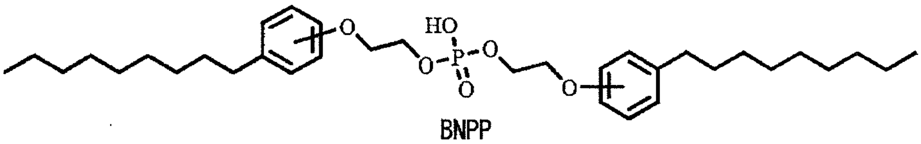
BNPP

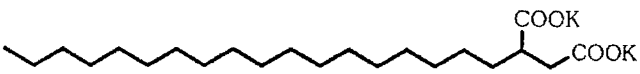
SSA-K

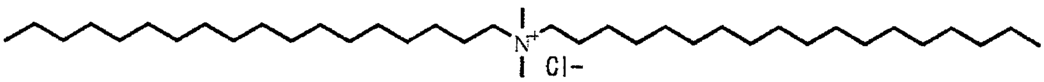
DSA-CL

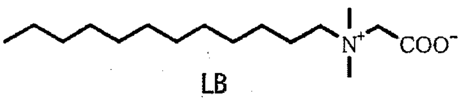
LB

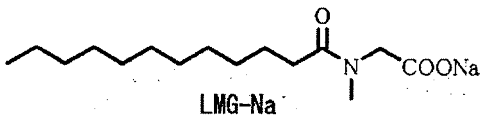
LMG-Na

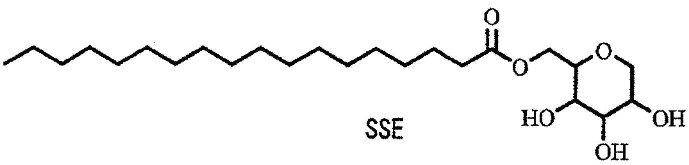
SSE

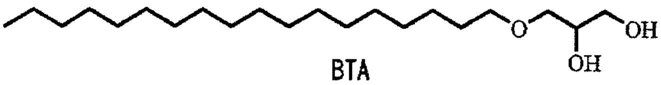
BTA

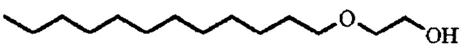
EGL

[Examples 28A to 38A and Comparative Examples 9A to 22A]

Coating compositions were prepared, applied onto substrates and UV irradiated to give monolayer films in the same manner as in Example 11A except that the types and amounts of the compound (I), the compound (II) and the surfactant (III) were changed as described in Tables 7A-1 and 7A-2. The surface of the monolayer films obtained was washed with running water and was dried with an air gun. The monolayer films were tested, the results being described in Tables 7A-1 and 7B-1.

[Table 7A-1]

Table 7A-1

| No. | Compound (I) | | Compound (II) | | Surfactant | | Appearance | Water contact angle | Haze | Antifouling properties |
|---|---|---|---|---|---|---|---|---|---|---|
| | Type | g | Type | g | Type | g | | (°) | | |
| Ex. 28A | ATBS | 5.0 | A-9530 | 100.0 | DS-Na | 0.3 | Transparent | 33 | (%) 1.8 | AA |
| Ex. 29A | AS-Na | 3.0 | A-9530<br>EA-5721 | 25.0<br>75.0 | DS-Na | 0.15 | Transparent | 28 | 0.5 | AA |
| Ex. 30A | STS-Na | 3.0 | EA-5721 | 100.0 | DS-Na | 0.2 | Transparent | 37 | 0.2 | BB |
| Ex. 31A | VS-Na | 5.0 | A-9530 | 100.0 | DS-Na | 0.2 | White | 11 | 20.4 | AA |
| Ex. 32A | VS | 5.0 | A-9530 | 100.0 | LB | 0.3 | Transparent | 44 | 0.3 | BB |
| Ex. 33A | P1A-Na | 5.0 | A-9530 | 100.0 | LB | 0.3 | Slightly white | 9 | 4.0 | AA |
| Ex. 34A | AA | 5.0 | A-9530 | 100.0 | LB | 0.3 | Transparent | 42 | 0.1 | BB |
| Ex. 35A | DHPM | 5.0 | A-9530 | 100.0 | LB | 0.3 | Transparent | 39 | 0.1 | AA |
| Ex. 36A | HMA | 5.0 | A-9530 | 100.0 | LB | 0.3 | Transparent | 42 | 0.1 | AA |
| Ex. 37A | HEA | 5.0 | A-9530 | 100.0 | LB | 0.3 | Transparent | 41 | 0.1 | AA |
| Ex. 38A | DMA-HCl | 5.0 | A-9530 | 100.0 | SSE | 0.5 | Transparent | 32 | 1.0 | BB |

[Table 7A-2]

Table 7A-2

| No. | Compound (I) | | Compound (II) | | Surfactant | | Appearance | Water contact angle | Haze | Antifouling properties |
|---|---|---|---|---|---|---|---|---|---|---|
| | Type | g | Type | g | Type | g | | (°) | (%) | |
| Comp. Ex. 9A | ATBS-Na | 5.0 | A-9530 | 100.0 | None | - | Slightly white | 64 | 2.3 | CC |
| Comp. Ex. 10A | ATBS | 5.0 | A-9530 | 100.0 | None | - | Slightly white | 64 | 7.7 | CC |
| Comp. Ex. 11A | AS-Na | 3.0 | A-9530<br>EA-5721 | 25.0<br>75.0 | None | - | Transparent | 59 | 0.3 | CC |
| Comp. Ex. 12A | STS-Na | 3.0 | EA-5721 | 100.0 | None | - | Transparent | 42 | 0.2 | CC |
| Comp. Ex. 13A | VS-Na | 5.0 | A-9530 | 100.0 | None | - | White | 63 | 10.3 | CC |
| Comp. Ex. 14A | VS | 5.0 | A-9530 | 100.0 | None | - | Transparent | 65 | 0.7 | CC |
| Comp. Ex. 15A | P1A-Na | 5.0 | A-9530 | 100.0 | None | - | Slightly white | 44 | 7.8 | BB |
| Comp. Ex. 16A | AA | 5.0 | A-9530 | 100.0 | None | - | Transparent | 66 | 0.1 | CC |
| Comp. Ex. 17A | DHPM | 5.0 | A-9530 | 100.0 | None | - | Transparent | 65 | 0.1 | CC |
| Comp. Ex. 18A | HMA | 5.0 | A-9530 | 100.0 | None | - | Transparent | 66 | 0.1 | CC |
| Comp. Ex. 19A | HEA | 5.0 | A-9530 | 100.0 | None | - | Transparent | 66 | 0.1 | CC |
| Comp. Ex. 20A | DMA-HCl | 5.0 | A-9530 | 100.0 | None | - | Transparent | 68 | 0.1 | CC |
| Comp. Ex. 21A | None | - | A-9530 | 100.0 | None | - | Transparent | 68 | 0.1 | CC |
| Comp. Ex. 22A | None | - | EA-5721 | 100.0 | None | - | Transparent | 52 | 0.1 | CC |

[Chem. 84]

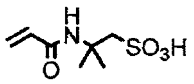
ATBS

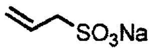
AS-Na

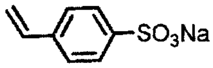
STS-Na

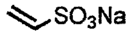
VS-Na

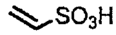
VS

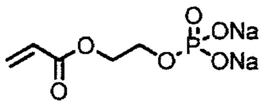
P1A-Na

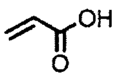
AA

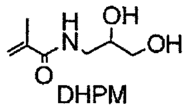
DHPM

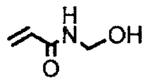
HMA

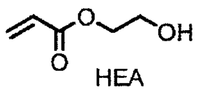
HEA

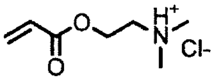
DMA-HCl

[Example 39A]

The monolayer film obtained in Example 37A was analyzed to measure the concentrations of hydrophilic groups and the ratio of the concentrations of hydrophilic groups in the direction of the film thickness. The results are described in Table 8A.

[Table 8A]

Table 8A

| | Example 39A |
|---|---|
| Appearance<br>Water contact angle (°)<br>Haze (%)<br>Tackiness | Transparent<br>41<br>0.1<br>Absent |
| Analysis in direction of thickness (**HEA)<br>Intensity* of hydroxyl groups at surface of film<br>Intensity* of hydroxyl groups at middle of film<br>Intensity* of hydroxyl groups at bottom of film<br>Ratio of hydroxyl concentrations (surface/middle) | <br>3.6E-02<br>2.9E-02<br>2.6E-02<br>1.2 |
| **Relative intensity of secondary ions $C_3H_3O_2^-$ (m/z 71) Analyzer: TOF-SIMS 5 manufactured by ION-TOF Measurement conditions: primary ions applied $Bi_3^{2+}$, primary ion accelerating voltage 25 kV, measurement area 400 μm x 400 μm | |

[Example 40A]

The monolayer film obtained in Example 38A was analyzed to measure the concentrations of hydrophilic groups and the ratio of the concentrations of hydrophilic groups in the direction of the film thickness. The results are described in Table 9A.

[Table 9A]

Table 9A

| | Example 40A |
|---|---|
| Appearance<br>Water contact angle (°)<br>Haze (%)<br>Tackiness | Transparent<br>32<br>1.0<br>Absent |
| Analysis in direction of thickness (***ammonium groups)<br>Intensity* of ammonium groups at surface of film<br>Intensity* of ammonium groups at middle of film<br>Intensity* of ammonium groups at bottom of film<br>Ratio of ammonium concentrations (surface/middle) | <br>1.5E-01<br>4.2E-02<br>4.5E-02<br>3.6 |
| ***Relative intensity of secondary ions $C_3H_8N^+$ (m/z 58) Analyzer: TOF-SIMS 5 manufactured by ION-TOF Measurement conditions: primary ions applied $Bi_3^{2+}$, primary ion accelerating voltage 25 kV, measurement area 400 μm x 400 μm | |

[Example 41A]

(Preparation of coating composition 41A)

2.0 g of HMA (hydroxymethyl acrylamide), 8.0 g of A-9530 (dipentaerythritol pentaacrylate), 0.3 g (3 wt%) of DAROCUR 1173 as a polymerization initiator, 0.2 g (2 wt%) of DS-Na as a surfactant, and 10.0 g of methanol were mixed together to give a solution. In this manner, a coating composition 41A having a solid concentration of 51 wt% was prepared.

(Application to substrate and UV irradiation)

The coating composition 41A was applied onto a polycarbonate plate (hereinafter, written as PC plate, Takiron Co., Ltd.) with a bar coater #07. The coated plate was held in a 50-60°C hot air dryer for 3 minutes to remove sufficiently the solvent present in the composition. Thereafter, the sample was UV irradiated under the same conditions as in Example 1A to form, on the PC plate, a 5 μm thick monolayer film which included the crosslinked resin having a hydrophilic surface. The surface of the monolayer film obtained was washed with running water and was dried with an air gun. The monolayer film was tested, the results being described in Table 10A.

[Examples 42A to 44A and Comparative Examples 23A to 26A]

Coating compositions were prepared, applied onto substrates and UV irradiated to give monolayer films in the same manner as in Example 41A except that the amounts of HMA, A-9530 and the surfactant were changed as described in Table 10A. The surface of the monolayer films obtained was washed with running water and was dried with an air gun. The monolayer films were tested, the results being described in Table 10A.

[Table 10A]

Table 10A

| No. | HMA | A-9530 | Surfactant: DS-Na | Solvent: methanol | Initiator: DAROCUR 1173 | Appearance | Water contact angle | Haze |
|---|---|---|---|---|---|---|---|---|
| | g | g | g | g | g | | (°) | (%) |
| Ex. 41A | 2.0 | 8.0 | 0.20 | 10.0 | 0.3 | Transparent | 42 | 0.2 |
| Ex. 42A | 4.0 | 6.0 | 0.20 | 10.0 | 0.3 | Transparent | 44 | 0.4 |
| Ex. 43A | 6.0 | 4.0 | 0.20 | 10.0 | 0.3 | Transparent | 40 | 0.2 |

(continued)

| No. | HMA | A-9530 | Surfactant: DS-Na | Solvent: methanol | Initiator: DAROCUR 1173 | Appearance | Water contact angle | Haze |
|---|---|---|---|---|---|---|---|---|
| | g | g | g | g | g | | (°) | (%) |
| Ex. 44A | 8.0 | 2.0 | 0.20 | 10.0 | 0.3 | Transparent | 36 | 0.1 |
| Comp. Ex. 23A | 2.0 | 8.0 | 0.0 | 10.0 | 0.3 | Transparent | 55 | 0.8 |
| Comp. Ex. 24A | 4.0 | 6.0 | 0.0 | 10.0 | 0.3 | Transparent | 56 | 0.1 |
| Comp. Ex. 25A | 6.0 | 4.0 | 0.0 | 10.0 | 0.3 | Transparent | 58 | 0.1 |
| Comp. Ex. 26A | 8.0 | 2.0 | 0.0 | 10.0 | 0.3 | Transparent | 57 | 0.2 |

[Example 45A]

(Preparation Example 3A: Preparation of 10 wt% hydrophilic compound (compound (I))

To 1 g of sodium styrenesulfonate (STS-Na), 3 g of water was added. The mixture was ultrasonically mixed to give a solution. Next, 6 g of 1-methoxy-2-propanol (hereinafter, written as PGM) was added. The mixture was vigorously mixed by stirring to give an STS-Na mixture liquid having a solid concentration of 10 wt%.

(Preparation of coating composition 45A)

9 g of the 10 wt% STS-Na mixture liquid (Preparation Example 3A) as a compound (I), 75 g of U-15HA and 25 g of EA-5721 as compounds (II), 1.5 g of the 10 wt% DS-Na mixture liquid (Preparation Example 1A) as a surfactant (III), 3 g of DAROCUR 1173 as a polymerization initiator, and 110 g of EGM as a diluting solvent were mixed together to give a solution. In this manner, a coating composition 45A having a solid concentration of 42 wt% was obtained.

(Application to substrate and UV irradiation)

The coating composition was applied onto a substrate and was UV irradiated in the same manner as in Example 11A, thereby forming a monolayer film. The surface of the monolayer film obtained was washed with running water and was dried with an air gun, and the monolayer film was tested. The monolayer film formed on the PC plate was composed of a 4 μm thick hydrophilic cured resin. The monolayer film was transparent and was free from tackiness, and had a water contact angle of 11° and a haze of 0.8%. The monolayer film was evaluated to have a good protection against fouling with the oil-based marker.

[Example 46A]

(Preparation of coating composition 46A)

To a mixture liquid of 5.0 g of methanol and 8.0 g of EGM were added 0.3 g of IRGACURE 127 (BASF) as a polymerization initiator and 3.0 g of SPDA-K. The mixture was mixed to give a solution. Next, 0.1 g of 10 wt% DS-Na (Preparation Example 1A) as a surfactant and 10.0 g of A-9530 were added, and the resultant mixture was mixed to give a solution. In this manner, a coating composition 46A having a solid concentration of 51% was obtained.

(Application to substrate and UV irradiation)

The coating composition 46A was applied onto a polycarbonate plate (hereinafter, written as PC plate, Takiron Co., Ltd.) with a bar coater #04. The coated plate was held in a 50-60°C hot air dryer for 5 minutes to remove sufficiently the solvent present in the composition. Thereafter, the sample was UV irradiated under the same conditions as in Example 1A to form, on the PC plate, a 3 μm thick monolayer film which included the crosslinked resin having a hydrophilic surface. The surface of the monolayer film obtained was washed with running water and was dried with an air gun, and

the monolayer film was tested. The monolayer film was transparent and was free from tackiness, and had a water contact angle of 8°. The monolayer film was evaluated to have a good protection against fouling with the oil-based marker.

[Chem. 85]

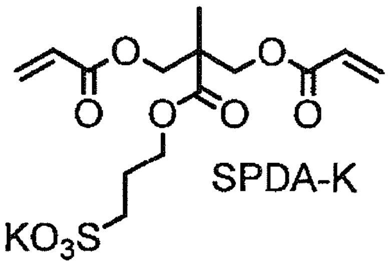

SPDA-K

[Example 47A]

(Matte coating liquid)

(Preparation of coating dispersion)

To 125 g of the 80 wt% polymerizable composition 2A prepared in Example 2A were added 9 g of silica particles having an average secondary particle diameter of 10 μm (ACEMATT 3300, EVONIK INDUSTRIES) and 84 g of 1-methoxy-2-propanol (PGM). The mixture was stirred with a homomixer (ROBOMIX (registered trademark) S-model manufactured by PRIMIX Corporation) at 3000 rpm for 5 minutes to give 218 g of a mixture dispersion having a solid concentration of 50 wt%. Further, 1 g (0.1 wt%) of the 10 wt% DS-Na mixture liquid (Preparation Example 1A) and 54 g of PGM were added to the mixture dispersion. The resultant mixture was stirred to give a coating dispersion having a solid concentration of 40 wt%.

(Application to substrate and UV irradiation)

The 40 wt% coating dispersion was applied onto a polycarbonate plate (hereinafter, written as PC plate, Takiron Co., Ltd.) with a bar coater #26. The coated plate was held in a 50-55°C hot air dryer for 2 minutes to remove the solvent present in the composition. The sample sufficiently cleaned of the solvent was UV irradiated by being passed through a UV conveyor (electrodeless H valve 240 W/cm, intensity 230 mW/cm$^2$, accumulated dose 130 mJ/cm$^2$, measured with UIT-150 manufactured by USHIO INC.) to form, on the PC plate, a 14 μm thick monolayer film which included the crosslinked resin having a hydrophilic surface. Lastly, the surface of the film was washed with running water and was dried with an air gun. An evaluation sample was thus fabricated. The evaluation results are described in Table 11A.

[Table 11A]

Table 11A

| No. | Surfactant | Diluting solvent | Additive (matte agent) | Appearance | Water contact angle (°) | 60° Gloss (glossiness) (%) | Antifouling properties |
|---|---|---|---|---|---|---|---|
| Ex. 47A | DS-Na 0.1% | PGM | Silica particles 9.0% | White | 9 | 11 | AA |

[Reference Example 1B]

(Measurement of solubility of compound (I))

(Measurement of solubility with respect to cyclohexane:toluene = 5:1 (by weight)⟩

1.0 g of hydrophilic compound SPA-K, namely, potassium 3-acryloyloxypropylsulfonate (or potassium 3-sulfopropylacrylate salt) as a constituent for the concentration-gradient films according to the invention was added to 10.0 g of a mixture solution including 8.3 g of cyclohexane and 1.7 g of toluene. The mixture was stirred at 25°C for 1 hour and was filtered through a 0.45 μm membrane filter.

The filtrate was placed onto an evaporation dish, heated at 150°C for 2 hours, and cooled to room temperature. The weight of the residue was measured.

Lastly, the solubility with respect to cyclohexane: toluene = 5: 1 (by weight) was calculated using the following equation.

$$\text{Solubility (wt\%)} = \text{Weight of residue (g)}/\{10.0\ \text{(g)} + \text{Weight of residue (g)}\} \times 100$$

The solubility was measured to be < 1 wt%.

[Preparation Example 1B]

(Preparation of basic composition 1B)

A uniform basic composition 1B having a solid concentration of 30 wt% was prepared in accordance with the formulation described in Table 1B. The symbols in Table 1B indicate compounds represented by the chemical formulas illustrated below.

[Table 1B]

Table 1B

Basic composition 1B (solid concentration 30 wt%)

| Materials | Amount (g) | Concentration (wt%) | Remarks |
|---|---|---|---|
| SPA-K | 1.7 | 0.50% | Compound (I) |
| EA-5721 | 20.0 | 5.93% | Compound (II) |
| A-BPE-10 | 10.0 | 2.96% | Compound (II) |
| U-15HA | 70.0 | 20.75% | Compound (II) |
| S-EED | 0.1 | 0.03% | Stabilizer |
| Methanol | 25.5 | 7.56% | Solvent |
| PGM | 210.0 | 62.26% | Solvent, 1-methoxy-2-propanol |
| Total | 337.3 | 100.00% | |

[Chem. 86]

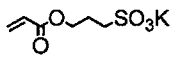

SPA-K
232.30

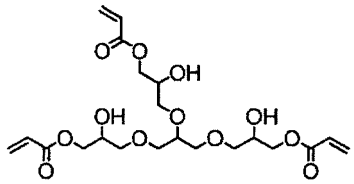

EA-5721: 476.47

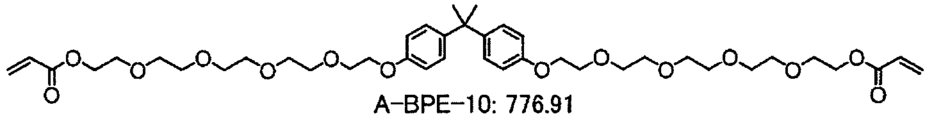

A-BPE-10: 776.91

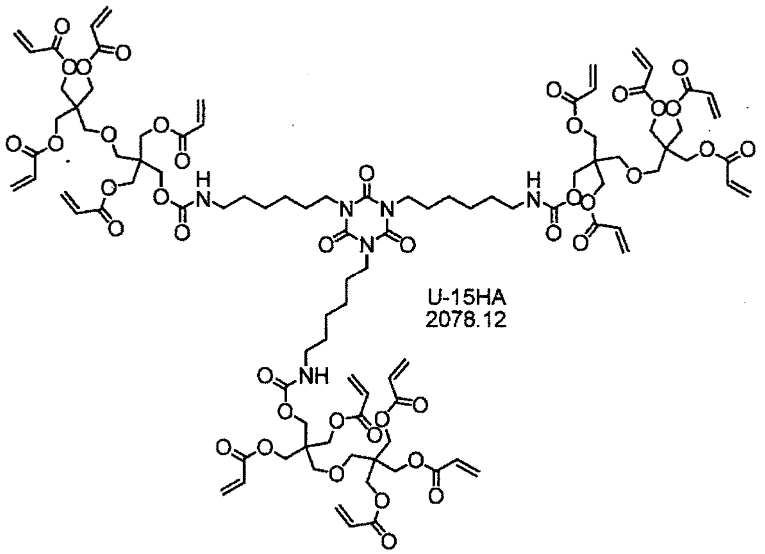

U-15HA
2078.12

[Preparation Example 2B]

(Preparation of compound (III') solution: DS-Na)

With a homomixer (ROBOMIX® S-model manufactured by PRIMIX Corporation), 10 g of sodium distearylsulfosuccinate (hereinafter, written as DS-Na), 60 g of 1-methoxy-2-propanol (hereinafter, written as PGM), 4 g of ethanol and 26 g of water were mixed together at 15000 rpm for 3 minutes to give a DS-Na mixture liquid having a solid concentration of 10 wt%.

[Chem. 87]

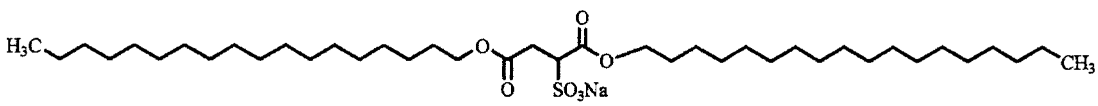

DS-Na: 725.09

[Preparation Example 3B]

(Preparation of compound (III') solution: DT-Na)

A DT-Na mixture liquid having a solid concentration of 10 wt% was obtained in the same manner as in Preparation Example 1B except that DS-Na was replaced by sodium ditridecanylsulfosuccinate (hereinafter, written as DT-Na).

[Chem. 88]

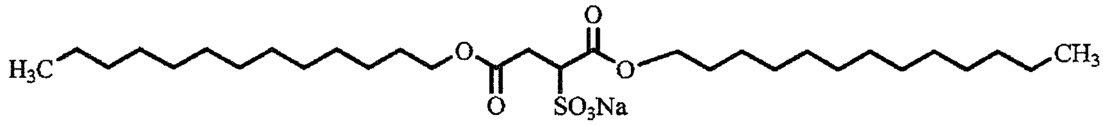

DT-Na: 584.82

[Preparation Example 4B]

(Preparation of compound (III') solution: DH-NH4)

With a homomixer (ROBOMIX® S-model manufactured by PRIMIX Corporation), 10 g of ammonium dihexylsulfosuccinate (hereinafter, written as C6S-NH4), 50 g of 1-methoxy-2-propanol (hereinafter, written as PGM), 20 g of ethanol and 120 g of water were mixed together at 15000 rpm for 3 minutes to give a DH-NH4 mixture liquid having a solid concentration of 10 wt%.

[Chem. 89]

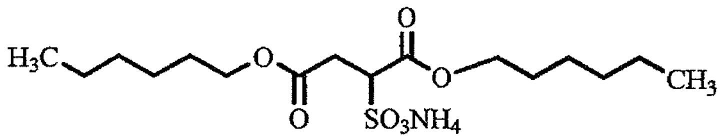

DH-NH4: 383.50

[Preparation Example 5B]

(Preparation of compound (IV) solution: SiEPG)

10 g of SiEPG which had structural units illustrated below and an average molecular weight (analyzed by GPC relative to PMMA) Mw of 6,700, and 90 g of PGM were mixed with each other in the same manner as in Preparation Example 1B to give a SiEPG mixture liquid having a solid concentration of 10 wt%.

[Chem. 90]

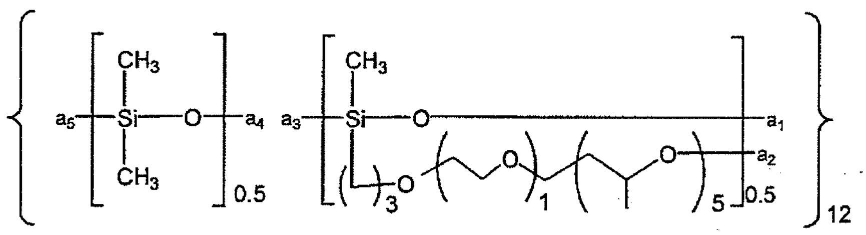

SiEPG
Nw=6, 700

In the above formula, $a_1$, $a_2$ and $a_4$ each independently represent a hydrogen atom, a hand bonded to $a_5$ or a hand bonded to $a_3$; when $a_1$, $a_2$ or $a_4$ is a terminal of the compound, it is each independently a hydrogen atom; $a_3$ and $a_5$ each independently represent a hydrogen atom, a hand bonded to $a_1$, a hand bonded to $a_2$ or a hand bonded to $a_4$; and when $a_3$ or $a_5$ is a terminal of the compound, it is each independently a hydrogen atom.

[Preparation Example 6B]

(Preparation of compound (IV) solution: SiEG)

10 g of SiEG which had structural units illustrated below and an average molecular weight (analyzed by GPC relative to PMMA) Mw of 2,300, and 90 g of PGM were mixed with each other in the same manner as in Preparation Example 1B to give a SiEG mixture liquid having a solid concentration of 10 wt%.

[Chem. 91]

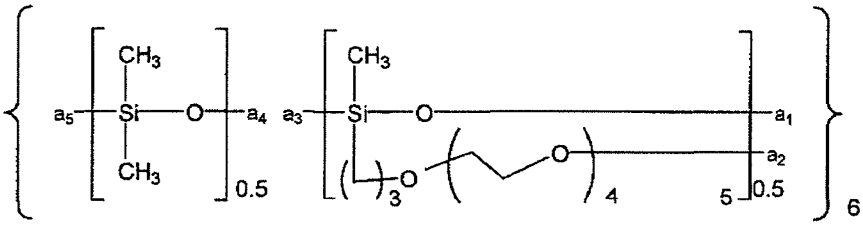

SiEG
Nw=2, 300

In the above formula, $a_1$, $a_2$ and $a_4$ each independently represent a hydrogen atom, a hand bonded to $a_5$ or a hand bonded to $a_3$; when $a_1$, $a_2$ or $a_4$ is a terminal of the compound, it is each independently a hydrogen atom; $a_3$ and $a_5$ each independently represent a hydrogen atom, a hand bonded to $a_1$, a hand bonded to $a_2$ or a hand bonded to $a_4$; and when $a_3$ or $a_5$ is a terminal of the compound, it is each independently a hydrogen atom.

[Preparation Example 7B]

(Preparation of solution of compound (III') + compound (IV) + silica particles (V): SiEPG + $\alpha$)

0.7 g of SiEPG from Preparation Example 4B, 9.2 g of polypropylene glycol mono-n-butyl ether with a molecular weight Mw of about 1000, 0.3 g of silica particles (average particle diameter 10-15 nm) dispersed in methanol with a solid concentration of 30 wt%, and 90 g of PGM were mixed together in the same manner as in Preparation Example 1B to give a SiEPG + $\alpha$ mixture liquid having a solid concentration of 10 wt%.

(Application to substrate and evaluation)

[Example 1B]

A coating solution was obtained by mixing 28.5 g of the 30 wt% basic composition 1B from Preparation Example 1B with 1.0 g (0.1 wt% relative to the total weight of the compound (I) and the compound (II)) of the 10 wt% DS-Na solution (the compound (III') solution) from Preparation Example 2B. The coating solution was applied onto a PET film treated to realize easy adhesion (LUMIRROR 100-U34, TORAY INDUSTRIES, INC.) with a spray gun (W-101 manufactured by ANEST IWATA CORPORATION, air pressure 1.5 to 2.0 kgf/cm$^2$) in an amount of about 70 g per 1 m$^2$. The coating was allowed to stand (set) at room temperature for 1 minute and was held in a 50-60°C hot air dryer for 10 minutes to remove the solvent present in the coating.

The sample sufficiently cleaned of the solvent was UV irradiated by being passed through a UV conveyor (electrodeless H valve, 240 W/cm, height 5 cm, conveyor speed 10 m/min, intensity 300 mW/cm$^2$, accumulated dose 180 mJ/cm$^2$, measured with UIT-150 manufactured by USHIO INC.) to form, on the easy-adhesion PET film, a 20 $\mu$m thick hydrophilic monolayer film. Thereafter, the surface of the monolayer film was washed with running water and was dried. The sample thus obtained was tested, the results being described in Table 2B.

[Examples 2B to 5B]

Coating solutions were prepared, applied onto the easy-adhesion PET films, cleaned of the solvent, and UV irradiated to give monolayer films in the same manner as in Example 1B except that the solution from Preparation Example 2B was changed to any of the solutions from Preparation Examples 3B to 6B. The surface of the monolayer films was washed with running water and was dried. The samples obtained were tested, the results being described in Table 2B.

[Comparative Example 1B]

The basic composition 1B alone was used as a coating solution without the addition of any of the solutions from Preparation Examples 2B to 6B. The coating solution was applied onto the easy-adhesion PET film, cleaned of the solvent, and UV irradiated to give a monolayer film. The surface of the monolayer film was washed with running water and was dried. The sample obtained was tested, the results being described in Table 2B.

[Table 2B]

Table 2B

| No. | Compound (III') | Compound (IV) | Appearance | Water contact angle (°) | | Haze (%) | | Surface smoothness | | |
|---|---|---|---|---|---|---|---|---|---|---|
| | | | | After washing with water | 1 H in boiling water | After washing with water | 1 H in boiling water | SW | LW | Average |
| Ex. 1B | DS-Na 0.1% | - | Transparent | 5 | 8 | 0.5 | 0.6 | 2.1 | 11.6 | 6.9 |
| Ex. 2B | DT-Na 0.1% | - | Transparent | 5 | 11 | 0.6 | 1.4 | 3.4 | 15.1 | 9.3 |
| Ex. 3B | DH-NH4 0.1% | - | Transparent | 9 | 10 | 1.4 | 1.9 | 6.0 | 18.0 | 12.0 |
| Ex. 4B | - | SiEPG 0.1% | Transparent | 6 | 8 | 1.4 | 2.0 | 3.4 | 7.0 | 5.2 |
| Ex. 5B | - | SiEG 0.1% | Transparent | 6 | 9 | 1.6 | 2.5 | 12.6 | 5.5 | 9.1 |
| Comp. Ex. 1B | - | - | Slightly white | 8 | 15 | 2.4 | 2.5 | 6.6 | 21.6 | 14.1 |

(Analysis of gradient of anion concentration in direction of thickness of monolayer film)

The monolayer film obtained in Example 1B was analyzed to determine the anion concentration (the hydrophilic group concentration) (Sa) at the top surface of the film and the anion concentration (Da) at the middle point in the direction of the film thickness (the middle point between the top surface and the bottom surface of the film). Based on the values obtained, the gradient of anion concentration (hydrophilic group concentration) was determined. The results are described in Table 3B.

[Table 3B]

Table 3B

| | Coating film in Example 1B |
|---|---|
| Intensity Sa* of sulfonate groups at film surface | 8.5E-02 |
| Intensity Da* of sulfonate groups at 1/2 of film thickness | 3.5E-02 |
| Intensity* of sulfonate groups at bottom of film (at near substrate) | 4.0E-02 |
| Gradient Sa/Da | 2.4 |
| *Relative intensity of $SO_3^-$ (m/z = 80) (to total ions) | |

[Examples 6B and 7B]

Coating solutions were prepared, applied onto the easy-adhesion PET films, cleaned of the solvent, and UV irradiated to give monolayer films in the same manner as in Example 1B except that the amount of the compound (III') was changed as described in Table 4B. The surface of the monolayer films was washed with running water and was dried. The samples obtained were tested, the results being described in Table 4B.

[Table 4B]

Table 4B

| No. | Compound (III') | Appearance | Water contact angle (°) | | Haze (%) | | Surface smoothness | | |
|---|---|---|---|---|---|---|---|---|---|
| | | | After washing with water | 1 H in boiling water | LW | Average | SW | LW | Average |
| Ex. 6B | DS-Na 0.05% | Transparent | 5 | 9 | 0.5 | 1.9 | 7.0 | 6.1 | 6.6 |
| Ex. 1B | DS-Na 0.1% | Transparent | 5 | 11 | 0.6 | 1.4 | 3.4 | 15.1 | 9.3 |
| Ex. 7B | DS-Na 0.2% | Transparent | 6 | 20 | 0.5 | 0.7 | 6.6 | 3.1 | 4.9 |
| Comp. Ex. 1B | - | Slightly white | 8 | 15 | 2.4 | 2.5 | 6.6 | 21.6 | 14.1 |
| The unit % for the compounds (III') indicates wt% relative to the total weight of the compound (I) and the compound (II). | | | | | | | | | |

[Examples 8B to 11B]

Coating solutions were prepared, applied onto the easy-adhesion PET films, cleaned of the solvent, and UV irradiated to give monolayer films in the same manner as in Example 4B except that the amount of the compound (IV) was changed as described in Table 5B. The surface of the monolayer films was washed with running water and was

dried. The samples obtained were tested, the results being described in Table 5B.

[Table 5B]

Table 5B

| No. | Compound (IV) | Appearance | Water contact angle (°) | | Haze (%) | | Surface smoothness | | |
|---|---|---|---|---|---|---|---|---|---|
| | | | After washing with water | 1 H in boiling water | After washing with water | 1 H in boiling water | SW | LW | Average |
| Ex. 8B | SiEPG 0.05% | Transparent | 6 | 9 | 1.7 | 2.7 | 5.3 | 12.6 | 9.0 |
| Ex. 4B | SiEPG 0.1% | Transparent | 6 | 8 | 1.4 | 2.0 | 3.4 | 7.0 | 5.2 |
| Ex. 9B | SiEPG 0.2% | Transparent | 5 | 6 | 1.0 | 1.2 | 1.6 | 3.9 | 2.8 |
| Ex. 10B | SiEPG 0.5% | Transparent | 5 | 7 | 1.7 | 1.6 | 12.7 | 5.2 | 9.0 |
| Ex. 11B | SiEPG 1.0% | Slightly white | 10 | 14 | 2.2 | 2.6 | 5.2 | 16.4 | 10.8 |
| Comp. Ex. 1B | - | Slightly white | 8 | 15 | 2.4 | 2.5 | 6.6 | 21.6 | 14.1 |
| The unit % for the compounds (IV) indicates wt% relative to the total weight of the compound (I) and the compound (II). | | | | | | | | | |

[Example 12B]

A coating solution was prepared, applied onto the easy-adhesion PET film, cleaned of the solvent, and UV irradiated to give a monolayer film in the same manner as in Example 1B except that the amount of the compound (III') solution from Preparation Example 1B was changed from 1.0 g to 2.0 g, and that 1.0 g of the SiEPG + $\alpha$ solution (the compound (III') solution) from Preparation Example 7B was added. The surface of the monolayer film was washed with running water and was dried. The sample obtained was tested, the results being described in Table 6B. Table 6B also describes the results of Example 7B, Example 4B and Comparative Example 1B.

[Table 6B]

Table 6B

| No. | Compound (III') | Compound (IV) | Silica particles (V) | Appearance | Water contact angle (°) | | Haze (%) | | Surface smoothness | | |
|---|---|---|---|---|---|---|---|---|---|---|---|
| | | | | | After washing with water | 1 H in boiling water | After washing with water | 1 H in boiling water | SW | LW | Average |
| Ex. 12B | DS-Na 0.2% | SiEPG 0.1% | Silica particles 0.001% | Transparent | 6 | 10 | 0.8 | 1.5 | 0.8 | 5.3 | 3.1 |
| Ex. 7B | DS-Na 0.2% | - | - | Transparent | 6 | 20 | 0.5 | 0.7 | 6.6 | 3.1 | 4.9 |
| Ex. 4B | - | SiEPG 0.1% | - | Transparent | 6 | 8 | 1.4 | 2.0 | 3.4 | 7.0 | 5.2 |
| Comp. Ex. 1B | - | - | - | Slightly white | 8 | 15 | 2.4 | 2.5 | 6.6 | 21.6 | 14.1 |

The unit % for the compounds (III'), the compounds (IV) and the silica particles (V) indicates wt% relative to the total weight of the compound (I) and the compound (II).

[Example 13B]

(Evaluation of antifogging properties and antifouling properties)

The monolayer films obtained in Examples 1B to 12B were tested to evaluate antifouling properties and the resistance to breath fogging. The results are described in Table 7B.

[Table 7B]

Table 7B

| No. | Appearance | Water contact angle (°) | Antifouling properties | Resistance to breath fogging |
|---|---|---|---|---|
| Ex. 1B | Transparent | 5 | AA' | AA |
| Ex. 2B | Transparent | 5 | AA' | AA |
| Ex. 3B | Transparent | 9 | AA' | AA |
| Ex. 4B | Transparent | 6 | AA' | AA |
| Ex. 5B | Transparent | 6 | AA' | AA |
| Ex. 6B | Transparent | 5 | AA' | AA |
| Ex. 7B | Transparent | 6 | AA' | AA |
| Ex. 8B | Transparent | 6 | AA' | AA |
| Ex. 9B | Transparent | 5 | AA' | AA |
| Ex. 10B | Transparent | 5 | AA' | AA |
| Ex. 11B | Slightly white | 10 | AA' | AA |
| Ex. 12B | Transparent | 6 | AA' | AA |

INDUSTRIAL APPLICABILITY

The compositions of the present invention can easily give cured products enriched with hydrophilic groups at the surface, and can also give cured products having the surface enriched with those hydrophilic groups which are hardly concentrated at the surface by the conventional methods. The cured products obtained from the inventive compositions exhibit high and long-lasting hydrophilicity and also have high surface smoothness.

Thus, the cured products, for example, monolayer films are useful in various applications to serve as, for example, antifogging materials and antifouling materials.

REFERENCE SIGNS LIST

10: SUBSTRATE
20: COATING LAYER
30: CUTTING DIRECTION
40: SURFACE OF COATING LAYER
50: INNER PORTION OF COATING LAYER

**Claims**

1. A monolayer film comprising a crosslinked resin, the crosslinked resin being obtained by polymerizing a composition comprising:

a compound (I) having at least one hydrophilic group selected from anionic hydrophilic groups, cationic hydrophilic groups and hydroxyl groups, and at least one functional group with a polymerizable carbon-carbon double bond (wherein the number of the functional groups with a polymerizable carbon-carbon double bond is one when the hydrophilic group is a hydroxyl-containing group);
a compound (II) having two or more functional groups with a polymerizable carbon-carbon double bond (wherein the compound may have a hydroxyl group but is free from anionic hydrophilic groups and cationic hydrophilic groups); and
at least one compound selected from a surfactant (III) having a hydrophilic moiety including an anionic hydrophilic group, a cationic hydrophilic group or two or more hydroxyl groups, and a hydrophobic moiety including an organic residue, and a compound (IV) having a siloxane bond and a molecular weight of 200 to 1,000,000 (wherein the surfactant (III) and the compound (IV) have no polymerizable carbon-carbon double bonds);
the monolayer film having a gradient of hydrophilic group concentration (Sa/Da) of not less than 1.1 wherein Sa is the surface concentration of at least one type of hydrophilic groups selected from anionic hydrophilic groups, cationic hydrophilic groups and hydroxyl groups, and Da is the deep concentration of the hydrophilic groups at 1/2 of the thickness of the monolayer film.

**2.** The monolayer film according to claim 1, wherein the compound (I) is a compound represented by the general formula (100) below:

[Chem. 1]

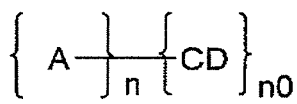
(100)

(in the formula (100), A is a $C_{2-100}$ organic group having 1 to 5 functional groups with a polymerizable carbon-carbon double bond; CD is a group which includes at least one hydrophilic group and is selected from the general formulas (101) to (114) below; n indicates the number of As bonded to CD and is 1 or 2; n0 indicates the number of CDs bonded to A and is an integer of 1 to 5; and when CD is a hydroxyl-containing group, n is 1 and A contains one functional group with a polymerizable carbon-carbon double bond);

[Chem. 2]

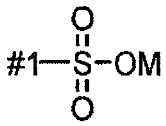
(101)

(in the formula (101), M is a hydrogen atom, an alkali metal, an alkaline earth metal having 1/2 atomic valence or an ammonium ion; and #1 indicates a hand bonded to a carbon atom present in A in the formula (100));

[Chem. 3]

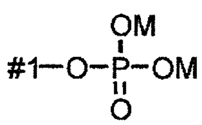
(102)

(in the formula (102), M at each occurrence is a hydrogen atom, an alkali metal, an alkaline earth metal having 1/2 atomic valence or an ammonium ion; and #1 indicates a hand bonded to a carbon atom present in A in the formula (100));

[Chem. 4]

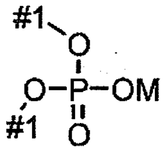

(1 0 3)

(in the formula (103), M is a hydrogen atom, an alkali metal, an alkaline earth metal having 1/2 atomic valence or an ammonium ion; and #1 at each occurrence indicates a hand bonded to a carbon atom present in A in the formula (100));

[Chem. 5]

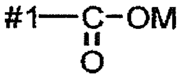

(1 0 4)

(in the formula (104), M is a hydrogen atom, an alkali metal, an alkaline earth metal having 1/2 atomic valence, an ammonium ion and an amine ion; and #1 indicates a hand bonded to a carbon atom present in A in the formula (100));

[Chem. 6]

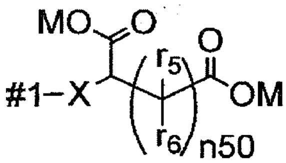

(1 0 5)

(in the formula (105), $r_5$ and $r_6$ each independently represent a hydrogen atom, a methyl group, an ethyl group or a hydroxyl group; n50 is an integer of 0 to 5; X is -O-, -S-, -NH- or $-NCH_3-$; M at each occurrence is a hydrogen atom, an alkali metal, an alkaline earth metal having 1/2 atomic valence or an ammonium ion; and #1 indicates a hand bonded to a carbon atom present in A in the formula (100));

[Chem. 7]

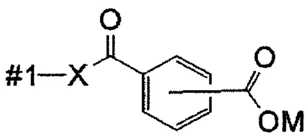

(1 0 6)

(in the formula (106), X is -O-, -S-, -NH- or $-NCH_3-$; M is a hydrogen atom, an alkali metal, an alkaline earth metal having 1/2 atomic valence or an ammonium ion; and #1 indicates a hand bonded to a carbon atom present in A in the formula (100));

[Chem. 8]

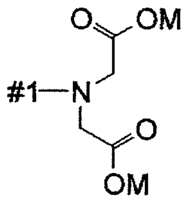

(107)

(in the formula (107), M at each occurrence is a hydrogen atom, an alkali metal, an alkaline earth metal having 1/2 atomic valence or an ammonium ion; and #1 indicates a hand bonded to a carbon atom present in A in the formula (100));

[Chem. 9]

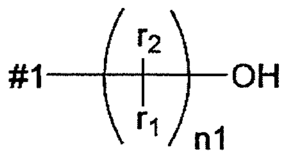

(108)

(in the formula (108), n1 is an integer of 0 to 100; $r_1$ and $r_2$ each independently represent a hydrogen atom, a methyl group, an ethyl group or a hydroxyl group; when n1 is 2 or greater, $r_1$s and $r_2$s each may be the same as or different from one another; and #1 indicates a hand bonded to a carbon atom present in A in the formula (100));

[Chem. 10]

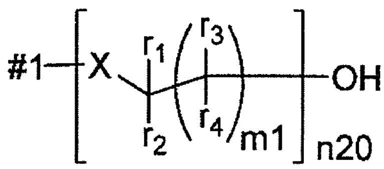

(109)

(in the formula (109), X is -O-, -S-, -NH- or $-NCH_3-$; Xs may be the same as or different from one another; m1 is an integer of 0 to 10; n20 is an integer of 2 to 100; $r_1$ to $r_4$ each independently represent a hydrogen atom, a methyl group, an ethyl group or a hydroxyl group; Xs, $r_1$s, $r_2$s, $r_3$s and $r_4$s each may be the same as or different from one another; and #1 indicates a hand bonded to a carbon atom present in A in the formula (100));

[Chem. 11]

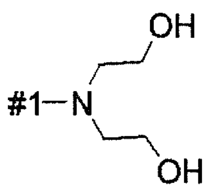

(110)

(in the formula (110), #1 indicates a hand bonded to a carbon atom present in A in the formula (100));

[Chem. 12]

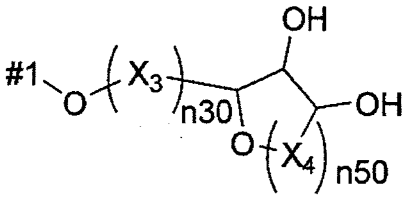

(1 1 1)

(in the formula (111), $X_3$ and $X_4$ are each independently $-CH_2-$, -CH(OH)- or -CO-; n30 is an integer of 0 to 3; n50 is an integer of 0 to 5; when n30 is 2 or greater, $X_3$s may be the same as or different from one another; when n50 is 2 or greater, $X_4$s may be the same as or different from one another; and #1 indicates a hand bonded to a carbon atom present in A in the formula (100));

[Chem. 13]

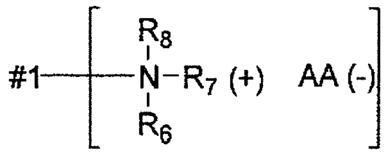

(1 1 2)

(in the formula (112), AA(-) is a halogen ion, a formate ion, an acetate ion, a sulfate ion, a hydrogen sulfate ion, a phosphate ion or a hydrogen phosphate ion; $R_6$ to $R_8$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group; and #1 indicates a hand bonded to a carbon atom present in A in the formula (100));

[Chem. 14]

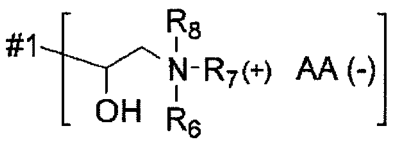

(1 1 3)

(in the formula (113), AA(-) is a halogen ion, a formate ion, an acetate ion, a sulfate ion, a hydrogen sulfate ion, a phosphate ion or a hydrogen phosphate ion; $R_6$ to $R_8$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group; and #1 indicates a hand bonded to a carbon atom present in A in the formula (100)); and

[Chem. 15]

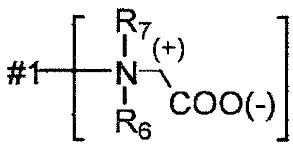

(1 1 4)

(in the formula (114), $R_6$ and $R_7$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group; and #1 indicates a hand bonded to a carbon atom present in A in the formula (100)).

**3.** The monolayer film according to claim 2, wherein A in the general formula (100) is a functional group with at least

one polymerizable carbon-carbon double bond selected from the general formulas (120) to (130) below (when CD in the general formula (100) is a hydroxyl-containing group, A is a functional group with at least one polymerizable carbon-carbon double bond selected from the general formulas (120) to (126) below):

[Chem. 16]

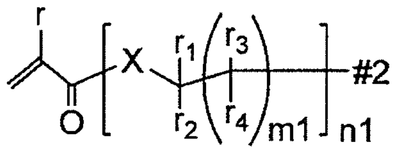

(1 2 0)

(in the formula (120), X is -O-, -S-, -NH- or $-NCH_3-$; r represents a hydrogen atom or a methyl group; $r_1$ to $r_4$ each independently represent a hydrogen atom, a methyl group, an ethyl group or a hydroxyl group; m1 is an integer of 0 to 10; n1 is an integer of 0 to 100; and #2 indicates a hand bonded to #1 present in at least one group selected from those groups represented by the general formulas (101) to (114));

[Chem. 17]

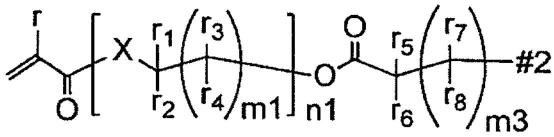

(1 2 1)

(in the formula (121), X is -O-, -S-, -NH- or $-NCH_3-$; r represents a hydrogen atom or a methyl group; $r_1$ to $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 and m3 are each independently an integer of 0 to 10; n1 is an integer of 0 to 100; and #2 indicates a hand bonded to #1 present in at least one group selected from those groups represented by the general formulas (101) to (114));

[Chem. 18]

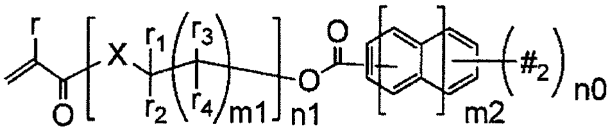

(1 2 2)

(in the formula (122), X is O-, -S-, -NH- or $-NCH_3-$; r represents a hydrogen atom or a methyl group; $r_1$ to $r_4$ each independently represent a hydrogen atom, a methyl group, an ethyl group or a hydroxyl group; m1 is an integer of 0 to 10; m2 is an integer of 0 to 5; n0 is an integer of 1 to 5; n1 is an integer of 0 to 100; and #2 indicates a hand bonded to #1 present in at least one group selected from those groups represented by the general formulas (101) to (114));

[Chem. 19]

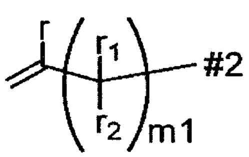

(1 2 3)

(in the formula (123), r represents a hydrogen atom or a methyl group; $r_1$ and $r_2$ each independently represent a hydrogen atom, a methyl group, an ethyl group or a hydroxyl group; m1 is an integer of 0 to 10; and #2 indicates a hand bonded to #1 present in at least one group selected from those groups represented by the general formulas (101) to (114));

[Chem. 20]

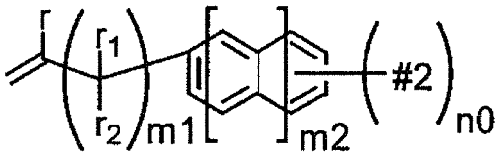

(1 2 4)

(in the formula (124), r represents a hydrogen atom or a methyl group; $r_1$ and $r_2$ each independently represent a hydrogen atom, a methyl group, an ethyl group or a hydroxyl group; m1 is an integer of 0 to 10; m2 is an integer of 0 to 5; n0 is an integer of 1 to 5; and #2 indicates a hand bonded to #1 present in at least one group selected from those groups represented by the general formulas (101) to (114));

[Chem. 21]

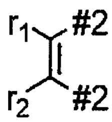

(1 2 5)

(in the formula (125), $r_1$ and $r_2$ each independently represent a hydrogen atom, a methyl group, an ethyl group or a hydroxyl group; and #2 at each occurrence indicates a hand bonded to #1 present in at least one group selected from those groups represented by the general formulas (101) to (114));

[Chem. 22]

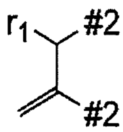

(1 2 6)

(in the formula (126), $r_1$ represents a hydrogen atom, a methyl group, an ethyl group or a hydroxyl group; and #2 at each occurrence indicates a hand bonded to #1 present in at least one group selected from those groups represented by the general formulas (101) to (114));

[Chem. 23]

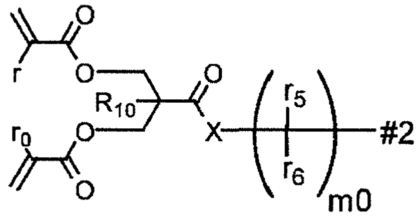

(1 2 7)

(in the formula (127), X is -O-, -S-, -NH- or -$NCH_3$-; r and $r_0$ each independently represent a hydrogen atom or a methyl group; $r_5$ and $r_6$ each independently represent a hydrogen atom, a methyl group, an ethyl group or a hydroxyl group; $R_{10}$ represents a hydrogen atom, a $C_{1-10}$ alkyl group, a $C_{3-10}$ cycloalkyl group, a phenyl group, a benzyl group, a hydroxyl group, hydroxymethyl or hydroxyethyl; m0 is an integer of 1 to 10; and #2 indicates a hand bonded to #1 present in at least one group selected from those groups represented by the general formulas (101) to (107) and (112) to (114));

[Chem. 24]

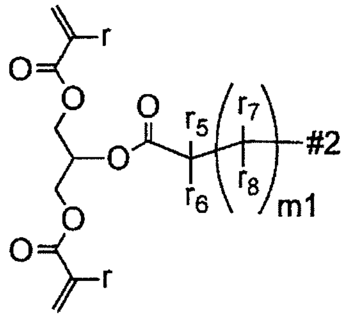

(128)

(in the formula (128), r independently at each occurrence represents a hydrogen atom or a methyl group; $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is an integer of 0 to 10; and #2 indicates a hand bonded to #1 present in at least one group selected from those groups represented by the general formulas (101) to (107) and (112) to (114));

[Chem. 25]

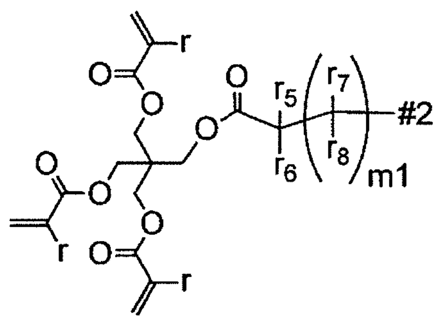

(129)

(in the formula (129), r independently at each occurrence represents a hydrogen atom or a methyl group; $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is an integer of 0 to 10; and #2 indicates a hand bonded to #1 present in at least one group selected from those groups represented by the general formulas (101) to (107) and (112) to (114)); and

[Chem. 26]

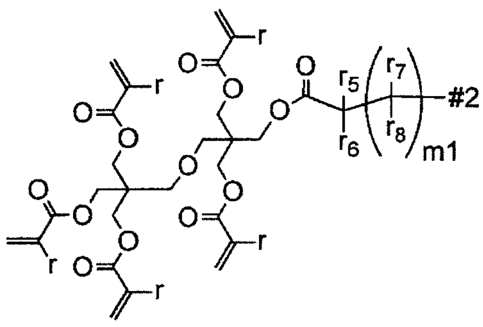

(130)

(in the formula (130), r independently at each occurrence represents a hydrogen atom or a methyl group; $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is an integer of 0 to 10; and #2 indicates a hand bonded to #1 present in at least one group selected from those groups represented by the general formulas (101) to (107) and (112) to (114)).

**4.** The monolayer film according to claim 1, wherein the surfactant is a compound represented by the general formula (300) below:

[Chem. 27]

$$\left\{ \left\{ R \right\}_{n} \left\{ FG \right\} \right\}_{n0} \quad (300)$$

(in the formula (300), R represents a $C_{4-100}$ organic residue; FG represents a group including at least one hydrophilic group selected from the general formulas (301) to (310) and (312) to (319) below; n indicates the number of Rs bonded to FG and is 1 or 2; n0 indicates the number of FGs bonded to R and is an integer of 1 to 5; and when FG is a group including one hydroxyl group, n0 is an integer of 2 to 5);

[Chem. 28]

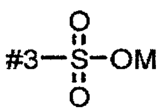

(301)

(in the formula (301), M is a hydrogen atom, an alkali metal, an alkaline earth metal having 1/2 atomic valence or an ammonium ion; and #3 indicates a hand bonded to a carbon atom present in R in the formula (300));

[Chem. 29]

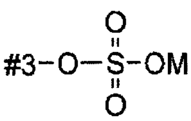

(302)

(in the formula (302), M is a hydrogen atom, an alkali metal, an alkaline earth metal having 1/2 atomic valence or an ammonium ion; and #3 indicates a hand bonded to a carbon atom present in R in the formula (300));

[Chem. 30]

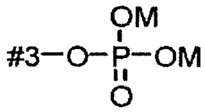

(3 0 3)

(in the formula (303), M at each occurrence is a hydrogen atom, an alkali metal, an alkaline earth metal having 1/2 atomic valence or an ammonium ion; and #3 indicates a hand bonded to a carbon atom present in R in the formula (300));

[Chem. 31]

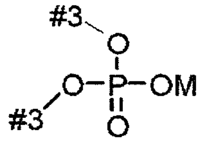

(3 0 4)

(in the formula (304), M is a hydrogen atom, an alkali metal, an alkaline earth metal having 1/2 atomic valence or an ammonium ion; and #3 at each occurrence indicates a hand bonded to a carbon atom present in R in the formula (300));

[Chem. 32]

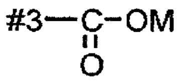

(3 0 5)

(in the formula (305), M is a hydrogen atom, an alkali metal, an alkaline earth metal having 1/2 atomic valence or an ammonium ion; and #3 indicates a hand bonded to a carbon atom present in R in the formula (300));

[Chem. 33]

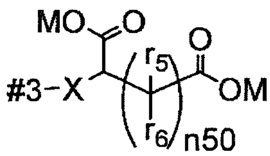

(3 0 6)

(in the formula (306), $r_5$ and $r_6$ each independently represent a hydrogen atom, a methyl group, an ethyl group or a hydroxyl group; n50 is an integer of 0 to 5; X is -O-, -S-, -NH- or $-NCH_3-$; M at each occurrence is a hydrogen atom, an alkali metal, an alkaline earth metal having 1/2 atomic valence or an ammonium ion; and #3 indicates a hand bonded to a carbon atom present in R in the formula (300));

[Chem. 34]

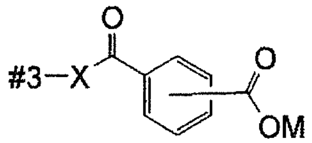

(3 0 7)

(in the formula (307), X is -O-, -S-, -NH- or $-NCH_3-$; M is a hydrogen atom, an alkali metal, an alkaline earth metal having 1/2 atomic valence or an ammonium ion; and #3 indicates a hand bonded to a carbon atom present in R in the formula (300)) ;

[Chem. 35]

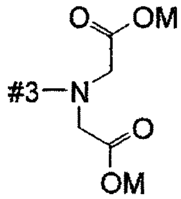

(3 0 8)

(in the formula (308), M at each occurrence is a hydrogen atom, an alkali metal, an alkaline earth metal having 1/2 atomic valence or an ammonium ion; and #3 indicates a hand bonded to a carbon atom present in R in the formula (300));

[Chem. 36]

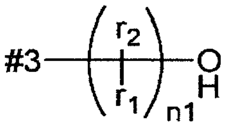

(3 0 9)

(in the formula (309), $r_1$ and $r_2$ each independently represent a hydrogen atom, a methyl group, an ethyl group or a hydroxyl group; n1 is an integer of 0 to 100; #3 indicates a hand bonded to a carbon atom present in R in the formula (300) ; and when the group represented by the formula (309) contains one hydroxyl group, n0 in the formula (300) is an integer of 2 to 5);

[Chem. 37]

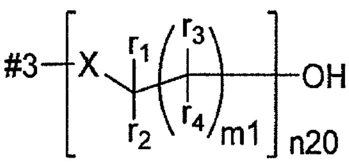

(3 1 0)

(in the formula (310), X is -O-, -S-, -NH- or $-NCH_3-$; Xs may be the same as or different from one another; m1 is an integer of 0 to 10; n20 is an integer of 2 to 100; r represents a hydrogen atom or a methyl group; $r_1$ to $r_4$ each independently represent a hydrogen atom, a methyl group, an ethyl group or a hydroxyl group; Xs, $r_1$s, $r_2$s, $r_3$s and $r_4$s each may be the same as or different from one another; #3 indicates a hand bonded to a carbon atom present in R in the formula (300); and when the group represented by the formula (309) contains one hydroxyl group, n0 in the formula (300) is an integer of 2 to 5);

[Chem. 38]

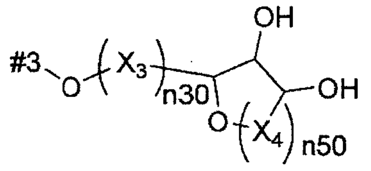

(3 1 2)

(in the formula (312), $X_3$ and $X_4$ are each independently $-CH_2-$, -CH(OH)- or -CO-; n30 is an integer of 0 to 3; n50 is an integer of 0 to 5; when n30 is 2 or greater, $X_3$s may be the same as or different from one another; when n50 is 2 or greater, $X_4$s may be the same as or different from one another; and #3 indicates a hand bonded to a carbon atom present in R in the formula (300));

[Chem. 39]

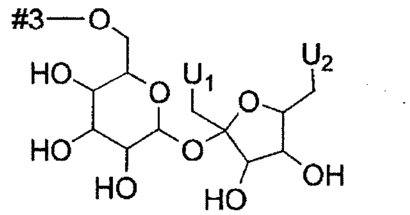

(3 1 3)

(in the formula (313), #3 indicates a hand bonded to a carbon atom present in R in the formula (300); and $U_1$ to $U_3$ each independently represent a hydroxyl group or an oxygen atom bonded to a carbon atom present in R (O-#3));

[Chem. 40]

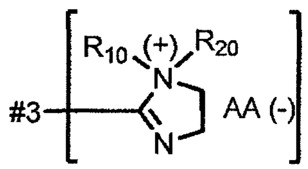

(3 1 4)

(in the formula (314), AA(-) is a halogen ion, a formate ion, an acetate ion, a sulfate ion, a hydrogen sulfate ion, a phosphate ion or a hydrogen phosphate ion; $R_{10}$ and $R_{20}$ each independently represent a hydrogen atom, a $C_{1-4}$ alkyl group, a hydroxyl group or a $C_{1-4}$ hydroxyalkyl group; and #3 indicates a hand bonded to a carbon atom present in R in the formula (300)) ;

[Chem. 41]

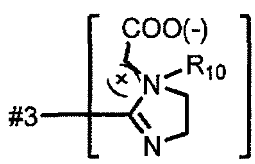

(3 1 5)

(in the formula (315), $R_{10}$ represents a hydrogen atom, a $C_{1-4}$ alkyl group, a hydroxyl group or a $C_{1-4}$ hydroxyalkyl group; and #3 indicates a hand bonded to a carbon atom present in R in the formula (300));

[Chem. 42]

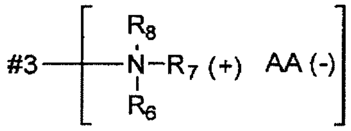

(3 1 6)

(in the formula (316), AA(-) is a halogen ion, a formate ion, an acetate ion, a sulfate ion, a hydrogen sulfate ion, a phosphate ion or a hydrogen phosphate ion; $R_6$ to $R_8$ each independently represent a hydrogen atom, a $C_{1-20}$ alkyl, alkylaryl, benzyl, alkylcycloalkyl, alkylcycloalkylmethyl or cycloalkyl group, a phenyl group or a benzyl group; and #3 indicates a hand bonded to a carbon atom present in R in the formula (300)) ;

[Chem. 43]

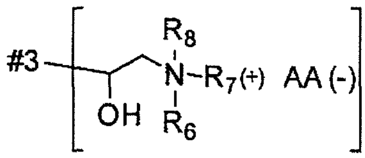

(3 1 7)

(in the formula (317), AA(-) is a halogen ion, a formate ion, an acetate ion, a sulfate ion, a hydrogen sulfate ion, a phosphate ion or a hydrogen phosphate ion; $R_6$ to $R_8$ each independently represent a hydrogen atom, a $C_{1-20}$ alkyl, alkylaryl, benzyl, alkylcycloalkyl, alkylcycloalkylmethyl or cycloalkyl group, a phenyl group or a benzyl group; and #3 indicates a hand bonded to a carbon atom present in R in the formula (300));

[Chem. 44]

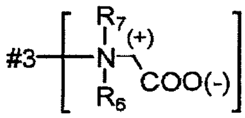

(3 1 8)

(in the formula (318), $R_6$ and $R_7$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group; and #3 indicates a hand bonded to a carbon atom present in R in the formula (300)); and

[Chem. 45]

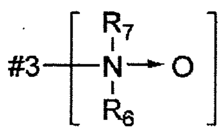

(3 1 9)

(in the formula (319), $R_6$ and $R_7$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group; and #3 indicates a hand bonded to a carbon atom present in R in the formula (300)).

**5.** A stack comprising at least one monolayer film described in any of claims 1 to 4.

**6.** A composition for producing the monolayer film described in any of claims 1 to 4, comprising the compound (I), the compound (II), and at least one compound selected from the surfactant (III) and the compound (IV).

[FIG. 1]

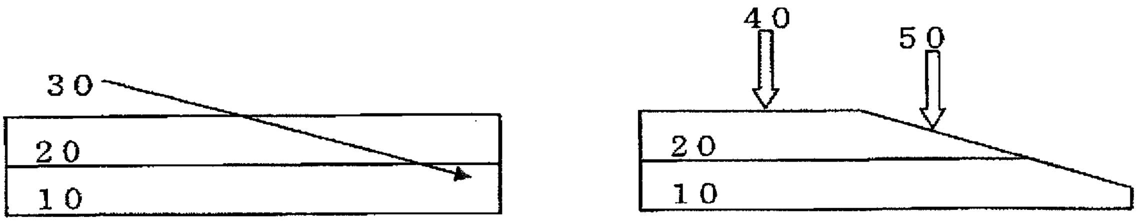
30
20
10
40
50
20
10

[FIG. 2]

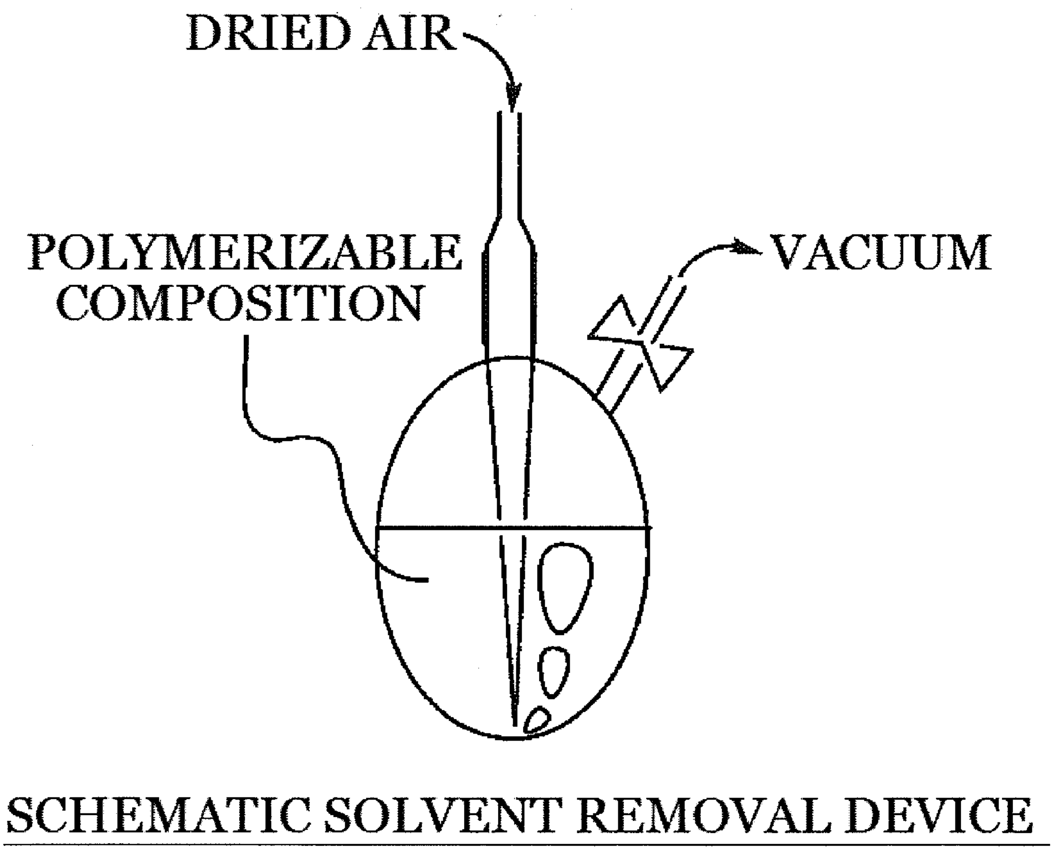
DRIED AIR
POLYMERIZABLE COMPOSITION
VACUUM
SCHEMATIC SOLVENT REMOVAL DEVICE

## INTERNATIONAL SEARCH REPORT

International application No.
PCT/JP2014/082286

A. CLASSIFICATION OF SUBJECT MATTER
*C08F2/44*(2006.01)i

According to International Patent Classification (IPC) or to both national classification and IPC

B. FIELDS SEARCHED

Minimum documentation searched (classification system followed by classification symbols)
C08F2/00-2/60

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2000-026691 A (Toray Industries, Inc.), 25 January 2000 (25.01.2000), comparative example 3 (Family: none) | 1-6 |
| X | JP 2002-363482 A (Hitachi Chemical Co., Ltd.), 18 December 2002 (18.12.2002), claims; paragraphs [0014] to [0016]; example 1 (Family: none) | 1-6 |
| X | JP 2007-246835 A (Tokuyama Corp.), 27 September 2007 (27.09.2007), claims; paragraph [0084]; example 48 (Family: none) | 1-6 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 March 2015 (03.03.15) | 24 March 2015 (24.03.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2014/082286

C (Continuation). DOCUMENTS CONSIDERED TO BE RELEVANT

| Category* | Citation of document, with indication, where appropriate, of the relevant passages | Relevant to claim No. |
|---|---|---|
| X | JP 10-338709 A (Nippon Zeon Co., Ltd.), 22 December 1998 (22.12.1998), paragraphs [0002], [0049]; example 4 (Family: none) | 1-6 |
| X | JP 2003-178797 A (Dainichiseika Color & Chemicals Mfg. Co., Ltd.), 27 June 2003 (27.06.2003), paragraphs [0009], [0020]; example 5 & US 2003/0124430 A1 & EP 1300899 A2 & DE 60227468 D & TW 567631 B | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001098007 A
- JP 2011229734 A
- WO 2007064003 A
- WO 2012014829 A


### Non-patent literature cited in the description


- TREND, annual research report. TOAGOSEI CO., LTD, February 1999, 39-44
- *Koubunshi (Polymers),* vol. 44 (5), 307
- *Mirai Zairyou (Future materials),* vol. 2 (1), 36-41